(19)

Europäisches
Patentamt

European
Patent Office

Office européen
des brevets

(11) **EP 4 421 726 A1**

(12) **EUROPEAN PATENT APPLICATION**

(43) Date of publication:
**28.08.2024 Bulletin 2024/35**

(21) Application number: **24158700.5**

(22) Date of filing: **20.02.2024**

(51) International Patent Classification (IPC):
***G06Q 40/04*** *(2012.01)*

(52) Cooperative Patent Classification (CPC):
**G06Q 40/04**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **21.02.2023 US 202363447240 P**

(71) Applicant: **Robo Inc.**
**Wantage Oxfordshire OX13 5NQ (GB)**

(72) Inventors:
- **WILLETTS, Matthew John Foster**
  **Wantage OX13 5NQ (GB)**
- **ST CLERE SMITHE, Toby**
  **Wantage OX13 5NQ (GB)**

(74) Representative: **Page White Farrer**
**Bedford House**
**21a John Street**
**London WC1N 2BF (GB)**

(54) **COMPOSABILITY AND EFFICIENCY IMPROVEMENTS IN DECENTRALIZED MARKETS**

(57)     Systems, methods, apparatuses, and computer program products for improving composability and efficiency in decentralized markets through composite pools, efficient estimators and non-linear techniques. One method may include calculating at least one entry of a weight vector according to at least one estimator-based rule to be applied to a liquidity pool, and based at least in part upon the calculated at least one entry of a previous weight vector, storing the at least one entry of the weight vector onto a blockchain configured to determine whether to perform an exchange of at least one asset for at least one other asset from among a pre-defined pool of other assets.

**EP 4 421 726 A1**

Processed by Luminess, 75001 PARIS (FR)

**Description**

**CROSS-REFERENCE TO RELATED APPLICATION**

This application claims the benefit of U.S. Provisional Patent Application No. 63/447,240, filed February 21, 2023, which is herein incorporated by reference in its entirety.

**TECHNICAL FIELD**

Some example embodiments may generally relate to an automated liquidity provider (LP) integrated with one or more computer-based blockchains to adjust trading functions of an automated market maker (AMM) pool over time. In particular, various example embodiments may be directed towards dynamic decentralized market making and portfolio construction to improve energy efficiency, reduce slippage, and improve composability.

**BACKGROUND**

First generation AMMs instantiate an extremely limited and fixed strategy: a simple holding strategy very often provides superior returns compared to depositing into a constant-function market maker (CFMM). Challenges remain, including that described as "loss versus rebalancing," and LPs are seeking new ways to expand liquidity and limit order books while simultaneously reducing consumption of energy and computing resources, and running costs. A fixed-weight strategy is one disadvantage of AMMs, and altering the strategies applied is one technique to improve the performance of AMMs.

**SUMMARY**

In accordance with some example embodiments, a method may include calculating, by a computing device, at least one entry of a weight vector according to at least one estimator-based rule to be applied to a liquidity pool. The method may further include based at least in part upon the calculated at least one entry of a previous weight vector, storing, by the computing device, the at least one entry of the weight vector onto a blockchain configured to determine whether to perform an exchange of at least one asset for at least one other asset from among a pre-defined pool of other assets.

In accordance with certain example embodiments, an apparatus may include means for calculating at least one entry of a weight vector according to at least one estimator-based rule to be applied to a liquidity pool. The apparatus may further include means for based at least in part upon the calculated at least one entry of a previous weight vector, storing the at least one entry of the weight vector onto a blockchain configured to determine whether to perform an exchange of at least one asset for at least one other asset from among a pre-defined pool of other assets.

In accordance with various example embodiments, a non-transitory computer readable medium may include program instructions that, when executed by an apparatus, cause the apparatus to perform at least a method. The method may include calculating at least one entry of a weight vector according to at least one estimator-based rule to be applied to a liquidity pool. The method may further include, based at least in part upon the calculated at least one entry of a previous weight vector, storing the at least one entry of the weight vector onto a blockchain configured to determine whether to perform an exchange of at least one asset for at least one other asset from among a pre-defined pool of other assets.

In accordance with some example embodiments, a computer program product may perform a method. The method may include calculating at least one entry of a weight vector according to at least one estimator-based rule to be applied to a liquidity pool. The method may further include, based at least in part upon the calculated at least one entry of a previous weight vector, storing the at least one entry of the weight vector onto a blockchain configured to determine whether to perform an exchange of at least one asset for at least one other asset from among a pre-defined pool of other assets.

In accordance with certain example embodiments, an apparatus may include at least one processor and at least one memory storing instructions that, when executed by the at least one processor, cause the apparatus at least to calculate at least one entry of a weight vector according to at least one estimator-based rule to be applied to a liquidity pool. The at least one memory and instructions, when executed by the at least one processor, may further cause the apparatus at least to, based at least in part upon the calculated at least one entry of a previous weight vector, store the at least one entry of the weight vector onto a blockchain configured to determine whether to perform an exchange of at least one asset for at least one other asset from among a pre-defined pool of other assets.

In accordance with various example embodiments, an apparatus may include calculating circuitry configured to perform calculating at least one entry of a weight vector according to at least one estimator-based rule to be applied to a liquidity pool. The apparatus may further include storing circuitry configured to perform, based at least in part upon the calculated at least one entry of a previous weight vector, storing the at least one entry of the weight vector onto a blockchain configured to determine whether to perform an exchange of at least one asset for at least one other asset from among a pre-defined pool of other assets.

In accordance with some example embodiments, a method may include calculating, by a computing device, at least one entry of a weight vector according to at least one estimator-based rule. The method may further include applying, by a computing device, at least one maximal extractable value (MEV) protection to a value of the at least one entry of the weight vector. The method may further include storing, by a computing device, at least one entry of a weight vector configured to be applied to a particular liquidity pool.

In accordance with certain example embodiments, an apparatus may include means for calculating at least one entry of a weight vector according to at least one estimator-based rule. The apparatus may further include means for applying at least one maximal extractable value (MEV) protection to a value of the at least one entry of the weight vector. The apparatus may further include means for storing at least one entry of a weight vector configured to be applied to a particular liquidity pool.

In accordance with various example embodiments, a non-transitory computer readable medium may include program instructions that, when executed by an apparatus, cause the apparatus to perform at least a method. The method may include calculating at least one entry of a weight vector according to at least one estimator-based rule. The method may further include applying at least one maximal extractable value (MEV) protection to a value of the at least one entry of the weight vector. The method may further include storing at least one entry of a weight vector configured to be applied to a particular liquidity pool.

In accordance with some example embodiments, a computer program product may perform a method. The method may include calculating at least one entry of a weight vector according to at least one estimator-based rule. The method may further include applying at least one maximal extractable value (MEV) protection to a value of the at least one entry of the weight vector. The method may further include storing at least one entry of a weight vector configured to be applied to a particular liquidity pool.

In accordance with certain example embodiments, an apparatus may include at least one processor and at least one memory storing instructions that, when executed by the at least one processor, cause the apparatus at least to calculate at least one entry of a weight vector according to at least one estimator-based rule. The at least one memory and instructions, when executed by the at least one processor, may further cause the apparatus at least to apply at least one maximal extractable value (MEV) protection to a value of the at least one entry of the weight vector. The at least one memory and instructions, when executed by the at least one processor, may further cause the apparatus at least to store at least one entry of a weight vector configured to be applied to a particular liquidity pool.

In accordance with various example embodiments, an apparatus may include calculating circuitry configured to perform calculating at least one entry of a weight vector according to at least one estimator-based rule. The apparatus may further include applying circuitry configured to perform applying at least one maximal extractable value (MEV) protection to a value of the at least one entry of the weight vector. The apparatus may further include storing circuitry configured to perform storing at least one entry of a weight vector configured to be applied to a particular liquidity pool.

In accordance with some example embodiments, a method may include calculating, by a computing device, at least one entry of the block-specific weight vector configured for a trading function for a given block index. The method may further include, in response to a withdrawal request if one is made, calculating, by a computing device, at least one withdrawal fee based upon a predefined fee structure. The method may further include updating, by the computing device, at least one reserve. The method may further include checking, by the computing device, for at least one invariant proportional and/or performing an invariant check. The method may further include checking, by the computing device, for at least one net change of pool reserves for at least one trades configured for maximum extract value protection. The method may further include checking, by the computing device, for at least one liquidity provider holding, whether the transaction comprises a withdrawal request or a deposit request as part of a composite pool trade comprising at least one of withdrawal, deposits, and trades of liquidity provider tokens as constituent steps. The method may further include, upon determining that all requirements are satisfied, committing, by the computing device, at least one transaction to the blockchain.

In accordance with certain example embodiments, an apparatus may include means for calculating at least one entry of the block-specific weight vector configured for a trading function for a given block index. The apparatus may further include means for, in response to a withdrawal request if one is made, calculating at least one withdrawal fee based upon a predefined fee structure. The apparatus may further include means for updating at least one reserve. The apparatus may further include means for checking for at least one invariant proportional and/or performing an invariant check. The apparatus may further include means for checking for at least one net change of pool reserves for at least one trades configured for maximum extract value protection. The apparatus may further include means for checking for at least one liquidity provider holding, whether the transaction comprises a withdrawal request or a deposit request as part of a composite pool trade comprising at least one of withdrawal, deposits, and trades of liquidity provider tokens as constituent steps. The apparatus may further include means for, upon determining that all requirements are satisfied, committing at least one transaction to the blockchain.

In accordance with various example embodiments, a non-transitory computer readable medium may include program instructions that, when executed by an apparatus, cause the apparatus to perform at least a method. The method may include calculating at least one entry of the block-specific weight vector configured for a trading function for a given block index. The method may further include, in response to a withdrawal request if one is made, calculating at least one withdrawal fee based upon a predefined fee structure. The method may further include updating at least one reserve. The method may further include checking for at least one invariant proportional and/or performing an invariant check. The method may further include checking for at least one net change of pool reserves for at least one trades configured for maximum extract value protection. The method may further include checking for at least one liquidity provider holding, whether the transaction comprises a withdrawal request or a deposit request as part of a composite pool trade comprising at least one of withdrawal, deposits, and trades of liquidity provider tokens as constituent steps. The method may further include, upon determining that all requirements are satisfied, committing at least one transaction to the blockchain.

In accordance with some example embodiments, a computer program product may perform a method. The method may include calculating at least one entry of the block-specific weight vector configured for a trading function for a given block index. The method may further include, in response to a withdrawal request if one is made, calculating at least one withdrawal fee based upon a predefined fee structure. The method may further include updating at least one reserve. The method may further include checking for at least one invariant proportional and/or performing an invariant check. The method may further include checking for at least one net change of pool reserves for at least one trades configured for maximum extract value protection. The method may further include checking for at least one liquidity provider holding, whether the transaction comprises a withdrawal request or a deposit request as part of a composite pool trade comprising at least one of withdrawal, deposits, and trades of liquidity provider tokens as constituent steps. The method may further include, upon determining that all requirements are satisfied, committing at least one transaction to the blockchain.

In accordance with certain example embodiments, an apparatus may include at least one processor and at least one memory storing instructions that, when executed by the at least one processor, cause the apparatus at least to calculate at least one entry of the block-specific weight vector configured for a trading function for a given block index. The at least one memory and instructions, when executed by the at least one processor, may further cause the apparatus at least to, in response to a withdrawal request if one is made, calculate at least one withdrawal fee based upon a predefined fee structure. The at least one memory and instructions, when executed by the at least one processor, may further cause the apparatus at least to update at least one reserve. The at least one memory and instructions, when executed by the at least one processor, may further cause the apparatus at least to check for at least one invariant proportional and/or performing an invariant check. The at least one memory and instructions, when executed by the at least one processor, may further cause the apparatus at least to check for at least one net change of pool reserves for at least one trades configured for maximum extract value protection. The at least one memory and instructions, when executed by the at least one processor, may further cause the apparatus at least to check for at least one liquidity provider holding, whether the transaction comprises a withdrawal request or a deposit request as part of a composite pool trade comprising at least one of withdrawal, deposits, and trades of liquidity provider tokens as constituent steps. The at least one memory and instructions, when executed by the at least one processor, may further cause the apparatus at least to, upon determining that all requirements are satisfied, commit at least one transaction to the blockchain.

In accordance with various example embodiments, an apparatus may include calculating circuitry configured to perform calculating at least one entry of the block-specific weight vector configured for a trading function for a given block index. The apparatus may further include calculating circuitry configured to perform, in response to a withdrawal request if one is made, calculating at least one withdrawal fee based upon a predefined fee structure. The apparatus may further include updating circuitry configured to perform updating at least one reserve. The apparatus may further include checking circuitry configured to perform checking for at least one invariant proportional and/or performing an invariant check. The apparatus may further include checking circuitry configured to perform checking for at least one net change of pool reserves for at least one trades configured for maximum extract value protection. The apparatus may further include checking circuitry configured to perform checking for at least one liquidity provider holding, whether the transaction comprises a withdrawal request or a deposit request as part of a composite pool trade comprising at least one of withdrawal, deposits, and trades of liquidity provider tokens as constituent steps. The apparatus may further include committing circuitry configured to perform, upon determining that all requirements are satisfied, committing at least one transaction to the blockchain.

## BRIEF DESCRIPTION OF THE DRAWINGS

For a proper understanding of example embodiments, reference should be made to the accompanying drawings, wherein:

FIG. 1 illustrates an example of impermanent loss in a pool as a function of change in price ratio from when capitalized;
FIGs. *2a-c* illustrate some examples of weight interpolations;
FIGs. *3a-b* illustrate some examples of linear interpolations;
FIG. 4 illustrates an example of a composite pool composed of two base pools;
FIG. 5 illustrates an example of a flow diagram of a method according to various example embodiments;
FIG. 6 illustrates an example of a flow diagram of another method according to various example embodiments; and
FIG. 7 illustrates an example of various network devices according to some example embodiments.

## DETAILED DESCRIPTION

It will be readily understood that the components of certain example embodiments, as generally described and illustrated in the figures herein, may be arranged and designed in a wide variety of different configurations. Thus, the following detailed description of some example embodiments of systems, methods, apparatuses, and computer program products for improving energy and efficiency in decentralized markets through composite pools is not intended to limit the scope of certain example embodiments, but is instead representative of selected example embodiments.

Decentralized finance (DeFi) infrastructure has recently begun to incorporate AMMs and decentralized exchanges (DEXs). AMMs and DEXs can enable LPs (*i.e.*, depositors) to earn a return on their capital (*i.e.*, liquidity), by enabling traders to exchange one token for another against that supplied liquidity. In exchange for providing liquidity, LPs may receive liquidity tokens that represent their share of the capital deposited into the asset pool. LPs receive trading fees proportional to their LP token holdings (*e.g.*, via accumulation of fees inside a pool). While some of these systems may allow liquidity provisions according to a pair of tokens, other systems may use a basket system. However, one disadvantage of DEX pools (*e.g.*, Uniswap V3 built upon the Ethereum blockchain) is "impermanent loss," wherein LPs frequently lose value even after receiving their trading fees. One disadvantage of DeFi is that many pools and LP wallets have greater impermanent loss compared to fee income. In effect, DeFi pools run a fixed-allocation strategy, which cannot be profitable when implemented as a DEX due to impermanent loss. Although trading fees can theoretically make LPs whole, they frequently do not in practice, including for frequently-traded sets of tokens.

Certain example embodiments described herein may have various benefits and/or advantages to overcome the disadvantages described above. For example, certain example embodiments may improve energy and efficiency in decentralized markets through composite pools. Thus, certain example embodiments discussed below are directed to improvements in computer-related technology.

Non-fixed-allocation strategies may not necessarily experience impermanent loss. Certain example embodiments may modify CFMMs by developing a decentralized method of dynamically re-weighting reserves held using oracle signals and functions thereof, thereby increasing the available returns on deposited capital. This may be achieved by changing portfolio vectors within the computer-driven trading function of the pool, wherein new portfolio vectors may be dynamically computed by selected function of selected oracles, leading to improved performance by computer-managed markets. As a result, some example embodiments may tune and minimize the risk profile to an appropriate level for these LPs.

Since pools are designed to obtain an increased value from re-balancing between tokens as the market unfolds (rather than solely relying on trading fees), various example embodiments may provide a more comprehensive understanding of DEX operations.

Cryptocurrencies may be traded. However, due to their mathematical structure, such DEXs can negatively affect the capital of LPs following price fluctuations (*i.e.*, impermanent loss). Although retaining initial capital may yield better results compared to depositing the capital with a DEX since trading fees paid to the LPs may not exceed impermanent loss, this places significant limitations on capital management.

In certain example embodiments, LPs can build asset pools that may dynamically update how they store their value, based at least in part on market information. As a result, LPs can avoid impermanent loss, improve returns in capital gains, and minimize trading fees. This may provide a truly decentralized process since the ability to control the dynamics of the pool must be within control of the liquidity process, and the mechanics and data are clearly defined by smart contracts without off-chain bottlenecks.

Some example embodiments address the challenges discussed above since other, non-fixed-allocation strategies may not suffer impermanent losses. Specifically, various example embodiments may improve CFMMs by developing a decentralized method of dynamically re-weighting held reserves using oracle signals and functions thereof, thereby increasing the available returns on deposited capital. This may be accomplished by adjusting portfolio vectors within the constant function of the pool, whereby the new portfolio vectors may be a selected function of selected oracles (*i.e.*, a data feed on a blockchain). As an example, feed may refer to price feed.

LPs may achieve superior performance; however, no strategy is possible without risking capital. Various example embodiments may include computer-driven techniques for minimizing the risk profile to desired levels. Since LPs strive to obtain increased value by re-balancing between tokens as markets shift (rather than only on trading fees), lower fees can be charged, and a more comprehensive understanding of trading opportunities can be provided.

Furthermore, various example embodiments may further improve the efficiency and versatility of decentralized markets by introducing a composite pool, including a pool of pools through interaction with dynamic re-weighting of assets. Such composite pools may allow LPs to distribute liquidity across sub-pools, thereby building arbitrary combinations of existing pools, and dynamically re-weighting across them in response to market conditions. Liquidity may be distributed across sub-pools while exposing prices in only base assets to the markets, rather than through token representing the liquidity proportion. As a result, the LP's liquidity can be exposed to improve asset performance while remaining exposed across the particular bundles of assets of interest.

For LPs, various example embodiments may provide dynamic decentralized pools, which may provide on-chain, robo-advisor functionality for cryptocurrency, thereby offering the potential for improved capital growth through dynamic re-weighting, as well as a greater range of potential baskets of assets through composite pools. For traders, following the decrease in pool fragmentation and/or increase in liquidity, certain example embodiments may provide a more efficient electronic trading interchange.

Some example embodiments may include a protocol offering automated, on-chain, permission-less and non-custodial pools (*i.e.*, DEX), providing the benefits of DeFi, including reliability since it may not rely on a centralize entity to manage capital; may verify the logic and structure of the pool strategy; and may provide constant access to the protocol.

Various example embodiments may provide certain additional advantages, including on-chain updating of the weights of a pool by using update rules that implement a chosen strategy based upon input oracle information (*e.g.*, price data); calculating gradients, variances, and precisions (*i.e.*, inverse co-variances) of oracle signals; automated mechanisms to reduce re-balancing operations while protecting against front running; dynamically combining pools using compositionality to generate composite pools that include a variety of tokens and/or strategies, giving LPs highly expressive pools to dynamically manage such pools; and providing permissionless construction of pools with predetermined update rules.

**Uniswap** v1/v2 is an example of a CFMM, wherein the value of a particular function of its reserves remains constant or grows under a proposed trade. For example, the constant function for Uniswap v1/v2 may include equation (1) in Appendix 2, wherein $R_1$ may indicate reserves held by a pool on the protocol of a first token (*e.g.*, wETH), and $R_2$ may indicate an amount of reserves held by the pool of a second token (*e.g.*, wBTC). Thus, if the system needs to perform a transaction with a Uniswap pool, in order to exchange one token for another, their proposed transaction may be accepted if the updated reserves of the pool ($\tilde{R}_1 \tilde{R}_1$) after this proposed transaction still multiply to at least the same value as before, thus resulting in equation (2) in Appendix 2. For this reason, these pools may be known as 'constant-product' pools. This system may operate only on pairs of tokens, and the pool may ultimately hold half of its value in each token: an arbitrage opportunity may exist if not already the case. The requirement that trades preserve the above invariant may mean that the system is, in effect, quoting a price - and that price depends directly on the current pool reserves. If the system may hold too little of its value in one token (less than half), it may quote above-market prices to the market in order to buy more of that token. As a result, pools may hold an economically-defined (rather than merely numerical) balance of assets (*i.e.*, 50/50), as explained in more detail below.

In various example embodiments, Balancer extends CFMMs may be extended by having an arbitrary number of tokens in a given basket, and by weighting these tokens in the trading function. For example, Balancer's trading function may be defined as provided in equation (3) of Appendix 2. In this example, a set of tokens $\tau$, $|\tau| = N$ present in the pool and $w_i$ may indicate the weighting given to each. $\boldsymbol{R} = \{R_i\}$ may be the $N$-vector of currently-held reserves of each token. The weights $\boldsymbol{w} = \{w_i\}$ may control how much value is stored in each token. Like a constant-product pool, an arbitrage opportunity may exist if this is not the case.

Following from the mathematical form of the trading function, these pools may be known as geometric mean market makers (G3Ms). The pool may hold fractions $w_i$ of value in each token as the trading function provides an arbitrage

$$w_i = \frac{1}{N}$$

opportunity if the pool's reserves do not have this property. For example, if the weighting is uniform, wherein , an equal amount of value may be stored in each token.

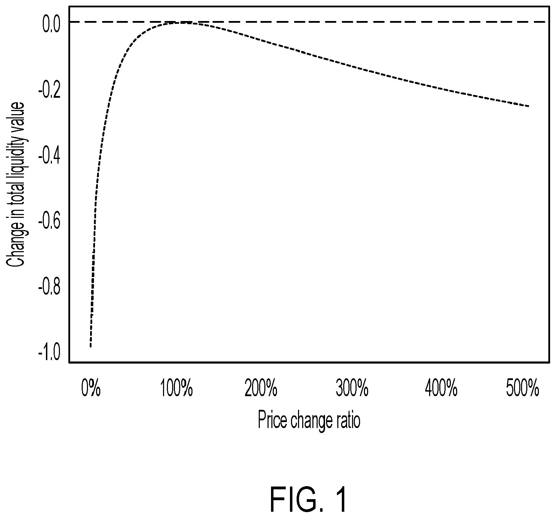

Applying a Balancer extension to multi-asset pools with chosen weights may reduce impermanent loss. Specifically, Balancer pools may have $w_i$ and be larger or smaller than an agnostic $\frac{1}{N}$. Having a smaller weight on a given token may cause relatively less impermanent loss, as a smaller proportion of the liquidity in the pool is allocated to that token. However, since the portfolio weights may sum to 1, this may result in a relatively greater risk of impermanent loss on at least one other token in the pool, as shown in FIG. 1.

One challenge with DEXes is impermanent loss (*i.e.*, divergence loss) wherein prices may move away from those when a pool is deposited into by an LP leads to a loss of value for that LP. For example, in a DEX pool where one of the assets doubles in value, the pool's smart contract may offer trades to the market that lead to a reduction in the amount held of that token. Such offloading of the appreciating token occurs at a below-market price. As a result, the LPs (*i.e.*, the depositors in the pool) do not benefit from the upwards trajectory of that doubled-in-value token as much as if they had merely held the assets. However, the providers of liquidity to DEXes would benefit from a protocol that attempts to manage their deposited capital in a way that depends on market dynamics, increasing and decreasing the size of its position with an aim to protect and grow capital.

However, these descriptions of impermanent loss may relate to AMM-specific situations. However, this is an example of a general principle that re-balancing has a cost to be compared to the performance of a strategy. Thus, all systems that reallocate capital over time, regardless of how they operate, have to pay some amount of value, at some frequency, to achieve their desired holdings over time. DEXes may have to pay some form of re-balancing cost, although not in the same way as a more traditional system that places trades on exchanges to re-balance.

DEXes may implement a strategy for LPs wherein the pool allocation is fixed. The pool may be continually re-balanced by the operation of arbitrageurs. Impermanent loss may merely be a combination of two facts: that the re-balancing cost to a DEX is guaranteed to be greater than the return their fixed-portfolio strategy can generate, and that these systems are sufficiently simple to be proven mathematically. However, if the portfolio weightings **w** change over time, then impermanent loss is no longer guaranteed; strategies other than fixed-**w**, implemented as a DEX pool, may have returns that outweigh their re-balancing cost.

In contrast with CFMMs, temporal-function market making (TFMM) may refer to trading functions of a pool that depends on time. In certain example embodiments, **w**, the portfolio vector, may be enabled to update on-chain using on-chain oracles, for example, the price of the tokens in the pool; thus, the allocation of assets in the pool may then be responsive to market information. Some example embodiments can circumvent impermanent loss. In order to indicate this new dependency of **w** on time, $\mathbf{w}(t)$ and the time-varying equation may be used to define a pool block-to-block (*i.e.*, trading function) as provided in equation (4) of Appendix 2, where the time-dependence of $k$ is explicit, as it now depends on the current, changing value of $\mathbf{w}(t)$. Within a block, weights may be constant (*e.g.*, $t$ may be the discrete blocknumber), and thus a known, clear value may be taken at a time that a trade occurs. Various example embodiments may provide a variety of techniques to construct various dynamic pools. A trade may still preserve (or increase) the value of $k(t)$ that exists at the time of that trade. This may result in temporal-function market makers implemented by certain example embodiments. An automated TFMM pool thus may take a dynamic position, re-weighing its desired division of value between assets on the fly, doing so via offering arbitrage opportunities if its actual reserves are not in line with its actual reserves.

In order to change pool weights, update rules may be applied as possible functions to determine the changes in weights. However, update rules may need to improve capital performance, and may run on-chain for a given blockchain. Since any trade with a pool may not decrease $k(t)$, the change in weights (*i.e.*, re-weighting) may result in the pool's reserves to be re-balanced: trades that occur may bring the reserves closer to the target ratio, which may be expensive. If performed naively, the cost paid to arbitrageurs to rebalance may be prohibitively expensive; however, various forms of smoothing mechanisms may reduce cost.

Some automated pools may enable diverse portfolios and re-balancing strategies. For example, the architecture may enable LPs to avoid split management of multiple pools that each only contain a small basket of tokens. Through composite pools constructed by pooling pools, where the liquidity placed in a composite pool is distributed across its underlying pools, enabling an LP to benefit from the volume in these underlying pools while maintaining mathematical efficiency for re-balancing, allowing complex pools to be built-up and explored compositionally. This may be mathematically equivalent to a pool of LP tokens, but rebalancing and exposed prices may only be for base underlying assets, rather than LP tokens.

In addition, for some pools, composability may or may not lead to a change in strategy and performance of the resulting pools-of-pools compared to the initial base pools; a negative example is that a composite pool of CFMM pools may be another CFMM pool running the same strategy as the base pools, but over a larger basket of assets. A composite pool of TFMM pools may have new properties that no other subpool has.

Furthermore, composite pools may inherit pools' automatic re-weighting, wherein that liquidity may be shifted between base pools that are intended to perform better in different market conditions (*e.g.*, between a bull market subpool and bear market subpool).

In some example embodiments, creating the mechanisms to have a DEX pool that may avoid impermanent loss via update rules, as well as having a larger diverse liquidity pools, may improve pool construction. However, confidence in the pool configurations and/or constant (*e.g.*, automatic) management may be desired. However, a decentralized set of tooling may also require computing that is impractical on current blockchains. As used throughout this discussion, "liquidity pool" may refer to one or more collections of one or more digital assets/tokens that are provided by platform users, and may be managed by a smart contract to facilitate faster transactions.

When incorporated with partnerships that provide infrastructure, various example embodiments may offer a complete DEX including on-chain management tools. Such tooling may include, at least, standard update rule fact-sheets including market tests and quantitative analysis; historic and Monte Carolo value at risk (VaR) modelling (*e.g.*, may be used in construction of a risk management update rule); retraining of update rule parameters given more recent market data or a breach of a configured condition (*e.g.*, recent VaR exceeds limits); and/or compliance and regulation report generation.

Certain example embodiments may include strategies from traditional finance (TradFi) that may be implemented using various tools. For example, this protocol may provide the needed functionality to instantiate the pool's smart contract with a desired update rule. The provision of the tooling may be completely independent from the pool creator's choice of which rule to use and what tuning it should include. Furthermore, other community members may choose to capitalize this new pool or not, and if they become LPs, they may vote to tune or otherwise update the values of the parameters in the update rule. This may be in contrast to existing DEXes, wherein pools are instantiated by a choice of tokens along with some fixed or pre-defined function defining the weights **w.**

In various example embodiments, some or all update rules may contain numerical parameters that control their behavior, and these parameters may be preset. Choosing an uninformed parameter value may lead to negative performance of the pool. Alongside the smart contracts which implement various example embodiments, there may be a pool creation tool that provides contextual information and backtesting ability to allow pool creators to be more informed in their selection of parameter values for the target update equations (*e.g.*, private alpha). On blockchains with cheaper computations (*e.g.*, layer 2 (L2)), more sophisticated update equations may be possible, including calculations involving higher derivatives and special functions.

An important consideration is at what time these changes in weights should be applied, and may depend on the costs of calculations on a particular chain. In some blockchains, performing a re-weighting (*e.g.*, querying some oracles, doing calculations) may occur at a cadence of hours or days, rather than seconds or minutes. Improved blockchains may provide faster cadence of weight calculations, which may be achievable with various example embodiments. It may be desirable to increase competition between pool creators, which may be divided between those that want to update rules and those that want to instantiate a particular pool with particular choices of parameters and tokens.

Knowing in isolation that a signal takes a particular value at the present moment is not necessarily useful for making a decision based on that signal. It is often by knowing how the current signal compares to previous values, on some chose timescale, that enables use of a signal. This may mean that desired update rules need a gradient operator to indicate how much a market signal has changed. The signals available may include those provided by oracles, thus some example embodiments may be capable of finding the gradients of oracles. In addition to providing useful, usable result, some example embodiments may be sufficiently computationally cheap that doing so may be performed on-chain.

Various example embodiments may calculate the gradient as "rise-over-run," taking the difference between the value of an oracle and from a predefined time period. There may be excessive noise in a financial time series to perform this function; for example, a financial time series may not have a well-defined gradient that may be found as an infinitesimal rise-over-run calculation. These signals may not be viewed as being differentiable. Thus, there are often individual, erratic shifts in the market data, and it may not be desirable to over-fit changes in the pool to these transitory, rough movements. Some example embodiments may provide a smooth estimator of the oracle gradient, less impacted by very short term deviations. This may address problems of statistical estimation, wherein the effective temporal memory of the estimated gradient may be tuned.

In order to operationalize pool creators' desired update rules, a method is needed to calculate oracle gradients that is sufficiently and computationally efficient to be done on-chain. Some oracles may provide the prices of tokens (in a chosen format). Prices may be the information of prime importance. Thus, price oracles may become important, wherein provided oracles may be denoted as $\mathbf{p}(t)$, although this may be applied to any oracle (*e.g.*, volume, volatility).

Some example embodiments may include a form of exponentially-weighted online least-squares regression to learn and update an estimate of $\dfrac{\partial \boldsymbol{p}(t)}{\partial t}$, which may be denoted as $\beta(t)$. That this is an exponentially-decaying estimator may mean that some example embodiments have a particular time-scale for the memory of price movements, allowing to more easily adapt to changes in market dynamics. With a decay parameter $\lambda$, the resulting update equations may be denoted by equations (5)-(7) in Appendix 2, wherein $p(t)$ is a running exponentially-weighted moving average of the $N$ tokens' prices, and $a_t$ is an intermediate state variable that is a constant ratio, $\dfrac{(1-\lambda)^3}{\lambda}$, from the current estimate of the price gradient, $\beta(t)$. The memory of this procedure may be

$$t_{mem} = \frac{2\sqrt[3]{6\lambda}}{(1-\lambda)}$$

. For example, with new price information each hour, this may result in λ=0.9 so that $t_{mem} \approx 36 hours$. These equations may assume that one single scalar λ may be used. If λ is promoted to a vector, λ (*i.e.*, so each token may have its own memory length), one may use each token's λ for its own $\beta(t)$ estimator.

In various example embodiments, a broad family of update rules may be in the form shown in equation (8) of Appendix 2, wherein **p**(*t*) is a vector giving the required oracles values, for example, the prices of the *N* tokens in the pool. *f* may be chosen for a change in weights to be a function of **p**(*t*) and its time-derivative, giving a family of momentum-like (*i.e.*, trend-following) strategies, such as provided in equation (9) of Appendix 2. Additional structure would yield equation (10) in Appendix 2, where *k* is a chosen parameter that tunes how quickly (*i.e.*, how aggressively) the pool

$$g\left(p(t), \frac{\partial p(t)}{\partial t}\right)$$

changes its weights in light of the signal it receives. may be the function that calculates that signal, derived from oracle and oracle-gradient values, that the rule uses. Scalar *k* may be provided by equation (11) in Appendix 2, such that the vector change in portfolio weights, w(*t*)-w(*t*-1), has entries that sum to 0. If the weights summed to one before this update, they may also sum to one after this update. In order to use these update rules with a gradient estimator,

$$\frac{\vartheta \boldsymbol{p}(t)}{\vartheta t}$$

with $\beta(t)$ may be defined using equations (5)-(7) in Appendix 2. It is noted that each token may have its own λ for its own estimator, rather than using the same λ for each token in a pool. As discussed in more detail below, simulation of rules that use the same λ for all tokens may be used, which may ease visualization of the results.

One type of pool to build using these techniques may include a standard momentum pool. Here, the weights may change in proportion to the gradient of prices, and in inverse proportion to the prices themselves. The result, at each **w**(*t*), may be denoted by equation (12) in Appendix 2. Division may be performed elementwise, and with equation (13) in Appendix 2.

Under anti-momentum updating, the weights may change in a negative proportion to the gradient of prices, and in inverse proportion to the prices themselves. So it may have the exact same governing equations as a standard momentum strategy, except with $k \rightarrow -k$, as shown in equations (14) and (15) in Appendix 2.

$l_{p(t)}$ in the anti-momentum update rule, required to make the update sum to zero, may be related to mean-reversion strategies in TradFi that make use of the "winner-loser" effect. For a group of assets with observed similar behavior, one asset may lag the rest in its behavior temporarily before then "catching up." This may provide an opportunity to build value, and for the right parameter choices, this rule may also provide returns during bear markets, as discussed later.

In some example embodiments, it may be desirable to have weights change in a non-linear way, rather than linearly. For example, it may be relatively insensitive to smaller changes in prices, but act particularly aggressively to larger changes. This may be related to the logic behind "channel" strategies in TradFi, wherein a portfolio changes its weights only if the asset prices "break-out" of a particular range around their trajectories. In such cases, there may be a cliff-edge trigger. In response, a smoother version may be applied, such as the "power channel" update rule provided in equation (16) of Appendix 2, wherein $l_{p(t)}$ is again chosen to make the update sum as zero, $q_1$, the exponent, is >1, and sets how strong this nonlinearity is.

In order to combine the properties of the above into one, for small price deviations, anti-momentum may apply where the trend is expected to revert; for larger deviations, a power-boosted momentum may apply where the trend is expected to continue. This may be accomplished with equation (17) in Appendix 2.

The above rules may not be exhaustive when implemented in example embodiments as a platform for permission-less structuring of automated pools. Users may compose custom update rules; for example, some example embodiments may choose to have equation (18) in Appendix 2, wherein **A** is a matrix, and **b** is a vector for which multiplication is done elementwise). Alternatively, they may choose some other function of **w**(*t*-1), **p**(*t*), and $\frac{\vartheta \boldsymbol{p}(t)}{\vartheta t}$ as the update rule for the pool they instantiate.

Some rules may commonly involve a step-size *k*, which may be more naturally parameterized not directly by

$$\tilde{k} = \frac{k}{t_{mem}}$$

*k* but by *k̃.* , where $t_{mem}$ is the memory length of the estimator for the current rule. This may be a more natural parameterization as longer memory lengths (from larger λ values in equations (5)-(7) in Appendix 2) lead to smaller gradient estimators, so it may be reasonable for *k* to be parameterized taking this scaling into account.

Some update rules may need access to the variance of an oracle of the covariance between oracles. For example, any update rule that wants to use Markovitz/Mean-Variance Portfolio Theory (MVPT) or related techniques may apply them. The following is a discussion on how certain example embodiments may produce on-chain estimates of the covariance matrix for a set of oracles (*e.g.*, oracles that quote prices), as well as separately the inverse of the covariance matrix, the precision matrix. Calculating the precision matrix as its own quantity makes sense, rather than obtaining it as the inverse of the covariance matrix since it may be undesirable to invert a matrix on-chain.

A set of mathematical methods may be used that are similar to those used to calculate a smoothed, exponentially-decaying estimator of the gradient of a signal to calculate these quantities. It may not require the covariance (nor precision) of raw signals (*e.g.*, prices), but instead the covariance (or precision) of returns. Similar to the oracle gradient estimator, some example embodiments may use recent data points rather than old data points. In order to run this estimator cheaply on-chain, there may be an online estimator wherein new information is used to update a running estimate of the covariance/precision matrix. Following a substantially-similar derivation to that for the oracle gradient estimator, a covariance matrix for a set of oracles may be obtained by update equations (19)-(21) in Appendix 2, where division is performed elementwise, $p(t)$ is a running exponentially-weighted moving average of the $N$ oracles, $\mathbf{A}(t)$ is an intermediate state variable that is a constant ratio $(1-\lambda)$ from the current estimate of the covariance matrix, $\Sigma(t)$ and $\lambda$ is the exponential weighting factor.

A Sherman-Morrison formula may be used to derive a similar on-line estimator for a precision matrix, thereby avoiding the need to perform a matrix inversion. The update equations may be provided by equations (22)-(24) in Appendix 2, where division is performed elementwise, $p(t)$ is a running exponentially-weighted moving average of the $N$ oracles being called, and $\mathbf{S}(t)$ is an intermediate state variable that is a constant ratio, $(1-\lambda)$ from the current estimate of the precision matrix, $\Sigma(t)$.

In some example embodiments, MVPT may be used to construct a broad array of different portfolios. The update rules that come from MVPT may differ to the other update rules considered so far: they may not have the form of equation (10) of Appendix 2. Rather, they may be examples of an update rule of the more general form of equation (8). This may be due to MVPT not providing a series of changes to portfolio weights but instead providing portfolio weight vectors directly.

In order to use update rules that naturally produce whole portfolio weight vectors rather than weight changes, exponential smoothing may be applied over the sequence of given weight vectors, as in equation (25) of Appendix 2, wherein A is an exponential smoothing parameter, which may be analogous to that used in oracle gradient/covariance calculations.

Various example embodiments may use MVPT outputs, such as the minimum variance portfolio. $\hat{w}^{min\text{-}var}(t)$ may be the sequence of min-variance weights. For simplicity, assets may be modelled as uncorrelated with each other and having zero average return. Given these assumptions, the minimum-variance weights may be provided by equation (26) of Appendix 2, wherein $\Sigma^{-1}(t)$ may be a vector whose elements are the precisions of the returns for each token in the pool, which may result in equation (27) of Appendix 2. The inverse-variance estimation process may have its own memory length, determined by $\lambda$ above, which may be used to parameterize the pool alongside A.

All update rules may contain some parameters. For example, those parameters may have clear interpretations, thereby changing a pool's aggressiveness ($k$) or memory length ($\lambda$). In some examples, the parameters may have a less clear interpretation (*e.g.*, **b** in equation (15) in Appendix 1). To deploy a pool, these parameters may need to be selected. For wide ranges of parameter values, the example update rules described herein may perform well, in a range of market conditions. However, particular values of the parameters of a pool's update rule must be given. Some example embodiments may provide to pool creators a pool-software development kit (SDK) that enables the design of pools, and the tuning of pool parameters in accordance with the creator's goals. This may maximize a Sharpe ratio over historical data, and/or minimize variance of returns over Monte Carlo draws of price movements, or any of a broad range of other objective functions. This may be achieved via backprogation (*i.e.*, gradient descent, which can be applied even if the problem is non-convex).

The example update rules described above may produce pools that run a single mathematical formula based on some particular choices of parameters $k$ (*i.e.*, aggressiveness) and $\lambda$ (*i.e.*, memory). With these rules, it may be possible to combine multiple update rules together, improving synergy between their different behaviors. Discussed below are techniques for how, in some example embodiments, pools may be composed with each other, building hierarchies (*i.e.*, pools of pools) that have complex behaviors. The brick-like combining in composite pools may avoid liquidity fragmentation and/or enable dynamic re-allocation of capital between different update rules/strategies.

In some example embodiments, liquidity fragmentation may be undesirable, and there may be cases where interpretable re-allocation of capital between different update-rues/strategies may be unnecessary, or undesirable. This may be a "flatter" way to combine update rules by creating a new pool, a batched pool, whose update rule may be made by combining many simpler update rules, a procedure that may be referred to as batching. Some or all values in the batched pool may be allocated according to the overall weight-changes of the overall, batched, update rule - a single pot.

There may be many ways to be wrong and relatively few ways to be right. When the update rules in the batch are making good decisions, they may be in agreement; however, when they make bad decisions, their outputs may be bad in different ways. Thus, by averaging their outputs, the good choices may be amplified, and the bad choices may cancel each other out (at least partially). This averaging is similar to ensembling in applied statistics, where many small models are average to give an overall output.

Concretely, given a set of $M$ update rules, which may take the form shown in equation (8) in Appendix 2, an ensemble update rule may be made by taking the average of their output. In this case, the ensemble update rule $w_{ensemble}(t)$ may be denoted by equation (28) in Appendix 2, and if the constituent update rules output changes of weights, as in equation (10) of Appendix 2, the batched weight vector $w_{ensemble}(t)$ may be denoted by equation (29) in Appendix 2. For some classes of update rules, there may be ways to share/cache computation of a set of update rules being batched together, thereby reducing running costs.

Oracles may be attacked. Some smoothed estimators may be more robust to oracle attack than naive estimators. There may be a need to determine how it changes as a function of the newest oracle value p($t$). The completely naive gradient estimator is shown in equations (30) and (31) in Appendix 2, so any changes in oracle value may pass one-for-one over to changes in this naive gradient.

For a smoothed estimator, by rearranging equations (5)-(7) in Appendix 2, equation (32) may be derived, from which the dependence of $\beta(t)$ on p($t$) as shown in equation (33) in Appendix 2. For any value of $\lambda$, the smoothed estimator may be less affected by the new oracle value, so larger attacked-oracle values may be needed to get a matched change in output. $\lambda$=0.8 (a reasonable value) may give a smoothed estimator x25 more robust than the naive estimator.

Various example embodiments may allow for multi-token trades. For example, a trader wishing to exchange a particular set of tokens, which may be represented by the vector $\Delta$, for another set of tokens A, where entries in each are $\geq 0$. The protocol may require, for tokens $i$ where $\Delta_i > 0$, that $\Lambda_i = 0$: tokens may not be traded for themselves. With fees $(1 - \gamma)$, for a trade to be accepted, equation (34) in Appendix 2 must be satisfied.

Some example embodiments may take a dynamic position in the marketplace, changing the weights in the pricing function for tokens on the fly, so via providing arbitrage opportunities it may increase its proportional holdings in some tokens and decrease its proportional holdings in others, in a manner designed to earn a return for LPs. Reserves may then be adjusted to be consistent with external markets. Thus, the protocol may offer lower fees to traders wishing to exchange tokens than on other protocols where trader fees are needed, because of impermanent loss, to attempt to make LPs whole.

Considering a swap, a token-pair trade, *i.e.*, $\Delta$ and $\Lambda$ may both be further restricted to be one-hot. The trader may wish to exchange $\Delta_j$ of the $j^{th}$ token for some amount. $\Lambda_k$ of the $k^{th}$ token, $j \neq k$. Some example embodiments may provide a pool's quote for the amount $\Lambda_k$ that it will accept for the trading-in of $\Delta_j$, via inversion of equation (34) in Appendix 2, as shown in equation (35) in Appendix 2.

Various example embodiments may find unscaled prices, $\mathbf{p}^{TFMM}(t)$, offered by some example embodiments (*e.g.*, in the case of 0 fees) by taking the derivative of its defining function, as provided in equation (4) of Appendix 2, with respect to the vector of reserves held, as shown in equation (36) of Appendix 2, wherein the division in the final

$$p_{i,j}^{TFMM}(t)$$

fraction is calculated elementwise. Similarly, to calculate , the prices of the $i^{th}$ token in terms of the $j^{th}$, that is using the $j^{th}$ token as the num6raire, simply divide the $i^{th}$ unscaled priced by the $j^{th}$, as provided in equation (37) of Appendix 2. Equation (37) makes explicit the relationship between the trajectories of a pool's weights and the prices it quotes. If the weight of token $i$ increases relative to token $j$, the price of the token $i$ may increase relative to token $j$; conversely, a decrease in the relative weight of token $i$ may result in a decrease in its price, such that trading pushes the reserves out of token $i$ and into $j$.

In various example embodiments, depositing and withdrawing liquidity to and from a pool $P$ may correspond respectively to increasing and decreasing the pool value $k(t)$, which may provide a unitless scalar measure of the size or "value" of the pool's reserves, given its current weights. Similar to the pools on existing DEXes, each pool may issue liquidity tokens to LPs in proportion to the value they place in a pool. At time $t$, the total supply of liquidity tokens $\tau_\rho(t)$ for a pool $P$ may be provided according to $\tau_\rho = s(w(t))k(t)$, where s is a scaling factor that determines the total size of the supply.

Depositing all the assets in a pool in proportion to their existing supply may scale $k$ accordingly (where for now $k$'s explicit time dependence is dropped to minimize clutter). That is, when $\Delta_i$ tokens of each asset i are deposited, where $\Delta_i = cR_i$ for some scalar $c$, the reserves therefore may change according to the map $R_i \rightarrow (1 + c)R_i$, and hence the value of $k$ may map according to $k \rightarrow (1 + c)k$. The depositor may therefore be allocated $c\tau_P$ new liquidity tokens, and the total liquidity tokens supply may evolve as $\tau_P \rightarrow (1 + c)\tau_P$. This process may be referred to as an all-asset deposit.

An LP does not have to deposit all the assets in a pool to obtain liquidity tokens, but may deposit any quantity of any of the underlying assets, and obtain tokens in exchange for the increase in pool value. Since liquidity tokens are issued in exchange for increasing the value of $k,$ it may be needed to know how many tokens would be issued if $k$ is increased to a new value $k'$. Since the number of liquidity tokens $\tau_P$ may be proportional to $k,$ this may result in equation (38) of Appendix 2, wherein $\tau'_P$ is the new supply of liquidity tokens, and $\delta$ is the new issuance.

In some example embodiments, an LP may wish to deposit assets in quantities given by $\Delta_i$, where $i$ ranges over the assets in the pool. This may result in equation (39) of Appendix 2, and hence equation (40) in Appendix 2. In the case of a single-asset deposit, this may be denoted as equation (41) in Appendix 2.

Conversely, a LP may redeem liquidity tokens (thereby reducing $\tau_P$), and thereby withdraw assets from the pool - and there may be corresponding formulae for all-asset and arbitrary-asset withdrawals, obtained by taking the change $\delta$ in token supply to be negative. These formulae may also be inverted to obtain expressions for how many tokens of given asset types must be deposited (or withdrawn) to acquire (or destroy) a certain number of liquidity tokens.

Certain techniques exist for "concentrated liquidity" where trades may be performed "as if' a pool contains more reserves than it in fact does. If liquidity is concentrated by quoting trading using these virtual reserves, that are greater than the true reserves, then it may be possible for trades to remove all of the reserves of any token in the pool by a single trade or a sequence of trades. This has the effect of making the reserves of a pool only available within a certain range of market prices. This may provide an advantage of reduced slippage for traders, as higher reserves in a pool may naturally decrease the curvature of commonly-used trading functions. This means that pools with concentrated liquidity may be more appealing for traders compared to those that do not concentrate their liquidity, all else being equal. Some previous techniques have implemented concentrated liquidity for pools composed of pairs of tokens. Some example embodiments herein extend the virtual resources approach to pools with non-uniform weights over tokens and simultaneously to multi-token pools.

Some example embodiments may include pools that have, in a given block, the invariant equation (42) in Appendix 2. Reserves may be scaled uniformly by a factor $v(\geq 1)$ to obtain virtual reserves, $R_i$, as shown in equation (43) in Appendix 2, and further require that these new virtual resources follow a matched virtual invariant function as shown in equation (44) in Appendix 2. Substituting in $R_i = vR_i$, this may yield equation (45) in Appendix 2.

While initial reserves may be scaled, in effect pretending the pool has more reserves that it does, the trade amounts (*i.e.*, the number of tokens going into an out of these pools) must be the number of tokens the trade is wishing to exchange. Both true and virtual token reserves may change by the same amount. Allowed trades may include those replacing $R_i$ with $vR_i$ in equation (34) of Appendix 2, resulting in equation (46) in Appendix 2. And the concentrated equivalent to a token-pair trade, as shown in equation (35) of Appendix 2, trading $\Delta_j$ of token $j$ into the pool in exchange for the $\Delta_k$ of token $k$, results in equation (47) of Appendix 2. After a trade has been completed, primes may be used to denote post-trade quantities, as shown in equations (48), (49), and (50) of Appendix 2. The post-trade invariants of the virtual resources, as shown in equation (44) of Appendix 2, may be in terms of the true reserves, as shown in equation (51) of Appendix 2, which shows that the virtual invariant may be a scaled and shifted version of the original invariant.

Underlying, true token reserves may not be below zero, so $R_{i,min} = 0$. This may place restrictions on the virtual reserves, as shown in equation (52) of Appendix 2, which is intuitively the case since initial virtual reserves are $vR_i$, and then $R_i$ may be removed from them. The maximum value of the virtual reserves may depend on whether the true reserves of all other tokens go to zero. The maximum value $R'_i$ may reach, in the no-fees-case, is shown by equation (53) of Appendix 2. Thus, the corresponding maximum value of the true reserves is shown by equation (54) of Appendix 2.

A pool is in equilibrium if the actual division of value between assets is in accordance with its weight vector **w.** If that is the case, **w** is be the division of value over assets in a pool. At time $t_0$, for market prices $p_i(t_0)$ and pool reserves $R_i(t_0)$, for a pool in equilibrium, it may be the case shown in equations (55)-(58) of Appendix 2, where

$$V(t_0) := \sum_{i=1}^{N} p_i(t_0) R_i(t_0)$$

may be the value of the pool, in the numéraire of the market prices $p_i(t_0)$.

As mentioned earlier, the slippage in a trade is a function of the curvature of the underlying trading function. In order to improve the experience of traders, a "virtual" pool may be found which has less curvature that the original, and expose that new virtual pool's trading function to a trader to interact with. It may be desirable to find an invariant function of the same geometric form as the original, but scaled and translated in such a way that curvature is minimized. This provides $N + 1$ degrees of freedom, with one for each translation in a token direction and an overall scaling. However, these movements of the trading function have the potential to change the quoted prices of the pool. If trading using the virtual trading function is done using prices that are inconsistent, the system will create enormous and costly arbitrage opportunities. That is, the gradient of the virtual trading function with respect to virtual token reserves, evaluated at the virtual reserves the true reserves are mapped to, may match the gradients of the original trading function evaluated at the true reserves. These requirements take up $N$ degrees of freedom, meaning that the set of possible virtual reserves can be parameterized by a single parameter, $v$.

In selecting value to set $v$, pool creators may choose a particular value based on their analysis, analogous to how update rules' parameters are set; but also, if they prefer, they may choose an external smart contract to be called at the same time as the weight update call to calculate a dynamic $v(t)$ that depends on market conditions, including via a non-linear function, which may include external oracle calls.

In various example embodiments, pool reserves, and pool values, may change. Previous DEXes' pools may have fixed weights, leading to impermanent loss. As explained above, in previous DEXes, LPs may suffer from impermanent (*i.e.*, divergence) loss: any change in the ratios of the market prices of tokens in a basket leads to that pool holding less value that when the pool was capitalized. When the market prices change in ratio, the LPs (in the absence of fees) are be guaranteed to be outperformed by those who simply held their initial capital. While some examples discussed herein use $v=1$, but the results may by generalized by replacing $R_i$ with $vR_i$ for $v>1$. Market price change from some initial value $\boldsymbol{p}(t_0)$ to a later value $\boldsymbol{p}(t')$. At the initial moment, assume the quoted prices of the pool match the market prices - the pool is, at that moment, in equilibrium. Then, given that change in market prices, arbitrageurs may trade with the pool until, again, the quoted prices of the pool match the new market prices. Performing this analysis, the pool's reserves at a later time t' may be denoted by equation (59) in Appendix 2, where multiplication and division between vectors may be performed elementwise. The value in a pool, in the market-price numéraire, at any time $t$ is

$$V(t) = \boldsymbol{p}(t) \cdot \boldsymbol{R}(t) = \sum_i^N p_i(t')R_i(t)$$

. This may result in equations (60) and (61) in Appendix 2. To get the impermanent loss equations, the change in the pool value from $t_0 \rightarrow t'$ to the change in value of the initial reserves $R(t_0)$,

$$V_{hold}(t) = \sum_{i=1}^n R_i(t_0)p_i(t)$$

, resulting in equations (62) and (63) in Appendix 2, as used in equation (55). Thus, this may result in $\Delta V$, the proportional change in the value of the pool compared to holding, as denoted in equation (64) of Appendix 2. This function range is $\leq 0$, due to the weighted AM-GM inequality; thus, for any $\boldsymbol{p}(t') \neq b\boldsymbol{p}(t_0)$ (where b>0 is any scalar), $\Delta V < 0$ so LPs have lost value compared to holding their initially-deposited capital.

In various example embodiments, holdings, and thus value, of a pool may change when the weights are updated, especially for constant market prices with changing weights. Given a change in pool weights, arbitrageurs may trade with the pool until the quoted prices of the pool match the current market prices, using weights $w(t')$ with time $t' = t_0 + \delta_t$ and new weights $\boldsymbol{w}(t')$, but still $\boldsymbol{p}(t') = \boldsymbol{p}(t_0)$. This provides a weight-update counterpart to equation (59) in Appendix 2, shown by equation (65) in Appendix 2, where multiplication and division between vectors are performed elementwise. This leads to the weight-update counterpart to equation (61) in Appendix 2, the value after the weight-change, provide by equations (66) and (67) in Appendix 2, which does not admit a simple form in the same way of equation (61) where $V(t_0)$ may be removed from the sum.

Furthermore, equation (59) in Appendix 2 is state dependent, not path dependent. In state dependent systems, the terms involving intermediate values of variables cancel out, while in path dependent systems, they do not cancel out. Thus, for DEX pools with fixed weights, if prices go from $\boldsymbol{p}(t_0) \rightarrow \boldsymbol{p}(t') \rightarrow \boldsymbol{p}(t'')$, $\boldsymbol{R}(t'')$ may be rewritten using the variables $\boldsymbol{p}(t'')$, $\boldsymbol{p}(t_0)$, and $\boldsymbol{R}(t_0)$. The terms involving $\boldsymbol{p}(t')$, $\boldsymbol{R}(t')$ then cancel out. In contrast, in equations (65) and (67) in Appendix 2, the entire trajectory of weights determines how the reserves and value may change.

When market prices change in certain example embodiments, equations (59) and (65) in Appendix 2 may model how reserves change. Changes-of weights may be interspersed with changes-of-prices. For a single block within which the market prices change and then at the end of the block the pool updates its weights, equation (68) in Appendix 2 is the resulting equation, where multiplication and division between vectors is performed elementwise. From the path-dependency of equation (65) in Appendix 2, this combined update is also path dependent and now depends upon both the trajectory of prices and that of weights. The corresponding change in value for one combined update is shown in equations (69) and (70) in Appendix 2. Thus, some example embodiments may not suffer from impermanent loss (but of course capital is at risk, update rules can be ill-tuned or have market behavior change such that they no longer operate as expected). The value of a pool in some example embodiments depends on the sequence of weights and prices over time, and its value may increase above simply holding capital.

In a scenario where the weights may change every block without action by the arbitrageur, an arbitrage opportunity may increase every block, assuming constant market prices. This may mean that in effect there is a form of reverse Dutch auction taking place, where the amount a TFMM pool may pay to rebalance increases with blocktime. Thus, the arbitrage opportunities of TFMM pools may result in healthy competition between arbitrageur for who can first fulfill the arbitrage trade, ahead of competitors, by having the leanest, lowest-cost method of arbitraging.

In some example embodiments, weights may change when the pool is in equilibrium - quoting the market price - creating an arbitrage opportunity. This may be desirable to incentivize the pool's reserves to be re-balanced in-line with the new weights. It may also be desirable to LPs for the arbitrage opportunity to be smaller rather than larger. This may be similar to "execution management" in TradFi, where a trader may desire to have transactions to follow best execution policies that may reduce cost. One technique to reduce arbitrage opportunity from a weight update is to spread out the weight update out over a period in time. Thus, when weight updates are divided up into a series of smaller steps, the total resulting arbitrage from all of those multiple steps is less than if the update were performed in one step, under the assumption that market prices are constant over the period of time in which weights are changing.

Equation (71) in Appendix 2 provides such a result. It may be desirable to compare $R^{1-step}$, the reserves in the pool when the weights are directly updated from $w(t_0) \rightarrow w(t_0) + \Delta w$, a one step process, to $R^{2-step}$, the reserves following this weight update via a two step process:

$$w(t_0) \rightarrow w(t_0) + \frac{1}{2}\Delta w \rightarrow w(t_0) + \Delta w$$

.

The ratio between $R_{2\text{-}step}$ and $R_{1\text{-}step}$ may be greater than or equal to one. When $\Delta w_j$ is >0, its term in the product is >1, as a number >1 raised by a positive power. When $\Delta w_j$ is <0, its term in the product is >1, with a number <1 raised by a negative power. When $\Delta w_j$ is =0, the term in the product is 1, as a number raised to the power 0. Thus, for any weight change currently being done in one leap, there is an improved weight update procedure by going through and equilibrating at the midway value. After applying this "bisection" once, this may be applied on each half of the new procedure, dividing changes in weights in half again. Thus, weight changes may be maximally smooth. For given start and end weights, choosing to linearly interpolate the value of the weights in the pool at block-level resolution is thus a simple and effective way to provide smooth weight changes.

While it may be better to be smoother, and to be smoother in this linear-bisection manner, this peaks at the block resolution. There may be additional capital-efficient ways for pools to provide arbitrage opportunities to the market that use non-linear interpolations. One technique to address this is via calculus of variations to find the trajectory of weights that minimize the amount that is paid to arbitrageurs. This may not have a clear closed-form solution, even when making the assumption that prices are constant over the weight-interpolation period. However, it may be numerically calculated. For example, for a sequence of $f$+1 weights, indexed from $t_0$ to $t_f$, $\{w(t_k)\}_{k=0,...,f}$, and constant prices the final reserves are provided in equation (72) of Appendix 2. Within this framework, this may be attacked as an optimization problems, since the goal may be to find the trajectory of weights that minimizes the amount that is paid to arbitrageurs (*i.e.*, maximizes the pool value subject to constraints on the weights, as shown in equation (73) of Appendix 2, which fulfills the Karus-Kuhn-Tucker (KKT) conditions with $\{\mu_{l,m}\}$ and $\{\Lambda_k\}$ as multi-pliers. The optimum may be numerically calculated, as can more sophisticated approaches including changing prices (or even uncertain predictions of future prices) and the presence of fees. These calculations may be run on-chain or otherwise made available to a TFMM pool. During a weight update call, it may be possible to put in an external oracle call that returns a "weight trajectory array." There may be a trade-off in greater costs versus the improvement from a more-complex weight trajectory. The greater a pool's total value locked (TVL) and the cheaper the weight trajectory oracle call is, the easier it may be to justify this expenditure.

By splitting up the arbitrage opportunity, pools in some example embodiments may re-balance to their re-weighted holdings extremely cheaply, being competitive with or outperforming re-balancing via interacting with a centralized exchange. Simulations of rules in example embodiments have been run in a matched way interacting with a CEX assuming no slippage, trading at market mid-price, minimal fees (only charged on trades out from a pool), and tuned re-balancing frequency to minimize churn. While exact performance may depend on the basket of tokens and the update rule used, over a supercycle, some example embodiments commonly contain 50% more value in them compared to matched simulations of CEX re-balanced pools.

Assuming constant market prices over the course of interpolation, a cheap-to-compute approximation to the zero-fees solution of equation (73) in Appendix 2 may provide a superior method of pool rebalancing over linear interpolation.

Assuming that the weight change from $w(t_0) \rightarrow w(t_f)$ is small, equation (74) in Appendix 2 may be directly optimized without needing to impose the constraints of equation (73) of Appendix 2. This may yield the optimal intermediate value shown in equation (75) in Appendix 2, where $W_0(\cdot)$ is the principal branch of the Lambert W function, and e is Euler's constant. The Lambert W function is a special function, the solution to a transcendental equation, so not trivial to compute on-chain. While there may be methods to approximate $W_0(\cdot)$, these may require nested calls to $log(\cdot)$, that are not ideal for constrained-compute environments, and may be best over particular ranges of inputs while the ratios of start and end weights may take a broad range of values. The values of $\widetilde{w}_i^*$ (*i.e.*, the optimal intermediate weight in a two-step process) are bounded from above and below by the arithmetic mean and geometric mean (respectively) of $\{w_i(t_0), w_i(t_f)\}$, as provided in equation (76) of Appendix 2. The arithmetic mean of the geometric and arithmetic means of $\{w_i(t_0), w_i(t_f)\}$ may provide a simple and effective method for approximating the optimal intermediate weight.

The approximations may be used to give close-to-optimal multi-step weight trajectories, even though the base analytic result provided in equation (75) of Appendix 2 may only be for a single intermediate point. Along a trajectory of many intermediate weights, the optimal $\tilde{w}_i$ at any stage in that trajectory will lie above the geometric mean of the prior and post weights and below their arithmetic mean. The approximately-optimal $f$-1-step weight trajectory $\{\tilde{w}(t_k)\}_{k=1,...,f-1}$ for going from $w(t_0)$ to $w(t_f)$ may be made by taking the average of the linear interpolation between these values and the geometric interpolation between these values, and provided in equations (77)-(79) of Appendix 2, which normalizes weight trajectories to enforce that they sum to 1 at each time step.

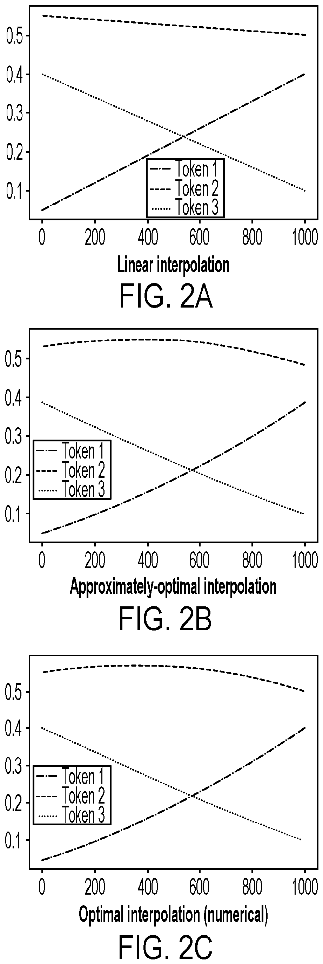

The optimal trajectories may be provided by $\{w^*(t_k)\}_{k=1,...,f-1}$ by numerically solving for equation (73) in Appendix 2 for a given choice of $N$, $f$, $w(t_0)$, and $w(t_f)$. In FIG. 2, the linear interpolation may be compared with $\{w^*(t_k)\}_{k=1,...,f-1}$ and numerically-found $w(t_f)$ = {0.4, 0.5, 0.1}, and this may be performed over $f$=1000 steps. Due to the accuracy of the approximately-optimal series to the numerically-found optimal trajectory, the latter two curves may be difficult to visually distinguish.

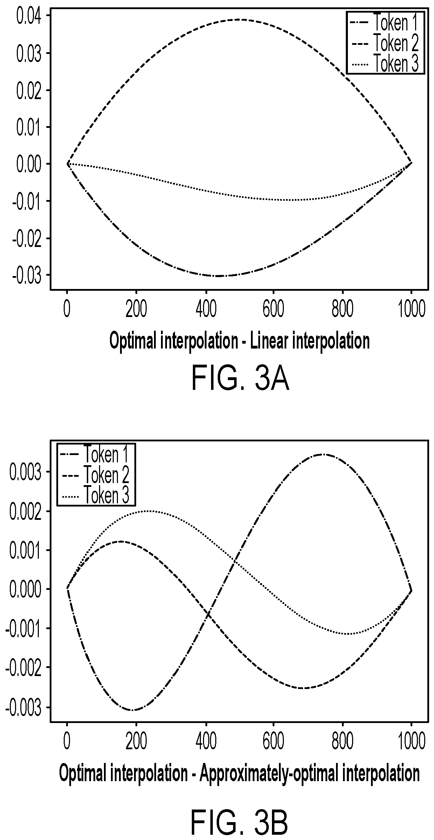

In FIG. 3, the difference may be taken between numerically-found $\{w^*(t_k)\}_{k=1,\dots,t-1}$ and each of linear and approximately-optimal interpolations. In this example, the approximately-optimal trajectory $\{w(t_k)\}_{k=1,\dots,t-1}$ has a maximum absolute deviation of weights of $\approx 0.003$ from the numerical optimal trajectory $\{w^*(t_k)\}_{k=1,\dots,t-1}$, compared to $\approx 0.04$ for linear interpolation.

Based upon the above, how TFMM pools' reserves and value change when the weight changes are small is of particular importance. From this, TFMM pools rebalance can be studied, including when fees are present. As an example, if there is a very small change in weights, equation (80) in Appendix 2 may be used, where the components $\delta_{w_i} \ll 1$. Starting with equation (65) in Appendix 2, rearranging, and then introducing equation (80) in Appendix 2, may yield equations (81) and (82) in Appendix 2. Using this with equation (67) in Appendix 2, small weight changes may be provided by equation (83) in Appendix 2. As a result, for small weight changes, to first order, a TFMM pool may act as an optimum rebalancer: the value of the pool may not change under rebalancing.

Handing the trading function of a geometric mean market maker may be complicated as generally one ends up with implicit functions. The effect of a trade with fees on pool value is to increase the value held in the pool, and this amount may be bounded from below by simply the fees time the value of the assets being traded into the pool, as shown in equation (84) of Appendix 2, where $\Delta$ is the vector giving the assets being traded into the pool. Applying this to equation (83) in Appendix 2 may yield equation (85) of Appendix 2. A simpler form of equation (86) of Appendix 2 can be derived. These results may show how a TFMM pool rebalancing may lead, with fees present and under the assumptions made (including being in the limit of small weight changes and having constant prices) to an increase in value of the pool. Equation (86) of Appendix 2 may provide this result.

The equivalent results may be derived the equivalent results for a more standard rebalancing procedure, such as by using a CEX. The CEX-rebalancing counterpart may be shown in equation (86) in Appendix 2. Here, the pool is a taker, providing the LP-rebalancing results above. As a result, the pool may be worth slightly less than $V(t_0)$ after the rebalance, rather than slightly more.

Some example embodiments may include constraints on the values that can be taken by the entries of the portfolio weight vector $w(t)$. Having the pool put all its reserves into one token may be undesirable. Thus, the entries of

$w(t)$ may be bound according to equation (50) in Appendix 1, where $\epsilon_{min} = \dfrac{1}{2N}$ and $\epsilon_{max} = 1 - \dfrac{1}{2N}$. This

may be implemented by checking the updated weight vector for entries outside the permitted range and redistributing the out-of-bound portfolio "mass" between entries.

Similarly, the maximum-allowed size of weight updates may be capped according to equation (51) in Appendix 1. One aspect in example embodiments is whether, through the weightings between tokens changing over time, their temporal dependence may lead to an opportunity for a front-running attack against LPs. This may be similar to a "sandwich attack" on a trade made on a standard DEX pool. When weight updates are smoothed-out as described above, over many blocks, the changes in weight occurs between blocks. This may render weight updates reminiscent of trades in time-weighted average market makers. Thus, any attacker may have to do an MEV attack over multiple blocks; being the last transaction of one block and the first of the next. This may reduce the possibility of "sandwich attacks" on the weight updates as it may require multi-block MEV manipulation.

As an example, a weight change may be similar to a trade, both changing the quoted prices of a pool (similar to equation (30) in Appendix 1), the first by changing **w,** the second by changing **R.** As both change prices, they may create arbitrage opportunities; pools may benefits from arbitrageurs receiving quoted prices to match the market prices. However, in a sandwich attack, a pre-trade is done that magnifies the size of the arbitrage opportunity caused by the sandwiches trade, enabling greater return to the attacker than if they had merely arbitraged the trade afterwards. Similar to how trades should be of a sufficient size for a sandwich attack to be viable, for a given level of fees and a given maximum trade size, a weight change should be above a certain size to be sandwich-able.

Thus, dividing a weight update into many smaller steps may be advantageous in many example embodiments as it minimizes the cost paid to arbitrageurs, as well as providing a second benefit of small weight-change steps where, in the presence of fees, they provide protection from a multiblock MEV attack.

Various example embodiments may include a pool creation tool for enable modelling and designing of pools, and estimating all the example rules discussed above over selected tokens and parameters. The pool creating tool may be applied to a basket of cryptocurrencies (*e.g.*, wETH, wBTC, wADA, and DAI), using market data over a given market economic cycle.

Oracle/update rule calls may occur every hour, with the pool SDK modelling the action of arbitrageurs using minute level oracle data. Weights may be interpolated to the desired value of the following hour, with all guard rails applied as described above. Arbitrageurs may arbitrage the pools every 5 blocks, and thus this modelling does not assume perfect arbitrage.

For many update rules, a desirable pool may have assets that are relatively uncorrelated with each other. For momentum, it may also be desirable if the pool contains assets that are anti-correlated with each other to provide diversity. If all the assets were perfectly correlated with each other, this may be similar to having one asset in the pool, possibly negating some benefits. DAI, a stablecoin, has an approximately constant value that is nearly uncorrelated with other assets. Similarly, Cardano (ADA) is a large market-cap, highly-liquid token that is less correlated with BTC/ETH than other similar-market-cap tokens. There are times when ADA is anti-correlated with BTC, which may make it a useful addition to the pool.

The update rules described above may only have two parameters. This simplicity improves the performance for a broad range of differently-parameterized pools that use the same update rule. Thus, for each rule, a grid may be plotted for each value of its two parameters to show Jensen's Alpha of that particular choice of parameters for that rule, benchmarked against not using various example embodiments. This modelling may assume no fees, which would be a conservative assumption since it reduces pool performance.

Each pool may begin with equal value of each token, such as $w(t_0) = \left\{\frac{1}{4}, \frac{1}{4}, \frac{1}{4}, \frac{1}{4}\right\}$. As the underlying decay constant parameters present in update rules ($\lambda$ used in gradient or covariance estimation, the decay constant A used in smoothing a sequence of MVPT weights), the effective "memory length" of these processes may instead be plotted. This may represent the time it takes for a previous observation to have later no lingering effect on the present value of estimated quantities. Also, the "step size" parameter $k$ present in many rules may vary, so this may be represented as a (base 2) logarithm instead. The anti-momentum update rule may be preferred in bear runs, which may be demonstrated over the recent bear run from November 2021 to July 2022.

For a broad range of parameter values, some pools of example embodiments may outperform holdings the initial capital, indicating the robustness of various example embodiments in improving computer-driven trading markets. As discussed above, various example embodiments may have vector parameters (different values for each constituent) rather than scalar parameters (one value for all constituents), which may improve performance as different constituents may have different properties; however, this may not be clear from heat maps.

FIGs. 2*a*-2*d* depicts the backtest of various update rules for a wETH, wBTC, wADA, and DAI basket over a supercycle from February 2021 to July 2022 for each over a range of parameter values. Jensen's Alpha may be plotted using other techniques as the benchmark. For the minimum-variance pool, DAI may not be included; as a stablecoin, DAI has diminishing covariance, so it may dominate any minimum-variance pool it is in. Anti-momentum may also be demonstrated in a specific market condition, the start of the latest bear market from November 2021 to July 2022. This may show how you can construct market-condition-specific base pools that may be of use within a composite pool, as discussed below. Note that the rules that involve a step-size $k$ (all but min-variance) are here parameterized by $\tilde{k}$, $\tilde{k} = \frac{k}{t_{mem}}$, where $t_{mem}$ denotes the memory length of the estimator for the current rule. This may be a more natural parameterization as longer memory lengths (which may come from larger $\lambda$ values) lead to smaller gradient estimators, so it may be reasonable for the used $k$ to be scaled by the memory length $t_{mem}$.

FIG. 3 illustrates a histogram of returns for different momentum pools shown in FIG. 2a, relative to standard methods. FIG. 2 also shows the return for the batched momentum rule, the black line, made by averaging this entire set of updates rules to construct a new batched update rule. This batched rule may have a return of $\approx 0.8$ over this period.

The performance of a batched pool, as discussed above, may also be affected by averaging the outputs for every different setting of the parameters from FIG. 2a. There are $61 \times 61 = 3,721$ pairs of values of $\lambda$, $k$ (as in the plot linearly-spaced in memory length and $T_{\tilde{k}}$) and then using that average-weight-update as the weight change. This batched pool, over the same super cycle as in FIG. 2a, may give a Jensen's Alpha, benchmarked against standard methods, of 253%. This performed better than the best pools, without needing any sharp a-priori tuning; it may only need the choice of a broad range of parameter settings.

To show this effect in detail, FIG. 3 provides the histogram of returns for the momentum pools (each set of parameters) in FIG. 2a over the super cycle, relative to standard methods, to isolate cleanly the benefits of the update rules. The return for the batched momentum rule is also plotted that is built from the entire set of update rules. Thus, without tuning, this update rule may result in improved performance as the best momentum pools over this period.

One challenge with existing AMMs when attempting to manage LP value is that trades are executed against pools containing only two or three assets; such small baskets of tokens have downsides since they do not allow for broad exposure to different tokens. LPs seeking to distribute their liquidity across multiple assets may either deposit in a low-volume pool covering the assets of interest with their desired weighting (where on current DEXes they will still suffer impermanent loss), or they can deposit across a number of small pools, therefore benefiting from the improved trade volume, as the cost of manual, off-chain, management of their positions.

The architecture of various example embodiments enables LPs to circumvent this dilemma, through composite pools constructed by pooling pools. The liquidity placed in a composite pool may be constructed out of a momentum wETH-wBTC pool and an anti-momentum wETH-wBTC pool. The momentum pool may perform better in some market conditions, while anti-momentum may perform better in others. If the composite pool itself runs a momentum strategy over these two base pools, it may be dynamically changing its dominant strategy, depending on market conditions. This example illustrates how composite pools may be used to build more advanced update rules, over the basket, from simpler rules.

Another example may include the creation of a risk management update rule, which may allow the composite pool to re-balance according to the risk profiles of the underlying pools, and allowing for pool controlled automatic risk management and automatic strategy based constituent token re-balancing. In addition, composite pools made be made out of any combination of pools, including other composite pools, which can have between them any amount of overlap in tokens they contain.

A composite pool system may also have the benefit of improving liquidity for traders, as liquidity does not need to be removed from small-basket high-volume pools in order to capitalize broader-based composite pools.

In addition, it may be highly-economical for a composite pool to move value between base pools, as LPs may not have to pay trade fees or withdrawal fees when their value goes from one base pool to another. This renders composite pools a very different offering from protocols that externally-manage LPs' holdings between different (non-dynamic) DEX pools. This may only be possible in various example embodiments because of the protocol's single value architecture design. Further, that design may also make possible reduced slippage swaps if a composite pool requires a re-balancing transaction analogous to an internal transfer of a single token from one of its base pools to another.

As discussed below, the construction of three fundamental types of composite pool may include the following: subpools; (weighted) sums; and quotients. As mentioned above, some example embodiments may include a pool that is determined by a finite set $T=\{i, j, ...\}$ of tokens, a $T$-indexed vector $\boldsymbol{w}(t) = \{w_i\}_{i:T}$ representing the weights, and a $T$-indexed vector $\boldsymbol{R} = \{R_i\}_{i:T}$ representing the reserves, such that $\Sigma_{i:T} w_i = 1$. This information may be used to determine the pool value $k(t)$ according to the trading function defined by equation (4) in Appendix 2. $P$ may indicate the tuple $(T, \boldsymbol{w}, \boldsymbol{R})$ defining a pool.

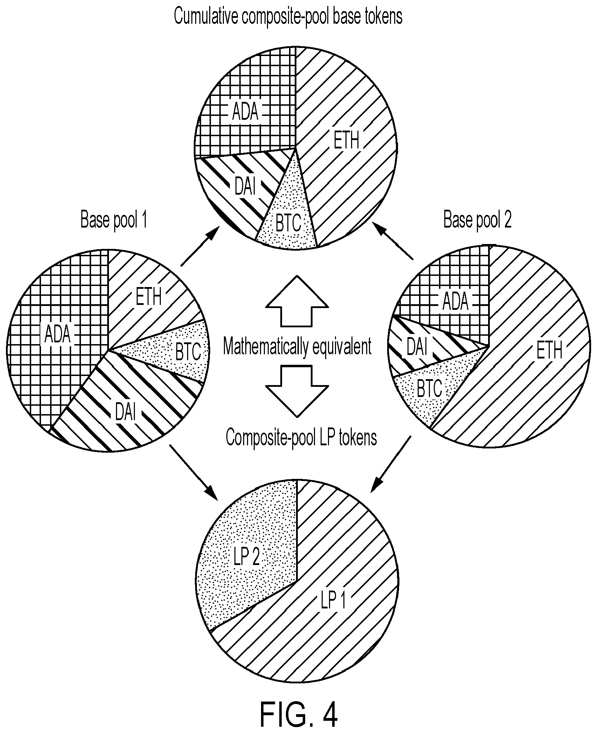

Figure 4 illustrates a diagrammatic representation of a composite pool composed of two base pools. The base pools are shown left and right, while two mathematically-equivalent representations of a composite pool built on these basepools are given top and bottom. The top of Figure 4 shows the "cumulative" representation: the composite pool's holdings in terms of the underlying pools' reserve tokens. The bottom shows the "LP token" representation: simply the LP tokens held from the underlying pools. Interpreting and using the cumulative view of a composite pool may improve vault efficiency and price discovery as arbitrage on LP tokens may be unrealistic since their circulation is constrained.

In some example embodiments, a composite pool may include a subpool. For example, given a pool $P$, an LP may wish to deposit into only a subset $U \subset T$ of its tokens, while otherwise benefiting from its trading volume and weights. In order to do so, the LP may deposit into the subpool $P^{(U)}$ defined as follows. Its set of tokens may be $U$, and the reserves $R_i^{(u)}$ may be corresponding reserves $R_i$ in $P$, for $i \subseteq U$. Then the subpools weights $w_i^U$ may be given by

$$w_i^U = w_i / \Sigma_{i,U} w_i$$

, and the pool value is equation (97) in Appendix 2, where $j$ may range over the set $T\backslash U$ of tokens not in $U$.

In various example embodiments, a composite pool may be obtained by forming the sum of two pools $P^{(1)}$ and $P^{(2)}$, allowing an LP to distribute liquidity across the assets underlying the pools, without having to create a new pool, or perform the distribution manually. In combination with subpools, this may allow LPs to deposit into complex, emergent pools while benefiting from the underlying trade volume.

To construct the sum $P^{(1)} + P^{(2)}$, the disjoint union $T^{(1)} + T^{(2)}$ of the sets of tokens may be formed. The reserves may only include the reserves of the underlying pools, and the weights $w_i^{(1+2)}$ may be given by $w_i/2$, where $w_i$ is the underlying weight. A simple calculation may show the value $k^{(1|2)}$ of the sum pool to be given by product of the square roots $\sqrt{k^{(1)}}\sqrt{k^{(2)}}$ of the values of the underlying pools.

The operation of summing pools may extend from this binary case to sums of arbitrary size. Thus, given a collection of pools $\{P^{(i)}\}_{i:I}$, the corresponding sum composite pool $\Sigma_{i:I} P^{(i)}$ may be formed by forming the disjoint union of the corresponding set of tokens $\Sigma_{i:I} T^{(i)}$, and rescaling the weights $w_j^{(i)}$ by $1/|I|$, where $|I|$ is the size of the index set $I$.

The notation of sum composite pools extends further to a weighted sum, whereby each constituent pool $P^{(i)}$ of a composite pool may be associated with a "composite" weight $\omega_i$. The corresponding pool may be written as $\{P^{(i)}\}_{i:I}$, and the composite-weights as $\omega_i$, which can form a new pool given by a weighted (geometric) sum of their underlying assets, as provided in equation (98) of Appendix 2, where the composite pool weights $w_i$ may satisfy the normalization rule that $\Sigma_{i:I}\, w_i = 1$. This invariant may be equal to the invariant of the weight sum composite pool $\Sigma_{i:I}\, \omega_i\, P^{(i)}$.

The pool value $k^{(i)}$ may be an unscaled "price" for the pool $P^{(i)}$, based upon how much it would cost to buy one unit of each of the pool's reserves. This may be answered by the sum $\sum_{j:T^{(i)}} R_j\, p_j^{TFMM}$, which may be equal to the value $k^{(i)}$.

As a result, the values of the underlying pools in a composite pool may be price signals, and the composite-weights $\omega_i$ may be updated, accordingly, using the same algorithm as for the assets in the underlying pools. This provides some of the automated, dynamic abilities and benefits of various example embodiments.

The principal operation by which composite pools are constructed is the weighted sum of pools. Since this operation may include a disjoint union of the underlying sets of tokens, tokens in pool $P^{(1)}$ may be treated as distinct from the tokens in $P^{(2)}$, even when those pools have tokens in common and together constitute a composite pool. In order to combine the reserves of these shared tokens, some example embodiments may quotient the composite pool by an equivalence relation identifying them. Since, before quotienting, the reserves of the shared tokens may have disjoint weights, when this quotienting is performed, this may sum the reserves and adjust the weights.

In general, certain example embodiments may quotient any pool by any equivalence relation - not just composite pools by token identity. As an example, $\sim$ may be an equivalence relation on a pool $P$, and a quotient pool $P/\sim$ should be formed. The set of tokens of $P/\sim$ may be given by the quotient $T/\sim$ of the set $T$ of tokens of $P$, whose elements may be equivalence classes [i], such that two tokens $j$, $k \subset T$ may be elements of the same equivalence class [i] if and only if $j \sim k$ according to the equivalence relation $\sim$. The reserves $R_{[i]}$ of 'token' [i] in $P/\sim$ may be given by the sum of the underlying reserves: $\tilde{R}_{[i]} = \Sigma_{j \in [i]}\, R_j$. The new weights may then be defined according to equation (99) in Appendix 2. The weights $\tilde{w}_i$ making these equalities true may be given by equation (100) in Appendix 2.

However, in general, $\Sigma_i\, \tilde{w}_i \neq 1$, so the weights may be rescaled by $\tilde{w}_i \rightarrow \tilde{w}_i/\Sigma_i\, \tilde{w}_i$. This may introduce a corresponding rescaling of $k$ to $\tilde{k} = k^{(1/\Sigma_i\, \tilde{w}_i)}$; the underlying value $k$ may be unchanged by these operations, and the quotient weights and reserves may be fully determined by the underlying weights and reserves.

Since composite pools are equivalent to pools containing liquidity tokens (or subpools or quotients thereof), in order to reduce the fragmentation of liquidity and trading activity, various example embodiments may ensure that any pool including a liquidity token is considered as a composite pool containing the pool associated to the liquidity token; any individual token may also be equivalent to a trivial pool containing assets only of that token type.

As a further step to improve trade liquidity, various example embodiments may hold all pool liquidity in a centralized smart contract; some smart contracts may execute trades, dispatching the checks that relevant invariants are satisfied to the underlying pools, but only requiring that the invariants must be satisfied at the end of a transaction. As a result, certain example embodiments may support inexpensive multi-step trades within a single transaction, and allow for pool invariants to be transiently broken within each transaction, as long as the invariants are finally satisfied. This flexibility may be important for composite pool trading: for example, in order to trade across the pools constituting a composite pool, it may be necessary to move liquidity between pools, and the optimal sequence of trades (and joins and exits) may transiently break the invariants of the underlying pools. In principle, this extra flexibility may allow traders to draw on the combined reserves of some example embodiments in order to minimize slippage, and may enable sophisticated manoeuvres such as using flash loans mid-trade in order to resolve broken invariants.

Since example embodiments may rely on relevant invariants being finally satisfied, computing the optimal sequence of operations may be performed entirely in the front end using sophisticated optimization routines. Various example embodiments may then interpret domain-specific trade language, and check the for the satisfaction of invariants.

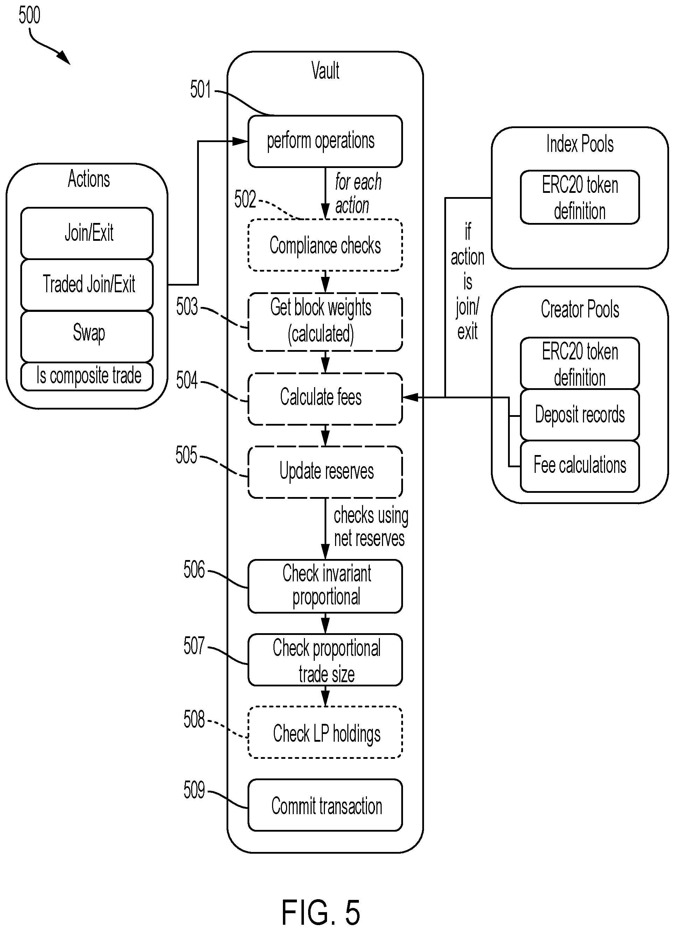

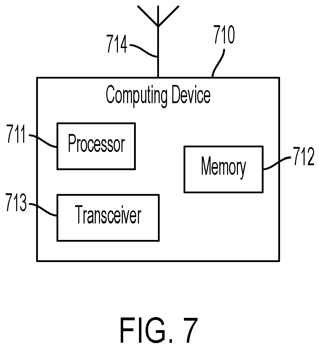

FIG. 5 illustrates an example of a flow diagram of a method 500 that may be performed by a computing device, such as computing device 710 illustrated in FIG. 7, according to various example embodiments.

At step 501, the method may include performing at least one action. For example, the at least one action may include any of creating an entry point, joining/exiting, trader joining/existing, swapping, and a determination of a composite swap.

At step 502, the method may further include, for each action performed at step 501, performing at least one compliance check. For example, the at least one compliance check may include an optional check to external contracts that may be needed to fulfill compliance requirements for a given region, trader, and/or pool creator.

At step 503, the method may further include calculating at least two block weights. For example, the calculating may include calculating specific weights to use in a trading function for a given block index.

At step 504, the method may further include calculating at least one fee. In certain example embodiments, the calculation may be based upon an index pool, such as an Ethereum Request for Comments 20 (ERC20) token definition (i.e., Ethereum blockchain). In some example embodiments, the calculating may be based upon a creator pool, such as an ERC20 token definition, deposit records, and fee calculations. Furthermore, fees may be calculated using a swamp amount requested and/or a preset pool configuration.

At step 505, the method may further include updating at least one reserve. This may include checking for use of net reserves and/or updating the reserve quantities in a vault.

At step 506, the method may further include checking for at least one invariant proportional and/or performing an invariant check, as discussed above.

At step 507, the method may further include checking for at least one proportional trade size (*e.g.*, net change of pool reserves for all trades). For example, there may be a configurable maximum of a pool size that may be adjusted by a trade, which may minimize pool manipulation.

At step 508, the method may further include checking for at least one LP holding. For example, for composite trade, there may be a requirement that a trader omits a net change for LP token holdings, which may prevent using a composite trade to avoid potential withdrawal fees.

At step 509, the method may further include committing at least one transaction to at least one blockchain.

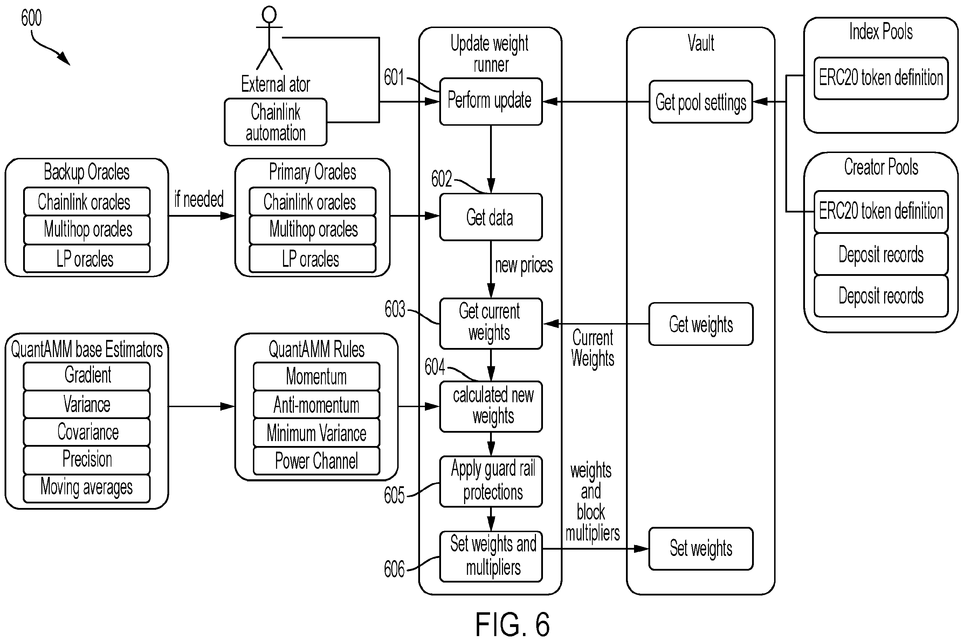

FIG. 6 illustrates an example of a flow diagram of a method 600 that may be performed by a computing device, such as computing device 710 illustrated in FIG. 7, according to various example embodiments.

At step 601, the method may include performing an update. For example, the update may be performed by an external actor.

At step 602, the method may further include obtaining data. For example, the data may be based upon at least one primary oracle (*e.g.*, chainlink oracles, multihop oracles, LP oracles). Furthermore, the at least one primary oracle may be based upon at least one backup oracle (*e.g.*, chainlink oracles, multihop oracles, LP oracles).

At step 603, the method may further include obtaining at least one pool of weights, which may be based on the current weights of the pool retrieved from the blockchain.

At step 604, the method may further include calculating at least two new weights. For example, the new weight may be calculated based upon at least one rule, such as momentum, anti-momentum, minimum variance, and power channel. Furthermore, the at least one rule may be based upon at least one base estimator, such as gradient, variance, covariance, precision, and moving average, which may be converted to the at least one rule using its corresponding estimator. At step 605, the method may further include applying at least one guard rail protection.

In certain example embodiments, a vault may be constructed by an external party or protocol. The claims may apply even with a significant part of the vault infrastructure is provided by an external party. External protocols may provide hooks (*e.g.*, interfaces) to allow custom implementations of functions at the point of the hook when it matches a hook footprint. In some example embodiments, external parties may provide functionality, such as but not exclusively, depositing and withdrawing holdings from vaults, recording balances and analytical features, basic trading interfaces, front-end integrations and screens relating to functioning of the protocol. All claims may be able, if the correct function hooks are available, to utilize existing infrastructure for non-novel aspects of workflows.

At step 606, the method may further include setting at least one weight and/or multiplier. For example, the at least one weight and/or multiplier may be applied to weights to be applied to a liquidity pool.

In some example embodiments, a method may include calculating, by a computing device, at least one entry of a weight vector according to at least one estimator-based rule to be applied to a liquidity pool. These systems, while currently most naturally applied to native cryptocurrency assets, may be configured to process tokenised representations of real world assets. These techniques may also be applied to pools/baskets of assets that include, for example, tokenised commodities and tokenised real estate, in addition to cryptocurrencies.

The method may further include, based at least in part upon the calculated at least one entry of a previous weight vector, storing, by the computing device, the at least one entry of the weight vector onto a blockchain configured to determine whether to perform an exchange of at least one asset for at least one other asset from among a pre-defined pool of other assets. For example, a weight vector may be used to calculate whether or not a trade made against assets held in a pool is valid/acceptable to the pool. This process may be used to exchange assets incoming to the pool (assets A) for outgoing assets B; asset A and B may be each composed of a single asset and may be swapped (as discussed above with respect to token-pair trades). Alternatively, A and B may each be a set of assets, each having a given quantity (as discussed above with respect to multi-token trades); for example, 'A' may be '0.5 wBTC and 2k USDC' and 'B' may be '20k DAI and 2.1 wETH'. In either of these cases, a weight vector may be used to determine if it is acceptable to the pool.

In some example embodiments, the at least one estimator-based rule may include at least one of gradient of a blockchain oracle or related function provided on a blockchain at a pre-selected temporal scale; variance of the blockchain oracle or related function provided on the blockchain at the pre-selected temporal scale; covariance of the blockchain oracle or related function provided on the blockchain at the pre-selected temporal scale; precision of the blockchain oracle or related function provided on the blockchain at the pre-selected temporal scale; and moving average of the blockchain oracle or related function provided on the blockchain at the pre-selected temporal scale. Thus, estimators may be algorithms/techniques to calculate desirable versions of gradients, variances, etc. Furthermore, "pre-selected temporal scale" may refer to a temporal scale at which new values are ingested; alternatively, "pre-selected temporal scale" may refer to temporal scale of a calculated output. In various example embodiments, estimators may deviate from standard calculations of these quantities by enabling them to be calculated for/over a tuneable period of time (*e.g.*, the memory length of an estimator as discussed above with respect to exponentially-weighted online least-squares regression, describing the chosen amount of 'look back' on prior data).

In various example embodiments, the at least one estimator-based rule may include at least one of momentum; anti-momentum; minimum variance; and power channel.

In certain example embodiments, the at least one estimator-based rule comprises at least one AMM rule.

In some example embodiments, the at least one entry of a calculated weight vector may include at least one AMM weight vector of a pool.

In certain example embodiments, a method may include calculating, by a computing device, at least one entry of a weight vector according to at least one estimator-based rule.

In some example embodiments, the method may further include applying, by a computing device, at least one maximal extractable value (MEV) protection to a value of the at least one entry of the weight vector.

For example, applying the at least one MEV protection may further include at least one limit configured to limit at least one of restricting, by a computing device, the entries in the weight vector to take values that are within a pre-specified range; restricting, by a computing device, the maximum allowed change of the entries of the weight vector from one block index to a future block index; depositing, by a computing device, holdings to the liquidity pool, including as part of a trade; and withdrawing, by a computing device, holdings from the liquidity pool, including as part of a trade.

In various example embodiments, the method may further include storing, by a computing device, at least one entry of a weight vector configured to be applied to a particular liquidity pool. For example, a tangible set may the last set, and the result of the calculation may be stored to the blockchain (*i.e.*, transmitting to the blockchain the result of the calculation). The calculation may be a particular form of 'transaction', wherein any action on a blockchain (even if it results in no assets being moved) may be referred to as a transaction.

In certain example embodiments, the method may further include initializing, by a computing device, a weight vector update process after a predetermined period of time elapses since a previous application of the weight vector update process; and receiving, by a computing device, at least one oracle data feed on a blockchain.

In certain example embodiments, a method may include calculating, by a computing device, at least one entry of the block-specific weight vector configured for a trading function for a given block index.

The method may further include, in response to a withdrawal request if one is made, calculating, by the computing device, at least one withdrawal fee based upon a predefined fee structure.

The method may further include updating, by the computing device, at least one reserve.

The method may further include checking, by the computing device, for at least one invariant proportional and/or performing an invariant check.

The method may further include checking, by the computing device, for at least one net change of pool reserves for at least one trades configured for maximum extract value protection.

The method may further include checking, by the computing device, for at least one liquidity provider holding, whether the transaction comprises a withdrawal request or a deposit request as part of a composite pool trade comprising at least one of withdrawal, deposits, and trades of liquidity provider tokens as constituent steps. Thus, the forms of these particular checks may enable composite pool trades - trades within 'stacked hierarchies' of pools of assets. Thus, these trades may include smart checks on how LP token holdings have changed.

The method may further include, upon determining that all requirements are satisfied, committing, by the computing device, at least one transaction to the blockchain.

The method may further include determining, by a computing device, at least one signal constructed utilizing at least one of gradient, covariance, precision, or moving average calculated using at least one estimator; and transmitting, by a computing device, the determined at least one signal to a market as a continuous feed, stochastic feed, or blockchain oracle.

For example, the at least one estimator may include at least one of gradient of a blockchain oracle or related function provided on a blockchain at a pre-selected temporal scale; variance of the blockchain oracle or related function provided on the blockchain at the pre-selected temporal scale; covariance of the blockchain oracle or related function provided on the blockchain at the pre-selected temporal scale; precision of the blockchain oracle or related function provided on the blockchain at the pre-selected temporal scale; and moving average of the blockchain oracle or related function provided on the blockchain at the pre-selected temporal scale.

The method may further include calculating, by a computing device, at least one component of AMM trading function based upon at least one non-linear technique for a plurality of ledger blocks.

The method may further include performing, by the computing device, at least one compliance check.

FIG. 7 illustrates an example of a system according to certain example embodiments. In one example embodiment, a system may include computing devices, such as, for example, computing device 710.

Computing device 710 may include one or more of a mobile device, such as a mobile phone, smart phone, personal digital assistant (PDA), tablet, or portable media player, digital camera, pocket video camera, video game console, navigation unit, such as a global positioning system (GPS) device, desktop or laptop computer, single-location device, such as a sensor or smart meter, or any combination thereof. Furthermore, computing device 710 may be one or more of a citizens broadband radio service device (CBSD).

Computing device 710 may include at least one processor, indicated as 711. Processor 711 may be embodied by any computational or data processing device, such as a central processing unit (CPU), application specific integrated circuit (ASIC), or comparable device. The processors may be implemented as a single controller, or a plurality of controllers or processors.

At least one memory may be provided in one or more of the devices, as indicated at 712. The memory may be fixed or removable. The memory may include computer program instructions or computer code contained therein. Memory 712 may independently be any suitable storage device, such as a non-transitory computer-readable medium. The term "non-transitory," as used herein, may correspond to a limitation of the medium itself (*i.e.*, tangible, not a signal) as opposed to a limitation on data storage persistency (*e.g.*, random access memory (RAM) vs. read-only memory (ROM)). A hard disk drive (HDD), random access memory (RAM), flash memory, or other suitable memory may be used. The memories may be combined on a single integrated circuit as the processor, or may be separate from the one or more processors. Furthermore, the computer program instructions stored in the memory, and which may be processed by the processors, may be any suitable form of computer program code, for example, a compiled or interpreted computer program written in any suitable programming language.

Processor 711, memory 712, and any subset thereof, may be configured to provide means corresponding to the various blocks of FIGs. 1-5.

As shown in FIG. 7, transceiver 713 may be provided, and one or more devices may also include at least one antenna, illustrated as 714. The device may have many antennas, such as an array of antennas configured for multiple input multiple output (MIMO) communications, or multiple antennas for multiple RATs. Other configurations of these devices, for example, may be provided. Transceiver 713 may be a transmitter, a receiver, both a transmitter and a receiver, or a unit or device that may be configured both for transmission and reception.

The memory and the computer program instructions may be configured, with the processor for the particular device, to cause a hardware apparatus, such as a computing device, to perform any of the processes described above (*i.e.*, FIGs. 1-5). Therefore, in certain example embodiments, a non-transitory computer-readable medium may be encoded with computer instructions that, when executed in hardware, perform a process such as one of the processes described herein. Alternatively, certain example embodiments may be performed entirely in hardware.

In certain example embodiments, an apparatus may include circuitry configured to perform any of the processes or functions illustrated in FIGs. 1-5. As used in this application, the term "circuitry" may refer to one or more or all of the following: (a) hardware-only circuit implementations (such as implementations in only analog and/or digital circuitry), (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions), and (c) hardware circuit(s) and or processor(s), such as a microprocessor(s) or a portion of a microprocessor(s), that requires software (*e.g.*, firmware) for operation, but the software may not be present when it is not needed for operation. This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

According to certain example embodiments, processor 711 and memory 712 may be included in or may form a part of processing circuitry or control circuitry. In addition, in some example embodiments, transceiver 713 may be included in or may form a part of transceiving circuitry.

In some example embodiments, an apparatus (*e.g.*, computing device 710) may include means for performing a method, a process, or any of the variants discussed herein. Examples of the means may include one or more processors, memory, controllers, transmitters, receivers, and/or computer program code for causing the performance of the operations.

In various example embodiments, apparatus 710 may be controlled by memory 712 and processor 711 to calculate at least one entry of a weight vector according to at least one estimator-based rule to be applied to a liquidity pool; and, based at least in part upon the calculated at least one entry of a previous weight vector, store the at least one entry of the weight vector onto a blockchain configured to determine whether to perform an exchange of at least one asset for at least one other asset from among a pre-defined pool of other assets.

Certain example embodiments may be directed to an apparatus that includes means for performing any of the methods described herein including, for example, means for calculating at least one entry of a weight vector according to at least one estimator-based rule to be applied to a liquidity pool; and means for, based at least in part upon the calculated at least one entry of a previous weight vector, storing the at least one entry of the weight vector onto a blockchain configured to determine whether to perform an exchange of at least one asset for at least one other asset from among a pre-defined pool of other assets.

In various example embodiments, apparatus 710 may be controlled by memory 712 and processor 711 to calculate at least one entry of a weight vector according to at least one estimator-based rule; apply at least one maximal extractable value (MEV) protection to a value of the at least one entry of the weight vector; and store at least one entry of a weight vector configured to be applied to a particular liquidity pool.

Certain example embodiments may be directed to an apparatus that includes means for performing any of the methods described herein including, for example, means for calculating at least one entry of a weight vector according to at least one estimator-based rule; means for applying at least one maximal extractable value (MEV) protection to a value of the at least one entry of the weight vector; and means for storing at least one entry of a weight vector configured to be applied to a particular liquidity pool.

In various example embodiments, apparatus 710 may be controlled by memory 712 and processor 711 to calculate at least one entry of the block-specific weight vector configured for a trading function for a given block index; in response to a withdrawal request if one is made, calculate at least one withdrawal fee based upon a predefined fee structure; update at least one reserve; check for at least one invariant proportional and/or perform an invariant check; check for at least one net change of pool reserves for at least one trades configured for maximum extract value protection; check for at least one liquidity provider holding, whether the transaction comprises a withdrawal request or a deposit request as part of a composite pool trade comprising at least one of withdrawal, deposits, and trades of liquidity provider tokens as constituent steps; and, upon determining that all requirements are satisfied, commit at least one transaction to the blockchain.

Certain example embodiments may be directed to an apparatus that includes means for performing any of the methods described herein including, for example, means for calculating at least one entry of the block-specific weight vector configured for a trading function for a given block index; means for, in response to a withdrawal request if one is made, calculating at least one withdrawal fee based upon a predefined fee structure; means for updating at least one reserve; means for checking for at least one invariant proportional and/or performing an invariant check; means for checking circuitry configured to perform checking for at least one net change of pool reserves for at least one trades configured for maximum extract value protection; means for checking for at least one liquidity provider holding, whether the transaction comprises a withdrawal request or a deposit request as part of a composite pool trade comprising at least one of withdrawal, deposits, and trades of liquidity provider tokens as constituent steps; and means for, upon determining that all requirements are satisfied, committing at least one transaction to the blockchain.

The features, structures, or characteristics of example embodiments described throughout this specification may be combined in any suitable manner in one or more example embodiments. For example, the usage of the phrases "various embodiments," "certain embodiments," "some embodiments," or other similar language throughout this specification refers to the fact that a particular feature, structure, or characteristic described in connection with an example embodiment may be included in at least one example embodiment. Thus, appearances of the phrases "in various embodiments," "in certain embodiments," "in some embodiments," or other similar language throughout this specification does not necessarily all refer to the same group of example embodiments, and the described features, structures, or characteristics may be combined in any suitable manner in one or more example embodiments.

As used herein, "at least one of the following: <a list of two or more elements>" and "at least one of <a list of two or more elements>" and similar wording, where the list of two or more elements are joined by "and" or "or," mean at least any one of the elements, or at least any two or more of the elements, or at least all the elements.

Additionally, if desired, the different functions or procedures discussed above may be performed in a different order and/or concurrently with each other. Furthermore, if desired, one or more of the described functions or procedures may be optional or may be combined. As such, the description above should be considered as illustrative of the principles and teachings of certain example embodiments, and not in limitation thereof.

One having ordinary skill in the art will readily understand that the example embodiments discussed above may be practiced with procedures in a different order, and/or with hardware elements in configurations which are different than those which are disclosed. Therefore, although some embodiments have been described based upon these example embodiments, it would be apparent to those of skill in the art that certain modifications, variations, and alternative constructions would be apparent, while remaining within the spirit and scope of the example embodiments.

Partial Glossary

AM       Arithmetic Mean

| | |
|---|---|
| AMM | Automated Market Maker |
| CEX | Centralized Exchange |
| CFMM | Constant-Function Market Maker |
| DEX | Decentralized Exchange |
| DeFi | Decentralized Finance |
| GM | Geometric Mean |
| L2 | Layer 2 |
| LP | Liquidity Provider |
| MEV | Maximal extractable value |
| MVPT | Mean Variance Portfolio Theory |
| SDK | Software Development Kit |
| TFMM | Temporal-Function Market Making |
| TradFi | Traditional Finance |
| VaR | Value at Risk |
| wADA | Wrapped Cardano |
| wBTC | Wrapped Bitcoin |
| wETH | Wrapped Ethereum |

Appendix 1

Robodex: A next generation DEX of automated, dynamic pools

Abstract

Robodex is a next generation automated market maker (AMM) for cryptocurrencies. The first generation of AMM design is fundamentally broken. Due to their mathematical structure, existing DEXes destroy LPs' capital whenever there are price fluctuations (so called 'impermanent' loss). Simply holding one's initial capital is very often better than depositing with a DEX, as trading fees paid to LPs commonly don't outweigh impermanent loss.

We have a proposal to ameliorate this problem, where LPs can build pools that dynamically update how they store their value, taking market information from oracles as input. This means that liquidity providers can not only potentially avoid impermanent loss, but also generate return in capital gains as well as trading fees.

For this to be a truly decentralised process, ability to control the dynamics of the pool must be in control of the Liquidity Providers and the mechanics and data clearly defined by the smart contracts with no off-chain bottleneck. Previous attempts have fallen short of true decentralisation.

We give a short background on the fundamentals of DEXcs and the describe how a dynamic re-weighting of a DEX pool can be implemented inexpensively on-chain, and show both theoretically and in simulation that Robodex pools can both outperform pools on first generation DEXcs and the simple holding strategy.

1 Introduction

In recent years, automated market makers (AMMs) and decentralized exchanges (DEXcs) have grown to become integral parts of Decentralized Finance (DeFi) infrastructure. These systems notionally enable liquidity providers (LPs), the depositors, to earn a return on their capital, their liquidity, against which traders can exchange one token for another. For providing liquidity, LPs receive 'liquidity tokens' representing their share of the capital deposited in the pool. Trading fees go to LPs in proportion to their LP token holdings. Some of these systems allow liquidity provision over a pair of tokens, others a basket.

There is a massive and well known problem: DEX pools generally lose value for their LPs, even after fees are taken into account. This is known as Impermanent Loss. Even recent advances in DEX technology, such as Uniswap v3, suffer these problems. There are a strong majority of pools that have greater impermanent loss than fee income, and furthermore the majority of LP wallets are down also[1]. This is one of the largest problems in DeFi. DEX pools run, in effect, a very simple fixed-allocation strategy, and the problem of impermanent loss is that this strategy cannot make a profit when implemented as a DEX. While trading fees *can* in theory make LPs whole, empirically they do not seem to, including on the most highly-traded sets of tokens.

[1]Analysis up to late 2021 found in Impermanent Loss in Uniswap v3, Loesch et al. (2021), available at arxiv.org/ftp/arxiv/papers/2111/2111.09192.pdf. For more recent analysis see these two Twitter threads and associated Dune Analytics queries.

Robodcx attacks this problem by noticing that other, non-fixed- allocation, strategies arc *not* cursed to *have* to suffer from impermanent loss. We extend the basic notion of constant-function market makers (CFMMs) by developing a decentralized method of dynamically re-weighting the held reserves using oracle signals and functions thereof, increasing the available returns on deposited capital. This is done by changing the portfolio vector inside the constant function of the pool, where the new portfolio vectors arc a (chosen) function of (chosen) oracles.

LPs can achieve superior performance, however no strategy is possible without putting capital at risk. Robodcx understands this and provides tooling to tune, and minimise as much as possible, the risk profile to the level the LP desires. Because LPs aim to obtain increased value from re-balancing between tokens as the market unfolds, rather than solely relying on trading fccs, traders can be charged lower fccs, and via a deep understanding of DEX mathematics the protocol can offer traders more sophisticated trading opportunities. 2.

In this whitepaper, we describe in detail the modular structure of the Robodcx platform, in particular the 'lego-bricks' we have derived and developed that enable LPs to build dynamic pools of different types.

As a further improvement to the efficiency and power of decentralized markets, Robodcx also introduces the concept of a *composite pool,* a pool of pools, which is made particularly useful through its interaction with dynamic re-weighting. Composite pools allow LPs to distribute liquidity across assets, building arbitrary combinations of existing pools and re-weighting across them according to market conditions. This means that LPs' liquidity can be exposed to better performing assets (or, say, to the highest-volume trading assets, with accrue the greatest fee income), while remaining exposed across the particular bundles of assets of interest.

For liquidity providers, Robodex provides tooling for dynamic decentralized pools, in effect providing on-chain roboadvisor functionality for crypto, offering the potential for improved capital growth through dynamic re-weighting, as well as a greater range of potential baskets of assets through composite pools. For traders, as a result of the associated decrease in pool fragmentation and increase in liquidity, Robodex can offer richer, more efficient trading, and correspondingly lower transaction costs. *Robodex is the first truly positive-sum decentralized exchange.*

We believe that a protocol offering automated, on-chain, permission-less and non-custodial pools, built as a DEX, arc the most desirable, in-keeping both with the broad ethos of DeFi as well as having real-world advantages to the users of such a protocol. These include: the reliability of the system, as it would not rely on some central organisation or machine to make manage capital; the case of verifying the logic and structure of the pool strategy, as it is implemented as a smart contract; and the constant access to the protocol and thus one's deposited liquidity. The key innovations arc:

- On-chain updating of the weights of a pool, using *update rules* that take as input oracle information, such as price data, to implement a chosen strategy.

- A new mathematical method for cheap and robust calculation of the gradients, (co-)variances and precisions (inverse (co-)varianccs) of oracle signals, for use in Robodcx pools.

- Mechanisms to reduce re-balance costs while offering protection against front running

- A method for combining Robodcx pools together using compositionality to create *composite pools* that can span a range of tokens, or a range of strategies, or both, giving LPs highly expressive pools that dynamically manage value efficiently.

- Pcrmissionlcss construction of pools with community-chosen update rules.

2Wc use 're-weighting' to refer to a change in portfolio vector, the desired allocation between assets, and 'ro-balancing' being the process of obtaining that desired allocation.

## 2 Constant-Function Market Makers

### 2.1 Uniswap: Two Token Pools

The simplest Constant-Function Market Maker (CFMM) is Uniswap v1/v2. These systems arc so named as the value of a particular function of its reserves has to remain constant (or grow) under a proposed trade. The constant function for Uniswap v2/v3 is

$$R_1 R_2 = k, \qquad (1)$$

where $R_1$ is the amount of reserves held by the protocol of the first token (wETH, say) and $R_2$ is that of the second token (wBTC, say). So if a trader comes wishing to transact with a Uniswap pool, to exchange one token for another, their proposed transaction is accepted if the updated reserves of the pool ($R_1 R_2$) after this proposed transaction still multiply to the same value, or greater, as before[3], i.e. that

$$\tilde{R}_1 \tilde{R}_2 \geq k = R_1 R_2. \qquad (2)$$

[3]Here we are ignoring fees charged on the transaction, for simplicity's sake.

This system is operates only on pairs of tokens, and the pool ends up holding half of its value in each token: an arbitrage opportunity exists if this is the not the case. The requirement that trades preserve the above invariant means that the system is, in effect, quoting a price-and that price depends directly on the current reserves. If the system holds too little of its value in one token (less than half), it will quote above-market prices to the market to buy more of that token. This means that naturally these pools hold an economically-defined, rather than merely a numerical, balance of assets-here 50:50. We will dig into the maths of these systems in later sections.

## 2.2 Balancer: Market Makers as 'Portfolios'

Balancer extends Uniswap by having an arbitrary number of tokens in a given basket, and by weighting these tokens in the constant function. The Balancer constant function is

$$\prod_{i=1}^{N} R_i^{w_i} = k, \quad \text{where} \sum_{i=1}^{N} w_i = 1 \text{ and } \forall i \ 0 \leq w_i < 1. \qquad (3)$$

Here we have a set of tokens $T$, $|T| = N$ present in the pool and $w_i$ is the weighting given to each. $R = \{R_i\}$ is the $N$-vector of currently-held reserves of each token. The motivation here is that the weights $w = \{w_i\}$ control how much value is stored in each token. Like a Uniswap pool, an arbitrage opportunity exists if this is the not the case. The pool ends up holding fractions $w_i$ of value in each token as the trading function provides an arbitrage opportunity if the pool's reserves do not have this property. For example, if the weighting is uniform, $w_i = \frac{1}{N}$, an equal amount of value will be stored in each token[4].

[4]We will sometimes write $P$ to denote the tuple $(T, w, R)$ defining a pool.

Balancer's extension to multi-asset pools with chosen weights helps somewhat with impermanent loss, but in a very limited way. Balancer pools can have $w_i$ be larger or smaller than an agnostic $\frac{1}{N}$ [5].

[5]= 2 in Uniswap as pools must be equally-capitalised pairs only Having a smaller weight on a given token makes it cause relatively less impermanent loss, as a smaller proportion of the liquidity in the pool is allocated to that token. However, since the portfolio weights must sum to 1, this makes for a relatively greater risk of impermanent loss on at least one other token in the pool.

Figure 1: Impermanent loss in a Uniswap pool as function of change in price ratio from when capitalised, reproduced from this Medium post.

**2.3 Why Re-weighting is Necessary: Impermanent Loss & Downsides of hard-coded weights**

In Balancer, Uniswap, and related DEXcs, there is the unfortunate phenomena of *impermanent loss* (also known as *divergence loss)* where price movements away from those when a pool is deposited into by an LP leads to a loss of value for that LP. We will discuss impermanent loss in greater mathematical detail later on in §7, but here we will give a high-level overview. Let us first think through how impermanent loss comes about. Imagine a Uniswap or Balancer pool where one of the assets doubles, say, in value. That pool's smart contract will offer trades to the market that lead to a reduction in the amount held of that token. This offloading of the appreciating token is done, necessarily, at a below-market price. This means that the liquidity providers, the depositors in the pool, do not benefit from the upwards trajectory of that doubled-in-value token as much as if they had merely held the assets. We find this unsatisfactory-the providers of liquidity to DEXcs deserve a protocol that attempts to manage their deposited capital in a way that depends on market dynamics, increasing and decreasing the size of its positions with an aim to protect and grown their capital.

These descriptions, though, of impermanent loss can make it sound like a very DEX-specific phenomena (and of course its exact mathematical form is DEX-spccific!). It is an example, however, of the general phenomena that re-balancing has a cost and this cost has to be compared to the performance of a strategy. In other words, all systems that reallocate capital over time, regardless of how they operate, have to pay some amount of value, at some frequency, to achieve their desired holdings over time. We shouldn't be at all surprised that DEXcs have to pay some form of re-balancing cost, albeit not in quite the same way as more traditional systems that themselves place trades on exchanges to re-balance.

Uniswap/Balancer pools arc implementing a very simple 'strategy' for their LPs: the pool allocation is fixed. The pool is continually re-balanced by the operation of arbitragcurs. Impermanent loss is, in this view, merely the combination of two facts: firstly that the re-balancing cost to a Uniswap/Balanccr pool is guaranteed to the greater than the return their fixed-portfolio strategy can generate (absent fees); and secondly that these systems arc sufficiently simple that we can prove this mathematically. But if the portfolio weightings w *change over time* then impermanent loss is no longer guaranteed: stratcgics other than fixed-w, implemented as a DEX pool, can have returns that outweighs their re-balancing cost.

In the next section we describe a way to do this, which has connections to TraFi ideas, and continue to show how this can be robustly done on-chain using methods from applied statistics[6].

[6]Further, as these systems can potentially offer a superior return to liquidity providers, the experience for traders can be improved by charging lower transaction fees than previous DEXes.

**3 Robodex: Temporal-Function Market Makers**

Our proposal is to enable w, the portfolio vector, to update on-chain using on-chain oracles, for example the price of the tokens in the pool: the allocation of assets in the pool is thus responsive to market information. This is the key to how Robodex can potentially circumvent impermanent loss. To indicate this new dependency of w on time, we will write **w**(*t*), and the time-varying equation that defines a Robodex pool block-to-block, the *trading function,* becomes:

$$\prod_{i=1}^{N} R_i^{w_i(t)} = k(t), \quad \text{where} \sum_{i=1}^{N} w_i(t) = 1, \text{ and } \forall i \ 0 < w_i(t) < 1. \tag{4}$$

where we have made the time-dependence of *k* explicit, as it now depends on the current, changing, value of w(t). Robodex v1 makes available a suite of mathematical methods for various dynamic pools to be constructed. A trade still has to preserve (or increase) the value of *k(t)* that exists at the time of that trade.

We call the resulting systems *Temporal Function Market Makers,* of which Robodex is the implementation. We will briefly overview the key features Robodex has before moving on to detailed discussion.

Update Rules: Strategies for Pools The first question is: in what way should pools' weights change? There is a universe of possible strategies, which we call *update* rules-that is, possible functions to determine the changes in weights-but for an update rule to be appealing it has to offer superior capital performance than HODL (it has to be an effective strategy) and it also has to be feasible to run on-chain for a given blockchain (it has to be economical to run).

Since any trade with a pool must not decrease *k(t)*[7], the change in weights (*re-weighting*) causes the pool's reserves to be re-balanced: those trades which then take place arc those which bring the reserves into the target ratio, *if performed naively this can be incredibly expensive however smoothing mechanisms drastically reduce cost.*

Composite pools: Enabling diverse portfolios and re-balancing strategies The architecture of Robodex enables LPs to avoid split management of multiple pools that each only contain a small baskets of tokens. Through composite pools constructed by "pooling pools": the liquidity placed in a composite pool is distributed across its underlying pools, enabling an LP to benefit from the volume in these underlying pools while maintaining mathematical efficiency for re-balancing. This allows for complex pools to be built-up and explored compositionally.

Moreover, composite pools can inherit Robodex pools' automatic re-weighting, meaning that liquidity can be shifted between base pools that arc intended to perform better in different market conditions-for example between a 'bull market' subpool and a 'bear market' subpool.

On-chain standard pool management tooling Creating the mechanisms to have a DEX pool that can potentially avoid impermanent loss via update rules, as well as having larger diverse liquidity pools will rcvolutionisc pool construction. Confidence in the pool configurations, however, and constant (ideally automatic) management will always be needed. The issue with a decentralised set of such tooling is that the compute required would not make it possible on current blockchains.

With partnerships that provide such infrastructure, Robodex can offer a complete DEX including on-chain management tools. Such tooling would include (but not limited to): standard update rule fact-sheets including market tests and quantitative analysis; historic and Monte Carlo VaR modelling-that could be used in construction of a risk management update rule; retraining of update rule parameters given more recent market data or a breach of a configured condition - c.g. recent VaR exceeds limits; compliance and regulation report generation.

[7]Though, changes in weights do change the value of $k$. And to be clear, weights take a known, clear, value at the moment that a trade happens (in fact, within the block).

## 4 Update Rules

Many classical strategies from TradFi can be implemented using the tools available on Robodcx, as well as many new approaches. The protocol provides the needed factory for instantiating the pool's smart contract with the desired update rule. The provision of the tooling is completely independent to the LP's choice of which rule to use and what tuning it should have. Other community members can then choose to capitalise this new pool or not, and if they become LPs they can vote to tune or otherwise update the values of the parameters in the update rule. This is in stark contrast to existing DEXcs, where pools arc instantiated by a choice of tokens along with (at best) some fixed or prc-dcfincd function defining the weights w.

All update rules contain numerical parameters that control their behaviour, and these parameters must be set. Choosing an uninformed parameter value can lead to negative performance of the pool. Alongside the smart contracts which implement Robodcx, we will make available a Pool Creation Tool that provides considerable contextual information and backtesting ability to allow LPs to be more informed in their selection of parameter values for the target update equations (currently in a private alpha). On blockchains with cheaper computations, including L2s, more sophisticated update equations become possible, including calculations involving higher derivatives and special functions.

This consideration naturally leads to the question of what time-frame it makes sense to enact these changes in weights. It depends on the costs of calculations on a particular chain. In current popular blockchains we think that performing a re-weighting-querying some oracles, doing some calculations-makes sense to do at a cadence of hours or days, rather than seconds or minutes. With speedier, cheaper (and thus more computationally-powerful) chains it may be natural to consider a faster cadence of weight calculations, which is completely handleable within our framework.

We first outline here some principles for how update rules can be built for blockchain systems, and then give some specific examples. One of the most important building blocks is a method for obtaining useful on-chain estimates of the gradient of an oracle; another is how to estimate covariances (and precisions) of oracles. We will describe these, and show how these building blocks can be used to construct update rules, both classical methods from TradFi as well as less-familiar approaches.

We want there to be competition between pool developers, who can further be divided into those who develop new update rules and those who instantiate a particular pool with particular choices of parameters and tokens. So while we outline various useful 'Lego bricks' here and show how they can be used, this is no way an exhaustive description of what can be done on Robodcx.

### 4.1 Cheap, Online Estimation of Oracle Gradients

Knowing, in isolation, that a signal takes a particular value at the present moment is not necessarily useful for making a decision based on that signal. It is often by knowing how the current signal compares to previous values, on some chosen timescale, that enables us to make use of a signal. This naturally means that in building update rules we need a gradient operator, to tell us by how much a market signal has changed. The signals available to us arc those provided by oracles, so a key part of Robodex is finding a workable method for finding the gradients of oracles. As well as giving us useful, usable, results, we want a method that is sufficiently computationally cheap that it can be done on-chain.

One could do the simplest possible thing and calculate the gradient as 'rise-over-run', taking the difference between the value of an oracle now and that some short time ago. There is too much (highly structured) noise in financial time series for this to work. (In fact, in many mathematical models, financial time series do not even have a well-defined gradient that can be found as an infinitesimal rise-over-run calculation; these signals arc not viewed as being differentiable.) In crude terms, there arc often individual 'spiky' movements in the market data and we do not want to over-fit our changes in our pool to these transitory, rough, movements.

We want a smooth estimator of the oracle gradient, less impacted by very short term deviations. We view the problem as one of statistical estimation, which will enable us to tune the effective temporal 'memory' of estimated the gradient.

The most popular (and important) oracles provide the prices of tokens (in some chosen numéraire). This fits with the prime importance of prices as information. Thus, to ground our discussion, we will focus mostly here on price oracles, and we denote these provided oracles p(t), though all of these ideas apply immediately to any oracle (for volume, say, or volatility).

We propose a form of exponentially-weighted online least-squares regression to learn and update an estimate of $\frac{\partial \mathbf{p}(t)}{\partial t}$, which we denote $\beta(t)$. That this is an exponentially-decaying estimator means that we have a particular time-scale for our memory of price movements, allowing us to more easily adapt to changes in market dynamics. With a decay parameter $\lambda$, the resulting update equations arc

$$\overline{\mathbf{p}}(t) = \overline{\mathbf{p}}(t-1) + (1-\lambda)\left(\mathbf{p}(t) - \overline{\mathbf{p}}(t-1)\right), \tag{5}$$

$$\mathbf{a}(t) = \lambda \mathbf{a}(t-1) + \frac{\mathbf{p}(t) - \overline{\mathbf{p}}(t)}{1-\lambda}, \tag{6}$$

$$\beta(t) = \frac{(1-\lambda)^3}{\lambda} \mathbf{a}(t), \tag{7}$$

where $\overline{\mathbf{p}}(t)$ is a running exponentially-weighted moving average of the N tokens' prices and $\mathbf{a}_t$ is an intermediate state variable that is a constant ratio, $\frac{(1-\lambda)^3}{\lambda}$, from the current estimate of the price gradient, $\beta(t)$. Wc give our derivations in the technical appendix. The memory of this procedure is $t_{\mathrm{mcm}} = \frac{2\sqrt[3]{6\lambda}}{1-\lambda}$ For example, if one got new price information every hour, one could set $\lambda = 0.9$ so that $t_{\mathrm{mem}} \approx 36$ hours.

### 4.1.1 **Trend-Following Update** Rules

A broad family of update rules arc of the form

$$\mathbf{w}(t) = f\left(\mathbf{w}(t-1), \mathbf{p}(t), \frac{\partial \mathbf{p}(t)}{\partial t}\right), \tag{8}$$

where p(t) is a vector giving the required oracle values, for example the prices of the N tokens in the pool. How could we chose *f*? One choice is for the *change* in weights to be a function of p(t) and its time-derivative giving us a family of momentum-like (ic, trend-following) stratcgics,

$$\mathbf{w}(t) = \mathbf{w}(t-1) + g\left(\mathbf{p}(t), \frac{\partial \mathbf{p}(t)}{\partial t}\right). \tag{9}$$

For all the below update rules, to use them in conjunction with our gradient estimator, simply replace $\frac{\partial \mathbf{p}(t)}{\partial t}$ with $\beta(t)$ as defined via Eqs (5-7). Note that each token can have its own $\lambda$ for it own estimator, rather than using the same $\lambda$ for each token in a pool. In later sections were to show simulations of rules that use the *same* $\lambda$ for all tokens, but that is mostly for case of visualising the results.

**Momentum** The most obvious kind of pool to build using these ideas is a vanilla momentum pool. Here the weights change in proportion to the gradient of prices, and in inverse proportion to the prices themselves[8]. This means

at each w(t) update, we have

$$\mathbf{w}(t) = \mathbf{w}(t-1) + \kappa \cdot \left( \frac{1}{\mathbf{p}(t)} \frac{\partial \mathbf{p}(t)}{\partial t} - \ell_{\mathbf{p}(t)} \right) \tag{10}$$

where $\kappa$ is a chosen, fixed, parameter that tunes how quickly, how aggressively, the pool changes its weights in light of the signal it receives. Division is performed elementwise, and

$$\ell_{\mathbf{p}(t)} = \frac{1}{N} \sum_{i=1}^{N} \left( \frac{1}{\mathbf{p}(t)} \right)_i \left( \frac{\partial \mathbf{p}(t)}{\partial t} \right)_i \tag{11}$$

so that the vector change in portfolio weights, w(t) - $\mathbf{w}(t - 1)$, has entries that sum to 0: if the weights summed to one before this update, they will also sum to one after this update[9].

[8]That is, we are updating using the time-gradient of the *logarithm* of the prices.

[9]This $\ell_{\mathbf{p}(t)}$ is for the case that a scalar $\kappa$ is used, if one promotes $\kappa$ to a vector, so each token has its own step-size, then a slightly different form of $\ell_{\mathbf{p}(t)}$ has be to used.

**Anti-Momentum** Under anti-momentum updating, the weights change in negative proportion to the gradient of prices, and in inverse proportion to the prices themselves. So it has the exact same governing equations as a vanilla momentum strategy, except with $\kappa \to - \kappa$:

$$\mathbf{w}(t) = \mathbf{w}(t-1) + \kappa \cdot \left( \ell_{\mathbf{p}(t)} - \frac{1}{\mathbf{p}(t)} \frac{\partial \mathbf{p}(t)}{\partial t} \right) \tag{12}$$

$$\ell_{\mathbf{p}(t)} = \frac{1}{N} \sum_{i=1}^{N} \left( \frac{1}{\mathbf{p}(t)} \right)_i \left( \frac{\partial \mathbf{p}(t)}{\partial t} \right)_i . \tag{13}$$

Why docs this make sense? $\ell_{\mathbf{p}(t)}$ in the update rule, required to make the update sum to zero, is reminiscent of mean-reversion stratcgics in TradFi that make use of the 'winner-loser cffcct'. For a group of assets with observed similar behaviour, one asset might lag the rest in its behaviour temporarily before then 'catching up'. This can provide an opportunity to build value, and for the right parameter choices this rule can also give returns during bear markets, as we will see in backtests later in this whitepaper.

**Power-Channel** Sometimes it can be desirable for a pool to have weights change in a non-linear way, rather than linearly as above. Naturally, one might wish to be relatively insensitive to smaller changes in prices, but act particularly aggressively to larger changes. This is related to the logic behind 'channel' strategies in TradFi, where a portfolio changes its weights only if the asset prices 'break-out' of a particular range around their trajectories. In that case there is a cliff-edge trigger. Here we propose a smoothed version, though the TradFi approach is also implementable on Robodex without any difficulty.

The 'power-channel' update rule is

$$\mathbf{w}(t) = \mathbf{w}(t-1) + \kappa \cdot \left( \mathrm{sign} \left( \frac{1}{\mathbf{p}(t)} \frac{\partial \mathbf{p}(t)}{\partial t} \right) \left| \frac{1}{\mathbf{p}(t)} \frac{\partial \mathbf{p}(t)}{\partial t} \right|^q - \ell_{\mathbf{p}(t)} \right) \tag{14}$$

where $\ell_{\mathbf{p}(t)}$ again is chosen to make the update sum to zero, $q$, the exponent, is > 1 and sets how strong this non linearity is.

**Other momentum-like update** rules The above rules arc either known TradFi strategies or a close relatives of one. They arc, however, not exhaustive of what can be implemented in Robodex, which after all is a *platform* for the permission-less structuring of automated pools. Users can compose custom update rules; for example a Robodex user could choose to have

$$\mathbf{w}(t) = \mathbf{w}(t-1) + \mathbf{A} \frac{1}{\mathbf{p}(t)} \frac{\partial \mathbf{p}(t)}{\partial t} + \mathbf{b} \cdot \left( \frac{1}{\mathbf{p}(t)} \frac{\partial \mathbf{p}(t)}{\partial t} \right)^2 - \sum_{i=1}^{N} \left( \mathbf{A} \frac{1}{\mathbf{p}(t)} \frac{\partial \mathbf{p}(t)}{\partial t} + \mathbf{b} \cdot \left( \frac{1}{\mathbf{p}(t)} \frac{\partial \mathbf{p}(t)}{\partial t} \right)^2 \right)_i , \tag{15}$$

where A is a matrix, and b is a vector (for which multiplication is done elementwise)[10]. Or they could choose some other function of w(t- 1), p(t) and $\frac{\partial \mathbf{p}(t)}{\partial t}$ as the update rule for the pool they instantiate.

[10]Though of course this update equation costs more gas (or equivalent) than a simpler update rule.

## 4.2 Cheap, Online Estimation of Oracle Covariances and Precisions

Some update rules need access to the variance of an oracle or the covariance between oracles. For example, any update rule that wants to use Markovitz/Mcan-Variance Portfolio Theory (MVPT) or related ideas will need them. Here we arc going to describe how Robodex can produce on-chain estimates of the covariance matrix for a set of oracles (likely, oracles that quote prices) and also separately the inverse of the covariance matrix, the precision matrix. (Calculating the precision matrix as its own quantity makes sense for us, rather than obtaining it as the inverse of the covariance matrix, as it is not appealing to have to invert a matrix on-chain!)

Wc can use a set of mathematical methods very similar to those used to calculate our smoothed, exponentially-decaying, estimator of the gradient of a signal to calculate these quantities. Note that often one wants not the covariance (nor precision) of raw prices, but instead the covariance (or precision) of returns. Much as for the oracle gradient estimator, we want to pay more attention to recent data points than old datapoints. As we want to be able to run this estimator cheaply on-chain, we also want to be an online estimator where we use new information to update our running estimate of the covariancc/prccision matrix. Following a substantially-similar derivation to that for the oracle gradient estimator, we get these update equations for a covariance matrix for a set of oracles.

$$\overline{\mathbf{p}}(t) = \overline{\mathbf{p}}(t - 1) + (1 - \lambda)\left(\mathbf{p}(t) - \overline{\mathbf{p}}(t - 1)\right) \tag{16}$$

$$\mathbf{A}(t) = \lambda \mathbf{A}(t - 1) + (\mathbf{p}(t) - \overline{\mathbf{p}}(t - 1))(\mathbf{p}(t) - \overline{\mathbf{p}}(t))^{\top} \tag{17}$$

$$\mathbf{\Sigma}(t) = (1 - \lambda)\mathbf{A}(t) \tag{18}$$

where division is performed elementwise, $\overline{\mathbf{p}}(t)$ is a running exponentially-weighted moving average of the N oracles we arc calling and A(t) is an intermediate state variable that is a constant ratio $(1 - \lambda)$ from the current estimate of the covariance matrix, $\Sigma_t$ and $\lambda$ is the exponential weighting factor. Wc give our derivations in the technical appendix.

**Precision estimation** We can use the Sherman-Morrison formula to derive a similar on-line cstim-ator for the precision matrix, avoiding the need to perform a matrix inversion. The update equations arc

$$\overline{\mathbf{p}}(t) = \overline{\mathbf{p}}(t - 1) + (1 - \lambda)\left(\mathbf{p}(t) - \overline{\mathbf{p}}(t - 1)\right) \tag{19}$$

$$\mathbf{S}(t) = \frac{1}{\lambda}\mathbf{S}(t - 1)\left(\mathbf{I} - \frac{(\mathbf{p}(t) - \overline{\mathbf{p}}(t - 1))(\mathbf{p}(t) - \overline{\mathbf{p}}(t))^{\top}\mathbf{S}(t - 1)}{\lambda + (\mathbf{p}(t) - \overline{\mathbf{p}}(t))^{\top}\mathbf{S}(t - 1)(\mathbf{p}(t) - \overline{\mathbf{p}}(t - 1))}\right) \tag{20}$$

$$\mathbf{\Sigma}^{-1}(t) = \frac{\mathbf{S}(t)}{(1 - \lambda)} \tag{21}$$

where division is performed elementwise, $\overline{\mathbf{p}}(t)$ is a running exponentially-weighted moving average of the N oracles we arc calling and S(t) is an intermediate state variable that is a constant ratio, $(1 - \lambda)$ from the current estimate of the precision matrix, $\Sigma(t)$. Wc give our derivations in the technical appendix.

### 4.2.1 Mean-Variance-like Update Rules

Mean-Variance Portfolio Theory can be used to construct a broad array of different portfolios. The update rules that come from MVPT arc a little different to the other update rules considered so far: they do not have the form of Eq (9). Instead they arc examples of an update rule of the more general form, Eq (8): $\mathbf{w}(t) = f\left(\mathbf{w}(t - 1), \mathbf{p}(t), \frac{\partial \mathbf{p}(t)}{\partial t}\right)$

. This is because MVPT docs not give us a series of *changes* to portfolio weights but gives us the portfolio weight vector itself directly.

How to handle update rules that naturally produce whole portfolio weight vectors rather than weight changes? Wc can apply exponential smoothing over the sequence of given weight vectors. Given a series of calculated weight vectors $\{\hat{\mathbf{w}}(t)\}$, perhaps obtained from an MVPT calculation or from some other set of mathematical tools, we can use for the pool weights a smoothed version of these, so

$$\mathbf{w}(t) = \Lambda \mathbf{w}(t-1) + (1-\Lambda)\hat{\mathbf{w}}(t). \qquad (22)$$

where $\Lambda$ is our exponential smoothing parameter, analogous to that used in oracle gradicnt/covariancc calculations.

**Minimum-Variance** Here we demonstrate one of the simplest MVPT outputs, the minimum variance portfolio. $\mathbf{w}^{\text{min-var}}(t)$ arc the sequence of min-variance weights. For simplicity we assume that assets arc uncorrelated with each other and have zero average return [11]. Given these assumptions the minimum-variance weights arc

$$\hat{\mathbf{w}}(t) = \frac{\boldsymbol{\Sigma}^{-1}(t)}{\sum_{j=1}^{N} \Sigma_j^{-1}(t)} \qquad (23)$$

where $\Sigma^{-1}(t)$ is vector whose elements arc the precisions of the returns for each token in the pool. So overall

$$\mathbf{w}(t) = \Lambda \mathbf{w}(t-1) + \frac{(1-\Lambda)\boldsymbol{\Sigma}^{-1}(t)}{\sum_{j=1}^{N} \Sigma_j^{-1}(t)}. \qquad (24)$$

[11] These assumptions can be relaxed, for a full derivation and more background on MVPT see the technical appendix.

The inverse-variance estimation process has its own memory length, determined by $\lambda$ above, which is used to parameterise the pool alongside $\Lambda$.

## 4.3 Choosing an Update Rule's parameters

All update rules contain some parameters. Sometimes these parameters have clear interpretations, changing a pool's aggressiveness ($\kappa$) or memory length ($\lambda$). Sometimes the parameters have a less clear interpretation (c.g. b in Eq (15)). To deploy a pool, these parameters have to be chosen. We show later in this white paper, in §9, that for wide ranges of parameter values the example update rules we have given here perform well, in a range of market conditions. But still, particular values of the parameters of a pool's update rule must be given. For launch, Robodex provides to pool creators a Pool-SDK that enables the design of pools and the tuning of pool parameters in accordance with the creator's goals. This might be maximising the Sharpe ratio over historical data, or minimising variance of returns over Monte Carlo draws of price movements, or any of a broad range of other objective functions. We do this optimisation via backprogation, i.e. gradient descent, as the problem is, in general, non-convex.

## 4.4 Batched Update Rules

The example update rules above in §4.1.1 & 4.2.1 produce pools that run a single, relatively simple, mathematical formula based on some particular choices of parameters $\kappa$ (aggressiveness) and $\lambda$ (memory length), say.[12] Given that we have these simple rules, it is natural to wonder if there is a way to somehow combine multiple update rules together, gaining synergy between their different behaviours. Later in this white paper, in 910, we will discuss at length one way to do this, describing how Robodcx pools can be *composed* with each other, building hierarchies ('pools of pools') that have complex behaviours. The 'lego-brick'-likc combining that takes place in composite pools avoids liquidity fragmentation and enables dynamic re-allocation of capital between different update rulcs/stratcgics.

[12] Rccall that parameters like $\kappa$ and $\lambda$ in momentum pools can be either scalars-same value use for all tokens-or vectors-different value for each token-or even matrices. We will consider here the simplest case, where all pool parameters arc scalars, but it is trivial to extend these these ideas to other cases.

Sometimes, though, users arc not concerned with liquidity fragmentation, and also there arc sometimes cases where interpretable re-allocation of capital between different updatc-rulcs/stratcgics is not necessary, or even is unappealing. Here we describe a 'flattcr' way to combine update rules: creating a new pool, a *batched pool,* whose update rule is made by combining many simpler update rules, a procedure we call *batching.* All value in the batched pool is then allocated according to the overall weight-changes of the overall, *batched,* update rule-a single pot.

Why might this be desirable? The idea is that when the update rules in the batch arc making good decisions they arc in agreement, but when they arc making bad decisions their outputs arc bad in different ways. Thus by averaging their outputs, we hope that the good choices arc amplified and the bad choices cancel each other out (at least partially). (This averaging is reminiscent of 'ensembling' in applied statistics, where many small models arc averaged to give an overall output.)

Concretely, given a set of $M$ update rules, say those that take the form of Eq (8), a *batched update rule* is made by taking the average of their output. In this case the batched weight vector $w(t)_{\text{batch}}$ is

$$\mathbf{w}_{\text{batch}}(t) = \frac{1}{M} \sum_{m=1}^{M} f_m \left( \mathbf{w}_{\text{batch}}(t-1), \mathbf{p}(t), \frac{\partial \mathbf{p}(t)}{\partial t} \right), \tag{25}$$

and if the constituent update rules output changes of weights, as in Eq (9), the batched weight vector $w(t)_{\text{batch}}$ is

$$\mathbf{w}_{\text{batch}}(t) = \mathbf{w}_{\text{batch}}(t-1) + \frac{1}{M} \sum_{m=1}^{M} g_m \left( \mathbf{p}(t), \frac{\partial \mathbf{p}(t)}{\partial t} \right). \tag{26}$$

For some classes of update rules there can be ways to share/cache computation of a set of update rules being batched together, reducing running costs.

### 5 Trading with Robodex

Multi-token trades arc allowed in Robodex. Consider a trader wishing to exchange a particular set of tokens, represented by the vector $\Delta$, for another set of tokens A, where entries in each arc $\geq 0$. The protocol requires, for tokens i where $\Delta_i > 0$, that $\Lambda_i = 0$: tokens cannot be traded for themselves.

With fees $(1 - \gamma)$, for a trade to be accepted it must be the case that

$$\prod_{i=1}^{N} (R_i + \gamma \Delta_i - \Lambda_i)^{w_i(t)} \geq k(t) \tag{27}$$

A Robodex pool takes a dynamic position in the marketplace, re-weighting its reserves between tokens on the fly, so via providing arbitrage opportunities it increases its proportional holdings in some tokens and decreasing its in others, in a manner designed to earn a return for LPs. Thus the protocol can offer lower fees to traders wishing to exchange tokens than on other protocols where trader fees arc needed, because of impermanent loss, to attempt to make LPs whole.

**Token-Pair Quotes via the Trading Function** Consider token-pair trades, i.c. $\Delta$ and A arc further both restricted to be one-hot. The trader wishes to exchange $\Delta_j$ of the $j^{\text{th}}$ token for some amount $\Lambda_k$ of the $k^{\text{th}}$ token, $j \neq k$. Wc can directly give a Robodex pool's quote for the amount $\Lambda_k$ that it will accept for the trading-in of $\Delta_j$, via inversion of Eq (27):

$$\Lambda_k = R_k \left( 1 - \frac{1}{\left( 1 + \gamma \frac{\Delta_j}{R_j} \right)}^{w_j(t)/w_k(t)} \right) \tag{28}$$

**Prices via Gradients** Wc can find unsealed prices, $\mathbf{p}^{\text{robo}}(t)$, offered by Robodex (in the case of 0 fees) by taking the derivative of its defining function, Eq (4), with respect to the vector of reserves held,

$$\mathbf{p}^{\text{robo}}(t) = \frac{\partial}{\partial \mathbf{R}} k(t) = \frac{\partial}{\partial \mathbf{R}} \prod_{i=1}^{N} R_i^{w_i(t)} = \frac{\mathbf{w}(t) k(t)}{\mathbf{R}}, \tag{29}$$

where the division in the final fraction is calculated elementwise[13]. Similarly, to calculate $p_{i,j}^{\text{robo}}(t)$, the prices of the $i^{\text{th}}$ token in terms of the $j^{\text{th}}$, that is, using the $j^{\text{th}}$ token as the numéraire, simply divide the $i^{\text{th}}$ unsealed price by the $j^{\text{th}}$,

$$p_{i,j}^{\mathrm{robo}}(t) = \frac{\left(\frac{\partial}{\partial \mathbf{R}} k(t)\right)_i}{\left(\frac{\partial}{\partial \mathbf{R}} k(t)\right)_j} = \frac{w_i(t)/R_i}{w_j(t)/R_j}. \qquad (30)$$

[13]We can see from this why $k(t)$ is sometimes called the *value* of pools like this. Intuitively the value of a pool is the sum of the product of reserves and prices. Using these unsealed prices, $\sum_{i=1}^{N} p_i^{\mathrm{robo}}(t) R_i = k(t) \sum_{i=1}^{N} w_i(t) = k(t)$.

This expression makes explicit the relationship between the trajectories of a pool's weights and the prices it quotes. If the the weight of token i increases relative to token *j*, the price of token i increases relative to token *j*; conversely, a decrease in the relative weight of token i causes a decrease in its price, such that trading pushes the reserves out of token i and into *j*.

**5.1 Depositing and Withdrawing Liquidity**

Depositing and withdrawing liquidity to and from a pool $\mathcal{P}$ correspond respectively to increasing and decreasing the pool value $k(t)$: we can think of $k(t)$ as providing a unitlcss scalar measure of the size or 'value' of the pool's reserves, given its current weights. Exactly like pools on extant DEXes, each pool issues liquidity tokens to LPs in proportion to the value they place in a pool. At time *t*, the total supply of liquidity tokens $\tau_P(t)$ for a pool P is therefore given by $\tau_P = sk(t)$, where s is a scaling factor that determines the total size of the supply.

Depositing all the assets in a pool in proportion to their existing supply scales k accordingly (where for now we arc dropping k's explicit time dependence to minimise clutter). That is, suppose one deposits $\Delta_i$ tokens of each asset i, where $\Delta_i = cR_i$ for some scalar c. The reserves therefore change according to the map $R_i \mapsto (1 + c)R_i$, and hence the value of k maps according to $k \mapsto (1 + c)k$. The depositor is therefore allocated $c\tau_P$ new liquidity tokens, and the total liquidity token supply evolves as $\tau_P \mapsto (1 + c)\tau_P$. This is called an *all-asset deposit*.

An LP need not deposit all the assets in a pool to obtain liquidity tokens: in fact, they can deposit any quantity of any of the underlying assets, and obtain tokens in exchange for the increase in pool value. Since liquidity tokens arc issued in exchange for increasing the value of *k,* we can ask how many tokens would be issued if k is increased to *k'*. Since the number of liquidity tokens $\tau_P$ is proportional to k, we have

$$\frac{\tau_{\mathcal{P}}'}{\tau_{\mathcal{P}}} = \frac{\tau_{\mathcal{P}} + \delta}{\tau_{\mathcal{P}}} = \frac{k'}{k}$$

where $\tau_{\mathcal{P}}'$ is the new supply of liquidity tokens, and $\delta$ is the new issuance.

Suppose therefore that an LP wishes to deposit assets in quantities given by $\Delta_i$, where i ranges over the assets in the pool. This means that we have

$$\frac{k'}{k} = \prod_{i:\mathcal{T}} \left(\frac{R_i + \Delta_i}{R_i}\right)^{w_i}$$

and hence

$$\delta = \tau_{\mathcal{P}} \left( \prod_i \left(1 + \frac{\Delta_i}{R_i}\right)^{w_i} - 1 \right).$$

In the case of a single-asset deposit, we obtain

$$\delta = \tau_{\mathcal{P}} \left( \left(1 + \frac{\Delta_i}{R_i}\right)^{w_i} - 1 \right).$$

Conversely, a liquidity provider can deposit liquidity tokens (thereby reducing $\tau_P$), and thereby withdraw assets from the pool-and there arc corresponding formulae for all-asset and arbitrary-asset withdrawals, obtained by taking the change $\delta$ in token supply to be negative. One can also invert these formulae, to obtain expressions for how many tokens of given asset types must be deposited (or withdrawn) to acquire (or destroy) a certain number of liquidity tokens.

**6 Concentrated Liquidity**

Previous projects have introduced the use of 'concentrated liquidity', where trades arc performed 'as if' a pool contains more reserves than it in fact docs. If liquidity is *concentrated* by quoting trading using these *virtual reserves,* that arc greater than the true reserves, then it can be possible for trades to remove all of the reserves of any token in the pool by a single trade or a sequence of trades. This has the effect of making the reserves of a pool only available within a certain range of market prices. Why is this method desirable? It leads to reduced slippage for traders, as higher reserves in a pool naturally decrease the curvature of commonly-used trading functions. This means that pools with concentrated liquidity arc more appealing for traders than those that do not concentrate their liquidity, all else being equal. Previous projects have implemented concentrated liquidity for pools composed of pairs of tokens. *Here we extend the virtual reserves approach to pools with non-uniform weights over tokens and simultaneously to multi-token pools.*

A Robodex pool has, in a given block, the invariant

$$\prod_{i=1}^{N} R_i^{w_i(t)} = k(t), \quad \text{where } \sum_{i=1}^{N} w_i(t) = 1, \text{ and } \forall i \ 0 < w_i(t) < 1$$

Wc *scale* the reserves uniformly by a factor $v$ ($\geq 1$) to get our virtual reserves, $\breve{R}_i$,

$$\breve{R}_i = \nu R_i,$$

and further we require that these new virtual reserves follow a matched virtual invariant function

$$\prod_{i=1}^{N} \breve{R}_i^{w_i(t)} = \breve{k}(t), \quad \text{where } \sum_{i=1}^{N} w_i(t) = 1, \text{ and } \forall i \ 0 < w_i(t) < 1 \tag{31}$$

Subbing in $\breve{R}_i = vR_i$, we obtain

$$\breve{k}(t) = \nu k(t), \tag{32}$$

see technical appendix D for derivation.

**Trading with Robodex with concentrated liquidity** While we can scale our initial reserves, in effect pretending the pool has more reserves than it docs, the trade amounts the number of tokens going into and out of these pools-is the particular amount of tokens the trader is wishing to exchange. Both true and virtual token reserves change by the same amount. What trades arc allowed? Exactly those one gets from replacing $R_i$ with $vR_i$ in Eq (27), so

$$\prod_{i=1}^{N} \left( \breve{R}_i + \gamma \Delta_i - \Lambda_i \right)^{w_i(t)} = \prod_{i=1}^{N} \left( \nu R_i + \gamma \Delta_i - \Lambda_i \right)^{w_i(t)} \geq \nu k(t). \tag{33}$$

And the concentrated equivalent to a token-pair trade, Eq (28), trading $\Delta_j$ of token *j* into the pool in exchange for $\Lambda_k$ of token *k*, is

$$\Lambda_k = \nu R_k \left( 1 - \frac{1}{\left( 1 + \gamma \frac{\Delta_j}{\nu R_j} \right)^{w_j(t)/w_k(t)}} \right) \tag{34}$$

What about after a trade has been done? Using primes to denote post-trade quantities,

$$R_i' = R_i + \Delta_i - \Lambda_i \tag{35}$$

$$\breve{R}_i' = \nu R_i + \Delta_i - \Lambda_i \tag{36}$$

$$\Rightarrow \breve{R}'_i = R'_i + (\nu - 1)R_i. \tag{37}$$

This enables us to write the post-trade invariant of the virtual reserves, Eq (31), in terms of the true reserves

$$\prod_{i=1}^{N} \breve{R}'^{w_i(t)}_i = \prod_{i=1}^{N} \left(R'_i + (\nu - 1)R_i\right)^{w_i(t)} = \nu k'(t) \tag{38}$$

which shows us clearly that the virtual invariant is a scaled and shifted version of the original invariant.

**Allowed ranges of reserves** The underlying, true, token reserves cannot go below zero, so $R_{i,\min} = 0$. What restriction docs this place on the virtual reserves, we find

$$\breve{R}'_{i,\min} = (\nu - 1)R_i, \tag{39}$$

which is intuitively the case as our initial virtual reserves arc $\nu R_i$ and then $R_i$ is removed from them. What is the maximum value of the virtual reserves? This is the question of what if the true reserves of all other tokens go to zero. The maximum value $\breve{R}'_i$ can reach, in the no-fccs-casc, is

$$\breve{R}'_{i,\max} = (\nu - 1)^{1 - \frac{1}{w_i}} \nu^{\frac{1}{w_i}} R_i, \tag{40}$$

see technical appendix D for derivation. Thus the corresponding maximum value of the true reserves is

$$R'_{i,\max} = \left( (\nu - 1)^{1 - \frac{1}{w_i}} \nu^{\frac{1}{w_i}} - (\nu - 1) \right) R_i.$$

**Interpreting the transform** At this stage, it is worth reminding ourselves of the geometric construction behind this form of concentration. Recall that, speaking informally, the slippage in a trade is a function of the curvature of the underlying trading function. So to improve the experience of traders, we can aim to find a 'virtual' pool which has less curvature than the original, and expose that new virtual pool's trading function to traders to interact with Wc want to find an invariant function of the same geometric form as the original, but scaled and translated in such as way that curvature is minimised.

In theory this gives us $N + 1$ degrees of freedom, one for each translation in a token direction and an overall scaling. But these movements of the trading function have the potential to change the quoted prices of the pool. If trading using the virtual trading function is done using prices that arc not consistent, the system will create enormous and costly arbitrage opportunities. That is, the gradient of the virtual trading function with respect to virtual token reserves, evaluated at the virtual reserves the true reserves arc mapped to, has to match the gradients of the original trading function evaluated at the true reserves. These requirements takes up N degrees of freedom, meaning that wc can parameterise the set of possible virtual reserves by a single parameter, $v$. For a more detailed mathematical analysis of this, see the technical appendix D.

**What should v be set to?** Pool creators can choose a particular value based on their analysis, analogous to how update rules' parameters arc set; but also, if they prefer, they can choose an external smart contract to be called at the same time as the weight update call to calculate a dynamic $v(t)$ that depends on market conditions, which can include external oracle calls.

## 7 How Different DEXes' Pool Reserves Change

With the above ideas in hand, we can now discuss how pool reserves, and thus pool value, change in Robodex. But first we will cover previous DEXes' pools where the weights arc fixed. That scenario lead us to the infamous problem of impermanent loss. After that we will then cover Robodex's pool, which arc not guaranteed to suffer from impermanent loss.

## 7.1 Non-Dynamic DEX pools must suffer Impermanent Loss

As we have often underlined, in previous DEXcs, like Uniswap and Balancer, liquidity providers suffer from impermanent (a.k.a. divergence) loss: any change in the ratios of the market prices of tokens in a basket leads to that pool holding less value than when the pool was capitalised. When the market prices change in ratio the liquidity providers (in the absence of fees) arc guaranteed to be outperformed by those who simply held their initial capital. We will show here the case $v = 1$, but the results naturally generalise by replacing $R_i$ with $vR_i$ for $v > 1$. For completeness's sake, we derive this here mathematically, so we can then easily compare these fixed-weight pools to the behaviour of dynamic Robodcx pools.

The market price changes from some initial value $\mathbf{p}(t_0)$ to a later value p(t'). We will assume that, at the initial moment, the quoted prices of the pool match the market prices-the pool is, at that moment, in equilibrium. Then, given that change in market prices, arbitragcurs trade with the pool until, again, the quoted prices of the pool match the *new* market prices. Performing this analysis, the pool's reserves at a later time t' arc

$$\mathbf{R}(t') = \mathbf{R}(t_0)\frac{\mathbf{p}(t_0)}{\mathbf{p}(t')}\prod_{i=1}^{N}\left(\frac{p_i(t')}{p_i(t_0)}\right)^{w_i}, \qquad (41)$$

where multiplication and division between vectors is performed elementwise. See technical appendix E.1 for the derivation. The value in a pool, in the market-price numéraire, at any time t is V(t) = $\mathbf{p}(t) \cdot \mathbf{R}(t) = \sum_{i}^{N} p_i(t)R_i(t)$ . Thus we have

$$V(t') = \sum_{i=1}^{N} p_i(t')R_i(t') = \sum_{i=1}^{N} p_i(t')R_i(t_0)\frac{p_i(t_0)}{p_i(t')}\prod_{k=1}^{N}\left(\frac{p_k(t')}{p_k(t_0)}\right)^{w_k} = V(t_0)\prod_{k=1}^{N}\left(\frac{p_k(t')}{p_k(t_0)}\right)^{w_k}. \qquad (42)$$

To get the impermanent loss equations, we now simply compare the change in the pool value from $t_0$ --+ t' to the change in value of the initial reserves $R(t_0)$, $V_{\text{hold}}(t) = \sum_{i=1}^{n} R_i(t_0)p_i(t)$ , so

$$V_{\text{hold}}(t') = \sum_{i=1}^{n} R_i(t_0)p_i(t') = \sum_{i=1}^{n} R_i(t_0)p_i(t')\frac{p_i(t_0)}{p_i(t_0)} = V_{\text{hold}}(t_0)\sum_{i=1}^{n} w_i\frac{p_i(t')}{p_i(t_0)}, \qquad (43)$$

where we have used that $w_i V(t_0) = R_i(t_0)p_i(t_0)$. Thus we have that $\Delta V$, the proportional change in the value of the pool compared to holding, is

$$\Delta V = \frac{\frac{V(t')}{V(t_0)}}{\frac{V_{\text{hold}}(t')}{V_{\text{hold}}(t_0)}} - 1 = \frac{\prod_{k=1}^{N}\left(\frac{p_k(t')}{p_k(t_0)}\right)^{w_k}}{\sum_{i=1}^{n} w_i\frac{p_i(t')}{p_i(t_0)}} - 1. \qquad (44)$$

This function range is $\leq 0$, due to the Weighted AM-GM inequality; in other words, for any p(t') $\neq$ b$\mathbf{p}(t_0)$ (where $b > 0$ is any scalar), $\Delta V < 0$ so liquidity providers have lost value compared to holding.

### 7.2 Robodex pools do not have to suffer Impermanent Loss

Wc will now consider how the holdings, and thus value, of a Robodex pool changes when the weights arc updated. That is, now we will consider *constant* market prices with *changing* weights. So, mirroring the above, we have that, given a change in pool weights, arbitragcurs will trade with the pool until the quoted prices of the pool match the current market prices. We will start with weights $\mathbf{w}(t_0)$, and then after the update we arc a block later, with time t' = $t_0$ + $\delta_t$ and new weights w(t'), but still p(t') = $\mathbf{p}(t_0)$. This gives us the weight-update counterpart to Eq (41),

$$\mathbf{R}(t') = \mathbf{R}(t_0)\frac{\mathbf{w}(t')}{\mathbf{w}(t_0)}\prod_{i=1}^{N}\left(\frac{w_i(t_0)}{w_i(t')}\right)^{w_i(t')}, \qquad (45)$$

where multiplication and division between vectors is performed elementwise. See technical appendix E.2 for the derivation. From this wc can get the weight-update counterpart to Eq (42), the value after the weight-change,

$$V_{\Delta w}(t') = \sum_{i=1}^{N} p_i(t')R_i(t') = \sum_{i=1}^{N} p_i(t_0)R_i(t') = \sum_{i=1}^{N} p_i(t_0)R_i(t_0)\frac{w_i(t')}{w_i(t_0)}\prod_{k=1}^{N}\left(\frac{w_k(t_0)}{w_k(t')}\right)^{w_k(t')}, \qquad (46)$$

which docs not admit a simple form in the same way that Eq (42) where we can 'pull out' $V(t_0)$ from the sum.

Further, note that Eq (41) above[14] is *state dependent,* not *path dependent:* in *state dependent* systems the terms involving intermediate values of variables cancel out, in *path dependent* system they do not. So for DEX pools with fixed weights, if prices go from $\mathbf{p}(t_0) \rightarrow p(t') \rightarrow p(t'')$, we find that we can write R(t") purely using the variables $\mathbf{p}(t'')$, $\mathbf{p}(t_0)$, $\mathbf{R}(t_0)$. The terms involving p(t'), R(t') end up cancelling out. This is not the case here. For Eqs (45, 46), the whole *trajectory* of weights determines how the reserves, and thus the value, changes.

[14]And thus Eqs (42) and (44) also.

Of course when a Robodex pool is running market prices will change, so to model how reserves change we have to apply both Eq (41) and Eq (45). That is, wc intersperse changes-of-weights with changes-of-prices. For a single block, within which the market prices change and then at the end of the block the pool updates its weights, we get

$$\mathbf{R}_{\text{robo}}(t') = \mathbf{R}(t_0)\frac{\mathbf{p}(t_0)}{\mathbf{p}(t')}\frac{\mathbf{w}(t')}{\mathbf{w}(t_0)}\prod_{i=1}^{N}\left(\frac{p_i(t')}{p_i(t_0)}\right)^{w_i(t_0)}\prod_{k=1}^{N}\left(\frac{w_k(t_0)}{w_k(t')}\right)^{w_k(t')}, \qquad (47)$$

where again multiplication and division between vectors is performed elementwise. From the path-dependency of Eq (45), this 'combined' update is also path-dependent and now depends on *both* the trajectory of prices and that of weights. The corresponding change in value for one combined update is

$$V_{\text{robo}}(t') = \sum_{i=1}^{N} p_i(t')R(t')_{\text{robo},i} = \sum_{i=1}^{N} p_i(t_0)R_i(t_0)\frac{p_i(t_0)}{p_i(t')}\frac{w_i(t')}{w_i(t_0)}\prod_{k=1}^{N}\left(\frac{p_k(t')}{p_k(t_0)}\right)^{w_k(t_0)}\prod_{\ell=1}^{N}\left(\frac{w_\ell(t_0)}{w_\ell(t')}\right)^{w_\ell(t')}.$$

$$(48)$$

Wc cannot write a simple equivalent to Eq (44) for these combined Robodex updates-the value of the Robodex pool at some later time is not guaranteed to be less than holding ones initial capital, as it is for non-dynamic DEX pools. Robodex pools do not have to suffer from Impermanent Loss (but of course capital is at risk, update rules can be ill-tuned or have market behaviour change such that they no longer operate as expected). The value of a Robodex pool depends intimately on the sequence of weights and prices over time, and as such its value can increase above simply holding ones capital.

## 8 Weight Update Procedures

### 8.1 Weight Interpolation: Execution Management on Robodex

Weight changes when the pool is in equilibrium quoting the market price-create an arbitrage opportunity. This is desirable, we need to incentivise the pool's reserves to be re-balanced to be in-line with the new weights. But of course it is desirable for LPs for the arbitrage opportunity to be smaller rather than larger. This is roughly analogous to 'execution managcmcnt' in TradFi, where a trader wishes for their transactions to follow best execution policies that reduce cost. A simple way to reduce the arbitrage opportunity from a weight update is to spread out the weight update out over a period in time.

In other words, when weight updates arc divided up into a series of smaller steps the total resulting arbitrage from all of those multiple steps is less than if the update were done in one step, under the assumption that market prices arc constant over the period of time in which weights arc changing.

We can get this result via Eq (45). We can want to compare $\mathbf{R}^{1\text{-step}}$, the reserves in the pool when we have directly updated the weights from $\mathbf{w}(t_0)$ --+ $\mathbf{w}(t_0)+\triangle\text{w}$, a one step process, to $\mathbf{R}^{2\text{-step}}$, the reserves when we have done this weight update via a two step process: $\mathbf{w}(t_0) \rightarrow \mathbf{w}(t_0) + \frac{1}{2}\Delta\mathbf{w} \rightarrow \mathbf{w}(t_0) + \Delta\mathbf{w}$. We find that

$$\mathbf{R}^{2\text{-stcp}} = \mathbf{R}^{1\text{-stcp}}\prod_{j=1}^{N}\left(1 + \frac{\Delta w_j}{2w_j(t_0)}\right)^{\frac{\Delta w_j}{2}}. \qquad (49)$$

See the technical appendix for the derivation. The ratio between $R_{\text{2-step}}$ and $R_{\text{1-step}}$, is always greater than or equal to one. This can be seen trivially. When $\Delta w_j$ is > 0, its term in the product is > 1, as we have a number > 1 raised by a positive power. When $\Delta \omega_j$ is < 0 its term in the product is again > 1, as we have a number < 1 raised by a negative power. (And when $\Delta w_j$ is = 0 the term in the product is 1, as we have a number 1 raised to the power 0.)

This means that for any weight change currently being done in one leap, we can produce a better weight update procedure by going through and equilibrating at the midway value. And after we apply this 'bisection' once, we can apply the exact same argument again on each half the new procedure, dividing changes in weights in half again. This tells us that we want weight changes to be maximally smooth. For given start and end weights, choosing to linearly interpolate the value of the weights in the pool at block-level resolution is thus a simple and effective (and gas-efficient) way to give us smooth weight changes.

**Non-linear weight interpolation** schemes While always it is better to be smoother, and to be smoother in this linear-bisection manner, this 'caps out' at the block resolution. Once one has hit that limit, is there anything else one can do? Yes, there arc. There arc even more capital-efficient ways for pools to provide arbitrage opportunities to the market. One way to attack this problem is via *Calculus of Variations,* as we arc interested in finding the trajectory of weights that minimises the amount that is paid to arbs. This docs not have a clear closed-form solution, even when making the assumption that prices arc constant over the weight-interpolation period. But it can be numerically calculated. During a Robodex weight update call is it possible to put in an external oracle call that returns a 'weight trajectory array', the series of values that the weights should take place over the weight-interpolation period. Of course there is a trade-off here in greater gas costs vs the improvement from a more-complex weight trajectory. The greater a pool's TVL and the cheaper the weight trajectory oracle call is, the easier it would be to justify this gas spend.

**Robodex Pool Efficiency** By splitting up the arbitrage opportunity in this way, Robodcx pools can re-balance to their re-weighted holdings extremely cheaply, in fact competitive with or even out-competing re-balancing via interacting with a centralised exchange. We have done simulations of running standard Robodcx-cnablcd rules in a matched way interacting with a CEX, making the following 'heroic' assumptions:

- No slippage

- Trade at market mid-price

- 1bp fees, and only on trade out from pool

- Tuned re-balancing frequency to minimise churn

While of course the exact performance depends on the basket of tokens, the update rule used, and so on, even under these assumptions, over a supcrcyclc we find that Robodcx pools commonly contain 50% more value in them that the matched simulations of CEX-re-balanced pools.

### 8.2 Guard Rails

**Restrictions on weights** It is reasonable to put additional constraints on the values that can be taken by the entries of the portfolio weight vector w(t). Having the pool put all its reserves into one token, say, would be unidcal. So we can bound each entry of the entries of w(t),

$$\forall i, t : \ \epsilon_{\min} \leq w_i(t) \leq \epsilon_{\max}, \tag{50}$$

where one could choose, say, $\epsilon_{\min} = \frac{1}{2N}$ , and $\epsilon_{\max} = 1 - \frac{1}{2N}$ . This is easy to implement, checking the updated weight vector for entries outside the permitted range and redistributing the out-of-bound portfolio 'mass' between entries.

**Restrictions on changes of weights** Similarly we should also cap the maximum-allowed size of weight updates,

$$\forall i, t : \ |w_i(t) - w_i(t-1)| \leq \epsilon_{\delta \max}. \tag{51}$$

Why would we do this? A key consideration for a Robodcx pool is whether, through the weightings between tokens changing over time, their temporal dependence leads to an opportunity for a front-running attack against LPs. This situation is roughly analogous to a 'sandwich attack' on a trade in a vanilla DEX pool. It is important to note that when weight updates arc smoothed-out in the way previously described, over many blocks, the changes in weight happen, in effect, *between blocks.* This makes the weight updates somewhat reminiscent of trades in Time-weighted average market makers. This means that any attacker would have to do an MeV attack over multiple blocks: being the last transaction of one block and the first of the next. This naturally reduces the possibility of 'sandwich attacks' on the weight updates as it requires multi-block MeV manipulation.

That said, we still find this question important and have done internal research into it. The starting observation is that some sense a weight change is like a tradc-both change the quoted prices of a pool (cf Eq (30)), the first by changing w the second by changing **R.** As both change prices they create arbitrage opportunities, which is good: pools benefit from arbitragcurs coming in to get the quoted prices to match the market prices. But in a sandwich attack, a pre-trade is done that magnifies the size of the arbitrage opportunity caused by the sandwiched trade, enabling greater return to the attacker than if they had merely arbed the trade afterwards. Can a similar attack be used on dynamic pools, trading just before a weight change and then reaping an increased arb return afterwards? Just as how trades have to be of a sufficient size for a sandwich attack to be viable, for a given level of fees and a given maximum trade size, a weight change has to be above a certain size to be sandwich-able.

We just above have show that dividing a weight update into many smaller steps is advantageous to LPs as it minimises the cost paid to arbitragcurs. Here we arc showing a second benefit of small weight-change steps: that in the presence of fees they provide protection from (this hypothetical multiblock McV) attack.

## 9 Backtesting on Market Data

Wc have a Pool Creation Tool to be used by pool creators to model and design pools on Robodcx. There users arc able to simulate all the example rules discussed in §4, over tokens and parameters of their choosing.

Here we provide backtest results from that tool over a basket of wETH, wBTC, wADA and DAI, using market data over what we consider a supcrcyclc from February 2021 to July 2022—HODL would leave you roughly flat over this period despite bull and bear runs occurring.

Wc model oracle/update rule calls as taking place every hour with minute level oracle data. Weights arc interpolated to the desired value over the following hour, with all guard rails applied as described in the section above. Wc model arbitragcurs not as arbing the pools every block but rather only every 5 blocks—so we arc not relying on perfect arbs here.

Why this set of pool constituents? wETH and wBTC need little explanation—they capture the two most important cryptocurrcncics—but why DAI and wADA? For many update rules, a good pool has assets that arc relatively uncorrelated with each other. For momentum, it is even better if the pool contains assets that arc anti-correlated with each other: diversity is good. If all the assets were perfectly correlated with each other it is the same as just having one asset in the pool, defeating the point of the exercise. DAI, a stablccoin, by having an (approximately) constant value is practically uncorrelated with other assets[15]. Cardano, ADA, is a large market-cap, highly-liquid token that is less correlated with BTC/ETH than other similar-market-cap tokens. In fact, there arc times when ADA is anti-correlated with BTC, say, making it a useful addition to a pool. We have used this basket of tokens since the first research done by the team into dynamic pools in early 2022, and we continue to use it to avoid survivorship bias.

[15]The correlation between a constant and any random variable is zero.

The update rules in §4 each have only two parameters. This simplicity means that wc can easily show the performance for a broad range of differently-parameterised pools that use the same update rule. So for each rule we can plot a grid where for each value of its two parameters we show Jensen's Alpha of that particular choice of parameters for that rule, benchmarked against HODL. Wc do this modelling assuming no fees, a conservative assumption as it reduces pool performance.

We start by each pool putting equal value into each token, i.e. $\mathbf{w}(t_0) = \left\{ \frac{1}{4}, \frac{1}{4}, \frac{1}{4}, \frac{1}{4} \right\}$. Note that as the underlying the decay constant parameters present in update rules ($\lambda$ used in gradient or covariance estimation, the decay constant $\Lambda$ used in smoothing a sequence of MVPT weights), wc instead plot the effective 'memory length' of these processes. This is the time it takes for a previous observation to have later no lingering effect on the present value of estimated quantities. Also the 'step size' parameter $\kappa$ present in many rules can vary broadly, so we display its (base 2) logarithm instead. Note that the anti-momentum update rule works best in bear runs, so we demonstrate its performance over the recent bear run, from November 2021 to July 2022.

For a broad range of parameters values, Robodcx pools outperforms holding the initial capital, indicating the robustness of this method in building value for depositors. As discussed in § 4, Robodcx can have vector parameters (different values for each constituent) rather than scalar parameters (one value for all constituents). This improves performance as different constituents will have different properties, however this is not easily illustrated as heat maps.

(a) Momentum

(b) Power Channel

(c) Anti Momentum

(d) Minimum Variance (note: no DAI in this poo)l

Figure 2: Backtest of various update rules for a wETH, wBTC, wADA and DAI basket over a supercycle from February 2021 to July 2022, for each over a range of parameter values. We plot Jensen's Alpha, using HODL as the benchmark. Note that for the minimum-variance pool we do not include DAI: as a stablecoin it has (one hopes) vanishing covariance, so it tends to dominate any minimum-variance pool it is in. Anti momentum is also demonstrated in a specific market condition, the start of the latest bear market November 2021 to July 2022—this is to show how you can construct market-condition-specific base pools that may be of use within a composite pool (see next section). Note that rules that involve a step-size $\kappa$ (all but min-variance) are here parameterised by $\tilde{\kappa}$. $\tilde{\kappa} = \frac{\kappa}{t_{\mathrm{mem}}}$ where $t_{\mathrm{mem}}$ is the memory length of the estimator for the current rule. This is a more natural parameterisation as longer memory lengths (which come from larger $\lambda$ values) lead to smaller gradient estimators, so it is reasonable for the used $\kappa$ to be scaled by the memory length $t_{\mathrm{mem}}$.

Figure 3: Histogram of returns for the all the different momentum pools show above in Fig 2a (i.e. each set of parameters, each 'pixel'), relative to HODL. We also show the return for the batched momentum rule, the black line, made by averaging this whole set of update rules to contruct a new batched update rule. This batched rule has a return of ≈ 0.8 over this period.

**Batched Update Rules** We also show here the performance of the batched pool (see §4.4) made by averaging the outputs for every different setting of the parameters in Fig 2a. There are 61 × 61 = 3721 pairs of values of $\lambda$, $\kappa$ (as in the plot linearly-spaced in memory length and $\tilde{T\kappa}$) and then using that average-weight-update as the weight change. We find that this batched pool, over the same super cycle as in Fig 2a gives a Jensen's Alpha, benchmarked against HODL, of 253%. This compared favourably to the best pools, without needing any sharp a-priori tuning: it only need the choice of a broad range of (highly plausible) parameter settings.

To show this effect in detail, in Fig 3 we give the histogram of returns for the momentum pools (each set of parameters) in Fig 2a over the super cycle, relative to HODL (to isolate cleanly the benefits of the update rules); we also plot the return for the batched momentum rule, the black line, that is built out of this whole set of update rules. So without much in the way of tuning, this update rule gives almost as good performance as the best momentum pools over this period.

## 10 Composite pools

A problem with existing AMMs which aspire to manage LPs value for them is that most trades are executed against pools containing only two or three assets: such small baskets of tokens have downsides as they do not allow for broad exposure to different tokens. LPs who seek to distribute their liquidity across a number of assets-that is, LPs who seek to deposit into pools covering something more like a TradFi portfolio-are therefore faced with a dilemma: they can deposit in a low-volume pool covering the assets of interest with their desired weighting (where on current DEXes they will still suffer impermanent loss); or they can deposit across a number of such small pools, therefore benefiting from the better trade volume, at the cost of manual, off-chain, management of their positions.

The architecture of Robodex enables LPs to circumvent this dilemma, through *composite pools* constructed by "pooling pools" : the liquidity placed in a composite pool is distributed across its underlying pools, enabling an LP to benefit from the volume in these underlying pools while covering their assets of interest. Moreover, composite pools can inherit Robodex pools' automatic re-balancing.

Further, the different pools in a composite pool can cover the *same* tokens, but with each 'base pool' having different update rules. One could have a composite pool constructed out of a momentum wETH-wBTC pool and an anti-momentum wETH-wBTC pool, say. The momentum pool might tend to perform better in some market conditions, the anti-momentum in others. If the composite pool itself runs a momentum strategy over these two base pools, it will be, in effect, dynamically changing its dominant strategy-depending on market conditions. This is a simple example, but captures the flavour of how composite pools could be used to build more advanced update rules, over the same basket, from simpler ones.

Another example could be the creation of a risk management update rule, this would allow the composite pool to re-balance according to the risk profiles of the underlying pools, allowing for LP controlled automatic risk management as well as automatic strategy based constituent token re-balancing. Of course composite pools can be made out of any combination of pools, including other composite pools, which can have between them any amount of overlap in tokens they contain.

The composite pool system also has the benefit of improving liquidity for traders, as liquidity need not be removed from small-basket high-volume pools in order to capitalize broader-based composite pools.

It is also worth noting that it is intrinsically highly-economical for a composite pool to move value between base pools, as LPs do not have to pay trade fees or withdrawal fees when their value goes from one base pool to another-this makes composite pools a very different offering from protocols that externally-manage LPs' holdings between different (non-dynamic) DEX pools. This is only possible on Robodex because of the protocol's single vault architecture design. Further, that design also makes possible reduced slippage swaps if a composite pool requires a re-balancing transaction analogous to an internal transfer of a single token from one its base pools to another.

In this section, we sketch the construction of three fundamental types of composite pool: subpools; (weighted) sums; and quotients. Recall that a Robodex pool is determined by a finite set $\mathcal{T}$ = {i, j,... } of tokens, a $\mathcal{T}$ -indexed vector w(t) = $\{w_i\}_{i:T}$ representing the weights, and a $\mathcal{T}$ -indexed vector **R** = $\{R_i\}_{i:T}$ representing the reserves, such that $\Sigma_{i:T} w_i$ = 1; this information is sufficient to determine the pool value $k(t)$ according to the trading function defined by Eq (4). Throughout this section, we will write $\mathcal{P}$ to indicate the tuple (T, w, R) defining a pool.

Figure 4: Diagrammatic representation of a composite pool composed of two base pools. The base pools are shown left and right, while two mathematically-equivalent representations of a composite pool built on these basepools are given top and bottom. The top shows the 'cumulative' representation: the composite pool's holdings in terms of the underlying pools' reserve tokens. The bottom shows the 'LP token' representation: simply the LP tokens held from the underlying pools. Interpreting and using the cumulative view of a composite pool is very important for vault efficiency and price discovery as arbitrage on LP tokens is not realistic (as their circulation is so constrained).

## 10.1 Subpools

A simple example of a composite pool is the *subpool.* That is, given a pool $\mathcal{P}$ , an LP may wish to deposit into only in a subset U $\subset$ $\mathcal{T}$ of its tokens, while otherwise benefiting from its trading volume and weights. In order to do so, the LP can deposit into the subpool $\mathcal{P}^{(U)}$ defined as follows. Its set of tokens is of course *U,* and the reserves $R_i^{(U)}$ arc just the corresponding reserves $R_i$ in $\mathcal{P}$ , for i $\in$ *U.* Then the subpool weights $w_i^U$ arc given by $w_i^U = w_i / \sum_{i:U} w_i$ , and the pool value is

$$k^{(U)} = \frac{\sum_{i:U} w_i}{\prod_{j:\mathcal{T}\backslash U} R_j^{w_j}}$$

where $j$ ranges over the set $\mathcal{T} \setminus U$ of tokens not in $U$.

## 10.2 Sums and weighted sums of pools

The next example of a composite pool is obtained by forming the sum of two pools $P^{(1)}$ and $P^{(2)}$, allowing an LP to distribute liquidity across the assets underlying the pools, without having to create a new pool, or perform the distribution manually. In combination with subpools, this allows LPs to deposit into complex, emergent, pools while benefiting from the underlying trade volume.

To construct the sum $P^{(1)} + P^{(2)}$, we form the disjoint union $T^{(1)} + 7(2)$ of the sets of tokens. The reserves arc just the reserves of the underlying pools, and the weights $w_i^{(1+2)}$ arc given by $w_i/2$, where $w_i$ is the underlying weight. A simple calculation then shows the value $k^{(1+2)}$ of the sum pool to be given by product of the square roots $\sqrt{k^{(1)}}\sqrt{k^{(2)}}$ of the values of the underlying pools.

The operation of summing pools naturally extends from this binary case to sums of arbitrary size. That is to say, given a collection of pools $\{P^{(i)}_{i:I}$, one can form the corresponding sum composite pool $\Sigma_{i:I} P^{(i)}$ by forming the disjoint union of the corresponding sets of tokens $\Sigma_{i:I} T^{(i)}$, and resealing the weights $w_j^{(i)}$ by $1/|I|$, where $|I|$ is the size of the index set $I$.

The notion of sum composite pool extends further to a *weighted sum,* whereby each constituent pool $P^{(i)}$ of a composite pool is associated with a 'composite' weight $w_i$. We write the corresponding pool as $\Sigma_{i:I} w_i P^{(i)}$, and the composite-weights $w_i$ arc themselves constrained to sum to 1. The only difference from the 'uniform' case of the preceding paragraph is that now the underlying weights arc resealed by $\omega_i$, rather than $1/|I|$.

## 10.3 Composite pool re-balancing

A general weighted sum composite pool can equivalently be thought of as a 'pool of pools': a pool constructed from the liquidity tokens of the underlying pools $P^{(i)}$. That is, given a collection of pools $\{P^{(i)}\}_{i:I}$ and corresponding weights $w_i$, we can form a new pool given by a weighted (geometric) sum of their underlying assets:

$$\prod_{i:I} R_{\mathcal{P}^{(j)}}^{\omega_j} = \prod_{i:I} \prod_{j:\mathcal{T}^{(i)}} R_{ij}^{\omega_i w_{ij}} = \prod_{i:I} k^{(i)^{\omega_i}} = k$$

where the composite pool weights $w_i$ satisfy the normalization rule that $\Sigma_{i:I} w_i = 1$. This invariant is clearly equal to the invariant of the weighted sum composite pool $\Sigma_{i:I} w_i P^{(i)}$.

Next, observe that we can think of the pool value $k^{(i)}$ as an unsealed 'price' for the pool $P^{(i)}$, by asking "how much would it cost to buy one unit of each of the pool's reserves?" The answer to this question is given by the sum $\sum_{j:\mathcal{T}^{(i)}} R_j p_j^{\mathrm{robo}}$, which is easily seen to be equal to the value $k^{(i)}$.

This means that we can use the values of the underlying pools in a composite pool as price signals, and update the composite-weights $\omega_i$ accordingly, using the same algorithm as for the assets in the underlying pools. This is the source of the automated, dynamic, abilities of Robodex.

## 10.4 Quotient composite pools

The principal operation by which wc construct composite pools is the (weighted) sum of pools. Since this operation involves a disjoint union of the underlying sets of tokens, tokens in pool $P^{(1)}$ arc treated as distinct from the tokens in pool $P^{(2)}$, even when those pools have tokens in common and together constitute a composite pool. In order to combine the reserves of these shared tokens, we need to 'quotient' the composite pool by an equivalence relation identifying them[16]. Since, before quotienting, the reserves of the shared tokens have disjoint weights, when we perform this quotienting, we must not only sum up the reserves, but also adjust the weights accordingly.

In general, we can quotient any pool by any equivalence relation-not just composite pools by token identity-and since it simplifies the mathematics, this is the setting we work with here. Suppose therefore that ~ is an equivalence relation on a pool $P$ and we wish to form the quotient pool $P / \sim$. The set of tokens of $P / \sim$ is given by the quotient $T / \sim$ of the set $T$ of tokens of $P$, whose elements arc equivalence classes [i], such that two tokens $j, k \in T$ arc elements of the same equivalence class [i] if and only if $j \sim k$ according to the equivalence relation $\sim$. The reserves $\tilde{R}_{[i]}$ of 'token' [i]

in $P / \sim$ arc given by the sum of the underlying reserves: $R_{[i]} = \Sigma_{j \in [i]} R_j$. We then want to define new weights such that

$$\tilde{R}_{[i]}^{\tilde{w}_i} = \Big( \sum_{j \in [i]} R_j \Big)^{\tilde{w}_i} = \prod_{j \in [i]} R_j^{w_j} .$$

The weights $\tilde{\omega}_i$ making these equalities true arc given by:

$$\tilde{w}_i = \frac{\sum_{j \in [i]} w_j \log R_j}{\log \tilde{R}_i}$$

Note however that, in general, $\Sigma_i \tilde{w}_i \neq 1$, and so we must rescale the weights by $\tilde{w}_i \mapsto \tilde{\omega}_i / \Sigma_i \tilde{\omega}_i$. This in turn introduces a corresponding resealing of $k$ to $k = k^{(1/ \Sigma_i \tilde{\omega}_i)}$, but this is not a problem, since the underlying value k is unchanged by these operations, and the quotient weights and reserves arc fully determined by the underlying weights and reserves[17].

### 10.5 Trading with composite pools, and depositing and withdrawing liquidity

Trading with (sum) composite pools has mathematically the same form as trading with any other pool, except with an extra degree of freedom: given a composite pool $\Sigma_{i;I} \omega_i P^{(i)}$, one can trade the assets in pool $P^{(1)}$ directly against the liquidity tokens of pool $P^{(2)}$, since such a composite pool is mathematically equivalent to a pool of the liquidity tokens of the underlying pools. But since composite pools make this equivalence explicit, traders benefit from the liquidity of both kinds of trades. Moreover, composite pools can be arbitrarily deeply nested, and traders arc able to trade across these levels of nesting; and, importantly for LPs, these trades at the composite pool level work to re-balance the assets deposited directly in the composite pool.

Depositing liquidity in a composite pool is like depositing liquidity in the underlying pools, except that by depositing liquidity in the composite pool itself, an LP benefits from this automatic re-balancing: their value is automatically moved from worse- to better-performing constituent pools. LPs can redeem composite pool liquidity tokens for the underlying assets, or trade automatically into withdrawing in a single token from the basket.

[16]Mathematically, this means constructing a true colimit as a cocqualizcr of a coproduct.

[17]Moreover, this means that all such quotienting can be performed in the front end, and hence off-chain, thereby saving on gas costs.

### 10.6 Improving composite pool and trade liquidity

Because composite pools arc equivalent to pools containing liquidity tokens (or subpools or quotients thereof), and we wish to reduce the fragmentation of liquidity and trading activity, Robodex ensures that any pool including a liquidity token is considered as a composite pool containing the pool associated to the liquidity token; note that any individual token is also equivalent to a trivial pool containing assets only of that token type.

As a further step to improve trade liquidity, Robodex holds all pool liquidity in a centralized smart contract: the central Robodex smart contract executes trades, dispatching the checks that relevant invariants arc satisfied to the underlying pools, but only requiring that the invariants must be satisfied at the end of a transaction. This means that Robodex supports inexpensive multi-step trades within a single transaction, and allows for pool invariants to be transiently broken within each transaction, as long as the invariants arc finally satisfied.

This flexibility is important for composite pool trading: for example, in order to trade across the pools constituting a composite pool, it may be necessary to move liquidity between pools, and the optimal sequence of trades (and joins and exits) may transiently break the invariants of the underlying pools. In principle, this extra flexibility allows traders to draw on the combined reserves of the entire Robodex platform in order to minimize slippage, and enables sophisticated manocuvrcs such as using flash loans mid-trade in order to resolve broken invariants.

Since all that is required of a Robodex trade is that the relevant invariants arc finally satisfied, computing the optimal sequence of operations can be performed entirely in the front end using sophisticated optimization routines. The Robodex smart contract then acts like an interpreter for a domain-specific trade language, and only needs to check the final satisfaction of the invariants, which is a low-cost operation requiring no complex on-chain optimization.

**Technical Appendix for Robodex**

**A Derivation of Online Weighted Least-Squares Regression**

A.1 Background

**Simple linear regression** In simple linear regression we arc have a single independent variable x and a single dependent variable $y$. We arc given $n$ pairs of values $\{(x_1, y_1), (x_2, y_2), ..., (x_n, y_n)\}$. We model the relationship in our data as

$$y_i = \alpha + \beta x_i + \epsilon_i, \tag{52}$$

where $\varepsilon_i$ is independent and identically distributed Gaussian noise. We aim to find the settings of $\alpha$ and $\beta$ that minimise the sum of square errors,

$$\alpha^*, \beta^* = \arg\min_{\alpha, \beta} \left( \sum_{i=1}^{n} (y_i - \alpha - \beta x_i)^2 \right). \tag{53}$$

The optimal $\beta$, for $n$ observations is

$$\beta_n^* = \frac{\sum_{i=1}^{n} (x_i - \overline{x})(y_i - \overline{y})}{\sum_{i=1}^{n} (x_i - \overline{x})^2}, \tag{54}$$

where

$$\overline{x} = \frac{1}{n} \sum_{i=1}^{n} x_i \tag{55}$$

$$\overline{y} = \frac{1}{n} \sum_{i=1}^{n} y_i. \tag{56}$$

**Weighted Linear Regression** In weighted linear regression we weight each datapoint by a factor $0 < g_i \leq 1$, and we aim to find the $\alpha$ and $\beta$ that minimise this weighted sum of squares,

$$\alpha^*, \beta^* = \arg\min_{\alpha, \beta} \left( \sum_{i=1}^{n} g_i (y_i - \alpha - \beta x_i)^2 \right). \tag{57}$$

One reason for weighting is that some datapoints arc viewed as being more important than others to regress accurately at-these arc given higher weights. The optimal $\beta$, for $n$ weighted observations is

$$\beta_n^* = \frac{\sum_{i=1}^{n} g_i (x_i - \overline{x})(y_i - \overline{y})}{\sum_{i=1}^{n} g_i (x_i - \overline{x})^2}. \tag{58}$$

We need our definitions of averages of observations to take account of our weights. We now have

$$\overline{x}_n = \sum_{i=1}^{n} \frac{g_i x_i}{G_n} = \frac{g_n x_n + G_{n-1} \overline{x}_{n-1}}{G_n}, \tag{59}$$

$$\overline{y}_n = \sum_{i=1}^{n} \frac{g_i y_i}{G_n} = \frac{g_n y_n + G_{n-1} \overline{y}_{n-1}}{G_n}, \tag{60}$$

$$G_n = \sum_{i=1}^{n} g_i. \tag{61}$$

This now enables us to derive an online estimator for $\beta$.

**A.1.1 Online Estimate of $\beta$**

In our case, running a DcFi protocol, we arc particularly concerned with computationally simple algorithms, so any naive approach where we do the calculations of Eqs (55, 56, 58) from scratch whenever a new observation comes in is not ideal. Instead, we seek an *on-line* method, where we keep some running value of the parameter we care about, /3, and then *update* that running value using the latest observations.

Let us derive the overall online update equations. First, consider the numerator of Eq (58), which we will denote $a_n$:

$$a_n = \sum_{i=1}^{n} g_i \left( x_i - \overline{x}_n \right)(y_i - \overline{y}_n) \tag{62}$$

$$= \sum_{i=1}^{n} g_i \left( x_i y_i + \overline{x}_n \overline{y}_n - \overline{x}_n y_i - x_i \overline{y}_n \right) \tag{63}$$

$$= \sum_{i=1}^{n} g_i x_i y_i + G_n \overline{x}_n \overline{y}_n - \overline{x}_n \sum_{i=1}^{n} g_i y_i - \overline{y}_n \sum_{i=1}^{n} g_i x_i \tag{64}$$

$$= \sum_{i=1}^{n} g_i x_i y_i - G_n \overline{x}_n \overline{y}_n \tag{65}$$

We have repeatedly used the definitions above of $\overline{x}_n$ and $\overline{y}_n$. Now consider $\Delta a_n = a_n - a_{n-1}$, the difference between $a_n$ and $a_{n-1}$:

$$\Delta a_n = \sum_{i=1}^{n} g_i x_i y_i - G_n \overline{x}_n \overline{y}_n - \sum_{i=1}^{n-1} g_i x_i y_i + G_{n-1} \overline{x}_{n-1} \overline{y}_{n-1} \tag{66}$$

$$= g_n x_n y_n - G_n \overline{x}_n \overline{y}_n + G_{n-1} \overline{x}_{n-1} \overline{y}_{n-1}. \tag{67}$$

Now we sub in $\overline{x}_n = \frac{g_n x_n + G_{n-1} \overline{x}_{n-1}}{G_n}$ and $\overline{y}_{n-1} = \frac{G_n \overline{y}_n - g_n y_n}{G_{n-1}}$ :

$$\Delta a_n = g_n x_n y_n - G_n \frac{g_n x_n + G_{n-1} \overline{x}_{n-1}}{G_n} \overline{y}_n + G_{n-1} \overline{x}_{n-1} \frac{G_n \overline{y}_n - g_n y_n}{G_{n-1}} \tag{68}$$

$$= g_n x_n y_n - g_n x_n \overline{y}_n + \underbrace{\left( G_n - G_{n-1} \right)}_{=g_n} \overline{x}_{n-1} \overline{y}_n - g_n \overline{x}_{n-1} y_n \tag{69}$$

$$= x_n (g_n y_n - g_n \overline{y}_n) + \overline{x}_{n-1}(g_n \overline{y}_n - g_n y_n) \tag{70}$$

$$= g_n (x_n - \overline{x}_{n-1})(y_n - \overline{y}_n). \tag{71}$$

Let's turn to consider the denominator of Eq (58), which we will denote $b_n$:

$$b_n = \sum_{i=1}^{n} g_i \left( x_i - \overline{x}_n \right)^2 . \tag{72}$$

We also want to get an expression for $\Delta b_n = b_n - b_{n-1}$, analogous to that we just obtained for $\Delta a_n$ above. We can save ourselves a fair amount of effort by noticing that $b_n$ is $a_n$ with $y \to x$. Thus,

$$\Delta b_n = g_n(x_n - \overline{x}_{n-1})(x_n - \overline{x}_n). \tag{73}$$

**Re-weighting the data** The above is all we need if the weights $g_i$ arc known and fixed ahead of time. We, however, choose an exponentially-decaying weighting that itself updates with every new observation, so

$$g_i = \lambda^{n-i}, \tag{74}$$

where $0 < \lambda < 1$. Under this rule, we pay more heed to recently gathered data. To be clear, this means that every time a new observation comes in, we must (post-fact) re-weight all previous data down by a factor $\lambda$. This comes about because the weighting depends on the current value of *n*. In other words, when we get a new observation its not just that we add it to the analysis and do an update; we also retrospectively down-weight all previous data. It turns out that with exponential weighting, we can do this re-weighting *online,* so still we arc able to avoid recalculating quantities from scratch. Consider $G_n$. As $g_n = \lambda^{n-n} = \lambda^0 = 1$ and as $g_{i-1} = \lambda g_i$,

$$G_n = 1 + \lambda G_{n-1}. \tag{75}$$

Let's now see what happens when we calculate $\overline{x}_n$ using Eq (59), but with this re-weighting (so $g_i \dashrightarrow \lambda g_i$):

$$\overline{x}_n = \frac{1 x_n + \sum_{i=1}^{n-1}(\lambda g_i x_i)}{\sum_{i=1}^{n-1}(\lambda g_i) + 1} \tag{76}$$

$$= \frac{x_n + \lambda \sum_{i=1}^{n-1}(g_i x_i)}{\lambda \sum_{i=1}^{n-1}(g_i) + 1} \tag{77}$$

$$= \frac{x_n + \lambda G_{n-1}\overline{x}_{n-1}}{\lambda G_{n-1} + 1} \tag{78}$$

$$= \frac{x_n + (G_n - 1)\overline{x}_{n-1}}{G_n} \tag{79}$$

$$= \overline{x}_{n-1} + \frac{x_n - \overline{x}_{n-1}}{G_n}. \tag{80}$$

The same holds for $\overline{y}$,

$$\overline{y}_n = \overline{y}_{n-1} + \frac{y_n - \overline{y}_{n-1}}{G_n}. \tag{81}$$

Wc can apply this re-weighting to considering online learning of $a_n$ via Eq (71), and get an update equation somewhat similar to Eq (75),

$$a_n = (x_n - \overline{x}_{n-1})(y_n - \overline{y}_n) + \lambda a_{n-1}. \tag{82}$$

And similarly for $b_n$, using Eq (73), we obtain

$$b_n = (x_n - \overline{x}_{n-1})(x_n - \overline{x}_n) + \lambda b_{n-1}. \tag{83}$$

Eqs (82, 83) provide us a way to get $a_n$ and $b_n$ using $a_{n-1}$, $b_{n-1}$, as well as running values we can keep updated [$\overline{x}_n$ and $\overline{y}_n$, updated using Eqs (80, 81)] and the new observation, $(x_n, y_n)$. Thus we now have an online estimator for $\beta_n$. Simply keep track of $\overline{x}_n$, $\overline{y}_n$, $a_n$ and $b_n$ using the equations given here, and then $\beta_n = a_n/b_n$.

**A.2 Weighted Least Squares for Time Series**

We can naturally apply the above to time series, so *x* will be the times as which wc gain observations. We want local, denoised estimates of the current gradient. We arc thus assuming that the model Eq (52) holds only *locally.* As discussed in the main paper, this means we want local estimates of the gradient: the current, local /3. It is natural to enforce this locality by giving to recent observations high weight and giving to older observations a low weight.

Things arc made somewhat simpler if all our observations come at regular intervals. We can then directly identify $x_i$ = i, so $i \in \mathbb{N}$ is simply the time index of the observation. We will continue with exponentially decaying weights: we give the most recent observation weight 1 and each observation further back in time gains a factor of $\lambda$. By 'most recent' observation we mean the one with the highest index. We have been gathering observations from i = 1 and we currently have t total observations, so far. (As we arc now explicitly considering time series here, so from now on we will use t, not *n*, for the current timestep, the number of observations we have so far.)

**Re-indexing past data** The above approach, however, has problems. Our running, exponentially-weighted average of $x_i$ = i, $\overline{x}_t$, will increase without limit as we gain ever more observations. In a computational implementation of this, we will necessarily, at some point, reach overflow. Further, in the mean time have to store and update this increasingly-large number.

We can avoid this by *re-indexing* our previous observations when we get a new one. This only works because our time series observations come at fixed intervals. This is in addition to the re-weighting of previous observations (updating $g_i$) that we arc already doing. Intuitively, by both having longcr-ago

Figure 5: Initial method of handling new time series datapoints—the new observation is simply inserted at the current time index *t*.

Figure 6: The re-indexing method of handling new time series datapoints—all previous time series points arc relabelled as having come from one increment back in the past and the new observation is put at $t = 0$.

datapoints downweighted and keeping recent, high-weight datapoints close to t = 0, one can expect that, for example $\overline{x}_t$ will saturate at some finite value rather that growing without limit.

Concretely, with this method, rather that having it be that $x_i$ = i, instead we have $x_i$ = i - *t*. (This means that $\overline{x}_t$ = 0 and $x_{t-d}$ = -*d*.) Subbing this in to Eq (59) gives us

$$\overline{x}_t = \frac{\sum_{i=1}^{t} g_i(i-t)}{G_t} = \frac{\sum_{i=1}^{t} g_i i}{G_t} - t\frac{\sum_{i=1}^{t} g_i}{G_t} = \frac{\sum_{i=1}^{t} g_i i}{G_t} - t = \overline{\overline{x}}_t - t, \qquad (84)$$

where we have defined $\overline{\overline{x}}_t := \frac{1}{G_t}\sum_{i=1}^{t} g_i i$ . As $\overline{x}_t$ = 0, and $g_i$ tends to zero exponentially fast, $b_t$, Eq (72), saturates at some value, which now we will obtain. Subbing our new definition of $x_i$ into

Eq (72) gives us

$$b_t = \sum_{i=1}^{t} g_i (i - t - \overline{\overline{x}}_t + t)^2 \tag{85}$$

$$= \sum_{i=1}^{t} g_i (i - \overline{\overline{x}}_t)^2 \tag{86}$$

$$= \sum_{i=1}^{t} g_i i^2 + \overline{\overline{x}}_t^2 G_t - 2\overline{\overline{x}}_t \sum_{i=1}^{t} g_i i \tag{87}$$

$$= \sum_{i=1}^{t} g_i i^2 - \frac{1}{G_t} \left( \sum_{i=1}^{t} g_i i \right)^2. \tag{88}$$

**A.3 Limiting Case as $t \to \infty$**

Now let us consider what happens as we run this estimation procedure for a long time with $g_i = \lambda^{t-i}$ (i.e. as in Eq (74)). As t → oo the update equations for online estimation of $\beta$ end up taking particularly simple forms; many terms within them converge to fixed values. We need to find the values and limits of various quantitics:

1. $G_t$

$$G_t = \sum_{i=1}^{t} g_i = \sum_{i=1}^{t} \lambda^{t-i} = \frac{1 - \lambda^t}{1 - \lambda} \tag{89}$$

$$\Rightarrow \lim_{t \to \infty} G_t = \frac{1}{1 - \lambda}. \tag{90}$$

2. $\sum_{i=1}^{t} g_i i$

$$\sum_{i=1}^{t} g_i i = \sum_{i=1}^{t} \lambda^{t-i} i = \frac{\lambda (\lambda^t - 1) + (1 - \lambda)t}{(1 - \lambda)^2}. \tag{91}$$

3. $\overline{x}_t$

$$\overline{x}_t = \frac{\sum_{i=1}^{t} \lambda^{t-i} i}{G_t} - t \tag{92}$$

$$= \frac{\lambda (\lambda^t - 1) + (1 - \lambda)t - (1 - \lambda)(1 - \lambda^t)t}{(1 - \lambda)(1 - \lambda^t)} \tag{93}$$

$$= \frac{\lambda (\lambda^t - 1) + \lambda^t (1 - \lambda)t}{(1 - \lambda)(1 - \lambda^t)} \tag{94}$$

$$\Rightarrow \lim_{t \to \infty} \overline{x}_t = \frac{\lambda}{\lambda - 1}. \tag{95}$$

4. $\overline{x}_t$

$$\overline{\overline{x}}_t = \frac{1}{G_t} \sum_{i=1}^{t} g_i i = \frac{\lambda (\lambda^t - 1) + (1 - \lambda)t}{(1 - \lambda)(1 - \lambda^t)}. \tag{96}$$

5. $\sum_{i=1}^{t} g_i i^2$

$$\sum_{i=1}^{t} g_i i^2 = \sum_{i=1}^{t} \lambda^{t-i} i^2 = \frac{(1-\lambda)^2 t^2 - \lambda(1+\lambda)(\lambda^t - 1) - 2\lambda(1-\lambda)t}{(1-\lambda)^3}. \tag{97}$$

**6. $a_t$**

$$\Delta a_t = g_t (x_t - \overline{x}_{t-1})(y_t - \overline{y}_t) \tag{98}$$

$$= 1(0 - \overline{x}_{t-1})(y_t - \overline{y}_t) \tag{99}$$

$$= \frac{\lambda(\lambda^t - 1) + \lambda^t(1-\lambda)t}{(\lambda - 1)(1 - \lambda^t)} \frac{1 - \lambda^t}{\lambda - \lambda^t}(y_t - \overline{y}_t) \tag{100}$$

$$\Rightarrow \lim_{t \to \infty} \Delta a_t = \frac{1}{1-\lambda}(y_t - \overline{y}_t). \tag{101}$$

**7. $b_t$**

$$b_t = \sum_{i=1}^{t} g_i i^2 - \frac{1}{G_t}\left(\sum_{i=1}^{t} g_i i\right)^2 \tag{102}$$

$$= \frac{(1-\lambda)^2 t^2 - \lambda(1+\lambda)(\lambda^t - 1) - 2\lambda(1-\lambda)t}{(1-\lambda)^3} - \frac{1-\lambda}{1-\lambda^t}\left(\frac{\lambda(\lambda^t - 1) + (1-\lambda)t}{(1-\lambda)^2}\right)^2 \tag{103}$$

$$= \frac{\lambda - \lambda^{t+1}}{(1-\lambda)^3} - \frac{t^2 \lambda^t}{(1-\lambda)(1-\lambda^t)} \tag{104}$$

$$\Rightarrow \lim_{t \to \infty} b_t = \frac{\lambda}{(1-\lambda)^3}. \tag{105}$$

**Update Equations in the Limiting** Case So from the above we can see that $G_t$, $\overline{x}_t$, $a_t$, $b_t$ all saturate at certain values as $t \to \infty$. Combining Eqs (90, 95, 101, 105) with Eqs (81-82) gives us our overall update equations:

$$G_\infty = \frac{1}{1-\lambda} \tag{106}$$

$$\overline{y}_t = \overline{y}_{t-1} + \frac{y_t - \overline{y}_{t-1}}{G_\infty} \tag{107}$$

$$a_t = G_\infty(y_t - \overline{y}_t) + \lambda a_{t-1} \tag{108}$$

$$\beta_t = \frac{(1-\lambda)^3}{\lambda} a_t. \tag{109}$$

Identifying $y_t$ with the price trajectory $p(t)$ gives us the equations in the main paper, Eqs (5-7), completing this derivation.

**A.4 Memory length of gradient estimator**

What is the 'memory length' of this gradient estimator? More technically, what is the look-back window for an unweighted estimator, Eq (54), such that that estimator the same statistical properties as the decaying estimator?

If we view the estimator Eq (58) as, in effect, an ersatz to $\frac{\Delta Y}{\Delta X}$ , the memory length of the estimator is the value of '$\Delta X$', the denominator. Previously we have denoted the denominator in this weighted estimator b, in Eq (72). For Eq (72), we already know the limiting value $\lim_{t \to \infty} b_t$: Eq (105) tells us this limit is $b_\infty = \frac{\lambda}{(1-\lambda)^3}$ .

For the unweighted estimator, Eq (54), the denominator is $\sum_{i=1}^{t} (x_i - \overline{x})^2$ ($x_i$ - $\overline{x}$)$^2$, which we will denote $\overline{b}_t$. Recall that in our case wc have equally-spaced $x$ values, so $x_i = i - t$. The question becomes concretely: 'for a given $\lambda$, for what value of t is it that $\overline{b}_t = b_\infty$?'

Using the results in the section above, and calculating $\overline{b}_t$ using standard results for summing natural numbers and the squares of natural numbers, (and approximating those sums by their highest-order terms) we find that[18]

$$t_{\mathrm{mcm}} = \frac{2 \sqrt[3]{6\lambda}}{1 - \lambda}. \tag{110}$$

**B Derivation of Online Weighted Covariance and Precision Estimation**

Many pool update rules make use of the variance/covariance or precision (inverse variance/covariance) of a data feed or between two data feeds. For example the tracking error is often used in traditional finance and that uses the variance of the difference in price between a position/asset and a benchmark, and in Markovitz mean-variance portfolio optimisation (which we will overview briefly in the next section) often the precision matrix over a set of assets is needed to weight them in a pool.

Here we will show how substantially-similar methods to those in the previous section can be used to get estimators for these two properties. We begin by noting that the weighted estimate of the gradient, Eq (58), is the ratio between a weighted covariance and a weighted variance (or, equivalently, the product of a weighted covariance and a weighted precision).

First we will cover covariance estimation, then precision estimation.

**B.1 Covariance Estimation**

Wc arc interested in the weighted maximum-likelihood estimate of the covariance between two (potentially multidimcntional) data streams. We can then obtain the a scalar data stream's variance, for example, as a special case. The weighted maximum likelihood estimate of the covariance matrix for a multidimensional data source x is

$$\boldsymbol{\Sigma}_n^* = \frac{\sum_{i=1}^{n} g_i \left(\mathbf{x}_i - \overline{\mathbf{x}}\right)^\top \left(\mathbf{x}_i - \overline{\mathbf{x}}\right)}{\sum_{i=1}^{n} g_i}. \tag{111}$$

(Note that $\mathbf{x}_i$ is the $i$th vector in a sequence of $n$ such vectors, NOT the $i$th element of a single x vector.) First we need to make our (vectorial) average weight-aware, as we did in Eq (59) for the scalar case, so x $\to$ $\overline{\mathbf{x}}_n$:

$$\overline{\mathbf{x}}_n = \sum_{i=1}^{n} \frac{g_i \mathbf{x}_i}{G_n} = \frac{g_n \mathbf{x}_n + G_{n-1} \overline{\mathbf{x}}_{n-1}}{G_n}. \tag{112}$$

[18]One can be slightly more formal and use ideas from results for the covariance *of* estimators, where we find that the covariance of the /3 estimator is inversely proportional to $\sum_{i=1}^{t} g_i (x_i - \overline{x})^2$ . Requiring the unweighted /3 estimator (i.e. $g_i$ = 1) to have the same covariance as the weighted /3 estimator gets to the same idea of matching $\overline{b}_t$ to $b_\infty$.

Now let us follow the approach used above for *a*. We will refer to the numerator of as Eq (111) as $\mathbf{A}_n$:

$$\mathbf{A}_n = \sum_{i=1}^{n} g_i \left(\mathbf{x}_i - \overline{\mathbf{x}}_n\right)\left(\mathbf{x}_i - \overline{\mathbf{x}}_n\right)^\top \tag{113}$$

$$= \sum_{i=1}^{n} g_i \left(\mathbf{x}_i \mathbf{x}_i^\top + \overline{\mathbf{x}}_n \overline{\mathbf{x}}_n^\top - \overline{\mathbf{x}}_n \mathbf{x}_i^\top - \mathbf{x}_i \overline{\mathbf{x}}_n^\top\right) \tag{114}$$

$$= \sum_{i=1}^{n} g_i \left(\mathbf{x}_i \mathbf{x}_i^\top + \overline{\mathbf{x}}_n \overline{\mathbf{x}}_n^\top - 2\mathbf{x}_i \overline{\mathbf{x}}_n^\top\right) \tag{115}$$

$$= \sum_{i=1}^{n} g_i \mathbf{x}_i \mathbf{x}_i^\top + G_n \overline{\mathbf{x}}_n \overline{\mathbf{x}}_n^\top - 2 \left(\sum_{i=1}^{n} g_i \mathbf{x}_i\right) \overline{\mathbf{x}}_n^\top \tag{116}$$

$$= \sum_{i=1}^{n} g_i \mathbf{x}_i \mathbf{x}_i^\top + G_n \overline{\mathbf{x}}_n \overline{\mathbf{x}}_n^\top - 2 G_n \overline{\mathbf{x}}_n \overline{\mathbf{x}}_n^\top \tag{117}$$

$$= \sum_{i=1}^{n} g_i \mathbf{x}_i \mathbf{x}_i^\top - G_n \overline{\mathbf{x}}_n \overline{\mathbf{x}}_n^\top \tag{118}$$

We have repeatedly used the definition above of $\overline{\mathbf{x}}_n$. Now consider $\Delta\mathbf{A}_n = \mathbf{A}_n - \mathbf{A}_{n\text{-}1}$, the difference between $\mathbf{A}_n$ and $\mathbf{A}_{n\text{-}1}$:

$$\Delta a_n = \sum_{i=1}^{n} g_i \mathbf{x}_i \mathbf{x}_i^\top - G_n \overline{\mathbf{x}}_n \overline{\mathbf{x}}_n^\top - \sum_{i=1}^{n-1} g_i \mathbf{x}_i \mathbf{x}_i^\top + G_{n-1} \overline{\mathbf{x}}_{n-1} \overline{\mathbf{x}}_{n-1}^\top \tag{119}$$

$$= g_n \mathbf{x}_n \mathbf{x}_n^\top - G_n \overline{\mathbf{x}}_n \overline{\mathbf{x}}_n^\top + G_{n-1} \overline{\mathbf{x}}_{n-1} \overline{\mathbf{x}}_{n-1}^\top. \tag{120}$$

Now we sub in Eq (112):

$$\Delta\mathbf{A}_n = g_n \mathbf{x}_n \mathbf{x}_n^\top - G_n \frac{g_n \mathbf{x}_n + G_{n-1} \overline{\mathbf{x}}_{n-1}}{G_n} \overline{\mathbf{x}}_n^\top + G_{n-1} \overline{\mathbf{x}}_{n-1} \left(\frac{G_n \overline{\mathbf{x}}_n - g_n \mathbf{x}_n}{G_{n-1}}\right)^\top \tag{121}$$

$$= g_n \mathbf{x}_n \mathbf{x}_n^\top - g_n \mathbf{x}_n \overline{\mathbf{x}}_n^\top + \underbrace{(G_n - G_{n-1})}_{=g_n} \overline{\mathbf{x}}_{n-1} \overline{\mathbf{x}}_n^\top - g_n \overline{\mathbf{x}}_{n-1} \mathbf{x}_n^\top \tag{122}$$

$$= \mathbf{x}_n (g_n \mathbf{x}_n - g_n \overline{\mathbf{x}}_n)^\top + \overline{\mathbf{x}}_{n-1} (g_n \overline{\mathbf{x}}_n - g_n \mathbf{x}_n)^\top \tag{123}$$

$$= g_n (\mathbf{x}_n - \overline{x}_{n-1})(\mathbf{x}_n - \overline{\mathbf{x}}_n)^\top. \tag{124}$$

Following the same reweighting procedure as above, we now get our online update equation for $\mathbf{A}_n$ (the matrix counterpart to Eq (82)):

$$\mathbf{A}_n = (\mathbf{x}_n - \overline{\mathbf{x}}_{n-1})(\mathbf{x}_n - \overline{\mathbf{x}}_n)^\top + \lambda \mathbf{A}_{n-1}. \tag{125}$$

Following the approach in the above section, we naturally obtain online update equations for exponential-decaying weights. (Note that we arc changing $n \to t$ as we arc now explicitly indexing over time-labelled observations.) These equations arc:

$$G_t = \sum_{i=1}^{t} g_i = \sum_{i=1}^{t} \lambda^{t-i} = \frac{1 - \lambda^t}{1 - \lambda} \tag{126}$$

$$\overline{\mathbf{x}}_t = \overline{\mathbf{x}}_{t-1} + \frac{\mathbf{x}_t - \overline{\mathbf{x}}_{t-1}}{G_t} \tag{127}$$

$$\mathbf{A}_t = (\mathbf{x}_t - \overline{\mathbf{x}}_{t-1})(\mathbf{x}_t - \overline{\mathbf{x}}_t)^\top + \lambda \mathbf{A}_{t-1} \tag{128}$$

$$\boldsymbol{\Sigma}_t = \frac{\mathbf{A}_t}{G_t}. \tag{129}$$

To find the update equations in the limit as t → ∞, simply sub in the form of $G_\infty$ from Eq (90) above, giving us:

$$G_\infty = \frac{1}{1-\lambda} \tag{130}$$

$$\overline{\mathbf{x}}_t = \overline{\mathbf{x}}_{t-1} + \frac{\mathbf{x}_t - \overline{\mathbf{x}}_{t-1}}{G_\infty} \tag{131}$$

$$\mathbf{A}_t = \lambda \mathbf{A}_{t-1} + (\mathbf{x}_t - \overline{\mathbf{x}}_{t-1})(\mathbf{x}_t - \overline{\mathbf{x}}_t)^\top \tag{132}$$

$$\boldsymbol{\Sigma}_t = \frac{\mathbf{A}_t}{G_\infty}. \tag{133}$$

Note that is we apply these equations to a scalar-valued x we obtain its variance.

Alternative estimators The above update equations arc for the maximum-likelihood estimator. One downside of this estimator is that it is biased. We can very simply apply the

**B.2 Precision Estimation**

Rather than storing the covariance matrix and then calculating the inverse (which is $O(N^3)$) we can instead directly store and update the inverse-covariance matrix, using the Sherman-Morison formula. We do this, again, via a exponentially-decaying estimator.

This enables us to perform online precision estimation, where our state-holding matrix is denoted S.

$$\overline{\mathbf{x}}_t = \overline{\mathbf{x}}_{t-1} + \frac{\mathbf{x}_t - \overline{\mathbf{x}}_{t-1}}{G_t} \tag{134}$$

$$\mathbf{S}_t = \frac{1}{\lambda}\mathbf{S}_{t-1}\left(\mathbf{I} - \frac{(\mathbf{x}_t - \overline{\mathbf{x}}_{t-1})(\mathbf{x}_t - \overline{\mathbf{x}}_t)^\top \mathbf{S}_{t-1}}{\lambda + (\mathbf{x}_t - \overline{\mathbf{x}}_t)^\top \mathbf{S}_{t-1}(\mathbf{x}_t - \overline{\mathbf{x}}_{t-1})}\right) \tag{135}$$

$$\boldsymbol{\Sigma}_t^{-1} = G_t \mathbf{S}_t, \tag{136}$$

where I is the identity matrix. As above, to find the update equations in the limit as t → oo, simply sub in the form of $G_\infty$ from Eq (90).

The effective 'memory' of both this procedure and the online covariance estimator is $t_{\mathrm{mem}} = \frac{1+\lambda}{(1-\lambda)}$ .

**C Markovitz Mean-Variance Portfolios**

**C.1 Minimum Variance Portfolio**

Our starting point is that wc arc aiming to minimise the variance of portfolio of tokens, and to use this objective to determine the allocation within the pool. So we have the optimisation problem

$$\text{Minimise} \quad \frac{1}{2}\mathbf{w}^\top \boldsymbol{\Sigma} \mathbf{w} \quad \text{such that} \quad \sum_{i=1}^{N} w_i = 1, \tag{137}$$

where w = ($w_1$, , $w_N$) and $\Sigma$ is the covariance of the returns of the *N* tokens in the pool. This problem can be solved using the method of Lagrange Multipliers to give us

$$\mathbf{w}^* = \frac{\boldsymbol{\Sigma}^{-1}\mathbf{1}}{\mathbf{1}^\top \boldsymbol{\Sigma}^{-1}\mathbf{1}}, \tag{138}$$

where 1 is a vector of 1s. This gives us the optimum weighting of tokens to give minimal variance of the pool.

So here one would learn $\Sigma^{-1}$ on chain, using the methods in the previous section, and use this to periodically update the weights of the pool to keep its weights optimal.

Of course is $\Sigma$ is full-rank, then $w_i^*$ values can be negative, but we want a 'long-only' pool. No closed-form solution exists for the long-only minimum-variance pool, but one could use the approach described in the main paper where one 'smooths' to the calculated weights, and apply the standard guardrails that weights have to be above 0 and sum to one. If $\Sigma$ is restricted to be diagonal, as we do in the backtest of the min-variance update rule, then the pool is long-only by construction.

**C.2 Derivation of Minimum Variance Portfolio**

Our aim is to have a pool of tokens with the lowest variance. This means our aim is to solve the contraincd optimisation problem, Eq (137),

$$\text{Minimise} \quad \frac{1}{2}\mathbf{w}^\top \boldsymbol{\Sigma} \mathbf{w} \quad \text{such that} \quad \sum_{i=1}^{N} w_i = 1. \tag{139}$$

Wc can solve this using the method of Lagrangian multipliers, where we aim to minimise

$$\mathcal{L} = \frac{1}{2}\mathbf{w}^\top \boldsymbol{\Sigma} \mathbf{w} + \lambda(\mathbf{w}^\top \mathbf{1} - 1), \tag{140}$$

having turned our constrained problem to an uconstraincd problem. Taking gradients of $\mathcal{L}$ and setting them to zero,

$$\frac{\partial \mathcal{L}}{\partial \mathbf{w}} = \boldsymbol{\Sigma}\mathbf{w} - \lambda\mathbf{1} = 0, \tag{141}$$

$$\frac{\partial \mathcal{L}}{\partial \lambda} = 1 - \mathbf{w}^\top \mathbf{1} = 0, \tag{142}$$

where we have used the fact that $\Sigma^\top = \Sigma$. Rearranging, we find

$$\lambda^* = \frac{1}{\mathbf{1}^\top \boldsymbol{\Sigma}^{-1}\mathbf{1}}, \tag{143}$$

$$\mathbf{w}^* = \frac{\boldsymbol{\Sigma}^{-1}\mathbf{1}}{\mathbf{1}^\top \boldsymbol{\Sigma}^{-1}\mathbf{1}}, \tag{144}$$

as required.

### C.3 Special Cases

**Diagonal** $\Sigma$ If we take $\Sigma$ to be a diagonal matrix (i.e. tokens arc assumed to be uncorrelated with each other) with diagonal entries $\Sigma_i$, the optimal w* is

$$w_i^* = \frac{\frac{1}{\Sigma_i}}{\sum_{j=1}^{N} \frac{1}{\Sigma_j}}. \tag{145}$$

This has the property of being long-only ( $w_i^* > 0 \;\forall i$ ), which wc may desire.

**Full** $\Sigma$**, Long Only** The solution Eq (137), derived above, can require short positions (there may be some i for which $w_i < 0$).

If we want long-only ( $w_i^* > 0 \;\forall i$ ), as we say above, one can use the approach of Eq (22) and apply guardrails to negative/too small values. Alternatively, we can also achieve this by i) recording the index of any token for which $\omega_i$ is less than the minimum allowed value ii) setting the weights for those tokens to the minimum allowed value *iii*) recalculating the optimal pool with those tokens' $\omega$s fixed. We can repeat this procedure until the returned w vector only has entries $\geq$ than the minimum allowed entry, giving us a long-only pool.

## D **Concentrated Liquidity for Multi-token Pools**

First let us obtain Eq (32):

$$\breve{k}(t) = \prod_{i=1}^{N} \breve{R}_i^{w_i(t)} \tag{146}$$

$$= \prod_{i=1}^{N} (\nu R_i)^{w_i(t)} \tag{147}$$

$$= \prod_{i=1}^{N} (\nu)^{w_i(t)} \prod_{i=1}^{N} \left( R_i^{w_i(t)} \right) \tag{148}$$

$$= \nu^{\sum_{i=1}^{N} w_i(t)} \prod_{i=1}^{N} R_i^{w_i(t)} \tag{149}$$

$$= \nu \prod_{i=1}^{N} R_i^{w_i(t)} \tag{150}$$

$$= \nu k(t) \tag{151}$$

*NB: For the rest of this section of the technical appendix we are going to drop explicit time dependence for clarity.*

### D.1 Minimum and Maximum Reserves

Say that we wish bound out post-trade underlying reserves, $R_i'$ . What arc the corresponding bounds on the virtual, scaled reserves, $\breve{R}_i$?

**Minimum** $\breve{R}_i'$ Wc bound the post-trade underlying reserves, $R_i'$ , to be $(1 - \delta)R_i$ for $0 < \delta < 1$.

$$\breve{R}_{i,\min}'(\delta) = (1 - \delta)R_i + (\nu - 1)R_i = (\nu - \delta)R_i.$$

So the absolute minimum is when the underlying reserves go to zero, so $\breve{R}_{i,\min}'(\delta = 1) = (\nu - 1)R_i$ , as in Eq (39).

**Maximum** $\breve{R}'_i$ If all tokens but one have their virtual post-trade reserves reduced to $\breve{R}'_{i,\min} =$ $(v - 1)R_i$, what arc the virtual reserves of the one, maximised token? For the no-fees case, whatever trades took us to this situation must have, at minimum, preserved the invariant of the virtual pool, so

$$\nu k = \prod_{i=1}^{N} \breve{R}'^{w_i}_i \tag{152}$$

$$= \prod_{\substack{i=1 \\ i \neq j}}^{N} \breve{R}'^{w_i}_{i,\min} \breve{R}'^{w_j}_{j,\max} \tag{153}$$

$$= \prod_{\substack{i=1 \\ i \neq j}}^{N} (\nu - \delta)^{w_i} \prod_{\substack{i=1 \\ i \neq j}}^{N} R'^{w_i}_i \breve{R}'^{w_j}_{j,\max} \tag{154}$$

$$\Rightarrow \nu k = (\nu - \delta)'^{1-w_j} \frac{k}{R_j^{w_j}} \breve{R}'^{w_j}_{j,\max} \tag{155}$$

$$\Rightarrow \breve{R}'_{j,\max} = R_j \nu^{1/w_j} (\nu - \delta)^{1-1/w_j}, \tag{156}$$

as required. (With fees present, this simply becomes $\breve{R}'_{j,\max}(\gamma) = R_j \nu^{1/w_j} (\nu - \gamma\delta)^{1-1/w_j}$, assuming that this change was done in one batch tradc.)

**D.2 Why Linear, Uniform, Scaling of Reserves?**

Consider a set of $N$ monotonic, positive definite functions $\{f_i(\cdot)\}$, $t \in 1, ..., N$, which we use to make to our virtual reserves:

$$\breve{R}_i = f_i(R_i).$$

The virtual pool has a constant $\breve{k} = \prod_{i=1}^{N} f_i(R_i)^{w_i}$. A trade now happens, $\triangle_i$ being deposited and $\Lambda_i$ being withdrawn, that maintains (or increases) the virtual pool's constant. It is still the case that 1) the actual trade amounts, $\triangle_i$, $\Lambda_i$ must be added and subtracted the true reserves, as that is what it means to trade with a pool and 2) the actual trade amounts, $\triangle_i$, $\Lambda_i$ must be added and subtracted from the virtual reserves in the virtual invariant, because again that is what it is to run a pool. (Note that we handle the zero-fees case here, for simplicity, but the argument made here is not fundamentally changed by the presence of fees).

This means we can write down the generalised versions of Eqs (35-37):

$$R'_i = R_i + \Delta_i - \Lambda_i \tag{157}$$

$$\breve{R}'_i = f_i(R_i) + \Delta_i - \Lambda_i \tag{158}$$

$$\Rightarrow \breve{R}'_i = R'_i + (f_i(R_i) - 1)R_i. \tag{159}$$

This enables us to write the generalised version of Eq (38):

$$\prod_{i=1}^{N} \breve{R}_i'^{w_i} = \prod_{i=1}^{N} \left( R_i' + (f_i(R_i) - 1)R_i \right)^{w_i} = \breve{k}' \qquad (160)$$

Because of this linearity we can apply the underlying logic of Eq (30) to our virtual pool invariant, that the marginal prices quoted by a pool for one token in terms of another is the gradient of the derivatives of the trading function w.r.t. each token's post-trade reserves, evaluated at the current reserves. Applying that here results in

$$p_{i,j}^{\text{virtual}} = \frac{\left( \frac{\partial}{\partial \mathbf{R}'} \breve{k}' \right)_i}{\left( \frac{\partial}{\partial \mathbf{R}'} \breve{k}' \right)_j} \Bigg|_{\mathbf{R}'=\mathbf{R}} \qquad (161)$$

$$= \frac{w_i}{w_j} \frac{\left( R_j' + (f_j(R_j) - 1)R_j \right)}{\left( R_i' + (f_i(R_i) - 1)R_i \right)} \Bigg|_{\mathbf{R}'=\mathbf{R}} \qquad (162)$$

$$= \frac{w_i}{w_j} \frac{f_j(R_j)}{f_i(R_i)}. \qquad (163)$$

Wc need the prices quoted by our virtual invariant to match the prices we obtain from the original invariant, Eq (30), otherwise allowing trades under the virtual invariant will not lead to the pool have the desired division of value between assets at equilibrium i.e. these two sets of prices have to match for w to describe the division of pool value between token holdings. So we require that

$$\frac{f_j(R_j)}{f_i(R_i)} = \frac{R_j}{R_i},$$

which is satisfied for $f_k(x) = f(x) = vx$ for some constant $v$, as required.

### E Reserve-Update Derivations

### E.1 Weights Constant, Prices Change

Here we derive Eq (41), the change in reserves of a pool where weights arc fixed but market prices change. For simplicity wc arc assuming the no-fees case.

At $t_0$ we have the invariant of the pool

$$\prod_{i=1}^{N} R_i(t_0)^{w_i} = k, \qquad (164)$$

and by the requirement that this quantity docs not change under trading, we also have that at a later time $t'$

$$\prod_{i=1}^{N} R_i(t')^{w_i} = k = \prod_{i=1}^{N} R_i(t_0)^{w_i}. \qquad (165)$$

Thus

$$\prod_{i=1}^{N} \left( \frac{R_i(t')}{R_i(t_0)} \right)^{w_i} = 1. \qquad (166)$$

Meanwhile, wc arc assuming that arbitragcurs trade with the pool until the quoted prices match the market prices. At time $t_0$ we have prices $\mathbf{p}(t_0)$ and at time t' we have prices p(t'). Using Eq (30), and without loss of generality using the first token as the numéraire, we have that at equilibrium

$$\frac{\frac{w_i}{R_i(t_0)}}{\frac{w_1}{R_1(t_0)}} = p_i(t_0) \tag{167}$$

and

$$\frac{\frac{w_i}{R_i(t')}}{\frac{w_1}{R_1(t')}} = p_i(t'). \tag{168}$$

Thus we have

$$\frac{p_i(t_0)}{p_i(t')} = \frac{R_i(t')R_1(t_0)}{R_i(t_0)R_1(t')}, \tag{169}$$

$$\frac{R_i(t')}{R_i(t_0)} = \frac{p_i(t_0)R_1(t')}{p_i(t')R_1(t_0)}. \tag{170}$$

Subbing Eq (170) into Eq (166), we get

$$\prod_{i=1}^{N} \left( \frac{R_i(t')}{R_i(t_0)} \right)^{w_i} = \prod_{i=1}^{N} \left( \frac{p_i(t_0)R_1(t')}{p_i(t')R_1(t_0)} \right)^{w_i} = 1 \tag{171}$$

$$= \frac{R_1(t')}{R_1(t_0)} \prod_{i=1}^{N} \left( \frac{p_i(t_0)}{p_i(t')} \right)^{w_i} = 1 \tag{172}$$

$$\Rightarrow \frac{R_1(t')}{R_1(t_0)} = \prod_{i=1}^{N} \left( \frac{p_i(t')}{p_i(t_0)} \right)^{w_i}. \tag{173}$$

Now subbing Eq (173) into Eq (169) and rearranging wc get

$$R_i(t') = R_i(t_0)\frac{p_i(t_0)}{p_i(t')} \prod_{j=1}^{N} \left( \frac{p_j(t')}{p_j(t_0)} \right)^{w_j}, \tag{174}$$

as we have in Eq (41) in the main paper, completing this derivation.

### E.2 Weights Change, Prices Constant

Here we derive Eq (45), the change in reserves of a pool where weights change but market prices arc fixed. For simplicity we arc assuming the no-fees case.

At time $t_0$ we have weights $\mathbf{w}(t_0)$ and a block later t' = $t_0$ + $\delta_t$ we have weights w(t').

Just after the change in weights, we have the invariant of the pool

$$\prod_{i=1}^{N} R_i(t_0)^{w_i(t')} = k(t'), \tag{175}$$

and by the requirement that this quantity docs not change under trading, we also have that after trading

$$\prod_{i=1}^{N} R_i(t')^{w_i(t')} = k(t') = \prod_{i=1}^{N} R_i(t_0)^{w_i(t')}. \tag{176}$$

Thus

$$\prod_{i=1}^{N} \left( \frac{R_i(t')}{R_i(t_0)} \right)^{w_i(t')} = 1. \tag{177}$$

Meanwhile, we arc assuming that arbitragcurs trade with the pool until the quoted prices match the market prices. Prices arc $\mathbf{p}(t_0)$ before and after the change in weights. Using Eq (30), and without loss of generality using the first token as the numéraire, we have that initially, before the change in weights,

$$\frac{\frac{w_i(t_0)}{R_i(t_0)}}{\frac{w_1(t_0)}{R_1(t_0)}} = p_i(t_0) \tag{178}$$

and then after both updating the weights & the pool reaching a new equilibrium

$$\frac{\frac{w_i(t')}{R_i(t')}}{\frac{w_1(t')}{R_1(t')}} = p_i(t_0). \tag{179}$$

Thus we have

$$\frac{w_i(t')w_1(t_0)}{R_i(t')R_1(t_0)} = \frac{w_1(t')w_i(t_0)}{R_1(t')R_i(t_0)}, \tag{180}$$

$$\frac{R_i(t')}{R_i(t_0)} = \frac{w_i(t')w_1(t_0)R_1(t')}{w_1(t')w_i(t_0)R_1(t_0)}. \tag{181}$$

Subbing Eq (181) into Eq (177), we get

$$\prod_{i=1}^{N} \left( \frac{R_i(t')}{R_i(t_0)} \right)^{w_i(t')} = \prod_{i=1}^{N} \left( \frac{w_i(t')w_1(t_0)R_1(t')}{w_1(t')w_i(t_0)R_1(t_0)} \right)^{w_i(t')} = 1 \tag{182}$$

$$= \frac{w_1(t_0)R_1(t')}{w_1(t')R_1(t_0)} \prod_{i=1}^{N} \left( \frac{w_i(t')}{w_i(t_0)} \right)^{w_i(t')} = 1 \tag{183}$$

$$\Rightarrow \frac{w_1(t_0)R_1(t')}{w_1(t')R_1(t_0)} = \prod_{i=1}^{N} \left( \frac{w_i(t_0)}{w_i(t')} \right)^{w_i(t')}. \tag{184}$$

Now subbing Eq (184) into Eq (181) and rearranging we get

$$R_i(t') = R_i(t_0) \frac{w_i(t')}{w_i(t_0)} \prod_{j=1}^{N} \left( \frac{w_j(t_0)}{w_j(t')} \right)^{w_j(t')}, \tag{185}$$

as we have in Eq (45) in the main paper, completing this derivation.

### E.3 Two-step updates are better than one-step updates

Here we will derive Eq (49), finding the relationship between $\mathbf{R}^{1\text{-step}}$, the reserves in the pool when we have directly updated the weights from $\mathbf{w}(t_0) \rightarrow \mathbf{w}(t_0) + \Delta w$, a one step process, and $\mathbf{R}^{\text{2-step}}$, the reserves when we have done this weight update via a two step process: $\mathbf{w}(t_0) \rightarrow \mathbf{w}(t_0) + \frac{1}{2}\Delta\mathbf{w} \rightarrow \; \rightarrow \mathbf{w}(t_0) + \Delta w$.

First Eq (185) derived above directly gives us the one-step value:

$$R_i^{\text{1-step}} = R_i(t') = R_i(t_0)\frac{w_i(t_0) + \Delta w_i}{w_i(t_0)} \prod_{j=1}^{N} \left( \frac{w_j(t_0)}{w_j(t_0) + \Delta w_j} \right)^{w_j(t_0) + \Delta w_j}. \tag{186}$$

Now lets consider the two-step process. First we do half of the update,

$$R_i^{\Delta w/2} = R_i(t_0)\frac{w_i(t_0) + \frac{\Delta w_i}{2}}{w_i(t_0)} \prod_{j=1}^{N} \left( \frac{w_j(t_0)}{w_j(t_0) + \frac{\Delta w_j}{2}} \right)^{w_j(t_0) + \frac{\Delta w_j}{2}}. \tag{187}$$

And then completing this two-step process

$$R_i^{\text{2-step}} = R_i^{\Delta w/2}\frac{w_i(t_0) + \Delta w_i}{w_i(t_0) + \frac{\Delta w_i}{2}} \prod_{j=1}^{N} \left( \frac{w_j(t_0) + \frac{\Delta w_j}{2}}{w_j(t_0) + \Delta w_j} \right)^{w_j(t_0) + \Delta w_j} \tag{188}$$

$$= R_i(t_0)\frac{w_i(t_0) + \Delta w_i}{w_i(t_0)} \prod_{j=1}^{N} \frac{w_j(t_0)^{w_j(t_0) + \Delta w_j} \left( w_j(t_0) + \frac{\Delta w_j}{2} \right)^{\frac{\Delta w_j}{2}}}{(w_j(t_0) + \Delta w_j)^{w_j(t_0) + \Delta w_j}}. \tag{189}$$

Dividing $R_i^{\text{2-step}}$ by $R_i^{\text{1-step}}$ we get

$$\frac{R_i^{\text{2-step}}}{R_i^{\text{1-step}}} = \prod_{j=1}^{N} \frac{w_j(t_0)^{w_j(t_0) + \frac{\Delta w_j}{2}} \left( w_j(t_0) + \frac{\Delta w_j}{2} \right)^{\frac{\Delta w_j}{2}} (w_j(t_0) + \Delta w_j)^{w_j(t_0) + \Delta w_j}}{(w_j(t_0) + \Delta w_j)^{w_j(t_0) + \Delta w_j} \, w_j(t_0)^{w_j(t_0) + \Delta w_i}} \tag{190}$$

$$\frac{R_i^{\text{2-step}}}{R_i^{\text{1-step}}} = \prod_{j=1}^{N} \left( 1 + \frac{\Delta w_j}{2w_j(t_0)} \right)^{\frac{\Delta w_j}{2}}. \tag{191}$$

Thus we have that

$$\mathbf{R}^{\text{2-step}} = \mathbf{R}^{\text{1-step}} \prod_{j=1}^{N} \left( 1 + \frac{\Delta w_j}{2w_j(t_0)} \right)^{\frac{\Delta w_j}{2}}, \tag{192}$$

as required.

## Appendix 2

### ABSTRACT

First generation AMMs instantiate an extremely limited and fixed strategy: a simple holding strategy very often provides superior returns compared to depositing into a CFMM. Recent analysis has expanded on the issue of loss vs rebalancing, and LPs have moved to new solutions of ranged liquidity and limit order books. The fixed-weight strategy is a defining reason for the difficulties of AMMs, and altering the strategies applied is the simplest and most effective mechanism to make AMMs profitable.

We introduce TEMPORAL-FUNCTION MARKET MARKING (TFMM), where the trading function of an AMM pool, and thus its desired deployment of value, changes with time. Differing from pools that allow external or stochastic updates to weight vectors, TFMMs enables dynamic AMM pools that run continuous, fully-on-chain quantitative strategies.

We give a short background on the fundamentals of AMMs and then outline, both theoretically and in simulation (expanded to real-world scenarios in the QuantAMM paper), how TFMMs can outperform HODL as well as earlier-generation AMMs.

We then expand on how a dynamic re-weighting of an AMM pool can be implemented inexpensively on-chain. Further, a novel approach to hierarchical composability of AMM pools (COMPOSITE POOLS) allows automated risk management on top of multiple strategies, without adding additional trade routing complexity.

## 1 INTRODUCTION

AMMs notionally enable liquidity providers (LPs) to earn a return on their capital, their liquidity, against which traders can exchange one token for another. For providing liquidity, LPs receive 'liquidity tokens' representing their share of the capital deposited in the pool. Trading fees go to LPs in proportion to their LP token holdings. Some of these systems allow liquidity provision over a pair of tokens, others a basket.

These decentralised systems work by defining a mathematical function that takes as input the current reserves of the protocol; a transaction of exchanging one token for some amount of another is able to complete if and only if this transaction leaves constant the value of this mathematical function. For this reason these systems are called Constant-Function Market Makers (CFMMs).

There is a massive and well known problem: AMM pools generally lose value for their LPs, even after fees are taken into account. This is known as Impermanent Loss. LVR [1] is a separate (but related [2]) metric for measuring AMM performance, where fixed-weight AMM pool's rebalancing is compared to rebalancing via a CEX, and again AMM pools perform poorly. Even recent advances in AMM technology suffer these problems.

We take as a starting point the basic notion of constant-function market makers, and extend it by developing a decentralized method of dynamically re-weighting the held portfolio using oracle signals and functions thereof, increasing the available returns on deposited capital.[1] Earlier examples of AMMs lack this dynamic re-weighting, making them inelastic at responding to market conditions. We call the resulting system Temporal-Function Marketing Making (TFMM).

[1]LPs can achieve superior performance, however no strategy is possible without putting capital at risk.

In this paper we describe in detail how TFMM pools work. As a further improvement to the efficiency and power of decentralized markets, we also describe the concept of a *composite pool,* a TFMM pool of TFMM pools. They allow LPs to distribute liquidity across strategies and assets, building arbitrary combinations of existing pools and re-weighting across them according to market conditions. The key innovations are:

- On-chain updating of the weights of a pool, using *update rules* that take as input oracle information, such as price data, to implement a chosen strategy.
- A new mathematical method for cheap and robust calculation of the gradients, (co-)variances and precisions (inverse (co-)variances) of oracle signals, for use in TFMM pools.
- Mechanisms to reduce re-balance costs.
- Methods for protection against front running of re-balancing.
- A method for combining TFMM pools together using compositionality to create *composite pools* that can span a range of tokens, or a range of strategies, or both, giving LPs highly expressive pools that dynamically manage value efficiently.

## 2 BACKGROUND

### 2.1 Constant-Function Market Makers

*2.1.1 Uniswap Two-Token Pools.* The simplest Constant-Function Market Maker (CFMM) is Uniswap v1/v2 [3]. These systems are so named as the value of a particular function of its reserves has to remain constant (or grow) under a proposed trade. The constant function (also called the *trading function)* for Uniswap is

$$R_1 R_2 = k, \qquad\qquad (1)$$

where $R_1$ is the amount of reserves held by the protocol of the first token (wETH, say) and $R_2$ is that of the second token (wBTC, say). So if a trader comes wishing to transact with a Uniswap pool, to exchange one token for another, their proposed transaction is accepted if the updated reserves of the pool $(\tilde{R}_1 \tilde{R}_2)$ after this proposed transaction still multiply to the same value, or greater, as before[2], i.e. that

$$\tilde{R}_1 \tilde{R}_2 \geq k = R_1 R_2. \qquad (2)$$

[2]Here we are ignoring fees charged on the transaction for simplicity.

This approach works only for pairs of tokens, and the pool is in equilibrium holding half of its value in each token: an arbitrage opportunity exists if this is not the case. The requirement that trades satisfied the above inequality means that the system is, in effect, quoting a price-and that price depends directly on the current reserves. If a pool holds too little of its value in one token (less than half), it will quote above-market prices to the market to buy more of that token. This means that naturally these pools hold an economically-defined, rather than merely a numerical, balance of assets.

*2.1.2 Balancer: Market Makers as 'Portfolios'.* Balancer extends Uniswap by having an arbitrary number of tokens in a given basket, and by weighting these tokens in the trading function [4]. The Balancer trading function is

$$\prod_{i=1}^{N} R_i^{w_i} = k, \quad \text{where} \sum_{i=1}^{N} w_i = 1 \text{ and } \forall i \ 0 \leq w_i < 1. \qquad (3)$$

Here we have a set of tokens $T$, $|T| = N$ present in the pool and $w_i$ is the weighting given to each [4]. R = $\{R_i\}$ is the N-vector of currently-held reserves of each token. The motivation here is that the weights w = {w;} control how much value is stored in each token.[3]

[3]We will sometimes write $\mathcal{P}$ to denote the tuple $(\mathcal{T}, w, R)$ defining a pool.

Following from the mathematical form of the trading function, these pools are sometimes known as *Geometric Mean Market Makers* or *G3Ms* [5]. Like a Uniswap pool, an arbitrage opportunity exists if this is the not the case. The pool ends up holding fractions $w_i$ of value in each token as the trading function provides an arbitrage opportunity if the pool's reserves do not have this property. For example, if the weighting is uniform, $w_i = \frac{1}{N}$, an equal amount of value will be stored in each token.

## 2.2 Impermanent Loss

In Balancer, Uniswap, and related AMMs, there is the unfortunate phenomena of *impermanent loss* (also known as *divergence loss)* where any price changes from when an LP deposits into a pool leads to a loss of value for that LP. We will discuss impermanent loss in greater mathematical detail later on in §7, but here we will give a high-level overview. Let us first think through how impermanent loss comes about. Imagine a Uniswap or Balancer pool where one of the assets doubles, say, in value. That pool's smart contract will offer trades to the market that lead to a reduction in the amount held of that token. This offloading of the appreciating token is done, necessarily, at a below-market price. This means that the liquidity providers, the depositors in the pool, do not benefit from the upwards trajectory of that doubled-in-value token as much as if they had merely held the assets.

Balancer's extension to multi-asset pools with chosen weights helps somewhat with impermanent loss, but in a very limited way. Balancer pools can have $w_i$ be larger or smaller than an agnostic $\frac{1}{N}$.[4] Having a smaller weight on a given token makes it cause relatively less impermanent loss, as a smaller proportion of the value in the pool is allocated to that token. However, since the portfolio weights must sum to 1, this makes for a relatively greater risk of impermanent loss on at least one other token in the pool.

[4]$= \frac{1}{2}$ in Uniswap as pools must be equally-capitalised pairs only.

**Figure 1: Impermanent loss in a Uniswap pool as function of change in price ratio from when capitalised.**

These descriptions, though, of impermanent loss can make it sound like a very AMM-specific phenomena (and of course its exact mathematical form is AMM-specific!). It is an example, however, of the general phenomena that re-balancing has a cost and this cost has to be compared to the performance of a strategy. In other words, all systems that reallocate capital over time, regardless of how they operate, have to pay some amount of value, at some frequency, to achieve their desired holdings over time. We should not be at all surprised that AMMs have to pay some form of re-balancing cost. Vanilla AMM pools are implementing a very simple 'strategy' for their LPs: the pool allocation is fixed. The pool is continually re-balanced by the operation of arbitrageurs. Impermanent loss is, in this view, merely the combination of two facts: firstly that the re-balancing cost to a Uniswap/Balancer pool is guaranteed to the greater than the return their fixed-portfolio strategy can generate (absent fees); and secondly that these systems are sufficiently simple that we can prove this mathematically.

## 3 TEMPORAL-FUNCTION MARKET MAKING

Here we introduce *Temporal-Function Market Making,* where the trading function of a pool depends on time. This is in contrast with Constant-Function Market Making. While there are many ways this can be done, here we focus on having w, the portfolio vector of a G3M pool, change with time, updating on-chain using on-chain oracles. (For example, these could be the price of the tokens in the pool.) In a TFMM pool, the allocation of assets is responsive to market information. To indicate this new dependency of w on time, we will write w(t), and the time-varying equation that defines a TFMM pool block-to-block, the *trading function,* becomes:

$$\prod_{i=1}^{N} R_i^{w_i(t)} = k(t), \quad \text{where} \sum_{i=1}^{N} w_i(t) = 1, \text{ and } \forall i \ 0 < w_i(t) < 1.$$

(4)

where we have made the time-dependence of k explicit, as it now depends on the current, changing, value of w(t). Within a block weights are constant (i.e. t is the discrete blocknumber) and so take a known, clear, value at the time that any trade happens. A trade still has to preserve (or increase) the value of *k(t)* that exists at the time of that trade. Changes in weights between blocks do change the value of *k(t)*.[5]

[5]This makes it hard to interpret a TFMM pool's *k(t)* as an 'unscaled pool value', as *k* is in G3Ms.

We call the resulting systems *Temporal-Function Market Makers.* We will briefly overview here the key properties this has, before moving on to detailed discussion in subsequent sections.

A TFMM pool thus takes a dynamic position, re-weighting its desired division of value between assets on the fly, doing so via offering arbitrage opportunities if its actual reserves are not in line with its actual reserves.

### 3.1 Update Rules: Strategies for Pools

The first question is: in what way should pools' weights change? There is a universe of possible strategies, which we call *update rules*-that is, possible functions to determine the changes in weights. For an update rule to be appealing it has to offer superior capital performance than HODL (it has to be an effective strategy) and it also has to be feasible to run on-chain for a given blockchain (it has to be economical to run).

Since any trade with a pool must not decrease *k(t)*, the change in weights *(re-weighting)* leads to the pool's reserves being re-balanced via the creation of an arbitrage opportunity. Those arbitrage trades which then take place are those which bring the reserves into the target ratio. We will look at update rules in detail in §4.

If performed naively the cost paid to arbs to rebalance can be incredibly expensive, however various forms of smoothing mechanisms drastically reduce cost, which we will cover in §8.

### 3.2 Composite Pools: Enabling diverse portfolios and re-balancing strategies

The mathematics of TFMMs enables LPs to avoid split management of multiple pools that each only contain a small baskets of tokens. Through composite pools constructed by "pooling pools", the liquidity placed in a composite pool is distributed across its underlying pools, enabling an LP to benefit from the performance of these underlying pools while maintaining mathematical efficiency for re-balancing. This allows for complex pools to be built-up and explored compositionally. It is mathematically equivalent to a 'pool of LP tokens', but formulated in terms of the underlying, base, assets. It is only with TFMMs that this composability increases the express-ibility of the resulting pools-of-pools: a composite pool of CFMM pools is another CFMM pool running the same strategy as the base pools, just over a larger basket of assets. A composite pool of TFMM pools, however, can have new properties that no subpool has.

As an example, as composite pools inherit TFMM pools' automatic re-weighting, liquidity can be shifted between base pools that are intended to perform better in different market conditions-for example between a 'bull market' subpool and a 'bear market' subpool. We will outline how this can be done in §11.

### 4 UPDATE RULES

*Update Rules* are the mathematical functions that determine how a TFMM pool changes its allocation of value over time: they are the pool's strategy. Using the tools we will describe in this section many classical strategies from TradFi can be implemented inside TFMMs, as well as many new approaches.

All update rules contain numerical parameters that control their behaviour, and these parameters must be set. Choosing an uninformed parameter value can lead to negative performance of the pool. In brief we can attack this optimisation problem via stochastic gradient descent (as the problem is, in general, non-convex) on any of a wide range of chosen objective functions.

One of the most important building blocks we develop is a method for obtaining useful on-chain estimates of the gradient of an oracle; another is how to estimate covariances (and precisions) of oracles. We will describe these, and show how these building blocks can be used to construct update rules, both classical methods from TradFi as well as less-familiar approaches. While we outline various useful 'Lego bricks' here and show how they can be used, this is in no way an exhaustive description of what can be done within the TFMM framework. We will first outline some principles for how update rules can be built for TFMMs, and then give some specific examples.

*Update Rule Complexity:* How mathematically complicated should update rules should be? Here we mostly focus on simple approaches, given the computation and storage constraints of blockchain systems. However on blockchains with cheaper computation and storage (eg L2s), more sophisticated update equations can be appropriate, including calculations involving higher derivatives and special functions.

*Temporal frequency:* Another natural consideration is: at what time-frame does it makes sense to enact these changes in weights? As we will see in §8, changing the weights a small amount between each block leads to reduced arbitrage costs. So a good approach is to have a series of 'coarse weights', calculated via the update rule and the querying of oracles, that are then smoothly interpolated between block-to-block. For the example update rules in this section, calculating the coarse weights at an interval of the order of hours or days, rather than seconds or minutes, seems to work well. On very fast and cheap (and thus more computationally-powerful) chains it may be natural to consider a faster cadence of weight calculations, which is completely handleable within this framework.

### 4.1 Cheap, Online Estimation of Oracle Gradients

Knowing, in isolation, that a signal takes a particular value at the present moment is not necessarily useful for making a decision based on that signal. It is often by knowing how the current signal compares to previous values, on some chosen timescale, that enables us to make use of a signal. This naturally means that in building update rules we need a gradient operator, to tell us how much a market signal is changing.

One could do the simplest possible thing and calculate the gradient as 'rise-over-run', taking the difference between the value of an oracle now and that some short time ago. The noise in financial time series prevents this from working well.[6]

We want a smooth estimator of the oracle gradient, less impacted by very short term deviations. We view the problem as one of statistical estimation, which will enable us to tune the effective temporal 'memory' of the estimated gradient.

To operationalise TFMMs we need a method for calculating oracle gradients that is sufficiently computationally cheap that it can be done on-chain. The most popular and important oracles provide the prices of tokens (in some chosen numéraire). Thus, to ground our discussion, we will focus mostly here on these price oracles, p(t) (though all of these ideas apply immediately to any oracle, for volume, say, or volatility).

We propose a form of exponentially-weighted online least-squares regression to learn and update an estimate of the gradient $\frac{\partial \mathbf{p}(t)}{\partial t}$, denoted $\beta(t)$. That this is an exponentially-decaying estimator means that we have a particular time-scale for our memory of price movements, allowing it to adapt to changes in market dynamics. With a decay parameter A, the resulting update equations are

$$\overline{\mathbf{p}}(t) = \overline{\mathbf{p}}(t-1) + (1-\lambda)\left(\mathbf{p}(t) - \overline{\mathbf{p}}(t-1)\right), \qquad (5)$$

$$\mathbf{a}(t) = \lambda \mathbf{a}(t-1) + \frac{\mathbf{p}(t) - \overline{\mathbf{p}}(t)}{1-\lambda}, \qquad (6)$$

$$\boldsymbol{\beta}(t) = \frac{(1-\lambda)^3}{\lambda}\mathbf{a}(t), \qquad (7)$$

where $\overline{\mathbf{p}}(t)$ is a running exponentially-weighted moving average of the N tokens' prices and a(t) is an intermediate state variable that is a constant ratio, $\frac{(1-\lambda)^3}{\lambda}$, from the current estimate of the price gradient, $\beta(t)$. We give our derivations in Appendix A. The memory of this procedure is $t_{\mathrm{mem}} = \frac{2\sqrt[3]{6\lambda}}{1-\lambda}$ For example, if we query new price information every hour, A = 0.9 would give $t_{\mathrm{mem}} \sim 36$ hours. Note that these equations assume that one single scalar A is used. If A is promoted to a vector, A, (so each token has its own memory length), then one simply has to use each token's A; for its own $\beta_i(t)$ estimator.

The final consideration here is that the raw gradient is often not that useful, it is rather *relative* changes that are often what we care about the most. (Knowing that a signal has gone up by one 'unit' is, in isolation, much less informative than knowing that it has, say, doubled.) The relative gradient is simply $\frac{1}{\mathbf{p}(t)}\frac{\partial \mathbf{p}(t)}{\partial t} \left(= \frac{\log \mathbf{p}(t)}{\partial t}\right)$.

Our smoothed estimator of the relative gradient is $\frac{\beta(t)}{\overline{\mathbf{p}}(t)}$. Note that we use $\overline{\mathbf{p}}(t)$ in the fraction $\frac{1}{\overline{\mathbf{p}}(t)}$, as this smooths out the weight changes, reducing jumpy changes and so increasing performance.

## 4.2 Trend-Following Update Rules

A broad family of update rules are of the form

$$\mathbf{w}(t) = \mathbf{f}\left(\mathbf{w}(t-1), \mathbf{p}(t), \frac{\partial \mathbf{p}(t)}{\partial t}\right), \qquad (8)$$

[6]Financial time series are of course often modelled as stochastic processes, which are not differentiable (you cannot find a gradient as an infinitesimal rise-over-run calculation). where p(t) is a vector giving the required oracle values, for example the prices of the N tokens in the pool. How could we choose f? One choice is for the *change* in weights to be a function of p(t) and its time-derivative giving us a family of momentum-like (ie, trend-following) strategies,

$$\mathbf{w}(t) = \mathbf{w}(t-1) + \mathbf{g}\left(\mathbf{p}(t), \frac{\partial \mathbf{p}(t)}{\partial t}\right). \qquad (9)$$

Adding more structure we have

$$\mathbf{w}(t) = \mathbf{w}(t-1) + \kappa \left( \mathbf{g}\left(\mathbf{p}(t), \frac{\partial \mathbf{p}(t)}{\partial t}\right) - \ell_{\mathbf{p}(t)} \right), \qquad (10)$$

where $\kappa$ is a chosen parameter that tunes how quickly, how aggressively, the pool changes its weights in light of the signal it receives. $\mathbf{g}\left(\mathbf{p}(t), \frac{\partial \mathbf{p}(t)}{\partial t}\right)$ is the function that calculates that signal, derived from oracle and oracle-gradient values, that the rule uses. For scalar $\kappa$,

$$\ell_{\mathbf{p}(t)} = \frac{1}{N} \sum_{i=1}^{N} g_i \left(\mathbf{p}(t), \frac{\partial \mathbf{p}(t)}{\partial t}\right), \qquad (11)$$

so that the vector change in portfolio weights, w(t) - wet - 1), has entries that sum to 0: if the weights summed to one before this update, they will also sum to one after this update.[7]

For all update rules, to use them in conjunction with our gradient estimator, simply replace $\frac{\partial \mathbf{p}(t)}{\partial t}$ with $\beta(t)$ as defined via Eqs (5-7).[8] *Vanilla Momentum.* The most obvious kind of pool to build using these ideas is a vanilla momentum pool. Here the weights change in proportion to the relative gradient of prices.[9] This means w(t) updates as

$$\mathbf{w}(t) = \mathbf{w}(t-1) + \kappa \cdot \left( \frac{1}{\overline{\mathbf{p}}(t)} \frac{\partial \mathbf{p}(t)}{\partial t} - \ell_{\mathbf{p}(t)} \right). \qquad (12)$$

[8]Note that each token can have a distinct A within its estimator, rather than using the same A for each token in a pool.
[9]That is, we are updating using the time-gradient of a (smoothed) *logarithm* of the prices

This is Eq (10) with $\mathbf{g}\left(\mathbf{p}(t), \frac{\partial \mathbf{p}(t)}{\partial t}\right) = \frac{1}{\overline{\mathbf{p}}(t)} \frac{\partial \mathbf{p}(t)}{\partial t}$ . Division is performed elementwise, and

$$\ell_{\mathbf{p}(t)} = \frac{1}{N} \sum_{i=1}^{N} \left(\frac{1}{\overline{\mathbf{p}}(t)}\right)_i \left(\frac{\partial \mathbf{p}(t)}{\partial t}\right)_i \qquad (13)$$

*Anti-Momentum.* Under anti-momentum updating, the weights change in negative proportion to the gradient of prices, and in inverse proportion to the prices themselves. So it has the exact same governing equations as 'vanilla momentum', but with $\kappa \rightarrow -\kappa$:

$$\mathbf{w}(t) = \mathbf{w}(t-1) + \kappa \cdot \left( \ell_{\mathbf{p}(t)} - \frac{1}{\overline{\mathbf{p}}(t)} \frac{\partial \mathbf{p}(t)}{\partial t} \right) \qquad (14)$$

$$\ell_{\mathbf{p}(t)} = \frac{1}{N} \sum_{i=1}^{N} \left(\frac{1}{\overline{\mathbf{p}}(t)}\right)_i \left(\frac{\partial \mathbf{p}(t)}{\partial t}\right)_i. \qquad (15)$$

[7]This $\ell_{\mathbf{p}(t)}$ is for the case that a scalar $\kappa$ is used, if one promotes $\kappa$ to a vector $\kappa$, so each token has its own step-size, then a slightly different form of $\ell_{\mathbf{p}(t)}$ has be to used: $\ell_{\mathbf{p}(t)} = \frac{\sum_{i=1}^{N} \kappa_i g_i\left(\mathbf{p}(t), \frac{\partial \mathbf{p}(t)}{\partial t}\right)}{\sum_{i=1}^{N} \kappa_i}$ . For momentum, say, this is $\ell_{\mathbf{p}(t)} = \frac{\sum_{i=1}^{N} \left(\kappa_i \left(\frac{1}{\mathbf{p}(t)}\right)_i \left(\frac{\partial \mathbf{p}(t)}{\partial t}\right)_i\right)}{\sum_{i=1}^{N} \kappa_i}$ . Note that this reduces to the form in Eq (13) when $\kappa = \kappa\mathbf{1}$.

Why does this make sense? The term $\ell_{\mathbf{p}(t)}$ in the update rule, required to make the update sum to zero, is reminiscent of mean-reversion strategies in TradFi that make use of the 'winner-loser effect': for a group of assets with observed similar behaviour, one asset might lag the rest in its behaviour temporarily before then catching up. This can provide an opportunity to build value, and for the right parameter choices this rule can also give returns during bear markets, as we will see in backtests later in this paper.

*Power-Channel.* Sometimes it can be desirable for a pool to have weights change as a non-linear function of relative price gradients, rather than linearly as above. Naturally, one might wish to be relatively insensitive to smaller changes in relative prices, but act particularly aggressively to larger changes. This is related to the logic behind 'channel' strategies in TradFi, where a portfolio changes its weights only if the asset prices 'break-out' of a particular range around their trajectories. In that case there is a cliff-edge trigger. Here we propose a smoothed version, though the TradFi approach is also implementable within a TFMM pool without any difficulty. The 'power-channel' update rule is

$$\mathbf{w}(t) = \mathbf{w}(t-1) + \kappa \cdot \left( \text{sign}\left( \frac{1}{\overline{\mathbf{p}}(t)} \frac{\partial \mathbf{p}(t)}{\partial t} \right) \left| \frac{1}{\overline{\mathbf{p}}(t)} \frac{\partial \mathbf{p}(t)}{\partial t} \right|^q - \ell_{\mathbf{p}(t)} \right) \quad (16)$$

where $\ell_{\mathbf{p}(t)}$ again is chosen to make the update sum to zero, q, the exponent, is > 1 and sets how strong this non linearity is.

*Channel Following.* What if you want to combine the properties of all the above into one rule? For small price deviations, act with anti-momentum (so expecting the trend to revert); and for larger deviations, act with a (power-boosted) momentum (so expecting the trend to continue). One way to do this, that gives us something very similar to how true channel-following strategies are performed in TradFi, is:

$$\mathbf{v}(t) = \exp\left( -\frac{\left( \frac{1}{\overline{\mathbf{p}}(t)} \frac{\partial \mathbf{p}(t)}{\partial t} \right)^2}{2w^2} \right)$$

$$\boldsymbol{\phi}(t) = \frac{\pi}{3w} \frac{1}{\overline{\mathbf{p}}(t)} \frac{\partial \mathbf{p}(t)}{\partial t}$$

$$\mathbf{c}(t) = -\frac{a}{h} \mathbf{v}(t) \left( \boldsymbol{\phi}(t) - \frac{1}{6} \boldsymbol{\phi}^3(t) \right) \quad (17)$$

$$\mathbf{m}(t) = (1 - \mathbf{v}(t)) \, \text{sign}\left( \frac{1}{\overline{\mathbf{p}}(t)} \frac{\partial \mathbf{p}(t)}{\partial t} \right) \left| \frac{1}{\overline{\mathbf{p}}(t)} \frac{\partial \mathbf{p}(t)}{\partial t} \right|^q$$

$$\mathbf{w}(t) = \mathbf{w}(t-1) + \kappa \left( \mathbf{c}(t) + \mathbf{m}(t) - \ell_{\mathbf{p}(t)} \right).$$

This is a rather complex rule in comparison to those above, but is still amenable to running on chain. To avoid breaking the thread of the argument here, for a description of its motivation, structure and properties, see Appendix H.

*Other momentum-like update rules.* The above rules are either known TradFi strategies or a close relatives of one. They are, however, not exhaustive of what can be implemented in a TFMM pool. For example, a TFMM pool could update according to the rule

$$\mathbf{w}(t) = \mathbf{w}(t-1) + \mathbf{A} \frac{1}{\overline{\mathbf{p}}(t)} \frac{\partial \mathbf{p}(t)}{\partial t} + \mathbf{b} \cdot \left( \frac{1}{\overline{\mathbf{p}}(t)} \frac{\partial \mathbf{p}(t)}{\partial t} \right)^2 - \ell_{\mathbf{p}(t)} \quad (18)$$

where $\ell_{\mathbf{p}(t)}$ is chosen to make the update sum to zero, A is a matrix, and b is a vector (for which multiplication is done elementwise)[10]; or one could choose some other function of w(t- 1), p(t) and $\frac{\partial \mathbf{p}(t)}{\partial t}$ as the update rule for the pool they instantiate.

[10]Though of course this update equation costs more gas (or equivalent) than a simpler update rule.

*Natural parameterisation.* Note that these rules commonly involve a step-size $\kappa$. Those rules can be more naturally be parameterised not directly by $\kappa$ but by $\tilde{\kappa}$. $\tilde{\kappa} = \frac{\kappa}{t_{\text{mem}}}$ , where $t_{\text{mem}}$ is the memory length of the estimator for the current rule. This is a more natural parameterisation as longer memory lengths (which come from larger A values in Eqs(5-7)) lead to smaller gradient estimators, so it is reasonable for $\kappa$ to be parameterised taking this scaling into account.

### 4.3 Cheap, Online Estimation of Oracle Covariances and Precisions

Some update rules need access to the variance of an oracle or the covariance between oracles. For example, any update rule that wants to use Markovitz/Mean-Variance Portfolio Theory (MVPT) or related ideas will need them. Here we are going to describe how one can produce smoothed estimates of the covariance matrix for a set of oracles (likely, oracles that quote prices/returns) and also separately the inverse of the covariance matrix, the precision matrix.

These estimators are lightweight enough to be reasonably run on chain. (Calculating the precision matrix as its own quantity makes sense here, rather than obtaining it as the inverse of the covariance matrix, as it is not appealing to have to invert a matrix on-chain.)

We can use a set of mathematical methods very similar to those used to calculate our smoothed, exponentially-decaying, gradient estimator to calculate these quantities. Just as for the oracle gradient estimator, we want to pay more attention to recent data points than old datapoints. Following a substantially-similar derivation to that for the oracle gradient estimator, we get these update equations for a covariance matrix for a set of oracles.

$$\overline{\mathbf{p}}(t) = \overline{\mathbf{p}}(t-1) + (1-\lambda)\,(\mathbf{p}(t) - \overline{\mathbf{p}}(t-1)) \tag{19}$$

$$\mathbf{A}(t) = \lambda \mathbf{A}(t-1) + (\mathbf{p}(t) - \overline{\mathbf{p}}(t-1))(\mathbf{p}(t) - \overline{\mathbf{p}}(t))^{\top} \tag{20}$$

$$\Sigma(t) = (1-\lambda)\,\mathbf{A}(t) \tag{21}$$

where division is done elementwise, $\overline{\mathbf{p}}(t)$ is a running exponentially-weighted moving average of the N oracles we are calling and A(t) is an intermediate state variable that is a constant ratio (1 - A) from the current estimate of the covariance matrix, $\Sigma_t$ and A is the exponential decay parameter. We give the derivation in Appendix B.1.

*Precision estimation.* We can use the Sherman-Morrison formula [6] to derive a similar on-line estimator for the precision matrix, avoiding the need to perform a matrix inversion. The update equations are

$$\overline{\mathbf{p}}(t) = \overline{\mathbf{p}}(t-1) + (1-\lambda)\,(\mathbf{p}(t) - \overline{\mathbf{p}}(t-1)) \tag{22}$$

$$\mathbf{S}(t) = \frac{1}{\lambda}\mathbf{S}(t-1)\Bigg(\mathbf{I} \\ - \frac{(\mathbf{p}(t) - \overline{\mathbf{p}}(t-1))\,(\mathbf{p}(t) - \overline{\mathbf{p}}(t))^{\top}\,\mathbf{S}(t-1)}{\lambda + (\mathbf{p}(t) - \overline{\mathbf{p}}(t))^{\top}\,\mathbf{S}(t-1)\,(\mathbf{p}(t) - \overline{\mathbf{p}}(t-1))}\Bigg) \tag{23}$$

$$\Sigma^{-1}(t) = \frac{\mathbf{S}(t)}{(1-\lambda)} \tag{24}$$

where division is done elementwise, $\overline{\mathbf{p}}(t)$ is a running exponentially-weighted moving average of the N oracles we are calling (or simple calculations thereof like returns from prices) and S(t) is an intermediate state variable that is a constant ratio, (1 - A) from the current estimate of the precision matrix, $\Sigma(t)$. We give the derivation in Appendix B.2.

## 4.4 Mean-Variance-like Update Rules

Mean-Variance Portfolio Theory can be used to construct a broad array of different portfolios. The update rules that come from MVPT are a little different to the other update rules considered so far: they do not have the form of Eq (10). Instead they are examples of an update rule of the more general form, Eq (8): w(t) = $f\,(w(t$ - 1), p(t), $\frac{\partial \mathbf{p}(t)}{\partial t}$ ). This is because MVPT does not give us a series of *changes* to the portfolio vector but gives us the portfolio vector itself directly.

To handle update rules that produce whole portfolio weight, we can apply exponential smoothing to the given sequence of weight vectors,

$$\mathbf{w}(t) = \Lambda \mathbf{w}(t-1) + (1-\Lambda)\hat{\mathbf{w}}(t), \tag{25}$$

where A is our exponential smoothing parameter, analogous to that used in oracle gradient/covariance calculations.

*Minimum-Variance.* Here we demonstrate one of the simplest MVPT outputs, the minimum variance portfolio. $\hat{w}^{\text{min-var}}(t)$ are the sequence of min-variance weights. For simplicity we assume that assets are uncorrelated with each other and have zero average return. [11] Given these assumptions, the minimum-variance weights are

$$\hat{\mathbf{w}}(t) = \frac{\Sigma^{-1}(t)}{\sum_{j=1}^{N} \Sigma_j^{-1}(t)} \qquad (26)$$

where $\Sigma^{-1}$ (t) is vector whose elements are the precisions of the returns for each token in the pool. So overall

$$\mathbf{w}(t) = \Lambda \mathbf{w}(t-1) + \frac{(1-\Lambda)\Sigma^{-1}(t)}{\sum_{j=1}^{N} \Sigma_j^{-1}(t)}. \qquad (27)$$

[11]These assumptions can be relaxed, for a full derivation and more background on MVPT see Appendix I.

The inverse-variance estimation process has its own memory length, determined by A above, which is used to parameterise the pool alongside A.

## 4.5 Ensemble Update Rules

The example update rules above in §4.2 & 4.4 produce pools that run a single, relatively simple, mathematical formula based on some particular choices of parameters $\kappa$ (aggressiveness) and A (memory length), say. Given that we have these simple rules, it is natural to wonder if there is a way to somehow combine multiple update rules together, gaining synergy between their different behaviours. Here we describe a 'flat' way to combine update rules: *ensemble rules.* All value in the ensemble pool is then allocated according to the overall weight-changes of the overall, *ensemble,* update rule-a single pot.

Why might this be desirable? The idea is that when the update rules in the ensemble are making good decisions they are in agreement, but when they are making bad decisions their outputs are bad in different ways. In other words, there are more ways to be wrong than to be right. Thus by averaging their outputs, we hope that the good choices are amplified and the bad choices cancel each other out (at least partially). This idea of 'ensembling' is common in applied statistics, where many small models are averaged to give an overall output, which has previously found use in finance. Concretely, given a set of M update rules, say those that take the form of Eq (8), a *ensemble update rule* is made by taking the average of their output. In this case the ensemble weight vector $\mathbf{w}_{\text{ensemble}}$ (t) is

$$\mathbf{w}_{\text{ensemble}}(t) = \frac{1}{M} \sum_{m=1}^{M} f_m \left( \mathbf{w}_{\text{ensemble}}(t-1), \mathbf{p}(t), \frac{\partial \mathbf{p}(t)}{\partial t} \right), \quad (28)$$

and if the constituent update rules output changes of weights, as in Eq (10), the ensemble weight vector $\mathbf{w}_{\text{ensemble}}$ (t) is

$$\mathbf{w}_{\text{ensemble}}(t) = \mathbf{w}_{\text{ensemble}}(t-1) + \frac{1}{M} \sum_{m=1}^{M} \kappa_j g_m \left( \mathbf{p}(t), \frac{\partial \mathbf{p}(t)}{\partial t} \right). \quad (29)$$

For some classes of update rules there can be ways to share/cache computations for a set of update rules, reducing running costs.

## 4.6 Robustness of Estimators to manipulation

Oracles can be attacked. Our smoothed estimators are more robust to oracle attack than naive estimators. For each we want to find how it changes as a function of the newest oracle value p(t). The completely naive gradient estimator is

$$\boldsymbol{\beta}_{\text{naive}}(t) = \mathbf{p}(t) - \mathbf{p}(t-1). \qquad (30)$$

(There is no denominator in this 'rise over run' calculation as $\Delta t$ = 1.) Trivially

$$\frac{d\boldsymbol{\beta}_{\text{naive}}(t)}{d\mathbf{p}(t)} = 1, \qquad (31)$$

so any changes in oracle value pass one-for-one over to changes in this naive gradient.

Now our smoothed estimator. Rearranging Eqs (5-7) we obtain

$$\beta(t) = (1-\lambda)^2 \left(\mathbf{p}(t) - \overline{\mathbf{p}}(t-1)\right) + (1-\lambda)^3 \mathbf{a}(t-1), \qquad (32)$$

from which we see the dependence of $\beta(t)$ on p(t):

$$\frac{\mathrm{d}\beta}{\mathrm{d}\mathbf{p}(t)} = (1-\lambda)^2 \qquad (33)$$

For any value of A the smoothed estimator is less affected by the new oracle value, so larger attacked-oracle values are needed to get a matched change in output. A = 0.8 say (a reasonable value) give a smoothed estimator $\times 25$ more robust than the naive estimator.

## 5 TRADING WITH TFMM POOLS

Multi-token trades are allowed on TFMMs. Consider a trader wishing to exchange a particular set of tokens, represented by the vector Δ, for another set of tokens A, where entries in each are $\geq 0$. The protocol requires, for tokens $i$ where $\Delta_i > 0$, that $\Lambda_i = 0$: tokens cannot be traded for themselves. With fees (1 - $\gamma$), for a trade to be accepted it must be the case that

$$\prod_{i=1}^{N} (R_i + \gamma\Delta_i - \Lambda_i)^{w_i(t)} \geq k(t) \qquad (34)$$

*Token-Pair Quotes via the Trading Function.* Consider token-pair trades, i.e. Δ and A are restricted to be one-hot. The trader wishes to exchange $\Delta_j$ of the $j^{th}$ token for some amount $\Lambda_k$ of the $k^{th}$ token, j ≠ k. We can directly give a TFMM pool's quote for the amount $\Lambda_k$ that it will accept for the trading-in of $\Delta_j$, via inversion of Eq (34):

$$\Lambda_k = R_k \left(1 - \frac{1}{\left(1 + \gamma\frac{\Delta_j}{R_j}\right)^{w_j(t)/w_k(t)}}\right) \qquad (35)$$

*Prices via Gradients.* We can find unsealed prices, p$^{\text{TFMM}}$(t), offered by a TFMM pool (in the case of 0 fees) by taking the derivative of its defining function, Eq (4), with respect to the vector of reserves held,

$$\mathbf{p}^{\text{TFMM}}(t) = \frac{\partial}{\partial \mathbf{R}} k(t) = \frac{\partial}{\partial \mathbf{R}} \prod_{i=1}^{N} R_i^{w_i(t)} = \frac{\mathbf{w}(t)k(t)}{\mathbf{R}}, \qquad (36)$$

where the division in the final fraction is calculated elementwise.[12]

Similarly, to calculate $p_{i,j}^{\text{TFMM}}(t)$, the prices of the $i^{th}$ token in terms of the $j^{th}$, that is, using the $j^{th}$ token as the numéraire, simply divide the $i^{th}$ unsealed price by the $j^{th}$,

$$p_{i,j}^{\text{TFMM}}(t) = \frac{\left(\frac{\partial}{\partial \mathbf{R}} k(t)\right)_i}{\left(\frac{\partial}{\partial \mathbf{R}} k(t)\right)_j} = \frac{w_i(t)/R_i}{w_j(t)/R_j}. \qquad (37)$$

This expression makes explicit the relationship between the trajectories of a pool's weights and the prices it quotes. If the weight of token $i$ increases relative to token j, the price of token $i$ increases relative to token j; conversely, a decrease in the relative weight of token i causes a decrease in its price, such that trading pushes the reserves out of token i and into j.

### 5.1 Depositing and Withdrawing Liquidity

Depositing and withdrawing liquidity to and from a pool P correspond respectively to increasing and decreasing the pool value *k(t)*: [12]We can see from this why *k(t)* is sometimes called the *value* of pools like this Intuitively the value of a pool is the sum of the product of reserves and prices. Using these unsealed prices, $\sum_{i=1}^{N} p_i^{\mathrm{TFMM}}(t) R_i = k(t) \sum_{i=1}^{N} w_i(t) = k(t)$ . we can think of *k(t)* as providing a unitless scalar measure of the size or 'value' of the pool's reserves, given its current weights. Exactly like pools on prior AMMs, TFMM pools issue liquidity tokens to LPs in proportion to the value they place in a pool. At time t, the total supply of liquidity tokens $\tau_P$(t) for a pool P is therefore given by $r_P = s(w(t))\, k(t),$ where s is a scaling factor that determines the total size of the supply and depends on the current weights. Within a block, s is constant.

Depositing all the assets in a pool in proportion to their existing supply scales k accordingly (where for now we are dropping k's explicit time dependence to minimise clutter). That is, suppose one deposits $\Delta_i$ tokens of each asset i, where $\Delta_i = cR_i$ for some scalar c (that again depends on current weights, but is constant within a block). The reserves therefore change according to the map $R_i \mapsto (1 + c)R_i$, and hence the value of k maps according to $k \mapsto (1 + c)k$. The depositor is therefore allocated $c\, r_P$ new liquidity tokens, and the total liquidity token supply evolves as $\tau_P \mapsto (1 + c)\,\tau_P$. This is called an *all-asset deposit.*

An LP need not deposit all the assets in a pool to obtain liquidity tokens: in fact, they can deposit any quantity of any of the underlying assets, and obtain tokens in exchange for the increase in pool value. Since liquidity tokens are issued in exchange for increasing the value of *k*, we can ask how many tokens would be issued if *k* is increased to *k'*. Since the number of liquidity tokens $\tau_P$ is proportional to *k*, we have

$$\frac{\tau'_{\mathscr{P}}}{\tau_{\mathscr{P}}} = \frac{\tau_{\mathscr{P}} + \delta}{\tau_{\mathscr{P}}} = \frac{k'}{k} \tag{38}$$

where $\tau'_{\mathscr{P}}$ is the new supply of liquidity tokens, and $\delta$ is the new issuance.

Suppose therefore that an LP wishes to deposit assets in quantities given by $\Delta_i$, where i ranges over the assets in the pool. This means that we have

$$\frac{k'}{k} = \prod_{i:\mathscr{T}} \left( \frac{R_i + \Delta_i}{R_i} \right)^{w_i} \tag{39}$$

and hence

$$\delta = \tau_{\mathscr{P}} \left( \prod_i \left( 1 + \frac{\Delta_i}{R_i} \right)^{w_i} - 1 \right). \tag{40}$$

In the case of a single-asset deposit, we obtain

$$\delta = \tau_{\mathscr{P}} \left( \left( 1 + \frac{\Delta_i}{R_i} \right)^{w_i} - 1 \right). \tag{41}$$

Conversely, a liquidity provider can deposit liquidity tokens (thereby reducing $\tau_P$), and thereby withdraw assets from the pool-and there are corresponding formulae for all-asset and arbitrary-asset withdrawals, obtained by taking the change $\delta$ in token supply to be negative. One can also invert these formulae, to obtain expressions for how many tokens of given asset types must be deposited (or withdrawn) to acquire (or destroy) a certain number of liquidity tokens.

### 6 CONCENTRATED LIQUIDITY IN TFMMS

Previous projects have introduced the use of 'concentrated liquidity' [7, 8], where trades are performed 'as if' a pool contains more reserves than it in fact does. If liquidity is *concentrated* by quoting trading using these *virtual reserves,* that are greater than the true reserves, then it can be possible for trades to remove all of the reserves of any token in the pool by a single trade or a sequence of trades. This has the effect of making the reserves of a pool only available within a certain range of market prices. Why is this method desirable? It leads to reduced slippage for traders, as higher reserves in a pool naturally decrease the curvature of commonly-used trading functions. This means that pools with concentrated liquidity are more appealing for traders than those that do not concentrate their liquidity, all else being equal. Previous projects have implemented concentrated liquidity for pools composed of pairs of tokens. *Here we extend the virtual reserves approach to pools with non-uniform weights over tokens and simultaneously to multi-token pools.*

A TFMM pool has, in a given block, the invariant

$$\prod_{i=1}^{N} R_i^{w_i(t)} = k(t), \quad \text{where } \sum_{i=1}^{N} w_i(t) = 1, \text{ and } \forall i \; 0 < w_i(t) < 1 \tag{42}$$

We *scale* the reserves uniformly by a factor $v \; (\geq 1)$ to get our virtual reserves, $\overline{R}_i$,

$$\check{R}_i = vR_i, \tag{43}$$

and further we require that these new virtual reserves follow a matched virtual invariant function

$$\prod_{i=1}^{N} \check{R}_i^{w_i(t)} = \check{k}(t), \quad \text{where } \sum_{i=1}^{N} w_i(t) = 1, \text{ and } \forall i \; 0 < w_i(t) < 1 \tag{44}$$

Subbing in $R_i = vR_i$, we obtain

$$\check{k}(t) = vk(t), \tag{45}$$

see Appendix C for derivation.

*Trading with TFMMs with concentrated liquidity.* While we can scale our initial reserves, in effect pretending the pool has more reserves than it does, the trade amounts-the number of tokens going into and out of these pools-is the particular amount of tokens the trader is wishing to exchange. Both true and virtual token reserves change by the same amount. What trades are allowed? Exactly those one gets from replacing $R_i$ with $vR_i$ in Eq (34), so

$$\prod_{i=1}^{N} \left( \check{R}_i + \gamma\Delta_i - \Lambda_i \right)^{w_i(t)} = \prod_{i=1}^{N} \left( vR_i + \gamma\Delta_i - \Lambda_i \right)^{w_i(t)} \geq vk(t). \tag{46}$$

And the concentrated equivalent to a token-pair trade, Eq (35), trading $\Delta_j$ of token j into the pool in exchange for $\Lambda_k$ of token *k,* is

$$\Lambda_k = vR_k \left( 1 - \frac{1}{\left( 1 + \gamma\frac{\Delta_j}{vR_j} \right)}^{w_j(t)/w_k(t)} \right) \tag{47}$$

What about after a trade has been done? Using primes to denote post-trade quantities,

$$R_i' = R_i + \Delta_i - \Lambda_i \tag{48}$$

$$\check{R}_i' = vR_i + \Delta_i - \Lambda_i \tag{49}$$

$$\Rightarrow \check{R}_i' = R_i' + (v - 1)R_i. \tag{50}$$

This enables us to write the post-trade invariant of the virtual reserves, Eq (44), in terms of the true reserves

$$\prod_{i=1}^{N} \check{R}_i'^{w_i(t)} = \prod_{i=1}^{N} \left(R_i' + (v-1)R_i\right)^{w_i(t)} = vk'(t) \qquad (51)$$

which shows us clearly that the virtual invariant is a scaled and shifted version of the original invariant.

*Allowed ranges of reserves.* The underlying, true, token reserves cannot go below zero, so $R_{i,\min} = 0$. What restriction does this place on the virtual reserves? We find

$$\check{R}'_{i,\min} = (v-1)R_i, \qquad (52)$$

which is intuitively the case as our initial virtual reserves are $vR_i$ and then $R_i$ is removed from them. What is the maximum value of the virtual reserves? This is: if the true reserves of all tokens of index $\neq i$ go to zero, how many tokens of type $i$ are there in the pool? The maximum value $\check{R}'_i$ can reach, in the no-fees-case, is

$$\check{R}'_{i,\max} = (v-1)^{1-\frac{1}{w_i}} v^{\frac{1}{w_i}} R_i, \qquad (53)$$

see Appendix C for derivation. Thus the corresponding maximum value of the true reserves is

$$R'_{i,\max} = \left((v-1)^{1-\frac{1}{w_i}} v^{\frac{1}{w_i}} - (v-1)\right) R_i. \qquad (54)$$

## 7 HOW TFMM POOLS' RESERVES CHANGE

A pool is 'in equilibrium' if the actual division of value between assets is in accordance with its weight vector w. If that is the case, w *is* the division of value over assets in a pool. At time $t_0$, for market prices $p_i(to)$ and pool reserves $R_i(t_0)$, for a pool in equilibrium it is the case that

$$w_i(t_0) = \frac{p_i(t_0)R_i(t_0)}{V(t_0)}, \qquad (55)$$

$$\Rightarrow R_i(t_0) = \frac{w_i(t_0)V(t_0)}{p_i(t_0)}, \qquad (56)$$

$$\Rightarrow p_i(t_0) = \frac{w_i(t_0)V(t_0)}{R_i(t_0)}, \qquad (57)$$

$$\Rightarrow V(t_0) = \frac{p_i(t_0)R_i(t_0)}{w_i(t_0)}, \qquad (58)$$

where $V(t_0) := \sum_{i=1}^{N} p_i(t_0)R_i(t_0)$ is the value of the pool, in the numéraire of the market prices $p_i(t_0)$.[13]

[13] Of course changes in numéraire do not change $w_i$ or $R_i(t_0)$ as such changes equally scale $p_i(t_0)$ *and* $V(t_0)$ and so cancel out.

### 7.1 Vanilla AMM pools must suffer Impermanent Loss

In previous AMMs, like Uniswap and Balancer, any change in the ratios of the market prices of tokens in a basket leads to that pool holding less value than when the pool was capitalised. So the market prices changing in ratio means the liquidity providers (in the absence of fees) are guaranteed to be outperformed by those who simply held their initial capital. We will cover here the case of non-concentrated liquidity (so $v = 1$, but the results naturally generalise by replacing $R_i$ with $vR_i$ for $v > 1$).

The market price changes from some initial value $p(t_0)$ to a later value $p(t')$. We will assume that, at the initial moment, the quoted prices of the pool match the market prices-the pool is, at that moment, in equilibrium. Then, given that change in market prices, arbitrageurs trade with the pool until, again, the quoted prices of the pool match the *new* market prices. Performing this analysis, the pool's reserves at a later time $t'$ are

$$\mathrm{R}(t') = \mathrm{R}(t_0)\frac{\mathrm{p}(t_0)}{\mathrm{p}(t')}\prod_{i=1}^{N}\left(\frac{p_i(t')}{p_i(t_0)}\right)^{w_i}, \qquad (59)$$

where multiplication and division between vectors is performed elementwise. See Appendix D.1 for the derivation. The value in a pool, in the market-price numéraire, at any time $t$ is $V(t) = \mathrm{p}(t) \cdot \mathrm{R}(t) = \sum_i^N p_i(t)\hat{R}_i(t)$. Thus we have

$$V(t') = \sum_{i=1}^{N} p_i(t')R_i(t') = \sum_{i=1}^{N} p_i(t')R_i(t_0)\frac{p_i(t_0)}{p_i(t')}\prod_{k=1}^{N}\left(\frac{p_k(t')}{p_k(t_0)}\right)^{w_k}$$

$$(60)$$

$$= V(t_0)\prod_{k=1}^{N}\left(\frac{p_k(t')}{p_k(t_0)}\right)^{w_k}. \qquad (61)$$

To get the impermanent loss equations, we now simply compare the change in the pool value from $t_0 \to t'$ to the change in value of the initial reserves $R(t_0)$, $V_{\mathrm{hold}}(t) = \sum_{i=1}^{n} R_i(t_0)p_i(t)$, so

$$V_{\mathrm{hold}}(t') = \sum_{i=1}^{n} R_i(t_0)p_i(t') = \sum_{i=1}^{n} R_i(t_0)p_i(t')\frac{p_i(t_0)}{p_i(t_0)} \qquad (62)$$

$$= V_{\mathrm{hold}}(t_0)\sum_{i=1}^{n} w_i\frac{p_i(t')}{p_i(t_0)}, \qquad (63)$$

where we have used Eq (55). Thus we have that $\Delta V$, the proportional change in the value of the pool compared to holding, is

$$\Delta V = \frac{\frac{V(t')}{V(t_0)}}{\frac{V_{\mathrm{hold}}(t')}{V_{\mathrm{hold}}(t_0)}} - 1 = \frac{\prod_{k=1}^{N}\left(\frac{p_k(t')}{p_k(t_0)}\right)^{w_k}}{\sum_{i=1}^{n} w_i\frac{p_i(t')}{p_i(t_0)}} - 1. \qquad (64)$$

This function range is $\leq 0$, due to the Weighted AM-GM inequality; in other words, for any $p(t') \neq bp(t_0)$ (where $b > 0$ is any scalar), $\Delta V < 0$ so liquidity providers have lost value compared to holding.

### 7.2 TFMM pools do not have to suffer Impermanent Loss

We will now consider how the holdings and value of a TFMM pool changes when the weights are updated. That is, *constant* market prices but *changing* weights. So, mirroring the above, after a change in pool weights arbitrageurs trade with the pool until the quoted prices of the pool again match the current market prices. Here we model the zero-fees case, see § F.1.1 for analysis that includes fees. We start with weights $w(t_0)$, and then a block later, at time $t' = t_0 + \delta_t$, new weights $w(t')$ (but still $p(t') = p(t_0)$). This gives us the weight-update counterpart to Eq (59),

$$\mathrm{R}(t') = \mathrm{R}(t_0)\frac{\mathrm{w}(t')}{\mathrm{w}(t_0)}\prod_{i=1}^{N}\left(\frac{w_i(t_0)}{w_i(t')}\right)^{w_i(t')}, \qquad (65)$$

where multiplication and division between vectors is performed elementwise. See Appendix D.2 for the derivation. From this we can get the weight-update counterpart to Eq (61), the value after the weight-change,

$$V_{\Delta w}(t') = \sum_{i=1}^{N} p_i(t') R_i(t') = \sum_{i=1}^{N} p_i(t_0) R_i(t') \qquad (66)$$

$$= \sum_{i=1}^{N} p_i(t_0) R_i(t_0) \frac{w_i(t')}{w_i(t_0)} \prod_{k=1}^{N} \left( \frac{w_k(t_0)}{w_k(t')} \right)^{w_k(t')}, \qquad (67)$$

which does not admit a simple form in the same way that Eq (61) where we can 'pull out' $V(t_0)$ from the sum.

Further, note that Eq (59) above[14] is *state dependent*, not *path dependent*: in *state dependent* systems the terms involving intermediate values of variables cancel out, in *path dependent* system they do not. So for AMM pools with fixed weights, if prices go from p($t_0$) - p($t'$) - p($t''$), we find that we can write R($t''$) purely using the variables p($t''$), p($t_0$), R($t_0$). The terms involving $p(t')$, R($t'$) end up cancelling out. This is not the case here. For Eqs (65, 67), the whole *trajectory* of weights and prices determines how the reserves, and thus value, changes

[14]And thus Eqs (61) and (64) also..

Of course when a TFMM pool is running market prices will change, so to model how reserves change we have to apply both Eq (59) and Eq (65). We intersperse changes-of-weights with changes-of-prices. For a single block, within which the market prices change and then after the end of the block the pool changes its weights, we get

$$\mathbf{R}_{\mathrm{TFMM}}(t') = \mathbf{R}(t_0) \frac{\mathbf{p}(t_0)}{\mathbf{p}(t')} \frac{\mathbf{w}(t')}{\mathbf{w}(t_0)} \times$$
$$\prod_{i=1}^{N} \left( \frac{p_i(t')}{p_i(t_0)} \right)^{w_i(t_0)} \prod_{k=1}^{N} \left( \frac{w_k(t_0)}{w_k(t')} \right)^{w_k(t')}, \quad (68)$$

where again multiplication and division between vectors is performed elementwise. From the path-dependency of Eq (65), this 'combined' update is also path-dependent, depending on the trajectories of *both* prices and weights. The corresponding change in value for one combined update is

$$V_{\mathrm{TFMM}}(t') = \sum_{i=1}^{N} p_i(t') R_{\mathrm{TFMM},i}(t') \qquad (69)$$

$$= \sum_{i=1}^{N} \left( p_i(t_0) R_i(t_0) \frac{p_i(t_0)}{p_i(t')} \frac{w_i(t')}{w_i(t_0)} \right) \times$$
$$\prod_{k=1}^{N} \left( \frac{p_k(t')}{p_k(t_0)} \right)^{w_k(t_0)} \prod_{\ell=1}^{N} \left( \frac{w_\ell(t_0)}{w_\ell(t')} \right)^{w_\ell(t')}.$$
$$(70)$$

We cannot write a simple equivalent to Eq (64) for these combined updates-the value of the TFMM pool at some later time is not guaranteed to be less than holding one's initial capital, as it is for non-dynamic AMM pools-it can be more. TFMM pools do not have to suffer from Impermanent Loss (but of course capital is at risk, update rules can be ill-tuned or have market behaviour change such that they no longer operate as expected). The value of a TFMM pool depends intimately on the sequence of weights and prices over time, and as such its value can increase above simply holding one's capital.

## 8 WEIGHT UPDATE PROCEDURES

### 8.1 Interpretation of re-weighting as an auction

Imagine the weights changing every block, but no arbitrageur acts. The arbitrage opportunity increases every block (assuming constant market prices). This means that in effect there is a form of reverse Dutch auction taking place, where the amount a TFMM pool will pay to rebalance increases with blocktime. Arbitrageurs have their own costs (gas, infrastructure costs, etc) that have to be paid for by their trades. In this way, the arbitrage opportunities of TFMM pools result in healthy competition between arbs for who can first fulfil the arbitrage trade, ahead of competitors, by having the leanest, lowest-cost method of arbing.

**8.2 Weight Interpolation: Execution Management on TFMMs**

Weight changes when the pool is in equilibrium-quoting the market price-create an arbitrage opportunity. This is desirable, we need to incentivise the pool's reserves to be re-balanced to be in line with the new weights. But of course it is desirable for LPs for the arbitrage opportunity to be smaller rather than larger. This is roughly analogous to 'execution management' in TradFi, where a trader wishes for their transactions to follow best execution policies that reduce cost. A simple way to reduce the arbitrage opportunity from a weight update is to spread out the weight update out over a period in time.

In other words, when weight updates are divided up into a series of smaller steps the total resulting arbitrage from all of those multiple steps is less than if the update were done in one step, under the assumption that market prices are constant over the period of time in which weights are changing. *8.2.1 A family of beneficial interpolations.* We can want to compare $R^{\text{1-step}}$, the reserves in the pool when we have directly updated the weights from $w(t_0) \to w(t_0) + \Delta w$, a one step process, to $R^{\text{2-step}}$ the reserves when we have done this weight update via a two step process: $w(t_0) \to \tilde{w} \to w(t_0) + \Delta w$, where $\forall i$, $\tilde{w}_i \in [w_i(t_0), w_i(t_0) + \Delta w_i]$ (as well as $0 < \tilde{w}_i < 1$ and $\sum_{i=1}^{N} \tilde{w}_i = 1$). We show in Appendix E.1.1 that any member of this family of intermediate values for $\tilde{w}$ gives lower arb cost.

*Example: Linear Interpolation.* We can show this result for the particular case of linear interpolation via Eq (65). Here the two step process is: $w(t_0) \to w(t_0) + \frac{1}{2}\Delta w \to w(t_0) + \Delta w$. This technique is used for liquidity bootstrap pools and stochastic changing CFMMs. We find that

$$\mathbf{R}^{\text{2-step}} = \mathbf{R}^{\text{1-step}} \prod_{j=1}^{N} \left( 1 + \frac{\Delta w_j}{2 w_j(t_0)} \right)^{\frac{\Delta w_j}{2}}. \qquad (71)$$

We can get this result for linear interpolation via Eq (65). We can want to compare $R^{\text{1-step}}$, the reserves in the pool when we have directly updated the weights from $w(t_0) \to w(t_0) + \Delta w$, a one step process, to $R^{\text{2-step}}$, the reserves when we have done this weight update via a two step process: $w(t_0) \to w(t_0) + \frac{1}{2}\Delta w \to w(t_0) + \Delta w$. See Appendix D for the derivation. The ratio between $R_{\text{2-step}}$ and $R_{\text{1-step}}$, is always greater than or equal to one. This can be seen trivially. When $\Delta w_j$ is $> 0$, its term in the product is $> 1$, as we have a number $> 1$ raised by a positive power. When $\Delta w_j$ is $< 0$ its term in the product is again $> 1$, as we have a number $< 1$ raised by a negative power. (And when $\Delta w_j$ is $= 0$ the term in the product is 1, as we have $1^0 = 1$.)

This means that for any weight change to be done in one leap, we can produce a cheaper weight update procedure by going through and equilibrating at the midway value. And after we apply this 'bisection' once, we can apply the exact same argument again on each half of the new trajectory, dividing changes in weights in half again. This tells us that we want weight changes to be maximally smooth. For given start and end weights, choosing to linearly interpolate the value of the weights in the pool at block-level resolution is thus a simple and effective (and gas-efficient) way to give us smooth weight changes.

**8.3 Non-linear weight interpolation schemes**

While always it is better to be smoother in this linear-bisection manner, its benefit 'caps out' at the block resolution. Once one has hit that limit, is there anything else one can do? There are even more capital-efficient ways for pools to offer arbitrage opportunities to the market.

For a sequence of $f+1$ weights, indexed from to to $t_f$, $\{w(t_k)\}_{k=0,\dots,f}$, and constant prices the final reserves are

$$\mathbf{R}(t_f) = \mathbf{R}(t_0) \frac{\mathbf{w}(t_f)}{\mathbf{w}(t_0)} \prod_{k=1}^{f} \prod_{j=1}^{N} \left( \frac{w_j(t_{k-1})}{w_j(t_k)} \right)^{w_j(t_k)}, \qquad (72)$$

which we obtain from repeated application of Eq (65).

Within this framework, one can attack this as an optimisation problem, as we are interested in finding the trajectory of weights that minimises the amount that is paid to arbs, i.e. maximises the pool value subject to constraints on the weights

$$\{\mathbf{w}^*(t_k)\}_{k=1,\ldots,f-1} = \underset{\{\mathbf{w}(t_k)\}_{k=1,\ldots,f-1}}{\arg\max}\left[\mathbf{p}\cdot\mathbf{R}(t_f) + \sum_{\ell=1}^{f-1}\left(\sum_{m=1}^{N}\mu_{\ell,m}w_m(t_\ell)\right)\right.$$
$$\left. - \sum_{k=1}^{f-1}\Lambda_k\left(\sum_{i=1}^{N}w_i(t_k) - 1\right)\right],$$
$$(73)$$

which fulfill the KKT conditions with $\{\mu_{\ell,m}\}$ and $\{\Lambda_k\}$ as multipliers. The optimum can be numerically calculated, as can more sophisticated approaches including changing prices (or even uncertain predictions of future prices) and the presence of fees. These calculations could be run on-chain or otherwise made available to a TFMM pool. During a TFMM weight update call is it possible to put in an external oracle call that returns a 'weight trajectory array'. Of course there is a trade-off here in greater costs vs the improvement from a more-complex weight trajectory. The greater a pool's TVL and the cheaper the weight trajectory oracle call is, the easier it would be to justify this expenditure.

*8.3.1 Approximating the optimal weight interpolation.* Assuming constant market prices over the course of interpolation, here we will describe a cheap-to-compute approximation to the zero-fees solution of Eq (73) that provides a superior method of pool rebalancing over linear interpolation.

During the derivations for 8.2.1, found in Appendix E.1.1, we obtained $r$, the ratio of reserves between when doing a 2-step weight change ($w(t_0) \to \tilde{w} \to w(t_f)$) and a 1-step weight change ($w(t_0) \to w(t_f)$ directly).

$$r = \prod_{j=1}^{N} \frac{w_j(t_0)^{\tilde{w}_j}}{w_j(t_0)^{w_j(t_f)}} \frac{\tilde{w}_j^{w_j(t_f)}}{\tilde{w}_j^{\tilde{w}_j}}. \qquad (74)$$

If we assume that the weight change from $w(t_0) \to w(t_f)$ is small, we can directly optimise Eq (74) without needed to impose the constraints of Eq (73). Doing this, we find that the optimal intermediate value is

$$\tilde{w}_i^* = \frac{w_i(t_f)}{W_0\left(\frac{e\,w_i(t_f)}{w_i(t_0)}\right)} \qquad (75)$$

where $W_0(\cdot)$ is the principal branch of the Lambert W function and e is Euler's constant. The Lambert W function is a special function, the solution to a transcendental equation, so not trivial to compute on-chain. While there are methods to approximate $W_0(\cdot)$ (eg [9, 10]) these a) can require (nested) calls to $\log(\cdot)$ that are not ideal for constrained-compute environments and b) are best over particular ranges of inputs while for us the ratios of start and end weights can take a broad range of values. We choose a different approach that gives good performance. We can bound the value of from above and below by the arithmetic mean and geometric mean (respectively) of $\{w_i(t_0), w_i(t_f)\}$:

$$\sqrt{w_i(t_0)w_i(t_f))} < \tilde{w}_i^* < \frac{1}{2}\left(w_i(t_0) + w_i(t_f)\right). \qquad (76)$$

See Appendix E.2 for derivation. We find that using the arithmetic mean *of* the geometric[15] and arithmetic means of $\{w_i(t_0), w_i(t_f)\}$ provides a simple and effective method for approximating the optimal intermediate weight.[16]

[15]Note that $\lim_{|w(t_f)-w(t_0)|_1 \to 0}\left(\sum_{i=1}^{n}\sqrt{w_i(t_0)w_i(t_f)}\right) = 1$.

[16]We could use another mean here (and in the final construction of $\tilde{w}(t_k)$) geometric or harmonic say, but the arithmetic mean empirically works well and is cheaper to compute.

*From a two-step to multi-step approximation.* We can directly 'bootstrap' the approximations derived above into giving close-to-optimal many-step weight trajectories, even though the base analytic result, Eq (75), is only for a single intermediate point. Along a trajectory of many intermediate weights, the optimal $\tilde{w}_i$ at any stage in that trajectory will lie above the geometric mean of the prior and post weights and below their arithmetic mean.

The approximately-optimal f-1-step weight trajectory $\{\tilde{w}(t_k)\}_{k=1,\ldots,f-1}$ for going from $w(t_0)$ to $w(t_f)$ is made by taking the average of the linear interpolation between these values and the geometric interpolation between these values (see Appendix E.2.2):

$$\check{w}_i(t_k) = \frac{w_i^{\mathrm{AM}}(t_k) + w_i^{\mathrm{GM}}(t_k)}{\sum_{j=1}^{N}\left(w_j^{\mathrm{AM}}(t_k) + w_j^{\mathrm{GM}}\right)} \qquad (77)$$

$$w_i^{\mathrm{AM}}(t_k) = (1 - \frac{k}{f})w_i(t_0) + \frac{k}{f}w_i(t_f) \qquad (78)$$

$$w_i^{\mathrm{GM}}(t_k) = (w_i(t_0))^{\left(1-\frac{k}{f}\right)}(w_i(t_f))^{\frac{k}{f}}, \qquad (79)$$

where we explicitly are normalising our weight trajectories to enforce that they sum to 1 at each time step.

**Figure 2: Example weight interpolations done by a) linear interpolation, b) approximately-optimal (Eq (77)) and c) numerically-obtained optimal (Eq (73)), for a $N$ = 3 token pool with** w(t$_0$) = {0.05, 0.55, 0.4}, $w(t_f)$ = {0.4, 0.5, 0.1} **and $f$ = 1000. At this scale the differences between b) and c) are not easily apparent.**

**(a) Linear interpolation**

**(b) Approximately-optimal interpolation**

**(c) Optimal interpolation (numerical)**

*8.3.2 Numerical Examples.* Here we find the optimal trajectory $\{w^*\,(t_k)\}_{k=1,\ldots,f\text{-}1}$ by numerically solving Eq (73) for a given choice *of N, f,* w($t_0$) and w($t_f$).

In Figure 2 we compare linear interpolation and $\{\tilde{w}(t_k)\}_{k=1,...,f-1}$ and numerically-found $\{w^*(t_k)\}_{k=1,...,f-1}$ for a 3-token pool. Even though the overall weight change is large, w($t_0$) = {0.05, 0.55, 0.4} and w($t_f$) = {0.4, 0.5, 0.1}, and we do this over *f* = 1000 steps, our approximate method and the optimal are hard to visually distinguish.

In Figure 4 we take the differences between numerically-found $\{w^*(t_k)\}_{k=1,...,f-1}$ and each of linear and approximately-optimal interpolations. Clearly the approximately-optimal interpolation is much closer to optimal, with a largest absolute weight discrepancy of $\approx 0.003$ compared to $\approx 0.04$ for linear interpolation.

In this example the approximately-optimal trajectory $\{\check{w}(t_k)\}_{k=1,...,f-1}$ captures $\approx 95\%$ of the increase in pool value that one would get from swapping out linear interpolation with the numerical $\{w^*(t_k)_{k=1,...,f-1}$.

**Figure 4: Plots showing how much linear interpolation (a) and approximately-optimal trajectories (b) deviate from the numerically-obtained trajectory $\{w^*(t_k)\}_{k=1,...,f-1}$, in the same setup as Fig 2. The approximately-optimal method very closely matches the numerically-obtained optimal.**

(a) Optimal interpolation − Linear interpolation

**(b) Optimal interpolation - Approximately-optimal interpolation**

**8.4 Reserve and value changes for small weight changes**

Given the above, how TFMM pools' reserves and value change when the weight changes are small is of particular importance. From this we can show how TFMM pools can rebalance, including with fees present.

*8.4.1 No Fees.* If we have a very small change in weights,

$$\mathbf{w}(t') = \mathbf{w}(t_0) + \delta\mathbf{w}, \qquad (80)$$

where the components $\delta w_i \ll 1$. Starting with Eq (65), rearranging, then subbing in Eq (80), can obtain

$$R(t') = R(t_0) \frac{\mathbf{w}(t_0) + \delta\mathbf{w}}{\mathbf{w}(t_0)} \prod_{i=1}^{N} \left( \frac{w_i(t_0)}{w_i(t')} \right)^{w_i(t')} \qquad (81)$$

$$= R(t_0) \left( 1 + \frac{\delta\mathbf{w}}{\mathbf{w}(t_0)} \right) + O\left( \{(\delta w_i)^2\} \right). \qquad (82)$$

Using this with Eq (67) we get for small weight changes

$$V_{\delta w}(t') = \sum_{i=1}^{N} p_i(t')R_i(t') = V(t_0) + O\left( \{(\delta w_i)^2\} \right), \qquad (83)$$

See appendix D.3.1 for derivation of these results.

This means that for small weight changes, to first order, a TFMM pool is acting as an optimum rebalancer: the value of the pool does not change under rebalancing.

*8.4.2 With Fees.* Handling the trading function of a geometric mean market maker is often complicated as generally one ends up with implicit functions. We can use the results in Appendix B of [11], where it is shown that the effect of a trade with fees on pool value is to increase the value held in the pool (which is intuitive, swap fees being charged on a transaction means that the pool is taking in additional assets) and this amount is bounded from below by simply the fees times the value of the assets being traded into the pool:

$$V^{\gamma\text{-fees}} > V^{\text{no-fees}} + (1 - \gamma) \sum_{i=1}^{N} \Delta_i p_i, \qquad (84)$$

where $\Delta$ is the vector giving the assets being traded into the pool.

Applying this to Eq (83) gives us

$$V_{\delta w}^{\gamma\text{-fees}}(t') \gtrsim V(t_0) + (1 - \gamma) \sum_{i=1}^{N} \Delta_i p_i(t_0). \qquad (85)$$

We derive (Appendix D.3.2) a simpler form of this:

$$\Rightarrow V_{\delta w}^{\gamma\text{-fees}}(t') \gtrsim V(t_0) \left( 1 + (1 - \gamma) \sum_{i=1}^{N} \left( \mathbb{I}_{\delta w_i > 0} \delta w_i \right) \right). \qquad (86)$$

These results show how a TFMM pool rebalancing can lead, with swap fees present and under the assumptions made (including being in the limit of small weight changes and having constant prices), to an increase in value of the pool. Eq (86) shows this mathematically.

*8.4.3 Comparing to CEX rebalancing.* We can derive the equivalent results for a more vanilla rebalancing procedure: using a CEX. The CEX-rebalancing counterpart to Eq (86) is

$$V_{\text{trad}}^{\gamma\text{-fees}} > V(t_0) \left( 1 - (1 - \gamma_{\text{trad}}) \sum_{i=1}^{N} \left( \mathbb{I}_{\delta w_i > 0} \delta w_i \right) \right). \qquad (87)$$

See Appendices D.3.3, D.3.4 for the derivation. Here the pool is a taker, while in the TFMM-rebalancing results above the pool is a maker. This means here the pool is worth slightly less than $V(t_0)$ after the rebalance, rather than slightly *more.*

*8.4.4 Remarks on assumptions.* We are making various assumptions in the analysis in this subsection. For the 'vanilla'/CEX re-balancing, the dominating assumptions are that a) the rebalancing trade is done at the market price and b) there is no slippage. These assumptions are very generous.

For the TFMM rebalancing we are making simplifying assumptions around the arbitrage trade.

Firstly, we do not make assumptions of where the arbitrage trade sits within a broader strategy that the arbitrageur may be running. For example, we do not model how the arbitrageur obtains the tokens being traded in to the pool, nor what they do with the tokens obtained from the pool.

Secondly, we do not measure here the benefit to the arbitrageur of doing the trade, which depends on higher-order terms that we have not included in our analysis. Of course an arbitrageur only makes an arbitrage trade when they benefit from performing that trade. In AMM pools, this leads to the 'no arb region' (see 9.2 for more)-if the quoted prices of a DEX pool do not sufficiently vary from the market price no arb trade is possible.

In our numerical simulation work we include exactly this no-arb-region effect. In that fuller modelling TFMM pools do have to pay for rebalancing rather than increasing in value in line with Eq (86). This modelling here, however, does illuminate why it is that TFMM pools, in that framework, pay *less* to rebalance than vanilla rebalancing approaches: there is still a fee-gathering component to AMM rebalancing, from being a market maker.

## 9 MEV PROTECTION OF TFMM WEIGHT

## CHANGES

### 9.1 Outline of Potential Attack

An important question about TFMMs is whether their temporal dependence leads to an opportunity for front-running. Here we study such attacks, where an attacker aims to manipulate a TFMM pool shortly before a weight update. This situation is the TFMM equivalent of a 'sandwich attack', but with the attack being done against pool LPs rather than a trader.

It is important to note that changes in weight happen *between blocks*.[17] This means that any attacker would have to do an MEV attack over multiple blocks. This naturally reduces the possibility of 'sandwich attacks' on the weight updates as it thus requires *multi-block MEV manipulation.*

We perform mathematical analysis of the circumstances where attacks of this kind are possible and where they are impossible, *even when granting the attacker (for free and with certainty) the final transaction in one block and the first transaction in the next.*

We will derive the cost of manipulating a TFMM pool, with particular weights, such that it quotes a chosen price, rather than the true, reference, *market price.* We do this in the presence of fees. After having manipulated the price in this way, the weights of the pool change, and a 'boosted' arbitrage trade is then available in the following block. We derive the returns to an arbitrageur from [17]This makes the weight updates somewhat reminiscent of trades in Time-weighted average market makers. bringing the manipulated-pool back to quoting market prices after the weights have been updated.

From these quantities we can then calculate the overall return on this three-step process, the cost of manipulating the quoted prices of a pool, the weights changing, and the return of performing an arbitrage trade against the pool's new weights

This understanding motivates three extremely simple 'guardrails' for protection against such manipulation:

- limit on the size of weight changes,
- limit of trades as a fraction of pool reserves,
- limit on minimum allowed value in weights $w(t)$.

Later in this section we describe a battery of in-silico experiments where we perform this attack on TFMM pools, optimising not only the attacking trades but the state (weights, weight changes, reserves) of the pools themselves so as to make the attack as good as possible within the confines of the pools' 'guardrail parameters' listed above. For various settings of these guardrail parameters, attacks are not obtained for any settings of pool state, in line with our theoretical results.

### 9.2 Trading & Fees

Consider an *N*-token pool. For simplicity of analysis we trade a subset of 2 tokens for this attack-in our numerical work later we allow all tokens to be traded and empirically we find that optimal attacks are done by trading between a pair of tokens in this way. Those two tokens have weights w = $\{w_1, w_2\}$ and reserves R = $\{R_1, R_2\}$. We are here going to consider the quoted prices of the tokens in the pool.

We assume the existence of true, external market prices for the tokens. $m_{p,2} = m_p$ is the market price of the second token in terms of the first. $m_{p,1}$, the market price of the first token in terms of the second is simply the reciprocal of this: $m_{p,1} = 1/m_{p,2} = 1/m_p$.

(Without loss of generality, we will be using the first token as the numéraire throughout unless otherwise noted.[18])

Here we consider an attacker who wishes the pools quoted price for the second token, in terms of the first, to deviate from the market prices by a factor of $(1+\varepsilon)$. *Without loss of generality we will consider attacks where the initial price manipulation is done to increase the quoted price of the second token.* The attacker trades the first token into the pool and withdraws the second tokens.

This is without loss of generality as *a)* we can freely permute the indices of assets in a pool's basket and as *b)* a manipulation to increase the price of one token in the pool, by reducing its reserves, necessarily means we are decreasing the price of the other token. So an attack based around *decreasing* the price of token, rather than increasing it, is obtained simply by exchanging the indices of the tokens.

Recall Eq (34), with fees of $\tau = 1 - \gamma$ (commonly $\gamma = 0.997$), when trading in $\Delta_1 > 0$ of token 1 to receive $\Delta_2 > 0$ of token 2 the trade [18]Either you can imagine that the first token in the pool is a stablecoin in USD, say. Or it can be an arbitrary token, and we then are applying a linear scaling (that token's price) to our vanilla market prices to get them in the denomination of our particular chosen numéraire. must fulfill

$$(R_1 + \gamma \Delta_1)^{w_1} (R_2 - \Delta_2)^{w_2} \geq k = R_1^{w_1} R_2^{w_2}, \qquad (88)$$

with the best deal for the trader found when

$$(R_1 + \gamma \Delta_1)^{w_1} (R_2 - \Delta_2)^{w_2} = k = R_1^{w_1} R_2^{w_2}. \qquad (89)$$

Eq (89) can be rearranged into a neater form,

$$1 - \frac{\Delta_2}{R_2} = \left(1 + \gamma \frac{\Delta_1}{R_1}\right)^{-\frac{w_1}{w_2}}. \qquad (90)$$

When there are no fees (i.e. $\gamma = 1$), the quoted price of token 2 (that is, the ratio of $\Delta_1$ to $\Delta_2$ for an infinitesimal trade of token 1 for token 2) is $m_u := \frac{R_1}{R_2} \frac{w_2}{w_1}$ and we can expect $m_u = m_p$ at equilibrium. This is because we can expect arbitrageurs to interact with the pool until $m_u = m_p$.

However, when fees are present this is no longer the case. In fact, for a given weight vector there is a *range* of reserve values, and thus quoted prices, for which no arbitrage opportunity exists. We can get the quoted price, for a pool with fees, of the second token with the first token as numéraire (again, this is for an infinitesimal trade), by rearranging Eq (89) and taking limits:

$$m_{AMM} = m_{AMM,2} = \lim_{\Delta_1, \Delta_2 \to 0^+} \frac{\Delta_1}{\Delta_2} \qquad (91)$$

$$= \lim_{\Delta_1 \to 0^+} \frac{\Delta_1}{R_2} \left(1 - \left(1 + \gamma \frac{\Delta_1}{R_1}\right)^{-\frac{w_1}{w_2}}\right)^{-1} \qquad (92)$$

$$\Rightarrow m_{AMM} = m_{AMM,2} = \frac{1}{\gamma} \frac{R_1}{R_2} \frac{w_2}{w_1} = \frac{1}{\gamma} m_u. \qquad (93)$$

There is no arbitrage opportunity when this quoted price is greater than the market price, so when $m_{AMM} > m_p$.

We also need to consider the flipped trade, where the pool is taking in token 2 and sending out token 1. We can repeat the above analysis with this change and get the corresponding price for the first token with the second token as numéraire:

$$m_{AMM,1} = \frac{1}{\gamma} \frac{R_2}{R_1} \frac{w_1}{w_2}. \qquad (94)$$

Again, there is *no* arbitrage opportunity when $m_{AMM,1} > m_{p,1} = \frac{1}{m_{p,2}} = \frac{1}{m_p}$.

Putting these together, before the attack we assume that we are at equilibrium-that there is no arbitrage opportunity. So it must be the case that $\gamma m_p < m_u < \gamma^{-1} m_p$, as $\gamma < 1$ so $\gamma^{-1} > 1$. We are here considering attacks when the attacker is aiming to drive up the quoted price of the second token. So, the 'worst case' then for the pool is for the quoted price for the second token to already be at the extreme upper end of the allowed no-arbitrage range. We thus have

$$m_u = \frac{1}{\gamma} m_p \qquad (95)$$

$$\Rightarrow m_{\text{AMM}} = \frac{1}{\gamma} m_u = \frac{1}{\gamma^2} m_p \qquad (96)$$

just prior to the attack.

For further mathematical details of the attack see Appendix F, where it is shown how both the attacks trades and weight changes have to be 'sufficiently large' for attacks to be viable.

### 9.3 Defending Pools

Our analysis motivates a simple approach to prevent a pool being attackable. Simply cap trade size, as a proportion of current pool reserves, restrict the maximum change in weight allowed and do not allow any weights to get too small. Not allowing very large trades can be expected to have minimal to zero impact on the normal operation of TFMM pools, as they have large slippage associated with them. For instance, one could ban trades where reserves of the token being removed would be reduced by 20%, and ban trades that would increase the reserves of the token being traded in by more than 20%. That means we would be choosing $(\overline{\Delta}_1, \overline{\Delta}_2) = (0.2R_1, 0.2R_2)$.

Collectively we call these requirements the *'guardrails'*:

- Restriction on trade size as a proportion of pool reserves
- Requirement that weight vector always has entry above a minimum value
- Restriction on the absolute values of the entries of the weight change vector

Each guardrail has an associated *'guardrail parameter'*.

*Numerical Simulation.* In this section we describe the results of attempting to perform this attack in simulation. We are doing this to check that validity of the defence mechanisms we have put forward through studying the problem mathematically in the section above. We perform a battery of simulated attacks, where the attacker is aiming to maximise their return. But in this construction, as we are testing whether or not our protection methods work, not only does the attacker get to optimise their trades $\Delta$, $\Delta'$ but also the state of the pool (R, w) and the weight change $\Delta w$. The guardrails are applied to the process, and trades have to satisfy the pool's trading function. We use $\gamma = 0.997$ throughout.

Note that naturally we would expect, all else being equal, small maximum trade sizes, large minimum weight values, and small weight changes to be harder to attack.

As the problem is non-convex, we use gradient-based optimisation methods to maximise the attacker's return. We iterate over grids of values of the guardrails. As three parameters define the guardrails, for ease of plotting we do sweeps where one is held constant and the rest vary. We perform 10,000 separate attacks for each setting of the guardrail parameters, each a slightly different initialisation for the optimisation to act on, and we study 1083 different settings of these parameters for $\approx 10,000,000$ different attacks. We do this for a 3-token pool. Trades are not restricted to be one-hot but empirically the found attacks are.

We show the results in Fig 6. In line with our intuition, larger values of the minimum allowed weight and smaller values of the maximum allowed trade size and weight change are harder, in fact in this experiment impossible, to attack.

### 9.4 Remarks on MEV analysis

We used a very restrictive method of proof to get out the requirements for robustness to this attack. With more advanced mathematical methods these bounds could likely be made substantially

(a) Maximum allowed trade size guardrail fixed at 0.1 of pool reserves, vary maximum allowed weight change and minimum allowed weight.

(b) Minimum allowed weight guardrail fixed at 0.1 of pool reserves, vary maximum allowed weight change and maximum allowed trade size.

(c) Maximum allowed weight change guardrail fixed at 0.1 of pool reserves, vary minimum allowed weight and maximum allowed trade size.

Figure 6: Results from ~ 10,000,000 attacks, 3, 610,000 per subplot, showing the best attack return for each given setting of the guardrails. White indicates that the vanilla arbitrage for the weight change was superior to attack. Colour is Z (attack return minus vanilla arbitrage return), scaled by initial pool value.

tighter. Meanwhile, our numerical work, coming from the other end, cannot be assumed to be absolutely perfect - a white region in the plots above cannot be assumed to be completely robust to attack. With refined optimisation methods the understanding of the 'attack frontier' in terms of the guardrail parameters, the trade offs between safety and economic performance become less onerous.

## 10 DEMONSTRATION OF TFMM POOLS

**Figure 7: Simulated price data and resulting pool values for a TFMM pool (running a mean-reversion update rule, see QuantAMM whitepaper [12]), a CFMM pool, HODL.**

(a) **Synthetic price data.**

(b) **Total pool value**

Here we show a simple example of how TFMM pools can function. We generate 4 offset sinusoidal price trajectories (Fig 8a) and show how a TFMM pool running a mean-reversion update rule compares to a CFMM pool and to HODL.[19]

[19]The update rules is within the family given by Eq (10), see [12] for more detail.

## 11 COMPOSITE POOLS

A problem with existing AMMs which aspire to manage LPs value for them is that most trades are executed against pools containing only two or three assets: such small baskets of tokens have downsides as they do not allow for broad exposure to different tokens. LPs who seek to distribute their liquidity across a number of assets-that is, LPs who seek to deposit into pools covering something more like a TradFi portfolio-are therefore faced with a dilemma: they can deposit in a low-volume pool covering the assets of interest with their desired weighting (where on current AMMs they will still suffer impermanent loss); or they can deposit across a number of such small pools, therefore benefiting from the better trade volume, at the cost of manual, off-chain, management of their positions.

The architecture of TFMMs enables LPs to circumvent this dilemma, through *composite pools* constructed by "pooling pools": the liquidity placed in a composite pool is distributed across its underlying pools, enabling an LP to benefit from the volume in these underlying pools while covering their assets of interest. Moreover, composite pools can inherit TFMM pools' automatic re-balancing.

Further, the different pools in a composite pool can cover the *same* tokens, but with each 'base pool' having different update rules. One could have a composite pool constructed out of a momentum wETH-wBTC pool and an anti-momentum wETH-wBTC pool, say. The momentum pool might tend to perform better in some market conditions, the anti-momentum in others. If the composite pool itself runs a momentum strategy over these two base pools, it will be, in effect, dynamically changing its dominant strategy-depending on market conditions. This is a simple example, but captures the flavour of how composite pools could be used to build more advanced update rules, over the same basket, from simpler ones.

Another example could be the creation of a risk management update rule, this would allow the composite pool to re-balance according to the risk profiles of the underlying pools, allowing for LP controlled automatic risk management as well as automatic strategy based constituent token re-balancing. Of course composite pools can be made out of any combination of pools, including other composite pools, which can have between them any amount of overlap in tokens they contain.

The composite pool system also has the benefit of improving liquidity for traders, as liquidity need not be removed from small-basket high-volume pools in order to capitalize broader-based composite pools.

It is also worth noting that it is intrinsically highly-economical for a composite pool to move value between base pools, as LPs do not have to pay trade fees or withdrawal fees when their value goes from one base pool to another-this makes composite pools a very different offering from protocols that externally-manage LPs' holdings between different (non-dynamic) AMM pools.

In this section, we sketch the construction of three fundamental types of composite pool: subpools; (weighted) sums; and quotients. Recall that a TFMM pool is determined by a finite set $\mathcal{T} = \{i, j, ...\}$ of tokens, a $\mathcal{T}$-indexed vector $\mathbf{w}(t) = \{w_i\}_{i:\mathcal{T}}$ representing the

**Figure 9: Diagrammatic representation of a composite pool composed of two base pools. The base pools are shown left and right, while two mathematically-equivalent representations of a composite pool built on these basepools are given top and bottom. The top shows the 'cumulative' representation: the composite pool's holdings in terms of the underlying pools' reserve tokens. The bottom shows the 'LP token' representation: simply the LP tokens held from the underlying pools. Interpreting and using the cumulative view of a composite pool is very important for vault efficiency and price discovery as arbitrage on LP tokens is not realistic (as their circulation is so constrained).**

weights, and a $\mathcal{T}$-indexed vector $\mathbf{R} = \{R_i\}_{i:\mathcal{T}}$ representing the reserves, such that $\sum_{i:\mathcal{T}} w_i = 1$; this information is sufficient to determine the pool value $k(t)$ according to the trading function defined by Eq (4). Throughout this section, we will write $\mathcal{P}$ to indicate the tuple ($\mathcal{T}$, w, R) defining a pool.

## 11.1 Subpools

A simple example of a composite pool is the *subpool.* That is, given a pool $\mathcal{P}$ , an LP may wish to deposit into only in a subset $U \subset \mathcal{T}$ of its tokens, while otherwise benefiting from its trading volume and weights. In order to do so, the LP can deposit into the subpool $\mathcal{P}^{(U)}$ defined as follows. Its set of tokens is of course *U,* and the reserves $R_i^{(U)}$ are just the corresponding reserves $R_i$ in $\mathcal{P}$ , for $i \in U$. Then the subpool weights $w_i^U$ are given by $w_i^U = w_i / \sum_{i:U} w_i$ , and the pool value is

$$k^{(U)} = \frac{\sum_{i:U} w_i}{\prod_{j:\mathcal{T} \setminus U} R_j^{w_j}} \tag{97}$$

where *j* ranges over the set $\mathcal{T} \setminus U$ of tokens not in *U.*

## 11.2 Sums and weighted sums of pools

The next example of a composite pool is obtained by forming the *sum* of two pools $\mathcal{P}^{(1)}$ and $\mathcal{P}^{(2)}$, allowing an LP to distribute liquidity across the assets underlying the pools, without having to create a new pool, or perform the distribution manually. In combination with subpools, this allows LPs to deposit into complex, emergent, pools while benefiting from the underlying trade volume.

To construct the sum $\mathcal{P}^{(1)} + \mathcal{P}^{(2)}$, we form the disjoint union $\mathcal{T}^{(1)} + \mathcal{T}^{(2)}$ of the sets of tokens. The reserves are just the reserves of the underlying pools, and the weights $w_i^{(1+2)}$ are given by $w_i/2$, where $w_i$ is the underlying weight. A simple calculation then shows the value $k^{(1+2)}$ of the sum pool to be given by product of the square roots $\sqrt{k^{(1)}}\sqrt{k^{(2)}}$ of the values of the underlying pools.

The operation of summing pools naturally extends from this binary case to sums of arbitrary size. That is to say, given a collection of pools $\{\mathcal{P}^{(i)}\}_{i:I}$ one can form the corresponding sum composite pool $\sum_{i:I} \mathcal{P}^{(i)}$ by forming the disjoint union of the corresponding sets of tokens $\sum_{i:I} \mathcal{T}^{(i)}$ , and rescaling the weights $w_j^{(i)}$ by $1/|I|$. where $|I|$ is the size of the index set *I.*

The notion of sum composite pool extends further to a *weighted sum,* whereby each constituent pool $\mathcal{P}^{(i)}$ of a composite pool is associated with a 'composite' weight $\omega_i$. We write the corresponding pool as $\sum_{i:I} \omega_i \mathcal{P}^{(i)}$ , and the composite-weights $\omega_i$ are themselves constrained to sum to 1. The only difference from the 'uniform' case of the preceding paragraph is that now the underlying weights are rescaled by $\omega_i$, rather than $1/|I|$.

## 11.3 Composite pool re-balancing

A general weighted sum composite pool can equivalently be thought of as a 'pool of pools': a pool constructed from the liquidity tokens of the underlying pools $\mathcal{P}^{(i)}$ . That is, given a collection of pools $\{\mathcal{P}^{(i)}\}_{i:I}$ and corresponding weights $\omega_i$, we can form a new pool given by a weighted (geometric) sum of their underlying assets:

$$\prod_{i:I} R_{\mathcal{P}^{(j)}}^{\omega_j} = \prod_{i:I} \prod_{j:\mathcal{T}^{(i)}} R_{ij}^{\omega_i w_{ij}} = \prod_{i:I} k^{(i)^{\omega_i}} = k \tag{98}$$

where the composite pool weights $\omega_i$ satisfy the normalization rule that $\sum_{i:I} \omega_i = 1$. This invariant is clearly equal to the invariant of the weighted sum composite pool $\sum_{i:I} \omega_i \mathcal{P}^{(i)}$ .

Next, observe that we can think of the pool value $k^{(i)}$ as an unscaled 'price' for the pool $\mathcal{P}^{(i)}$ , by asking "how much would it cost to buy one unit of each of the pool's reserves?" The answer to this question is given by the sum

$\dot{\sum}_{j:\mathcal{T}^{(i)}} R_j \, p_j^{\text{TFMM}}$ , which is easily seen to be equal to the value $k^{(i)}$.

This means that we can use the values of the underlying pools in a composite pool as price signals, and update the composite-weights $\omega_i$ accordingly, using the same algorithm as for the assets in the underlying pools. This is the source of the automated, dynamic, abilities of TFMMs.

## 11.4 Quotient composite pools

The principal operation by which we construct composite pools is the (weighted) sum of pools. Since this operation involves a disjoint union of the underlying sets of tokens, tokens in pool $\mathcal{P}^{(1)}$ are treated as distinct from the tokens in pool $\mathcal{P}^{(2)}$, even when those pools have tokens in common and together constitute a composite pool. In order to combine the reserves of these shared tokens, we need to 'quotient' the composite pool by an equivalence relation identifying them.[20] Since, before quotienting, the reserves of the shared tokens have disjointed weights, when we perform this quotienting, we must not only sum up the reserves, but also adjust the weights accordingly.

In general, we can quotient any pool by any equivalence relation-not just composite pools by token identity—and since it simplifies the mathematics, this is the setting we work with here. Suppose therefore that ~ is an equivalence relation on a pool $\mathcal{P}$ and we wish to form the quotient pool $\mathcal{P}/\sim$. The set of tokens of $\mathcal{P}/\sim$ is given by the quotient $\mathcal{T}/\sim$ of the set $\mathcal{T}$ of tokens of $\mathcal{P}$, whose elements are equivalence classes [$i$], such that two tokens $j, k \in \mathcal{T}$ are elements of the same equivalence class [$i$] if and only if $j \sim k$ according to the equivalence relation ~. The reserves $\tilde{R}_{[i]}$ of 'token' [$i$] in $\mathcal{P}/\sim$ are given by the sum of the underlying reserves: $\tilde{R}_{[i]} = \sum_{j \in [i]} R_j$. We then want to define new weights such that

$$\tilde{R}_{[i]}^{\tilde{w}_i} = \Big( \sum_{j \in [i]} R_j \Big)^{\tilde{w}_i} = \prod_{j \in [i]} R_j^{w_j} . \qquad (99)$$

The weights $\tilde{w}_i$ making these equalities true are given by:

$$\tilde{w}_i = \frac{\sum_{j \in [i]} w_j \log R_j}{\log \tilde{R}_i} \qquad (100)$$

Note however that, in general, $\sum_i \tilde{w}_i \neq 1$, and so we must rescale the weights by $\tilde{w}_i \mapsto \tilde{w}_i / \sum_i \tilde{w}_i$. This in turn introduces a corresponding rescaling of $k$ to $\tilde{k} = k^{(1/\sum_i \omega_i)}$, but this is not a problem, since the underlying value $k$ is unchanged by these operations, and the quotient weights and reserves are fully determined by the underlying weights and reserves.[21]

## 11.5 Trading with composite pools, and depositing and withdrawing liquidity

Trading with (sum) composite pools has mathematically the same form as trading with any other pool, except with an extra degree of freedom: given a composite pool $\sum_{i:I}\omega_i \mathcal{P}^{(i)}$, one can trade the assets in pool $\mathcal{P}^{(1)}$ directly against the liquidity tokens of pool $\mathcal{P}^{(2)}$, since such a composite pool is mathematically equivalent to a pool of the liquidity tokens of the underlying pools. But since composite pools make this equivalence explicit, traders benefit from the liquidity of both kinds of trades. Moreover, composite pools can be arbitrarily deeply nested, and traders are able to trade across these levels of nesting; and, importantly for LPs, these trades at the composite pool level work to re-balance the assets deposited directly in the composite pool.

[20]Mathematically, this means constructing a true colimit as a coequalizer of a coproduct.

[21]Moreover, this means that all such quotienting can be performed in the front end, and hence off-chain, thereby saving on gas costs.

Depositing liquidity in a composite pool is like depositing liquidity in the underlying pools, except that by depositing liquidity in the composite pool itself, an LP benefits from this automatic re-balancing: their value is automatically moved from worse- to better-performing constituent pools. LPs can redeem composite pool liquidity tokens for the underlying assets, or trade automatically into withdrawing in a single token from the basket. For a worked example of a composite pool trade, see Appendix G.

As a composite pool trade requires the use of deposits and withdrawals, an exploit could be seen where a composite pool trade is somehow used to exit or transfer an LP position without triggering potential withdrawal fees for the originating pool. This could only be done via changes in the trader's LP token balances.

There are two solutions to this potential exploit. The first, less good, approach would be to charge withdrawal fees on every leg of the composite pool trade: it would mean that a composite pool was no better to run than a set of base TFMM pools with external management of LPs positions. The second, better, approach would be to check that the trader has the same number of LP tokens before and after a trade, ensuring that no original LP token has been liquidated by the end of the sequence of trades.

## REFERENCES

[1] Jason Milionis, Ciamac C. Moallemi, Tim Roughgarden, and Anthony Lee Zhang. Automated market making and loss-versus-rebalancing, 2022.

[2] Alexander Nezlobin. Ethereum block times, mev, and lp returns, 2022. URL https://medium.com/@alexnezlobin/ethereum-block-times-mev-and-lp-returns-5c13dc99e80.

[3] Hayden Adams, Noah Zinsmeister, and Dan Robinson. Uniswap v2 core, 2020.

[4] Fernando Martinelli and Nikolai Mushegian. Balancer: A non-custodial portfolio manager, liquidity provider, and price sensor., 2019.

[5] Alex Evans. Liquidity provider returns in geometric mean markets, 2019.

[6] Jack Sherman and Winifred J. Morrison. Adjustment of an inverse matrix corresponding to changes in the elements of a given column or a given row of the original matrix. The Annals of Mathematical Statistics, 20(621), 1949.

[7] Hayden Adams, Noah Zinsmeister, Moody Salem River Keefer, and Dan Robinson. Uniswap v3 core, 2021.

[8] Andrew Nguyen, Loi Luu, and Ming Ng. Kyberswap: Dynamic automated market making, 2021.

[9] Stefano D'Angelo, Leonardo Gabrielli, and Luca Turchet. Fast approximation of the lambert w function for virtual analog modelling. In International Conference on Digital Audio Effects (DAFx-19), volume 22, 2019.

[10] Robert Corless, David Jeffrey, and Donald Knuth. A sequence of series for the lambert w function. Proceedings of the International Symposium on Symbolic and Algebraic Computation, ISSAC, pages 197-204, 01 1997. doi: 10.1145/258726. 258783.

[11] Guillermo Angeris, Alex Evans, and Tarun Chitra. When does the tail wag the dog? curvature and market making, 2020.

[12] QuantAMM team. Quantamm whitepaper, 2023.

**Supplementary Material**

## A DERIVATION OF ONLINE WEIGHTED LEAST-SQUARES REGRESSION

### A.1 Background

*Simple linear regression.* In simple linear regression we have a single independent variable $x$ and a single dependent variable $y$. We are given $n$ pairs of values $\{(x_1, y_1), (x_2, y_2), ..., (x_n, y_n)\}$. We model the relationship in our data as

$$y_i = \alpha + \beta x_i + \epsilon_i, \qquad (A.101)$$

where $\epsilon_i$ is independent and identically distributed Gaussian noise. We aim to find the settings of $\alpha$ and $\beta$ that minimise the sum of square errors,

$$\alpha^*, \beta^* = \arg\min_{\alpha,\beta} \left( \sum_{i=1}^{n} (y_i - \alpha - \beta x_i)^2 \right). \qquad (A.102)$$

The optimal $\beta$, for n observations is

$$\beta_n^* = \frac{\sum_{i=1}^{n} (x_i - \overline{x})(y_i - \overline{y})}{\sum_{i=1}^{n} (x_i - \overline{x})^2}, \qquad (A.103)$$

where

$$\overline{x} = \frac{1}{n} \sum_{i=1}^{n} x_i \qquad (A.104)$$

$$\overline{y} = \frac{1}{n} \sum_{i=1}^{n} y_i. \qquad (A.105)$$

*Weighted Linear Regression.* In weighted linear regression we weight each datapoint by a factor $0 < g_i \leq 1$, and we aim to find the $\alpha$ and $\beta$ that minimise this weighted sum of squares,

$$\alpha^*, \beta^* = \underset{\alpha, \beta}{\arg\min} \left( \sum_{i=1}^{n} g_i \left( y_i - \alpha - \beta x_i \right)^2 \right). \qquad (A.106)$$

One reason for weighting is that some datapoints are viewed as being more important than others to regress accurately at-these are given higher weights. The optimal $\beta$, for n weighted observations is

$$\beta_n^* = \frac{\sum_{i=1}^{n} g_i \left( x_i - \overline{x} \right) \left( y_i - \overline{y} \right)}{\sum_{i=1}^{n} g_i \left( x_i - \overline{x} \right)^2}. \qquad (A.107)$$

We need our definitions of averages of observations to take account of our weights. We now have

$$\overline{x}_n = \sum_{i=1}^{n} \frac{g_i x_i}{G_n} = \frac{g_n x_n + G_{n-1} \overline{x}_{n-1}}{G_n}, \qquad (A.108)$$

$$\overline{y}_n = \sum_{i=1}^{n} \frac{g_i y_i}{G_n} = \frac{g_n y_n + G_{n-1} \overline{y}_{n-1}}{G_n}, \qquad (A.109)$$

$$G_n = \sum_{i=1}^{n} g_i. \qquad (A.110)$$

This now enables us to derive an online estimator for $\beta$.

*A.1.1 Online Estimate of $\beta$.* In our case, running a DeFi protocol, we are particularly concerned with computationally simple algorithms, so any naive approach where we do the calculations of Eqs (A. 104, A.105, A.107) from scratch whenever a new observation comes in is not ideal. Instead, we seek an *on-line* method, where we keep some running value of the parameter we care about, $\beta$, and then *update* that running value using the latest observations. Let us derive the overall online update equations. First, consider the numerator of Eq (A.107), which we will denote $a_n$:

$$a_n = \sum_{i=1}^{n} g_i \left( x_i - \overline{x}_n \right) \left( y_i - \overline{y}_n \right) \qquad (A.111)$$

$$= \sum_{i=1}^{n} g_i \left( x_i y_i + \overline{x}_n \overline{y}_n - \overline{x}_n y_i - x_i \overline{y}_n \right) \qquad (A.112)$$

$$= \sum_{i=1}^{n} g_i x_i y_i + G_n \overline{x}_n \overline{y}_n - \overline{x}_n \sum_{i=1}^{n} g_i y_i - \overline{y}_n \sum_{i=1}^{n} g_i x_i \qquad (A.113)$$

$$= \sum_{i=1}^{n} g_i x_i y_i - G_n \overline{x}_n \overline{y}_n \qquad (A.114)$$

We have repeatedly used the definitions above of $\overline{x}_n$ and $\overline{y}_n$. Now consider $\Delta a_n = a_n - a_{n-1}$, the difference between $a_n$ and $a_{n-1}$:

$$\Delta a_n = \sum_{i=1}^{n} g_i x_i y_i - G_n \overline{x}_n \overline{y}_n - \sum_{i=1}^{n-1} g_i x_i y_i + G_{n-1} \overline{x}_{n-1} \overline{y}_{n-1} \tag{A.115}$$

$$= g_n x_n y_n - G_n \overline{x}_n \overline{y}_n + G_{n-1} \overline{x}_{n-1} \overline{y}_{n-1}. \tag{A.116}$$

Now we sub in $\overline{x}_n = \frac{g_n x_n + G_{n-1} \overline{x}_{n-1}}{G_n}$ and $\overline{y}_{n-1} = \frac{G_n \overline{y}_n - g_n y_n}{G_{n-1}}$ :

$$\Delta a_n = g_n x_n y_n - G_n \frac{g_n x_n + G_{n-1} \overline{x}_{n-1}}{G_n} \overline{y}_n + G_{n-1} \overline{x}_{n-1} \frac{G_n \overline{y}_n - g_n y_n}{G_{n-1}} \tag{A.117}$$

$$= g_n x_n y_n - g_n x_n \overline{y}_n + \underbrace{(G_n - G_{n-1})}_{=g_n} \overline{x}_{n-1} \overline{y}_n - g_n \overline{x}_{n-1} y_n \tag{A.118}$$

$$= x_n(g_n y_n - g_n \overline{y}_n) + \overline{x}_{n-1}(g_n \overline{y}_n - g_n y_n) \tag{A.119}$$

$$= g_n(x_n - \overline{x}_{n-1})(y_n - \overline{y}_n). \tag{A.120}$$

Let's turn to consider the denominator of Eq (A.107), which we will denote $b_n$:

$$b_n = \sum_{i=1}^{n} g_i (x_i - \overline{x}_n)^2. \tag{A.121}$$

We also want to get an expression for $\Delta b_n = b_n - b_{n-1}$, analogous to that we just obtained for $\Delta a_n$ above. We can save ourselves a fair amount of effort by noticing that $b_n$ is $a_n$ with $y \to x$. Thus,

$$\Delta b_n = g_n(x_n - \overline{x}_{n-1})(x_n - \overline{x}_n). \tag{A.122}$$

*Re-weighting the data.* The above is all we need if the weights $g_i$ are known and fixed ahead of time. We, however, choose an exponentially-decaying weighting that itself updates with every new observation, so

$$g_i = \lambda^{n-i}, \tag{A.123}$$

where $0 < A < 1$. Under this rule, we pay more heed to recently gathered data. To be clear, this means that every time a new observation comes in, we must (post-fact) re-weight all previous data down by a factor A. This comes about because the weighting depends on the current value of *n*. In other words, when we get a new observation it's not just that we add it to the analysis and do an update; we also retrospectively down-weight all previous data. It turns out that with exponential weighting, we can do this re-weighting *online,* so still we are able to avoid recalculating quantities from scratch. Consider $G_n$. As $g_n = A^{n-n} = \lambda^0 = 1$ and as $g_{i-1} = \lambda q_i$,

$$G_n = 1 + \lambda G_{n-1}. \tag{A.124}$$

Let's now see what happens when we calculate $\overline{x}_n$ using Eq (A.108), but with this re-weighting (so $g_i \to \lambda g_i$):

$$\bar{x}_n = \frac{1 x_n + \sum_{i=1}^{n-1} (\lambda g_i x_i)}{\sum_{i=1}^{n-1} (\lambda g_i) + 1} \tag{A.125}$$

$$= \frac{x_n + \lambda \sum_{i=1}^{n-1} (g_i x_i)}{\lambda \sum_{i=1}^{n-1} (g_i) + 1} \tag{A.126}$$

$$= \frac{x_n + \lambda G_{n-1} \bar{x}_{n-1}}{\lambda G_{n-1} + 1} \tag{A.127}$$

$$= \frac{x_n + (G_n - 1) \bar{x}_{n-1}}{G_n} \tag{A.128}$$

$$= \bar{x}_{n-1} + \frac{x_n - \bar{x}_{n-1}}{G_n}. \tag{A.129}$$

The same holds for $\bar{y}$,

$$\bar{y}_n = \bar{y}_{n-1} + \frac{y_n - \bar{y}_{n-1}}{G_n}. \tag{A.130}$$

We can apply this re-weighting to considering online learning of $a_n$ via Eq (A.120), and get an update equation somewhat similar to Eq (A.124),

$$a_n = (x_n - \bar{x}_{n-1})(y_n - \bar{y}_n) + \lambda a_{n-1}. \tag{A.131}$$

And similarly for $b_n$, using Eq (A.122), we obtain

$$b_n = (x_n - \bar{x}_{n-1})(x_n - \bar{x}_n) + \lambda b_{n-1}. \tag{A.132}$$

Eqs (A.131, A.132) provide us a way to get $a_n$ and $b_n$ using $a_{n-1}$, $b_{n-1}$, as well as running values we can keep updated [$\bar{x}_n$ and $\bar{y}_n$, updated using Eqs (A.129, A.130)] and the new observation, $(x_n, y_n)$. Thus we now have an online estimator for $\beta_n$. Simply keep track of $\bar{x}_n$, $\bar{y}_n$, $\bar{a}_n$ and $\bar{b}_n$ using the equations given here, and then $\beta_n = a_n/b_n$.

## A.2 Weighted Least Squares for Time Series

We can naturally apply the above to time series, so $x$ will be the times as which we gain observations. We want local, denoised estimates of the current gradient. We are thus assuming that the model Eq (A. 101) holds only *locally*. As discussed in the main paper, this means we want local estimates of the gradient: the current, local $\beta$. It is natural to enforce this locality by giving to recent observations high weight and giving to older observations a low weight.

Things are made somewhat simpler if all our observations come at regular intervals. We can then directly identify $x_i = i$, so $i \in \mathbb{N}$ is simply the time index of the observation. We will continue with exponentially decaying weights: we give the most recent observation weight 1 and each observation further back in time gains a factor of $\lambda$. By 'most recent' observation we mean the one with the highest index. We have been gathering observations from $i = 1$ and we currently have t total observations, so far. (As we are now explicitly considering time series here, so from now on we will use $t$, not $n$, for the current timestep, the number of observations we have so far.)

*Re-indexing past data.* The above approach, however, has problems. Our running, exponentially-weighted, average of $x_i = i$, $\bar{x}_t$, will increase without limit as we gain ever more observations. In a computational implementation of this, we will necessarily, at some point, reach overflow. Further, in the meantime have to store and update this increasingly-large number.

We can avoid this by *re-indexing* our previous observations when we get a new one. This only works because our time series observations come at fixed intervals. This is in addition to the re-weighting of previous observations (updating $g_i$) that we are already doing.

**Figure A.10: Initial method of handling new time series datapoints—the new observation is simply inserted at the current time index $t$.**

Intuitively, by both having longer-ago datapoints downweighted and keeping recent, high-weight datapoints close to $t$ = 0, one can expect that, for example $\overline{x}_t$ will saturate at some finite value rather that growing without limit.

Concretely, with this method, rather than having it be that $x_i = i$, instead we have $\mathrm{x}_i = i - t$. (This means that $x_t$ = 0 and $x_{t-d} = -d$.) Subbing this in to Eq (A.108) gives us

$$\overline{x}_t = \frac{\sum_{i=1}^t g_i(i-t)}{G_t} = \frac{\sum_{i=1}^t g_i i}{G_t} - t\frac{\sum_{i=1}^t g_i}{G_t} = \frac{\sum_{i=1}^t g_i i}{G_t} - t = \overline{\overline{x}}_t - t,$$
$$(A.133)$$

where we have defined $\overline{\overline{x}}_t := \frac{1}{G_t}\sum_{i=1}^t g_i i$ . As $x_t$ = 0, and $g_i$ tends to zero exponentially fast, $b_t$, Eq (A.121), saturates at some value, which now we will obtain. Subbing our new definition of $\mathrm{x}_i$ into

**Figure A.11: The re-indexing method of handling new time series datapoints—all previous time series points are relabelled as having come from one increment back in the past and the new observation is put at $t = 0$.**

Eq (A.121) gives us

$$b_t = \sum_{i=1}^{t} g_i(i - t - \bar{\bar{x}}_t + t)^2 \qquad \text{(A.134)}$$

$$= \sum_{i=1}^{t} g_i(i - \bar{\bar{x}}_t)^2 \qquad \text{(A.135)}$$

$$= \sum_{i=1}^{t} g_i i^2 + \bar{\bar{x}}_t^2 G_t - 2\bar{\bar{x}}_t \sum_{i=1}^{t} g_i i \qquad \text{(A.136)}$$

$$= \sum_{i=1}^{t} g_i i^2 - \frac{1}{G_t}\left(\sum_{i=1}^{t} g_i i\right)^2. \qquad \text{(A.137)}$$

## A.3 Limiting Case as $t \to \infty$

Now let us consider what happens as we run this estimation procedure for a long time with $g_i = \lambda^{t-i}$ (i.e. as in Eq (A.123)). As $t \to \infty$ the update equations for online estimation of $\beta$ end up taking particularly simple forms; many terms within them converge to fixed values. We need to find the values and limits of various quantities:

1. $G_t$.

$$G_t = \sum_{i=1}^{t} g_i = \sum_{i=1}^{t} \lambda^{t-i} = \frac{1 - \lambda^t}{1 - \lambda} \qquad \text{(A.138)}$$

$$\Rightarrow \lim_{t \to \infty} G_t = \frac{1}{1 - \lambda}. \qquad \text{(A.139)}$$

.

2.

94

$$\sum_{i=1}^{t} g_i i = \sum_{i=1}^{t} \lambda^{t-i} i = \frac{\lambda \left(\lambda^t - 1\right) + (1-\lambda)t}{(1-\lambda)^2}. \qquad \text{(A.140)}$$

3. $\overline{\overline{x}}_{t}$.

$$\overline{x}_t = \frac{\sum_{i=1}^{t} \lambda^{t-i} i}{G_t} - t \qquad \text{(A.141)}$$

$$= \frac{\lambda \left(\lambda^t - 1\right) + (1-\lambda)t - (1-\lambda)(1-\lambda^t)t}{(1-\lambda)(1-\lambda^t)} \qquad \text{(A.142)}$$

$$= \frac{\lambda \left(\lambda^t - 1\right) + \lambda^t(1-\lambda)t}{(1-\lambda)(1-\lambda^t)} \qquad \text{(A.143)}$$

$$\Rightarrow \lim_{t \to \infty} \overline{x}_t = \frac{\lambda}{\lambda - 1}. \qquad \text{(A.144)}$$

4. $\overline{\overline{x}}_{t}$

$$\overline{\overline{x}}_t = \frac{1}{G_t} \sum_{i=1}^{t} g_i i = \frac{\lambda \left(\lambda^t - 1\right) + (1-\lambda)t}{(1-\lambda)(1-\lambda^t)}. \qquad \text{(A.145)}$$

5. $\sum_{i=1}^{t} g_i i^2$.

$$\sum_{i=1}^{t} g_i i^2 = \sum_{i=1}^{t} \lambda^{t-i} i^2 = \frac{(1-\lambda)^2 t^2 - \lambda(1+\lambda)\left(\lambda^t - 1\right) - 2\lambda(1-\lambda)t}{(1-\lambda)^3}. $$
$$\text{(A.146)}$$

6. $a_t$.

$$\Delta a_t = g_t (x_t - \overline{x}_{t-1})(y_t - \overline{y}_t) \qquad \text{(A.147)}$$

$$= 1(0 - \overline{x}_{t-1})(y_t - \overline{y}_t) \qquad \text{(A.148)}$$

$$= \frac{\lambda \left(\lambda^t - 1\right) + \lambda^t(1-\lambda)t}{(\lambda - 1)(1-\lambda^t)} \frac{1 - \lambda^t}{\lambda - \lambda^t}(y_t - \overline{y}_t) \qquad \text{(A.149)}$$

$$\Rightarrow \lim_{t \to \infty} \Delta a_t = \frac{1}{1 - \lambda}(y_t - \overline{y}_t). \qquad \text{(A.150)}$$

7. $b_t$.

$$b_t = \sum_{i=1}^{t} g_i i^2 - \frac{1}{G_t} \left(\sum_{i=1}^{t} g_i i\right)^2 \qquad \text{(A.151)}$$

$$= \frac{(1-\lambda)^2 t^2 - \lambda(1+\lambda)\left(\lambda^t - 1\right) - 2\lambda(1-\lambda)t}{(1-\lambda)^3}$$

$$- \frac{1 - \lambda}{1 - \lambda^t}\left(\frac{\lambda \left(\lambda^t - 1\right) + (1-\lambda)t}{(1-\lambda)^2}\right)^2 \qquad \text{(A.152)}$$

$$= \frac{\lambda - \lambda^{t+1}}{(1-\lambda)^3} - \frac{t^2 \lambda^t}{(1-\lambda)(1-\lambda^t)} \qquad \text{(A.153)}$$

$$\Rightarrow \lim_{t \to \infty} b_t = \frac{\lambda}{(1-\lambda)^3}. \qquad \text{(A.154)}$$

*Update Equations in the Limiting Case.* So from the above we can see that $G_t$, $\overline{x}_t$, $a_t$, $b_t$ all saturate at certain values as $t \to \infty$. Combining Eqs (A.139, A.144, A.150, A.154) with Eqs (A.130-A.131) gives us our overall update equations:

$$G_\infty = \frac{1}{1-\lambda} \qquad (A.155)$$

$$\overline{y}_t = \overline{y}_{t-1} + \frac{y_t - \overline{y}_{t-1}}{G_\infty} \qquad (A.156)$$

$$a_t = G_\infty(y_t - \overline{y}_t) + \lambda a_{t-1} \qquad (A.157)$$

$$\beta_t = \frac{(1-\lambda)^3}{\lambda} a_t. \qquad (A.158)$$

Identifying $y_t$ with the price trajectory $p(t)$ gives us the equations in the main paper, Eqs (5-7), completing this derivation.

### A.4 Memory length of gradient estimator

What is the 'memory length' of this gradient estimator? More technically, what is the look-back window for an unweighted estimator, Eq (A.103), such that that estimator the same statistical properties as the decaying estimator?

If we view the estimator Eq (A.107) as, in effect, an ersatz to $\frac{\Delta Y}{\Delta X}$, the memory length of the estimator is the value of '$\Delta X$', the denominator. Previously we have denoted the denominator in this weighted estimator $b$, in Eq (A.121).

For Eq (A.121), we already know the limiting value $\lim_{t \to \infty} b_t$: Eq (A.154) tells us this limit is $b_\infty = \frac{\lambda}{(1-\lambda)^3}$.

For the unweighted estimator, Eq (A.103), the denominator is $\sum_{i=1}^{t}(x_i - \overline{x})$ which we will denote $b_t$. Recall that in our case we have equally-spaced $x$ values, so $x_i = i - t$. The question becomes concretely: 'for a given $\lambda$, for what value of $t$ is it that $\check{b}_t = b_\infty$?'

Using the results in the section above, and calculating $\check{b}_t$ using standard results for summing natural numbers and the squares of natural numbers, (and approximating those sums by their highest-order terms) we find that[22]

$$t_{\mathrm{mem}} = \frac{2\sqrt[3]{6\lambda}}{1-\lambda}. \qquad (A.159)$$

[22]One can be slightly more formal and use ideas from results for the covariance *of* estimators, where we find that the covariance of the $\beta$ estimator is inversely proportional to $\sum_{i=1}^{t} g_i (x_i - \overline{x})^2$. Requiring the unweighted $\beta$ estimator (i.e. $g_i = 1$) to have the same covariance as the weighted $\beta$ estimator gets to the same idea of matching $b_t$ to $b_\infty$.

### B DERIVATION OF ONLINE WEIGHTED COVARIANCE AND PRECISION ESTIMATION

Many pool update rules make use of the variance/covariance or precision (inverse variance/covariance) of a data feed or between two data feeds. For example the tracking error is often used in traditional finance and that uses the variance of the difference in price between a position/asset and a benchmark, and in Markovitz mean-variance portfolio optimisation (which we will overview briefly in the next section) often the precision matrix over a set of assets is needed to weight them in a pool.

Here we will show how substantially-similar methods to those in the previous section can be used to get estimators for these two properties. We begin by noting that the weighted estimate of the gradient, Eq (A.107), is the ratio between a weighted covariance and a weighted variance (or, equivalently, the product of a weighted covariance and a weighted precision).

First we will cover covariance estimation, then precision estimation.

### B.1 Covariance Estimation

We are interested in the weighted maximum-likelihood estimate of the covariance between two (potentially multidimensional) data treams. We can then obtain the scalar data stream's variance, for example, as a special case. The weighted maximum likelihood estimate of the covariance matrix for a multidimensional data source x is

$$\Sigma_n^* = \frac{\sum_{i=1}^n g_i \, (\mathbf{x}_i - \overline{\mathbf{x}})^\top \, (\mathbf{x}_i - \overline{\mathbf{x}})}{\sum_{i=1}^n g_i}. \qquad (\text{B.160})$$

(Note that $x_i$ is the $i^{th}$ vector in a sequence of $n$ such vectors, NOT the $i^{th}$ element of a single x vector.) First we need to make our (vectorial) average weight-aware, as we did in Eq (A.108) for the scalar case, so $\overline{\mathbf{x}} \to \overline{\mathbf{x}}_n$:

$$\overline{\mathbf{x}}_n = \sum_{i=1}^n \frac{g_i \mathbf{x}_i}{G_n} = \frac{g_n \mathbf{x}_n + G_{n-1} \overline{\mathbf{x}}_{n-1}}{G_n}. \qquad (\text{B.161})$$

Now let us follow the approach used above for a. We will refer to the numerator of as Eq (B.160) as $A_n$:

$$\mathbf{A}_n = \sum_{i=1}^n g_i \, (\mathbf{x}_i - \overline{\mathbf{x}}_n) \, (\mathbf{x}_i - \overline{\mathbf{x}}_n)^\top \qquad (\text{B.162})$$

$$= \sum_{i=1}^n g_i \, \left( \mathbf{x}_i \mathbf{x}_i^\top + \overline{\mathbf{x}}_n \overline{\mathbf{x}}_n^\top - \overline{\mathbf{x}}_n \mathbf{x}_i^\top - \mathbf{x}_i \overline{\mathbf{x}}_n^\top \right) \qquad (\text{B.163})$$

$$= \sum_{i=1}^n g_i \, \left( \mathbf{x}_i \mathbf{x}_i^\top + \overline{\mathbf{x}}_n \overline{\mathbf{x}}_n^\top - 2 \mathbf{x}_i \overline{\mathbf{x}}_n^\top \right) \qquad (\text{B.164})$$

$$= \sum_{i=1}^n g_i \mathbf{x}_i \mathbf{x}_i^\top + G_n \overline{\mathbf{x}}_n \overline{\mathbf{x}}_n^\top - 2 \left( \sum_{i=1}^n g_i \mathbf{x}_i \right) \overline{\mathbf{x}}_n^\top \qquad (\text{B.165})$$

$$= \sum_{i=1}^n g_i \mathbf{x}_i \mathbf{x}_i^\top + G_n \overline{\mathbf{x}}_n \overline{\mathbf{x}}_n^\top - 2 G_n \overline{\mathbf{x}}_n \overline{\mathbf{x}}_n^\top \qquad (\text{B.166})$$

$$= \sum_{i=1}^n g_i \mathbf{x}_i \mathbf{x}_i^\top - G_n \overline{\mathbf{x}}_n \overline{\mathbf{x}}_n^\top \qquad (\text{B.167})$$

We have repeatedly used the definition above of $\overline{\mathbf{x}}_n$. Now consider $\Delta A_n = A_n - A_{n-1}$, the difference between $A_n$ and $A_{n-1}$:

$$\Delta a_n = \sum_{i=1}^n g_i \mathbf{x}_i \mathbf{x}_i^\top - G_n \overline{\mathbf{x}}_n \overline{\mathbf{x}}_n^\top - \sum_{i=1}^{n-1} g_i \mathbf{x}_i \mathbf{x}_i^\top + G_{n-1} \overline{\mathbf{x}}_{n-1} \overline{\mathbf{x}}_{n-1}^\top$$

$$(\text{B.168})$$

$$= g_n \mathbf{x}_n \mathbf{x}_n^\top - G_n \overline{\mathbf{x}}_n \overline{\mathbf{x}}_n^\top + G_{n-1} \overline{\mathbf{x}}_{n-1} \overline{\mathbf{x}}_{n-1}^\top. \qquad (\text{B.169})$$

Now we sub in Eq (B.161):

$$\Delta \mathbf{A}_n = g_n \mathbf{x}_n \mathbf{x}_n^\top - G_n \frac{g_n \mathbf{x}_n + G_{n-1}\overline{\mathbf{x}}_{n-1}}{G_n} \overline{\mathbf{x}}_n^\top + G_{n-1}\overline{\mathbf{x}}_{n-1} \left( \frac{G_n \overline{\mathbf{x}}_n - g_n \mathbf{x}_n}{G_{n-1}} \right)$$

$$\text{(B.170)}$$

$$= g_n \mathbf{x}_n \mathbf{x}_n^\top - g_n \mathbf{x}_n \overline{\mathbf{x}}_n^\top + \underbrace{(G_n - G_{n-1})}_{=g_n} \overline{\mathbf{x}}_{n-1}\overline{\mathbf{x}}_n^\top - g_n \overline{\mathbf{x}}_{n-1}\mathbf{x}_n^\top$$

$$\text{(B.171)}$$

$$= \mathbf{x}_n(g_n \mathbf{x}_n - g_n \overline{\mathbf{x}}_n)^\top + \overline{\mathbf{x}}_{n-1}(g_n \overline{\mathbf{x}}_n - g_n \mathbf{x}_n)^\top \qquad \text{(B.172)}$$

$$= g_n(\mathbf{x}_n - \overline{\mathbf{x}}_{n-1})(\mathbf{x}_n - \overline{\mathbf{x}}_n)^\top. \qquad \text{(B.173)}$$

Following the same reweighting procedure as above, we now get our online update equation for $A_n$ (the matrix counterpart to Eq (A. 131)):

$$\mathbf{A}_n = (\mathbf{x}_n - \overline{\mathbf{x}}_{n-1})(\mathbf{x}_n - \overline{\mathbf{x}}_n)^\top + \lambda \mathbf{A}_{n-1}. \qquad \text{(B.174)}$$

Following the approach in the above section, we naturally obtain online update equations for exponential-decaying weights. (Note that we are changing $n \to t$ as we are now explicitly indexing over time-labelled observations.) These equations are:

$$G_t = \sum_{i=1}^{t} g_i = \sum_{i=1}^{t} \lambda^{t-i} = \frac{1 - \lambda^t}{1 - \lambda} \qquad \text{(B.175)}$$

$$\overline{\mathbf{x}}_t = \overline{\mathbf{x}}_{t-1} + \frac{\mathbf{x}_t - \overline{\mathbf{x}}_{t-1}}{G_t} \qquad \text{(B.176)}$$

$$\mathbf{A}_t = (\mathbf{x}_t - \overline{\mathbf{x}}_{t-1})(\mathbf{x}_t - \overline{\mathbf{x}}_t)^\top + \lambda \mathbf{A}_{t-1} \qquad \text{(B.177)}$$

$$\Sigma_t = \frac{\mathbf{A}_t}{G_t}. \qquad \text{(B.178)}$$

To find the update equations in the limit as $t \to \infty$, simply sub in the form of $G_\infty$ from Eq (A.139) above, giving us:

$$G_\infty = \frac{1}{1 - \lambda} \qquad \text{(B.179)}$$

$$\overline{\mathbf{x}}_t = \overline{\mathbf{x}}_{t-1} + \frac{\mathbf{x}_t - \overline{\mathbf{x}}_{t-1}}{G_\infty} \qquad \text{(B.180)}$$

$$\mathbf{A}_t = \lambda \mathbf{A}_{t-1} + (\mathbf{x}_t - \overline{\mathbf{x}}_{t-1})(\mathbf{x}_t - \overline{\mathbf{x}}_t)^\top \qquad \text{(B.181)}$$

$$\Sigma_t = \frac{\mathbf{A}_t}{G_\infty}. \qquad \text{(B.182)}$$

Note that is we apply these equations to a scalar-valued x we obtain its variance.

*Alternative estimators.* The above update equations are for the maximum-likelihood estimator. One downside of this estimator is that it is biased. We can very simply apply the

**B.2 Precision Estimation**

Rather than storing the covariance matrix and then calculating the inverse (which is $O(N^3)$) we can instead directly store and update the inverse-covariance matrix, using the Sherman-Morison formula. We do this, again, via a exponentially-decaying estimator.

This enables us to perform online precision estimation, where our state-holding matrix is denoted S.

$$\overline{\mathbf{x}}_t = \overline{\mathbf{x}}_{t-1} + \frac{\mathbf{x}_t - \overline{\mathbf{x}}_{t-1}}{G_t} \qquad \text{(B.183)}$$

$$S_t = \frac{1}{\lambda} S_{t-1} \left( I - \frac{(\mathbf{x}_t - \overline{\mathbf{x}}_{t-1})(\mathbf{x}_t - \overline{\mathbf{x}}_t)^\top S_{t-1}}{\lambda + (\mathbf{x}_t - \overline{\mathbf{x}}_t)^\top S_{t-1}(\mathbf{x}_t - \overline{\mathbf{x}}_{t-1})} \right) \qquad \text{(B.184)}$$

$$\Sigma_t^{-1} = G_t S_t, \qquad \text{(B.185)}$$

where I is the identity matrix. As above, to find the update equations in the limit as $t \to \infty$, simply sub in the form of $G_\infty$ from Eq (A.139). The effective 'memory' of both this procedure and the online covariance estimator is

$$t_{\text{mem}} = \frac{1+\lambda}{(1-\lambda)}.$$

**C CONCENTRATED LIQUIDITY FOR MULTI-TOKEN POOLS**

First let us obtain Eq (45):

$$\check{k}(t) = \prod_{i=1}^{N} \check{R}_i^{w_i(t)} \qquad \text{(C.186)}$$

$$= \prod_{i=1}^{N} (\nu R_i)^{w_i(t)} \qquad \text{(C.187)}$$

$$= \prod_{i=1}^{N} (\nu)^{w_i(t)} \prod_{i=1}^{N} \left( R_i^{w_i(t)} \right) \qquad \text{(C.188)}$$

$$= \nu^{\sum_{i=1}^{N} w_i(t)} \prod_{i=1}^{N} R_i^{w_i(t)} \qquad \text{(C.189)}$$

$$= \nu \prod_{i=1}^{N} R_i^{w_i(t)} \qquad \text{(C.190)}$$

$$= \nu k(t) \qquad \text{(C.191)}$$

*NB: For the rest of this section of the appendix we are going to drop explicit time dependence for clarity.*

**C.1 Minimum and Maximum Reserves**

Say that we wish bound out post-trade underlying reserves, $R_i'$. What are the corresponding bounds on the virtual, scaled reserves, $\check{R}_i$?

*Minimum* $\check{R}_i'$. We bound the post-trade underlying reserves, $R_i'$, to be $(1 - \delta)R_i$ for $0 < \delta < 1$.

$$\check{R}'_{i,\min}(\delta) = (1 - \delta)R_i + (\nu - 1)R_i = (\nu - \delta)R_i. \qquad \text{(C.192)}$$

So the absolute minimum is when the underlying reserves go to zero, so $\check{R}'_{i,\min}(\delta = 1) = (v-1)R_i$, as in Eq (52).

*Maximum* $\check{R}'_i$. If all tokens but one have their virtual post-trade reserves reduced to $\check{R}'_{i,\min} = (v-1)R_i$, what are the virtual reserves of the one, maximised token? For the no-fees case, whatever trades took us to this situation must have, at minimum, preserved the invariant of the virtual pool, so

$$vk = \prod_{i=1}^{N} \check{R}'^{\,w_i}_i \qquad\qquad (\text{C.193})$$

$$= \prod_{\substack{i=1\\i\neq j}}^{N} \check{R}'^{\,w_i}_{i,\min} \check{R}'^{\,w_j}_{j,\max} \qquad\qquad (\text{C.194})$$

$$= \prod_{\substack{i=1\\i\neq j}}^{N} (v-\delta)^{\,w_i} \prod_{\substack{i=1\\i\neq j}}^{N} R'^{\,w_i}_i \check{R}'^{\,w_j}_{j,\max} \qquad\qquad (\text{C.195})$$

$$\Rightarrow vk = (v-\delta)'^{\,1-w_j} \frac{k}{R_j^{\,w_j}} \check{R}'^{\,w_j}_{j,\max} \qquad\qquad (\text{C.196})$$

$$\Rightarrow \check{R}'_{j,\max} = R_j v^{1/w_j} (v-\delta)^{1-1/w_j}, \qquad\qquad (\text{C.197})$$

as required. (With fees present, this simply becomes $\check{R}'_{j,\max}(\gamma) = R_j v^{1/w_j}(v-\gamma\delta)^{1-1/w_j}$, assuming that this change was done in one batch trade.)

## C.2 Interpreting the Transform

At this stage, it is worth reminding ourselves of the geometric construction behind this form of concentration. Recall that, speaking informally, the slippage in a trade is a function of the curvature of the underlying trading function. So to improve the experience of traders, we can aim to find a 'virtual' pool which has less curvature than the original, and expose that new virtual pool's trading function to traders to interact with. We want to find an invariant function of the same geometric form as the original, but scaled and translated in such a way that curvature is minimised.

In theory this gives us $N + 1$ degrees of freedom, one for each translation in a token direction and an overall scaling. But these movements of the trading function have the potential to change the quoted prices of the pool. If trading using the virtual trading function is done using prices that are not consistent, the system will create enormous and costly arbitrage opportunities. That is, the gradient of the virtual trading function with respect to virtual token reserves, evaluated at the virtual reserves that the true reserves are mapped to, has to match the gradients of the original trading function evaluated at the true reserves. These requirements takes up N degrees of freedom, meaning that we can parameterise the set of possible virtual reserves by a single parameter, *v*. Let us now discuss this in more mathematical depth.

*Why Linear, Uniform, Scaling of Reserves?* Consider a set of *N* monotonic, positive definite functions $\{f_i(\cdot)\}$, $t \in 1, ..., N$, which we use to make to our virtual reserves:

$$\check{R}_i = f_i(R_i). \qquad\qquad (\text{C.198})$$

The virtual pool has a constant $\check{k} = \prod_{i=1}^{N} f_i(R_i)^{w_i}$. A trade now happens, $\Delta_i$ being deposited and $\Lambda_i$ being withdrawn, that maintains (or increases) the virtual pool's constant. It is still the case that 1) the actual trade amounts, $\Delta_i$, $\Lambda_i$ must be added and subtracted the true reserves, as that is what it means to trade with a pool and 2) the actual trade amounts, $\Delta_i$, $\Lambda_i$ must be added and subtracted from the virtual reserves in the virtual invariant, because again that is what it is to run a pool. (Note that we handle the zero-fees case here, for simplicity, but the argument made here is not fundamentally changed by the presence of fees).

This means we can write down the generalised versions of Eqs (48-50):

$$R'_i = R_i + \Delta_i - \Lambda_i \qquad \text{(C.199)}$$

$$\check{R}'_i = f_i(R_i) + \Delta_i - \Lambda_i \qquad \text{(C.200)}$$

$$\Rightarrow \check{R}'_i = R'_i + (f_i(R_i) - 1)R_i. \qquad \text{(C.201)}$$

This enables us to write the generalised version of Eq (51):

$$\prod_{i=1}^{N} \check{R}'^{w_i}_i = \prod_{i=1}^{N} \left( R'_i + (f_i(R_i) - 1)R_i \right)^{w_i} = \check{k}' \qquad \text{(C.202)}$$

Because of this linearity we can apply the underlying logic of Eq (37) to our virtual pool invariant, that the marginal prices quoted by a pool for one token in terms of another is the gradient of the derivatives of the trading function w.r.t. each token's post-trade reserves, evaluated at the current reserves. Applying that here results in

$$p^{\text{virtual}}_{i,j} = \frac{\left( \frac{\partial}{\partial \mathbf{R}'} \check{k}' \right)_i}{\left( \frac{\partial}{\partial \mathbf{R}'} \check{k}' \right)_j} \Bigg|_{\mathbf{R}'=\mathbf{R}} \qquad \text{(C.203)}$$

$$= \frac{w_i}{w_j} \frac{\left( R'_j + (f_j(R_j) - 1)R_j \right)}{\left( R'_i + (f_i(R_i) - 1)R_i \right)} \Bigg|_{\mathbf{R}'=\mathbf{R}} \qquad \text{(C.204)}$$

$$= \frac{w_i}{w_j} \frac{f_j(R_j)}{f_i(R_i)}. \qquad \text{(C.205)}$$

We need the prices quoted by our virtual invariant to match the prices we obtain from the original invariant, Eq (37), otherwise allowing trades under the virtual invariant will not lead to the pool have the desired division of value between assets at equilibrium-i.e. these two sets of prices have to match for w to describe the division of pool value between token holdings. So we require that

$$\frac{f_j(R_j)}{f_i(R_i)} = \frac{R_j}{R_i}, \qquad \text{(C.206)}$$

which is satisfied for $f_k(x) = f(x) = vx$ for some constant $v$, as required.

### C.3 What should $v$ be set to?

Pool creators can choose a particular value based on their analysis, analogous to how update rules' parameters are set; but also, if they prefer, they can choose an external smart contract to be called at the same time as the weight update call to calculate a dynamic v(t) that depends on market conditions, which could include external oracle calls.

### D RESERVE-UPDATE DERIVATIONS

### D.1 Weights Constant, Prices Change

Here we derive Eq (59), the change in reserves of a pool where weights are fixed but market prices change. For simplicity we are assuming the no-fees case.

At $t_0$ we have the invariant of the pool

$$\prod_{i=1}^{N} R_i(t_0)^{w_i} = k, \qquad \text{(D.207)}$$

and by the requirement that this quantity does not change under trading, we also have that at a later time $t'$

$$\prod_{i=1}^{N} R_i(t')^{w_i} = k = \prod_{i=1}^{N} R_i(t_0)^{w_i}. \qquad \text{(D.208)}$$

Thus

$$\prod_{i=1}^{N} \left( \frac{R_i(t')}{R_i(t_0)} \right)^{w_i} = 1. \qquad \text{(D.209)}$$

Meanwhile, we are assuming that arbitrageurs trade with the pool until the quoted prices match the market prices. At time $t_0$ we have prices $p(t_0)$ and at time $t'$ we have prices $p(t')$. Using Eq (37), and without loss of generality using the first token as the num6raire, we have that at equilibrium

$$\frac{\frac{w_i}{R_i(t_0)}}{\frac{w_1}{R_1(t_0)}} = p_i(t_0) \qquad \text{(D.210)}$$

and

$$\frac{\frac{w_i}{R_i(t')}}{\frac{w_1}{R_1(t')}} = p_i(t'). \qquad \text{(D.211)}$$

Thus we have

$$\frac{p_i(t_0)}{p_i(t')} = \frac{R_i(t')R_1(t_0)}{R_i(t_0)R_1(t')}, \qquad \text{(D.212)}$$

$$\frac{R_i(t')}{R_i(t_0)} = \frac{p_i(t_0)R_1(t')}{p_i(t')R_1(t_0)}. \qquad \text{(D.213)}$$

Subbing Eq (D.213) into Eq (D.209), we get

$$\prod_{i=1}^{N} \left( \frac{R_i(t')}{R_i(t_0)} \right)^{w_i} = \prod_{i=1}^{N} \left( \frac{p_i(t_0)R_1(t')}{p_i(t')R_1(t_0)} \right)^{w_i} = 1 \qquad \text{(D.214)}$$

$$= \frac{R_1(t')}{R_1(t_0)} \prod_{i=1}^{N} \left( \frac{p_i(t_0)}{p_i(t')} \right)^{w_i} = 1 \qquad \text{(D.215)}$$

$$\Rightarrow \frac{R_1(t')}{R_1(t_0)} = \prod_{i=1}^{N} \left( \frac{p_i(t')}{p_i(t_0)} \right)^{w_i}. \qquad \text{(D.216)}$$

Now subbing Eq (D.216) into Eq (D.212) and rearranging we get

$$R_i(t') = R_i(t_0) \frac{p_i(t_0)}{p_i(t')} \prod_{j=1}^{N} \left( \frac{p_j(t')}{p_j(t_0)} \right)^{w_j}, \qquad \text{(D.217)}$$

as we have in Eq (59) in the main paper, completing this derivation.

D.2 Weights Change, Prices Constant

Here we derive Eq (65), the change in reserves of a pool where weights change but market prices are fixed. For simplicity we are assuming the no-fees case.

At time $t_0$ we have weights w($t_0$) and a block later $t' = t_0 + \delta_t$ we have weights w($t'$).

Just after the change in weights, we have the invariant of the pool

$$\prod_{i=1}^{N} R_i(t_0)^{w_i(t')} = k(t'), \qquad \text{(D.218)}$$

and by the requirement that this quantity does not change under trading, we also have that after trading

$$\prod_{i=1}^{N} R_i(t')^{w_i(t')} = k(t') = \prod_{i=1}^{N} R_i(t_0)^{w_i(t')}. \qquad \text{(D.219)}$$

$$\Rightarrow \prod_{i=1}^{N} \left( \frac{R_i(t')}{R_i(t_0)} \right)^{w_i(t')} = 1. \qquad \text{(D.220)}$$

Meanwhile, we are assuming that arbitrageurs trade with the pool until the quoted prices match the market prices. Prices are p($t_0$) before and after the change in weights. Using Eq (37), and without loss of generality using the first token as the num6raire, we have that initially, before the change in weights,

$$\frac{\frac{w_i(t_0)}{R_i(t_0)}}{\frac{w_1(t_0)}{R_1(t_0)}} = p_i(t_0) \qquad \text{(D.221)}$$

and then after both updating the weights & the pool reaching a new equilibrium

$$\frac{\frac{w_i(t')}{R_i(t')}}{\frac{w_1(t')}{R_1(t')}} = p_i(t_0). \qquad \text{(D.222)}$$

Thus we have

$$\frac{w_i(t')w_1(t_0)}{R_i(t')R_1(t_0)} = \frac{w_1(t')w_i(t_0)}{R_1(t')R_i(t_0)}, \qquad \text{(D.223)}$$

$$\frac{R_i(t')}{R_i(t_0)} = \frac{w_i(t')w_1(t_0)R_1(t')}{w_1(t')w_i(t_0)R_1(t_0)}. \qquad \text{(D.224)}$$

Subbing Eq (D.224) into Eq (D.220), we get

$$\prod_{i=1}^{N} \left( \frac{R_i(t')}{R_i(t_0)} \right)^{w_i(t')} = \prod_{i=1}^{N} \left( \frac{w_i(t')w_1(t_0)R_1(t')}{w_1(t')w_i(t_0)R_1(t_0)} \right)^{w_i(t')} = 1 \quad \text{(D.225)}$$

$$= \frac{w_1(t_0)R_1(t')}{w_1(t')R_1(t_0)} \prod_{i=1}^{N} \left( \frac{w_i(t')}{w_i(t_0)} \right)^{w_i(t')} = 1$$

$$\text{(D.226)}$$

$$\Rightarrow \frac{w_1(t_0)R_1(t')}{w_1(t')R_1(t_0)} = \prod_{i=1}^{N} \left( \frac{w_i(t_0)}{w_i(t')} \right)^{w_i(t')} . \tag{D.227}$$

Now subbing Eq (D.227) into Eq (D.224) and rearranging we get

$$R_i(t') = R_i(t_0) \frac{w_i(t')}{w_i(t_0)} \prod_{j=1}^{N} \left( \frac{w_j(t_0)}{w_j(t')} \right)^{w_j(t')} , \tag{D.228}$$

as we have in Eq (65) in the main paper, completing this derivation.

### D.3 Small weight changes

*D.3.1 TFMM pools, No Fees.* Here we derive Eq (82). Start with Eq (65), rearranging, sub in Eq (80) and expand out:

$$\mathbf{R}(t') = \mathbf{R}(t_0) \frac{\mathbf{w}(t_0) + \delta\mathbf{w}}{\mathbf{w}(t_0)} \prod_{i=1}^{N} \left( \frac{w_i(t_0)}{w_i(t')} \right)^{w_i(t')} \tag{D.229}$$

$$= \mathbf{R}(t_0) \frac{\mathbf{w}(t_0) + \delta\mathbf{w}}{\mathbf{w}(t_0)} \prod_{i=1}^{N} \left( \frac{w_i(t_0)}{w_i(t_0) + \delta w_i} \right)^{w_i(t_0) + \delta w_i} \tag{D.230}$$

$$= \mathbf{R}(t_0) \frac{\mathbf{w}(t_0) + \delta\mathbf{w}}{\mathbf{w}(t_0)} \prod_{i=1}^{N} \left( 1 + \frac{\delta w_i}{w_i(t_0)} \right)^{-w_i(t_0) - \delta w_i} \tag{D.231}$$

$$= \mathbf{R}(t_0) \frac{\mathbf{w}(t_0) + \delta\mathbf{w}}{\mathbf{w}(t_0)} \prod_{i=1}^{N} \left( 1 + (-w_i(t_0) - \delta w_i) \frac{\delta w_i}{w_i(t_0)} + \text{H.O.T.} \right) \tag{D.232}$$

$$= \mathbf{R}(t_0) \frac{\mathbf{w}(t_0) + \delta\mathbf{w}}{\mathbf{w}(t_0)} \prod_{i=1}^{N} (1 - \delta w_i) + \text{H.O.T.} \tag{D.233}$$

$$= \mathbf{R}(t_0) \frac{\mathbf{w}(t_0) + \delta\mathbf{w}}{\mathbf{w}(t_0)} \left( 1 - \sum_{i=1}^{N} \delta w_i \right) + \text{H.O.T.} \tag{D.234}$$

$$= \mathbf{R}(t_0) \frac{\mathbf{w}(t_0) + \delta\mathbf{w}}{\mathbf{w}(t_0)} + \text{H.O.T.} \tag{D.235}$$

$$= \mathbf{R}(t_0) \left( 1 + \frac{\delta\mathbf{w}}{\mathbf{w}(t_0)} \right) + \text{H.O.T.} \tag{D.236}$$

Here 'H.O.T.' means higher order terms in the elements of $\delta w$. In Eq (D.232) we have used the binomial expansion, which in Eq (D.233) we have approximated to just first-order terms in $\delta w_i$ (as the components of $\delta w$ are small).
In going from Eq (D.233) to Eq (D.234) we have kept only first-order terms in $\delta w_i$ when performing the product in Eq (D.233).

To go from Eq (D.234) to Eq (D.235) we have used that $\sum_{i=1}^{N} \delta w_i = 0$ (weight vectors sums to 1 at all times, so the sum of changes is necessarily zero).
Using Eq (D.236) with Eq (67), we get, for small weight changes,

$$V_{\delta w}(t') = \sum_{i=1}^{N} p_i(t')R_i(t') \qquad \text{(D.237)}$$

$$= \sum_{i=1}^{N} p_i(t_0)R_i(t') \qquad \text{(D.238)}$$

$$= \sum_{i=1}^{N} p_i(t_0)R_i(t_0)\left(1 + \frac{\delta w_i}{w_i(t_0)}\right) + \text{H.O.T.} \qquad \text{(D.239)}$$

Using $\sum_{i=1}^{N} \delta w_i = 0$ , we can simply this further:

$$V_{\delta w}(t') = \sum_{i=1}^{N} p_i(t_0)R_i(t_0)\left(1 + \frac{\delta w_i}{w_i(t_0)}\right) + \text{H.O.T.} \qquad \text{(D.240)}$$

$$= \sum_{i=1}^{N} p_i(t_0)R_i(t_0) + \sum_{i=1}^{N} \frac{p_i(t_0)R_i(t_0)}{w_i(t_0)}\delta w_i + \text{H.O.T.}$$
$$\qquad \text{(D.241)}$$

$$= \sum_{i=1}^{N} p_i(t_0)R_i(t_0) + \sum_{i=1}^{N} V(t_0)\delta w_i + \text{H.O.T.} \qquad \text{(D.242)}$$

$$= \sum_{i=1}^{N} p_i(t_0)R_i(t_0) + V(t_0)\underset{i=1}{\overset{N}{\cancel{\sum}}}^{0}\delta w_i + \text{H.O.T.} \qquad \text{(D.243)}$$

$$= \sum_{i=1}^{N} p_i(t_0)R_i(t_0) + \text{H.O.T.} \qquad \text{(D.244)}$$

$$= V(t_0) + \text{H.O.T..} \qquad \text{(D.245)}$$

where we have used Eq (58) to go from Eq (D.241) to Eq (D.242). Again, 'H.O.T.' means higher order terms in the elements of $\delta$w.

*D.3.2 TFMM pools, With Fees.* Here we derive Eq (86).

We start by thinking about what $\Delta_i$ is in Eq (85). It is the positive-value-only components in the vector giving the change in reserves from the arb-trade that brought the pool back into equilibrium (i.e. quoting market prices under its new weights). Denoting the raw change in reserves $\Phi := R(t') - R(t_0)$ then

$$\Delta_i = \mathbb{I}_{\Phi_i>0}\Phi_i, = \mathbb{I}_{R_i(t')-R_i(t_0)>0}\left(R_i(t') - R_i(t_0)\right), \qquad \text{(D.246)}$$

where $\mathbb{I}_f$ is the indicator function. Eq (82) gives us that $R_i(t')$ - $R_i(t_0) \simeq \frac{R_i(t_0)\delta w_i}{w_i(t_0)}$ , enabling an approximate[23] lower bound on the value of a TFMM pool after a small change in weight that has led to an arbitrageur rebalancing it to have reserves in line with its new weights:

$$V_{\delta w}^{\gamma\text{-fees}}(t') \gtrsim V(t_0) + (1-\gamma) \sum_{i=1}^{N} \left( p_i(t_0) \mathbb{I}_{\frac{R_i(t_0)\delta w_i}{w_i(t_0)}>0} \left( \frac{R_i(t_0)\delta w_i}{w_i(t_0)} \right) \right)$$

(D.247)

$$= V(t_0) + (1-\gamma) \sum_{i=1}^{N} \left( \mathbb{I}_{\delta w_i>0} \left( \frac{p_i(t_0)R_i(t_0)\delta w_i}{w_i(t_0)} \right) \right)$$

(D.248)

$$= V(t_0) + (1-\gamma) \sum_{i=1}^{N} \left( \mathbb{I}_{\delta w_i>0} \left( V(t_0)\delta w_i \right) \right) \quad \text{(D.249)}$$

$$\Rightarrow V_{\delta w}^{\gamma\text{-fees}}(t') \gtrsim V(t_0) \left( 1 + (1-\gamma) \sum_{i=1}^{N} \left( \mathbb{I}_{\delta w_i>0} \delta w_i \right) \right), \quad \text{(D.250)}$$

as required.

[23]Due to our first-order-in-$\delta w$ truncations.

*D.3.3 CEX rebalancing, No Fees.* Here we consider active rebalancing, where the pool's assets are rebalanced by going out to market to trade, by being a taker. As above we will assume prices are constant over the course of the rebalancing so $p_i(t_0) = p_i(t')$. Again, we have the weights change a small amount, as in Eq (80),

$$\mathbf{w}(t') = \mathbf{w}(t_0) + \delta\mathbf{w}. \quad \text{(D.251)}$$

An ideal weight change would mean that no cost at all is paid to rebalance, so $V(t_0) = V(t')$. That would then mean that after the weights have changed and this perfect rebalance has been done, we have that

$$w_i(t_0) + \delta w_i = \frac{p_i(t')R_i(t')}{V(t_0)}, \quad \text{(D.252)}$$

$$\Rightarrow R_i(t') = \frac{(w_i(t_0) + \delta w_i)\,V(t_0)}{p_i(t_0)}, \quad \text{(D.253)}$$

$$R_i(t') = \frac{(w_i(t_0) + \delta w_i)\,R(t_0)}{w_i(t_0)}, \quad \text{(D.254)}$$

$$R_i(t') = \left( 1 + \frac{\delta w_i}{w_i(t_0)} \right) R(t_0), \quad \text{(D.255)}$$

where we have made use of Eq (57) to write the post-update reserves in terms only of initial reserves, initial weights, and weight changes. This is exactly Eq (82) written in component form, which shouldn't be surprising as we have essentially just reversed the derivations in the above section.

*D.3.4 CEX rebalancing, With Fees.* Here we derive Eq (87).

A simple model for fees for this rebalance is to charge a fee amount on the outgoing leg of the trade. To keep similarity with how we parameterise fees in DEX trades, we will parameterise the fees as $1 - \gamma_{\text{trad}}$, so $\gamma_{\text{trad}} = 0.999$ would mean fees of 10bps.

As in the section above, we denote the outgoing leg of the trade $\Delta$, with

$$\Delta_i = \mathbb{I}_{R_i(t')-R_i(t_0)>0} \left( R_i(t') - R_i(t_0) \right) = \mathbb{I}_{\frac{\delta w_i}{w_i(t_0)}R(t_0)>0} \left( \frac{\delta w_i}{w_i(t_0)} R(t_0) \right)$$

(D.256)

Where we have used Eq (D.255) that tells us $R_i(t') - R_i(t_0) = \frac{\delta w_i}{w_i(t_0)} R(t_0)$ (for TFMM the equals sign was a = due to the small-$\delta w_i$ first-order approximation, here it is exact). This gives us Eq (87), our counterpart for CEX rebalancing to Eq (86),

$$V_{\text{trad}}^{\gamma\text{-fees}} > V(t_0) \left( 1 - (1 - \gamma_{\text{trad}}) \sum_{i=1}^{N} \left( \mathbb{I}_{\delta w_i > 0} \delta w_i \right) \right), \qquad \text{(D.257)}$$

as required.

## E WEIGHT INTERPOLATION METHODS

### E.1 Two-step updates are better than one-step updates

*E.1.1 A broad family of possible interpolations.* We will compare two possible weight change methods, against a background of constant prices. We have $\gamma = 1$.

The first is the simple 1-step process, Eq (D.228), derived above. Here we go directly from initial weights to final weights. For compactness here, we will denote $w(t_0) + \Delta w$ as $w(t_f)$. We have $w(t_0) \to w(t_f)$. The second process is to go to an intermediate set of weights $\tilde{w}$, be arbed to those weights, and then proceed to the final weights: $w(t_0) \to \tilde{w} \to w(t_f)$. The restriction we place here on the elements of $\tilde{w}$ is that $\forall i$, $\tilde{w}_i \in [w_i(t_0), w_i(t_f)]$. We enforce the standard requirements on weights, that $0 < \tilde{w}_i < 1$ and $\sum_{i=1}^{N} \tilde{w}_i = 1$.

We will show that the two-step process is always superior as it leads to greater pool reserves.

*One-step.* Eq (D.228) directly gives us the ratio of the change of reserves,

$$\frac{R_i(t_f)}{R_i(t_0)} = r_i^{1-\text{step}} = \frac{w_i(t_f)}{w_i(t_0)} \prod_{j=1}^{N} \left( \frac{w_j(t_0)}{w_j(t_f)} \right)^{w_j(t_f)}. \qquad \text{(E.258)}$$

And to the second leg,

*Two-step.* Applying Eq (D.228) to the first leg, we get

$$r_i^{1\text{st}-\text{step}} = \frac{\tilde{w}_i}{w_i(t_0)} \prod_{j=1}^{N} \left( \frac{w_j(t_0)}{\tilde{w}_j} \right)^{\tilde{w}_j}. \qquad \text{(E.259)}$$

And to the second leg

$$r_i^{2\text{nd}-\text{step}} = \frac{w_i(t_f)}{\tilde{w}_i} \prod_{j=1}^{N} \left( \frac{\tilde{w}_j}{w_j(t_f)} \right)^{w_j(t_f)}. \qquad \text{(E.260)}$$

This gives and overall change of reserves of

$$r_i^{2-\text{step}} = r_i^{1\text{st}-\text{step}} r_i^{2\text{nd}-\text{step}} = \frac{w_i(t_f)}{w_i(t_0)} \prod_{j=1}^{N} \left( \frac{w_j(t_0)}{\tilde{w}_j} \right)^{\tilde{w}_j} \left( \frac{\tilde{w}_j}{w_j(t_f)} \right)^{w_j(t_f)}.$$
$$\text{(E.261)}$$

*Comparison.* The ratio $r_i^{2-\text{step}} / r_i^{1-\text{step}}$ is

$$r_i^{2-\text{step}}/r_i^{1-\text{step}} = r = \prod_{j=1}^{N} \left(\frac{w_j(t_0)}{\tilde{w}_j}\right)^{\tilde{w}_j} \left(\frac{\tilde{w}_j}{w_j(t_f)}\right)^{w_j(t_f)} \left(\frac{w_j(t_f)}{w_j(t_0)}\right)^{w_j(t_f)}$$

(E.262)

$$= \prod_{j=1}^{N} \left(\frac{w_j(t_0)}{\tilde{w}_j}\right)^{\tilde{w}_j} \left(\frac{\tilde{w}_j}{w_j(t_0)}\right)^{w_j(t_f)}$$

(E.263)

$$\Rightarrow r = \prod_{j=1}^{N} \frac{w_j(t_0)^{\tilde{w}_j}}{w_j(t_0)^{w_j(t_f)}} \frac{\tilde{w}_j^{w_j(t_f)}}{\tilde{w}_j^{\tilde{w}_j}}.$$

(E.264)

If each term in this product is > 1, then we will have shown that the two step process leads to greater final reserves than a one-step process. Recall that $\forall i$, $w_i(t_0) < \tilde{w}_i < w_i(t_f)$. Let us now consider the $j^{\text{th}}$ term of the product. There are two cases to consider, either $w_j(t_f) > w_j(t_0)$ or $w_j(t_f) < w_j(t_0)$.

The $j^{\text{th}}$ term in the product is

$$f_j = \frac{w_j(t_0)^{\tilde{w}_j}}{w_j(t_0)^{w_j(t_f)}} \frac{\tilde{w}_j^{w_j(t_f)}}{\tilde{w}_j^{\tilde{w}_j}}.$$

(E.265)

$w_j(t_f) > w_j(t_0)$: If $w_j(t_f) > w_j(t_0)$, then $w_j(t_f) > \tilde{w}_j$ and $w_j(t_0) < \tilde{w}_j$. Thus $\tilde{w}_j = a_j w_j(t_0)$ for some $a_j > 1$. Subbing into Eq (E.265), we get

$$f_j = \frac{w_j(t_0)^{\tilde{w}_j}}{w_j(t_0)^{w_j(t_f)}} \frac{w_j(t_0)^{w_j(t_f)} a_j^{w_j(t_f)}}{w_j(t_0)^{\tilde{w}_j} a_j^{\tilde{w}_j}} = a_j^{w_j(t_f)-\tilde{w}_j} > 1.$$

(E.266)

$w_j(t_f) < w_j(t_0)$: If $w_j(t_f) < w_j(t_0)$, then $w_j(t_f) < \tilde{w}_j$ and $w_j(t_0) > \tilde{w}_j$. Thus $w_j(t_0) = b_j \tilde{w}_j$ for some $b_j > 1$. Subbing into Eq (E.265), we get

$$f_j = \frac{\tilde{w}_j^{\tilde{w}_j}}{\tilde{w}_j^{w_j(t_f)}} \frac{\tilde{w}_j^{w_j(t_f)}}{\tilde{w}_j^{\tilde{w}_j}} \frac{b_j^{\tilde{w}_j}}{b_j^{w_j(t_f)}} = b_j^{\tilde{w}_j-w_j(t_f)} > 1.$$

(E.267)

*Summary.* Thus for either increasing elements, $w_j(t_f) > w_j(t_0)$, or decreasing elements, $w_j(t_f) < w_j(t_0)$, the terms in the product $r$ are always > 1, therefore taking the two-step process is always superior, as required.

*E.1.2 Linear Interpolation.* Here we will derive Eq (71), finding the relationship between $R^{1\text{-step}}$, the reserves in the pool when we have directly updated the weights from $w(t_0) \to w(t_0) + \Delta w$, a one step process, and $R^{2\text{-step}}$, the reserves when we have done this weight update via a two step process: $w(t_0) \to w(t_0) + \frac{1}{2}\Delta w \to w(t_0) + \tilde{\Delta} w$. First Eq (D.228) derived above directly gives us the one-step value:

$$R_i^{1\text{-step}} = R_i(t')$$

(E.268)

$$= R_i(t_0)\frac{w_i(t_0) + \Delta w_i}{w_i(t_0)} \prod_{j=1}^{N} \left(\frac{w_j(t_0)}{w_j(t_0) + \Delta w_j}\right)^{w_j(t_0)+\Delta w_j}.$$

(E.269)

Now let's consider the two-step process. First we do half of the update,

$$R_i^{\Delta w/2} = R_i(t_0) \frac{w_i(t_0) + \frac{\Delta w_i}{2}}{w_i(t_0)} \prod_{j=1}^{N} \left( \frac{w_j(t_0)}{w_j(t_0) + \frac{\Delta w_j}{2}} \right)^{w_j(t_0) + \frac{\Delta w_j}{2}} . \tag{E.270}$$

And then completing this two-step process

$$R_i^{\text{2-step}} = R_i^{\Delta w/2} \frac{w_i(t_0) + \Delta w_i}{w_i(t_0) + \frac{\Delta w_i}{2}} \prod_{j=1}^{N} \left( \frac{w_j(t_0) + \frac{\Delta w_j}{2}}{w_j(t_0) + \Delta w_j} \right)^{w_j(t_0) + \Delta w_j} \tag{E.271}$$

$$= R_i(t_0) \frac{w_i(t_0) + \Delta w_i}{w_i(t_0)} \prod_{j=1}^{N} \frac{w_j(t_0)^{w_j(t_0) + \frac{\Delta w_j}{2}} \left( w_j(t_0) + \frac{\Delta w_j}{2} \right)^{\frac{\Delta w_j}{2}}}{\left( w_j(t_0) + \Delta w_j \right)^{w_j(t_0) + \Delta w_j}} . \tag{E.272}$$

Dividing $R_i^{\text{2-step}}$ by $R_i^{\text{1-step}}$ we get

$$\frac{R_i^{\text{2-step}}}{R_i^{\text{1-step}}} = \prod_{j=1}^{N} \left( 1 + \frac{\Delta w_j}{2 w_j(t_0)} \right)^{\frac{\Delta w_j}{2}} . \tag{E.273}$$

Thus we have that

$$\mathbf{R}^{\text{2-step}} = \mathbf{R}^{\text{1-step}} \prod_{j=1}^{N} \left( 1 + \frac{\Delta w_j}{2 w_j(t_0)} \right)^{\frac{\Delta w_j}{2}} , \tag{E.274}$$

as required.

### E.2 Optimal and approximately-optimal weight change procedures

While we show above that a broad family of possible interpolations (§E.1.1) and linear interpolations themselves (§E.1.2), can we do better?

Here we derive Eq (75), the optimal intermediate weight in a 2-step process in the limit of small weight changes.

Taking partial derivatives of Eq (E.264), we get

$$\frac{\partial r}{\partial \tilde{w}_i} = r \left( \frac{w_i(t_f)}{\tilde{w}_i} + \log \left( \frac{w_i(t_0)}{\tilde{w}_i} \right) - 1 \right) . \tag{E.275}$$

Solving for $\frac{\partial r}{\partial \tilde{w}_i} = 0$ gives us the trancendental equation

$$1 - \log \left( \frac{w_i(t_0)}{\tilde{w}_i} \right) = \frac{w_i(t_f)}{\tilde{w}_i} , \tag{E.276}$$

which has solution

$$\tilde{w}_i = \frac{w_i(t_f)}{W_0 \left( \frac{e \, w_i(t_f)}{w_i(t_0)} \right)} , \tag{E.277}$$

**109**

where $W_0(\cdot)$ is the principal branch of the function that solves the equation $w \exp w = x$, the Lambert W function.

As we have not required that $\sum_{i=1}^{N} \tilde{w}_i = 1$ Eq (E.277) is only valid in the limit $\lim_{|w(t_f)-w(t_0)|_1 \to 0}$.

*E.2.1 Bounding $\tilde{w}_i$ above and below.* To avoid having to calculate $W_0(\cdot)$ on chain we instead bound $\tilde{w}_i$ from above and below and then use the average of these bounds as an approximate value. We will bound $\tilde{w}_i$ from below by the geometric mean of the start and end weights, and from above by their arithmetic mean.

*Bounding from below.* We will show

$$\tilde{w}_i \geq \sqrt{w_i(t_0)w_i(t_f)}. \qquad (E.278)$$

We have that $\tilde{w}_i = \dfrac{w_i(t_f)}{W_0\left(\frac{ew_i(t_f)}{w_i(t_0)}\right)}$, which can be rearranged using the property $\dfrac{x}{W_0(x)} = \exp\big(W(x)\big)$ to

$$\tilde{w}_i = w_i(t_0) \exp\left(W_0\left(\frac{ew_i(t_f)}{w_i(t_0)}\right) - 1\right). \qquad (E.279)$$

Requiring $\tilde{w}_i \geq \sqrt{w_i(t_0)w_i(t_f)}$ is equivalent to

$$w_i(t_0) \exp\left(W_0\left(\frac{ew_i(t_f)}{w_i(t_0)}\right) - 1\right) \geq \sqrt{w_i(t_0)w_i(t_f)} \qquad (E.280)$$

$$\Rightarrow \exp\left(W_0\left(\frac{ew_i(t_f)}{w_i(t_0)}\right) - 1\right) \geq \sqrt{\frac{w_i(t_f)}{w_i(t_0)}} \qquad (E.281)$$

$$\Rightarrow W_0\left(\frac{ew_i(t_f)}{w_i(t_0)}\right) - 1 \geq \frac{1}{2}\log\left(\frac{w_i(t_f)}{w_i(t_0)}\right). \qquad (E.282)$$

Defining $u := \dfrac{w_i(t_f)}{w_i(t_0)}$ and $g(u) := W_0(eu) - 1 - \frac{1}{2}\log(u)$, we find that $g(u)$ has a single positive real root at $u = 1$, which means that Eq (E.282) reaches equality only for $\dfrac{w_i(t_f)}{w_i(t_0)} = 1$.

It is easy to show that

$$\frac{\partial g}{\partial u} = \frac{1}{2}\frac{W_0(eu) - 1}{u(1 + W_0(eu))} \qquad (E.283)$$

We find that at the root we have

$$\Rightarrow \left.\frac{\partial g}{\partial u}\right|_{u=1} = 0, \qquad (E.284)$$

(where we have used the result $W_0(e) = 1$). Further,

$$\frac{\partial^2 g}{\partial u^2} = \frac{1}{2}\frac{1 + 3W_0(eu) - (W_0(eu))^2 - (W_0(eu))^3}{u^2(1 + W_0(eu))^3} \qquad (E.285)$$

$$\Rightarrow \frac{\partial^2 g}{\partial u^2}\bigg|_{u=1} = \frac{1}{8}. \qquad (E.286)$$

As $g(u)$ has a single positive real root, which is a turning point with positive second derivative, $g(u) \geq 0$ for all real values of $u > 0$. Thus $W_0\left(\frac{ew_i(t_f)}{w_i(t_0)}\right) - 1 \geq \frac{1}{2}\log\left(\frac{w_i(t_f)}{w_i(t_0)}\right)$ and so $\tilde{w}_i \geq \sqrt{w_i(t_0)w_i(t_f)}$ required.

*Bounding from above.* We will show that

$$\tilde{w}_i \leq \frac{1}{2}\left(w_i(t_0) + w_i(t_f)\right) \qquad (E.287)$$

is satisfied under the requirement that weights have entries between 0 and 1.

Requiring $\tilde{w}_i \leq \frac{1}{2}\left(w_i(t_0) + w_i(t_f)\right)$ is equivalent to

$$w_i(t_0)\exp\left(W_0\left(\frac{ew_i(t_f)}{w_i(t_0)}\right) - 1\right) \leq \frac{1}{2}\left(w_i(t_0) + w_i(t_f)\right) \quad (E.288)$$

$$\Rightarrow \exp\left(W_0\left(\frac{ew_i(t_f)}{w_i(t_0)}\right) - 1\right) \leq \frac{1}{2}\left(1 + \frac{w_i(t_f)}{w_i(t_0)}\right) \qquad (E.289)$$

$$\Rightarrow W_0\left(\frac{ew_i(t_f)}{w_i(t_0)}\right) - 1 \leq \log\left(\frac{1}{2}\left(1 + \frac{w_i(t_f)}{w_i(t_0)}\right)\right). \qquad (E.290)$$

Defining $u := \frac{w_i(t_f)}{w_i(t_0)}$ and $h(u) := W_0(eu) - 1 - \log\left(\frac{1}{2}\left(1 + u\right)\right)$, we find that $h(u)$ has a single positive real root at $u = 1$, which means that Eq (E.290) reaches equality only for $\frac{w_i(t_f)}{w_i(t_0)} = 1$.

It is easy to show that

$$\frac{\partial h}{\partial u} = \frac{W_0(eu)}{u(1 + W_0(eu))} - \frac{1}{1+u} \qquad (E.291)$$

We find that at the root we have

$$\Rightarrow \frac{\partial h}{\partial u}\bigg|_{u=1} = 0, \qquad (E.292)$$

(where we have used the result $W_0(e) = 1$). Further,

$$\frac{\partial^2 h}{\partial u^2} = \frac{1}{u^2(1 + W_0(eu))} + \frac{1}{u^2(1 + W_0(eu))^2} - \frac{1}{u^2(1 + W_0(eu))^3} - \frac{2u + 1}{u^2(1 + u)^2}$$
$$(E.293)$$

$$\Rightarrow \frac{\partial^2 h}{\partial u^2}\bigg|_{u=1} = -\frac{1}{8}. \qquad (E.294)$$

As $h(u)$ has a single positive real root, which is a turning point with negative second derivative, $h(u) \leq 0$ for all

real values of $u > 0$. Thus $W_0 \left( \frac{e w_i(t_f)}{w_i(t_0)} \right) - 1 \leq \log \left( \frac{1}{2} \left( 1 + \frac{w_i(t_0)}{w_i(t_f)} \right) \right)$ and so $\tilde{w}_i \leq 2 \, (w_i(t_0) + w_i(t_f))$ as required.

*Plots.* Here we plot the arithmetic & geometric means of $w_i(t_0)$, $w_i(t_f)$ and the optimal $\tilde{w}_i$, showing the bounding we have derived.

**Figure E.12: Plots showing graphically how the bounds work and how they form an approximation to the optimal $\tilde{w}_i$.**

(a) The arithmetic means (green) and geometric means (red) of $w_i(t_0)$, $w_i(t_f)$, plotted as a function of $w_i(t_f)$ for 10 uniform values of $w_i(t_0)$ from 0.1 to 1.0. In blue are the optimal $\tilde{w}_i$. Note that for each set of curves the optima (blue) is bounded from below by the geometric mean (red) and from above by the arithmetic mean (green). The black line is y=x; when $w_i(t_0) = w_i(t_f)$ the means and the optima all converge.

(b) $\tilde{w}_i$ (blue) plotted as a function of $w_i(t_f)$ for 10 uniform values of $w_i(t_0)$ from 0.1 to 1.0. The 10 black curves are the arithmetic means of the geometric and arithmetic means of $w_i(t_0)$, $w_i(t_f)$ (the red and green curves above). This bound-average gives a close approximation to $\tilde{w}_i$ and is most accurate near y=x (i.e. $w_i(t_0) \approx w_i(t_f)$).

*F.2.2 Approximately-optimal trajectories.* We bootstrap our 'infinitesimal' results for optimal and approximately-optimal intermediate weights into a trajectory of many intermediates, Eqs (77-79).

$$\check{w}_i(t_k) = \frac{w_i^{\mathrm{AM}}(t_k) + w_i^{\mathrm{GM}}(t_k)}{\sum_{j=1}^{N} \left( w_j^{\mathrm{AM}}(t_k) + w_j^{\mathrm{GM}} \right)} \qquad \text{(E.295)}$$

$$w_i^{\mathrm{AM}}(t_k) = (1 - \frac{k}{f}) w_i(t_0) + \frac{k}{f} w_i(t_f) \qquad \text{(E.296)}$$

$$w_i^{\mathrm{GM}}(t_k) = (w_i(t_0))^{(1-\frac{k}{f})} (w_i(t_f))^{\frac{k}{f}}, \qquad \text{(E.297)}$$

This works as locally-intermediate values of $w_i^{\mathrm{AM}}(t_k)$ and $w_i^{\mathrm{GM}}(t_k)$ are themselves the arithmetic and geometric means of their immediate neighbours:

$$w_i^{\mathrm{GM}}(t_k) = \sqrt{w_i^{\mathrm{GM}}(t_{k-1}w_i^{\mathrm{GM}}(t_{k+1}))} \qquad \text{(E.298)}$$

$$w_i^{\mathrm{AM}}(t_k) = \frac{1}{2}\left(w_i^{\mathrm{GM}}(t_{k-1}+w_i^{\mathrm{GM}}(t_{k+1}))\right). \qquad \text{(E.299)}$$

So locally we have a sequence of relatively small weight changes, each $\tilde{w}_i(t_k)$ of which closely approximates Eq (75).

## F MATHEMATICAL ANALYSIS OF POTENTIAL ATTACK

In this potential attack, the attacker first manipulates the pool's quoted price for second token to be

$$m_{\mathrm{AMM},2}^{\mathrm{manip.}} = (1+\epsilon)m_p, \qquad \text{(F.300)}$$

where $\varepsilon \geq \varepsilon_0$. $\varepsilon_0$ is the 'do nothing' or 'NULL' value-equivalent to their being no attack carried out. When fees are present and we are in a worst-case scenario for the pool, $\varepsilon_0 > 0$.

$C(\varepsilon)$ denotes the cost to the attacker of performing the first, price-manipulating, trade, making clear the dependence of this cost on the scale of the price deviation the attacker does. $X(\varepsilon)$ denotes the return to the attacker from the post-weight-update arbitrage trade. The overall benefit to the attacker over not carrying out the attack and just being an arbitrageur, $Z(\varepsilon)$, is thus

$$Z(\epsilon) = X(\epsilon) - C(\epsilon) - X(\epsilon_0), \qquad \text{(F.301)}$$

When $Z(\varepsilon) > 0$ the return from the attack, $X(\varepsilon) - C(\varepsilon)$, is greater than the vanilla, just-doing-arbitrage return $X(\varepsilon_0)$. We can obtain bounds on $X(\varepsilon)$ and $C(\varepsilon)$ when fees are present without having them in closed form.

### F.1 The stages of the potential attack

*F.1.1 Cost of Manipulating Quoted Prices.* Post-trade, the quoted prices are

$$m_{\mathrm{attacker}} = m_p(1+\epsilon) = \frac{1}{\gamma}\frac{\frac{w_2}{R_2-\Delta_2}}{\frac{w_1}{R_1+\Delta_1}}. \qquad \text{(F.302)}$$

Subbing in that $m_p = \gamma m_u$, we find that after the attack trade

$$\frac{R_1+\Delta_1}{R_2-\Delta_2} = \gamma^2(1+\epsilon)\frac{R_1}{R_2}. \qquad \text{(F.303)}$$

Combining Eq (F.303) with Eq (89) and rearranging we have that

$$\left(1+\frac{\Delta_1}{R_1}\right)\left(1+\gamma\frac{\Delta_1}{R_1}\right)^{\frac{w_1}{w_2}} = \gamma^2(1+\epsilon) \qquad \text{(F.304)}$$

Similar manipulations give us

$$\left(1 - \frac{\Delta_2}{R_2}\right)^{-1}\left(1 + \frac{1}{\gamma}\left(\left(1 - \frac{\Delta_2}{R_2}\right)^{-\frac{w_2}{w_1}} - 1\right)\right) = \gamma^2\left(1 + \epsilon\right). \quad \text{(F.305)}$$

$C(\varepsilon)$, the *cost* of the attack to the manipulator, again using token 1 as the num6raire, is

$$C(\epsilon) = \Delta_1 - m_p\Delta_2. \quad \text{(F.306)}$$

Eq (F.304) links together $\Delta_1$, $R_1$, $\gamma$ and $\varepsilon$, and Eq (F.305) separately links $\Delta_2$, $R_2$, $\gamma$ and $\varepsilon$. These are *implicit* equations for $\Delta_1$ or $\Delta_2$ in terms of the other variables.
This means we cannot trivially write down $C(\varepsilon)$ in closed form. We can make progress as we need only either the ratio of $\Delta_1$ to $\Delta_2$ or the *partial derivatives* of the cost, of $\Delta_1$, and of $\Delta_2$, with respect to $\varepsilon$ for us to find a bound on $Z(\varepsilon)$.
*F.1.2 Change of Reserves of an Attacked Pool After a Weight Update.*
We assume that all this takes place fast enough that the market prices are constant-this could all take place in one block. After the price manipulation above we have new ('ed) reserves

$$R_1{}' = R_1 + \Delta_1 \quad \text{(F.307)}$$

$$R_2{}' = R_2 - \Delta_2 \quad \text{(F.308)}$$

The weights of the pool change, so now we have new (again, 'ed) weights $w_1' = w_1 + \Delta w_1$ and $w_2' = w_2 + \Delta w_2$.
After the arbitrage trade, the reserves of the pool will change again (to "ed values) such that the new weights, $w_1'$, $w_2'$ and the new post-arbitrage-trade reserves, $R_1''$, $R_2''$, minimise the value in the pool (thus maximising the returns to the arb). We thus have

$$R_1{}'' = R_1{}' - \Delta_1' \quad \text{(F.309)}$$

$$R_2{}'' = R_2 + \Delta_2'. \quad \text{(F.310)}$$

The return to the arbitrageur is

$$X(\epsilon) = \Delta_1' - m_p\Delta_2' \quad \text{(F.311)}$$

What is the best-for-the-arb trade? Instead of directly obtaining the value of $X(\varepsilon)$ we will upper bound its value by $X_{\gamma=1}(\varepsilon)$ (the return to the arbitrageur when the arbitrageur's trade takes place in a no-fees way-$\gamma = 1$ for this trade). Intuitively $X_{\gamma=1}(\varepsilon) > X(\varepsilon)$ (after all it would be surprising if fees made the trade cheaper), and in Appendix F.3 we prove that this is indeed the case.
And thus that

$$m_{\text{AMM}}' = m_u' = \frac{\frac{w_2'}{R_2''}}{\frac{w_1'}{R_1''}} = m_p, \quad \text{(F.312)}$$

Combining Eqs (F.303) and (F.312) we get

$$\frac{\frac{w_2'}{R_2''}}{\frac{w_1'}{R_1''}} = \frac{1}{\gamma}\frac{1}{1 + \epsilon}\frac{\frac{w_2}{R_2'}}{\frac{w_1}{R_1'}} \quad \text{(F.313)}$$

$$\Rightarrow \frac{R_2''}{R_2'} = \gamma(1+\epsilon)\frac{w_2'}{w_2}\frac{w_1}{w_1'}\frac{R_1''}{R_1'}. \qquad \text{(F.314)}$$

Thus we can consider the no-fees invariant before and after this arb-trade:

$$\tilde{k}' = R_1'^{w_1'}R_2'^{w_2'} = R_1''^{w_1'}R_2''^{w_2'} \qquad \text{(F.315)}$$

$$\Rightarrow 1 = \left(\frac{R_1''}{R_1'}\right)^{w_1'}\left(\frac{R_2''}{R_2'}\right)^{w_2'}. \qquad \text{(F.316)}$$

Using Eq (F.314) we get

$$1 = \left(\frac{R_1''}{R_1'}\right)^{w_1'}\left(\gamma^2(1+\epsilon)\frac{w_2'}{w_2}\frac{w_1}{w_1'}\frac{R_1''}{R_1'}\right)^{w_2'}, \qquad \text{(F.317)}$$

$$\Rightarrow \frac{R_1''}{R_1'} = \left(\frac{w_2}{w_2'}\frac{w_1'}{w_1}\frac{1}{\gamma}\frac{1}{1+\epsilon}\right)^{\frac{w_2'}{w_1'+w_2'}}, \qquad \text{(F.318)}$$

and thus, similarly, that

$$\frac{R_2''}{R_2'} = \left(\frac{w_2}{w_2'}\frac{w_1'}{w_1}\frac{1}{\gamma}\frac{1}{1+\epsilon}\right)^{\frac{-w_1'}{w_1'+w_2'}}. \qquad \text{(F.319)}$$

From algebraic manipulation we obtain that

$$\Delta_1' = R_1'\left[1 - \left(\frac{w_2}{w_2'}\frac{w_1'}{w_1}\frac{1}{\gamma}\frac{1}{1+\epsilon}\right)^{\frac{w_2'}{w_1'+w_2'}}\right], \qquad \text{(F.320)}$$

$$\Delta_2' = R_2'\left[\left(\frac{w_2}{w_2'}\frac{w_1'}{w_1}\frac{1}{\gamma}\frac{1}{1+\epsilon}\right)^{\frac{-w_1'}{w_1'+w_2'}} - 1\right], \qquad \text{(F.321)}$$

Our upper bound on the return to the arbitrageur is thus

$$X_{\gamma=1}(\epsilon) = \Delta_1' - m_p\Delta_2' \qquad \text{(F.322)}$$

$$\Rightarrow X_{\gamma=1}(\epsilon) = R_1'\left[1 - \left(\frac{w_2}{w_2'}\frac{w_1'}{w_1}\frac{1}{\gamma}\frac{1}{1+\epsilon}\right)^{\frac{w_2'}{w_1'+w_2'}}\right]$$

$$- m_p R_2'\left[\left(\frac{w_2}{w_2'}\frac{w_1'}{w_1}\frac{1}{\gamma}\frac{1}{1+\epsilon}\right)^{\frac{-w_1'}{w_1'+w_2'}} - 1\right]. \qquad \text{(F.323)}$$

### F.2 Putting it all together: When is there no extractable value?

Our upper bound on $Z(\varepsilon)$ is thus:

$$Z(\epsilon) \leq \tilde{Z}(\epsilon) = X_{\gamma=1}(\epsilon) - C(\epsilon) - X_{\gamma=1}(\epsilon_0). \qquad \text{(F.324)}$$

*F.2.1 Bounding via gradients of $Z(\varepsilon)$.* Recall that there is a 'NULL' value of $\varepsilon$, $\varepsilon_0$, which corresponds to no-price-manipulation. As $\Delta_1(\varepsilon_0) = \Delta_2(\varepsilon_0) = 0$, $Z(\varepsilon_0) = \tilde{Z}(\varepsilon_0) = 0$.

We want to find settings of pool parameters such that $Z(\varepsilon) < 0$ for all $\varepsilon > \varepsilon_0$. If $\frac{\partial \tilde{Z}(\epsilon)}{\partial \epsilon} < 0$ for all $\varepsilon > \varepsilon_0$ (i.e. if $Z(\varepsilon)$ is a monotonically non-increasing function for $\varepsilon > \varepsilon_0$) then $Z(\varepsilon) < 0$ for all $\varepsilon > \varepsilon_0$. In the zero fees case the 'NULL' value $\varepsilon_0 = 0$.

Taking partial derivatives of $\tilde{Z}(\varepsilon)$ w.r.t. $\varepsilon$ we get

$$\frac{\partial \tilde{Z}(\epsilon)}{\partial \epsilon} = \frac{\partial}{\partial \epsilon}\left(\Delta_1' - \Delta_1\right) + m_p \frac{\partial}{\partial \epsilon}\left(\Delta_2 - \Delta_2'\right), \qquad \text{(F.325)}$$

so if $\frac{\partial}{\partial \epsilon}\left(\Delta_1' - \Delta_1\right) \leq 0$ and $\frac{\partial}{\partial \epsilon}\left(\Delta_2 - \Delta_2'\right) \leq 0$, then we can guarantee that the attack will not work. *Gradient of* $\Delta_1' - \Delta_1$ *w.r.t. $\varepsilon$.* Using Eq (F.320), recalling that $R_1' = R_1 + \Delta_1$, we have that

$$\Delta_1' - \Delta_1 = R_1 - \left(\frac{w_2}{w_2'} \frac{w_1'}{w_1} \frac{1}{\gamma} \frac{1}{1+\epsilon}\right)^{\frac{w_2'}{w_1'+w_2'}} (\Delta_1 + R_1) \quad \text{(F.326)}$$

$$\Rightarrow \frac{\partial}{\partial \epsilon}\left(\Delta_1' - \Delta_1\right) = \left(\frac{w_2}{w_2'} \frac{w_1'}{w_1} \frac{1}{\gamma} \frac{1}{1+\epsilon}\right)^{\frac{w_2'}{w_1'+w_2'}}$$
$$\times \left(\frac{1}{1+\epsilon} \frac{w_2'}{w_1'+w_2'} (\Delta_1 + R_1) - \frac{\partial \Delta_1}{\partial \epsilon}\right). \quad \text{(F.327)}$$

We find that (see Appendix F.4.1)

$$\frac{\partial \Delta_1}{\partial \epsilon} = \frac{\gamma^2 R_1}{\left(1 + \gamma \frac{w_1}{w_2}\left(1 + \frac{\Delta_1}{R_1}\right)\left(1 + \gamma \frac{\Delta_1}{R_1}\right)^{-1}\right)\left(1 + \gamma \frac{\Delta_1}{R_1}\right)^{\frac{w_1}{w_2}}}. \quad \text{(F.328)}$$

Subbing this into Eq (F.327), and using Eq (F.304), for $\frac{\partial}{\partial \epsilon}\left(\Delta_1' - \Delta_1\right) \leq 0$ it must be that

$$\frac{w_2'}{w_1'+w_2'}\left(1 + \gamma \frac{w_1}{w_2}\left(1 + \frac{\Delta_1}{R_1}\right)\left(1 + \gamma \frac{\Delta_1}{R_1}\right)^{-1}\right) \leq 1, \qquad \text{(F.329)}$$

where we have used that $\left(\frac{w_2}{w_2'} \frac{w_1'}{w_1} \frac{1}{\gamma} \frac{1}{1+\epsilon}\right)^{w_2'} > 0$ when $w_1 \in (0, 1)$, $w_2 \in (0, 1)$, $w_1' \in (0, 1)$, $w_2' \in (0, 1)$, $0 < \gamma < 1$, and $\epsilon > \varepsilon_0$.

*Gradient of* $\Delta_2 - \Delta_2'$ *w.r.t. $\varepsilon$.* Using Eq (F.321), recalling that $R_2' = R_2 - \Delta_2$, we have that

$$\Delta_2 - \Delta_2' = R_2 + \left(\frac{w_2}{w_2'} \frac{w_1'}{w_1} \frac{1}{\gamma} \frac{1}{1+\epsilon}\right)^{-w_1'} (\Delta_2 - R_2) \quad \text{(F.330)}$$

$$\Rightarrow \frac{\partial}{\partial \epsilon}\left(\Delta_2 - \Delta_2'\right) = \left(\frac{w_2}{w_2'}\frac{w_1'}{w_1}\frac{1}{\gamma}\frac{1}{1+\epsilon}\right)^{\frac{-w_1'}{w_1'+w_2'}}$$
$$\times \left(\frac{1}{1+\epsilon}\frac{w_1'}{w_1'+w_2'}\left(\Delta_2 - R_2\right) + \frac{\partial \Delta_2}{\partial \epsilon}\right). \text{ (F.331)}$$

We find that (see Appendix F.4.2)

$$\frac{\partial \Delta_2}{\partial \epsilon} = \frac{\gamma^3 R_2 \left(1 - \frac{\Delta_2}{R_2}\right)^2}{\left(1 + \frac{w_2}{w_1}\right)\left(1 - \frac{\Delta_2}{R_2}\right)^{-\frac{w_2}{w_1}} - (1 - \gamma)} \tag{F.332}$$

Subbing this into Eq (F.331), and using Eq (F.305), for $\frac{\partial}{\partial \epsilon}\left(\Delta_2 - \Delta_2'\right) \leq$ 0 it must be that

$$\frac{w_1'}{w_1' + w_2'} \geq \frac{1 - (1 - \gamma)\left(1 - \frac{\Delta_2}{R_2}\right)^{\frac{w_2}{w_1}}}{1 + \frac{w_2}{w_1} - (1 - \gamma)\left(1 - \frac{\Delta_2}{R_2}\right)^{\frac{w_2}{w_1}}}, \tag{F.333}$$

where we have used that $\left(\frac{w_2}{w_2'}\frac{w_1'}{w_1}\frac{1}{\gamma}\frac{1}{1+\epsilon}\right)^{-w_1'} > 0$ when $w_1 \in (0, 1)$, $w_2 \in (0, 1)$, $w_1' \in (0, 1)$, $w_2' \in (0, 1)$, $0 < \gamma < 1$, and $\epsilon > \epsilon_0$.

These results tell us that if the changes in weights are within these bounds, then no attack is possible.

**Figure F.14: Plots of the two-token inequalities Eqs (F.334-F.337), where shaded regions are the safe region of each inequality. This is done for $\Delta_1 = 0.2R_1$ and $\gamma = 0.997$. The x-axis is $w$ and the y-axis is $\Delta w$.**

*2-token case.* For the case of a two-token pool, so the two tokens being traded are the old tokens present, we can simplify the above equations and plot them. We are interested in knowing what weight changes we can 'get away with' without a pool being open to attack. That means we are most interested in the above inequalities reformulated explicitly to give us bounds on the weight changes. As we are now in the two-token case, $w_1' + w_2' = w_1 + w_2 = 1$ and $\Delta w_1 = -\Delta w_2$. Thus we can re-write Eq (F.329) and Eq (F.333) in terms of just $w = w_1 = 1 - w_2$ and $\Delta w = \Delta w_1 = -\Delta w_2$ :

$$\Delta w \geq 1 - \frac{1}{\left(1 + \gamma\frac{w}{(1-w)}\left(1 + \frac{\Delta_1}{R_1}\right)\left(1 + \gamma\frac{\Delta_1}{R_1}\right)^{-1}\right)} - w, \tag{F.334}$$

$$\Delta w \geq \frac{1 - (1 - \gamma)\left(1 - \frac{\Delta_2}{R_2}\right)^{\frac{(1-w)}{w}}}{1 + \frac{(1-w)}{w} - (1 - \gamma)\left(1 - \frac{\Delta_2}{R_2}\right)^{\frac{(1-w)}{w}}} - w. \qquad \text{(F.335)}$$

In §F we described how we could study the case where the attacker initially increases the quoted price of the second token, denominated in the first, *without loss of generality* as we can simply swap indices in our final equations to get the results for the mirror-attack where the price of the first token is initially pumped up by the attacker. We can now do that swapping, giving the additional constraints:

$$\Delta w \leq \frac{1}{\left(1 + \gamma \frac{(1-w)}{w} \left(1 + \frac{\Delta_2}{R_2}\right)\left(1 + \gamma \frac{\Delta_2}{R_2}\right)^{-1}\right)} - w, \qquad \text{(F.336)}$$

$$\Delta w \leq 1 - \frac{1 - (1 - \gamma)\left(1 - \frac{\Delta_1}{R_1}\right)^{\frac{w}{(1-w)}}}{1 + \frac{w}{(1-w)} - (1 - \gamma)\left(1 - \frac{\Delta_1}{R_1}\right)^{\frac{w}{(1-w)}}} - w. \qquad \text{(F.337)}$$

If the changes in weight fulfil Eqs (F.334-F.337) then no attack is possible for a given initial price-deviating trade. These bounds are expressed as functions of that initial trade, $\Delta_1$ and $\Delta_2$. These bounds are also monotonic in $\Delta_1$ and $\Delta_2$ such that if a pool is safe under an initial trade $(\overline{\Delta}_1, \overline{\Delta}_2)$ then it is safe also for all trades $\Delta_1 < \overline{\Delta}_1$ and $\Delta_2 < \overline{\Delta}_2$. See Appendix F.5 for this.

F.3 Proof that $X_{\gamma=1}(\varepsilon)$ is an upper bound on $X(\varepsilon)$

Here we will demonstrate that $X_{\gamma=1}(\varepsilon) > X(\varepsilon)$ for $\varepsilon > \varepsilon_0$. First recall that

$$X(\epsilon) = \Delta_1'(\epsilon, \gamma) - m_p \Delta_2'(\epsilon, \gamma) \qquad \text{(F.338)}$$

and that

$$X_{\gamma=1}(\epsilon) = \Delta_1'(\epsilon, \gamma = 1) - m_p \Delta_2'(\epsilon, \gamma = 1), \qquad \text{(F.339)}$$

where we have made explicit the dependence of $\Delta_1'$ and $\Delta_2'$ on $\varepsilon$ and $\gamma$.

$$X_{\gamma=1}(\epsilon) - X(\epsilon) = \Delta_1'(\epsilon, \gamma = 1) - \Delta_1'(\epsilon, \gamma) - \left(m_p \Delta_2'(\epsilon, \gamma = 1) - \Delta_2'(\epsilon, \gamma)\right),$$
$$\text{(F.340)}$$

This means for $X_{\gamma=1}(\varepsilon) > X(\varepsilon)$ it is sufficient to show that $\Delta_2'(\epsilon, \gamma = 1)$ and that $\Delta_1'(\epsilon, \gamma) < \Delta_1'(\epsilon, \gamma = 1)$. We will handle these in turn *Showing* $\Delta_2'(\epsilon, \gamma) > \Delta_2'(\epsilon, \gamma = 1)$: : We begin by writing down the trade-invariant for $\Delta_1'$ and $\Delta_2'$ in the presence of fees. It is, naturally, that

$$(R_1' - \Delta_1'(\epsilon, \gamma))^{w_1'}(R_2' + \gamma \Delta_2'(\epsilon, \gamma))^{w_2'} = k' = R_1'^{w_1'} R_2'^{w_2}, \qquad \text{(F.341)}$$

as the trader is putting $\Delta_2'$ of token 2 into the pool and withdrawing $\Delta_1'$ of token 1.
Next, we need the trade invariant if $\gamma = 1$-if there are no fees. Then

$$(R_1' - \Delta_1'(\epsilon, \gamma = 1))^{w_1'}(R_2' + \Delta_2'(\epsilon, \gamma = 1))^{w_2'} = k' = R_1'^{w_1'} R_2'^{w_2}.$$
(F.342)

The final part we need is the following. We know that the purpose of this trade is to get the pool to quote a certain price after the trade has been performed, based on its post-trade pool reserves. This means that the quoted prices after the trade-with-fees will, indeed must, be the same as the quoted price after the trade-with-no-fees.[24] Thus, using Eq (F.312) we get that

$$\frac{(R_1' - \Delta_1'(\epsilon, \gamma = 1))}{(R_2' + \Delta_2'(\epsilon, \gamma = 1))} = \frac{(R_1' - \Delta_1'(\epsilon, \gamma))}{(R_2' + \Delta_2'(\epsilon, \gamma))},$$
(F.343)

where the weights have cancelled out. Rearranging we get that

$$(R_1' - \Delta_1'(\epsilon, \gamma)) = (R_2' + \Delta_2'(\epsilon, \gamma))\frac{(R_1' - \Delta_1'(\epsilon, \gamma = 1))}{(R_2' + \Delta_2'(\epsilon, \gamma = 1))},$$
(F.344)

which we can sub in to Eq (F.341) to get

$$\left((R_2' + \Delta_2'(\epsilon, \gamma))\frac{(R_1' - \Delta_1'(\epsilon, \gamma = 1))}{(R_2' + \Delta_2'(\epsilon, \gamma = 1))}\right)^{w_1'} (R_2' + \gamma\Delta_2'(\epsilon, \gamma))^{w_2'} = k'.$$
(F.345)

[24]Note that we are only setting $\gamma = 1$ *for the trade* in the $\gamma = 1$ part of this construction. We are still having the arbitrage trade, with fees or not, bring the quoted price to the upper end of the ($\gamma$ defined) no-arb region.

Rearranging Eq (F.342) we get

$$(R_1' - \Delta_1'(\epsilon, \gamma = 1))^{w_1'} = \frac{k'}{(R_2' + \Delta_2'(\epsilon, \gamma = 1))^{w_2'}},$$
(F.346)

which we can then sub in to the previous equation to obtain

$$(R_2' + \Delta_2'(\epsilon, \gamma))^{w_1'}(R_2' + \gamma\Delta_2'(\epsilon, \gamma))^{w_2'} = (R_2' + \Delta_2'(\epsilon, \gamma = 1)).$$
(F.347)

As $w_1' + w_2' = 1, 0 < w_1' < 1, 0 < w_2' < 1$ and $0 < \gamma < 1$, it is thus clear that $\Delta_2'(\epsilon, \gamma) > \Delta_2'(\epsilon, \gamma = 1)$.

*Showing* $\Delta_1'(\epsilon, \gamma) < \Delta_1'(\epsilon, \gamma = 1)$: Rearranging Eq (F.343) we get

$$\Delta_1'(\epsilon, \gamma = 1) = R_1' - (R_1' - \Delta_1'(\epsilon, \gamma))\frac{(R_2' + \Delta_2'(\epsilon, \gamma = 1))}{(R_2' + \Delta_2'(\epsilon, \gamma))},$$
(F.348)

$$\Rightarrow \Delta_2'(\epsilon, \gamma = 1) = R_1'(1 - k) + k\Delta_1'(\epsilon, \gamma),$$
(F.349)

$$\Rightarrow \Delta_2'(\epsilon, \gamma) = \frac{1}{k}\Delta_1'(\epsilon, \gamma = 1) + R_1'\frac{(k-1)}{k},$$
(F.350)

where $k = \frac{(R_2' + \Delta_2'(\epsilon, \gamma = 1))}{(R_2' + \Delta_2'(\epsilon, \gamma))}$. $k < 1$ as $\Delta_2'(\epsilon, \gamma) > \Delta_2'(\epsilon, \gamma = 1)$ and $k > 0$ as both its numerator and denominator are > 0.

This last equation, for $\Delta'_1(\epsilon, \gamma)$ as a function of $\Delta'_1(\epsilon, \gamma = 1)$, is a straight line with gradient $1/k > 1$ and intercept $R_1' \frac{(k-1)}{k} < 0$. This line crosses '$y = x$' when $R_1' = \Delta'_1(\epsilon, \gamma = 1)$, so for all $\Delta'_1(\epsilon, \gamma = 1) < R_1'$ (which are the only possible values as the pool cannot be drained) we have that $\Delta_1(\epsilon, \gamma = 1) < \Delta'_1(\epsilon, \gamma = 1)$ as required.

### F.4 Finding partial derivatives

*F.4.1 Finding $\partial \Delta_1 / \partial \epsilon$.* Recall the implicit equation that defines $\Delta_1$, Eq (F.304):

$$\left(1 + \frac{\Delta_1}{R_1}\right)\left(1 + \gamma \frac{\Delta_1}{R_1}\right)^{\frac{w_1}{w_2}} = \gamma^2 (1 + \epsilon). \qquad \text{(F.351)}$$

Taking partial derivatives of both sides with respect to $\epsilon$:

$$\frac{\partial}{\partial \epsilon}\left(\left(1 + \frac{\Delta_1}{R_1}\right)\left(1 + \gamma \frac{\Delta_1}{R_1}\right)^{\frac{w_1}{w_2}}\right) = \frac{\partial}{\partial \epsilon}\left(\gamma^2 (1 + \epsilon)\right) \qquad \text{(F.352)}$$

$$\Rightarrow \frac{1}{R_1}\frac{\partial \Delta_1}{\partial \epsilon}\left(1 + \gamma \frac{\Delta_1}{R_1}\right)^{\frac{w_1}{w_2}} + \left(1 + \frac{\Delta_1}{R_1}\right)\frac{w_1}{w_2}\left(1 + \gamma \frac{\Delta_1}{R_1}\right)^{\frac{w_1}{w_2} - 1}\frac{\gamma}{R_1}\frac{\partial \Delta_1}{\partial \epsilon} = \gamma^2 \qquad \text{(F.353)}$$

$$\Rightarrow \frac{\partial \Delta_1}{\partial \epsilon}\frac{1}{R_1}\left(1 + \gamma \frac{\Delta_1}{R_1}\right)^{\frac{w_1}{w_2}}\left(1 + \gamma\left(1 + \frac{\Delta_1}{R_1}\right)\frac{w_1}{w_2}\left(1 + \gamma \frac{\Delta_1}{R_1}\right)^{-1}\right) = \gamma^2 \qquad \text{(F.354)}$$

$$\Rightarrow \frac{\partial \Delta_1}{\partial \epsilon} = \frac{\gamma^2 R_1}{\left(1 + \gamma \frac{w_1}{w_2}\left(1 + \frac{\Delta_1}{R_1}\right)\left(1 + \gamma \frac{\Delta_1}{R_1}\right)^{-1}\right)\left(1 + \gamma \frac{\Delta_1}{R_1}\right)^{\frac{w_1}{w_2}}}, \qquad \text{(F.355)}$$

as required.

*F.4.2 Finding $\partial \Delta_2/\partial \epsilon$.* Recall the implicit equation that defines $\Delta_2$, Eq (F.305):

$$\left(1 - \frac{\Delta_2}{R_2}\right)^{-1}\left(1 + \frac{1}{\gamma}\left(\left(1 - \frac{\Delta_2}{R_2}\right)^{-\frac{w_2}{w_1}} - 1\right)\right) = \gamma^2 (1 + \epsilon). \qquad \text{(F.356)}$$

Taking partial derivatives of both sides with respect to $\epsilon$:

$$\frac{\partial}{\partial \epsilon}\left(\left(1 - \frac{\Delta_2}{R_2}\right)^{-1}\left(1 + \frac{1}{\gamma}\left(\left(1 - \frac{\Delta_2}{R_2}\right)^{-\frac{w_2}{w_1}} - 1\right)\right)\right) = \frac{\partial}{\partial \epsilon}\left(\gamma^2 (1 + \epsilon)\right) \qquad \text{(F.357)}$$

$$\Rightarrow \frac{\partial \Delta_2}{\partial \epsilon}\frac{1}{R_2}\left(1 - \frac{\Delta_2}{R_2}\right)^{-2}\left(\left(1 + \frac{1}{\gamma}\left(1 - \frac{\Delta_2}{R_2}\right)^{-\frac{w_2}{w_1}} - \frac{1}{\gamma}\right)\right.$$

$$\left. + \left(\frac{1}{\gamma}\frac{w_2}{w_1}\left(1 - \frac{\Delta_2}{R_2}\right)^{-\frac{w_2}{w_1}}\right)\right) = \gamma^2 \qquad \text{(F.358)}$$

$$\Rightarrow \frac{\partial \Delta_2}{\partial \epsilon} = \frac{\gamma^3 R_2 \left(1 - \frac{\Delta_2}{R_2}\right)^2}{\left(1 + \frac{w_2}{w_1}\right)\left(1 - \frac{\Delta_2}{R_2}\right)^{-\frac{w_2}{w_1}} - (1 - \gamma)}, \qquad (F.359)$$

as required.

F.5 Monotonicity of inequalities

We have two inequalities that we derive above, Eq (F.329),

$$\frac{w_2'}{w_1' + w_2'} \left(1 + \gamma \frac{w_1}{w_2}\left(1 + \frac{\Delta_1}{R_1}\right)\left(1 + \gamma \frac{\Delta_1}{R_1}\right)^{-1}\right) \leq 1, \qquad (F.360)$$

and Eq (F.333),

$$\frac{w_1'}{w_1' + w_2'} \geq \frac{1 - (1 - \gamma)\left(1 - \frac{\Delta_2}{R_2}\right)^{\frac{w_2}{w_1}}}{1 + \frac{w_2}{w_1} - (1 - \gamma)\left(1 - \frac{\Delta_2}{R_2}\right)^{\frac{w_2}{w_1}}}. \qquad (F.361)$$

Here we are interested in the monotonicity of the level-sets of these w.r.t. $\Delta_1$ and $\Delta_2$. That is, if our values of $w_1', w_2'$ satisfy their inequalities for some particular values of $w_1$, $w_2$, $R_1$, $R_2$, $\Delta_1$, $\Delta_2$, can we guarantee that the same values of $w_1', w_2'$ also satisfy the inequalities for $\hat{\Delta}_1 < \Delta_1$ and $\hat{\Delta}_2 < \Delta_2$ (with $w_1$, $w_2$, $R_1$, $R_2$ fixed)?

For this to be the case, we need the level sets of the inequalities to always have the correct gradient so that smaller values of $\Delta_1$, $\Delta_2$ always move the inequality's boundary 'further away' from the value of $w_1', w_2'$. Let us handle the above equations in turn.

$\Delta_1$. Consider the case where our $w_1', w_2'$ values just satisfies the first inequality above, so that

$$\frac{\bar{w}_2'}{\bar{w}_1' + \bar{w}_2'} = \frac{1}{1 + \gamma \frac{w_1}{w_2}\left(1 + \frac{\Delta_1}{R_1}\right)\left(1 + \gamma \frac{\Delta_1}{R_1}\right)^{-1}}, \qquad (F.362)$$

where $\bar{w}_1', \bar{w}_2'$ denotes these critical value of $w_1', w_2'$. For $\bar{w}_1', \bar{w}_2'$ to also satisfy the inequality for $\hat{\Delta}_1 < \Delta_1$, we need that

$$\frac{\partial}{\partial \Delta_1}\left(\frac{1}{1 + \gamma \frac{w_1}{w_2}\left(1 + \frac{\Delta_1}{R_1}\right)\left(1 + \gamma \frac{\Delta_1}{R_1}\right)^{-1}}\right) < 0, \qquad (F.363)$$

as then the required critical value will be larger for smaller $\Delta_1$ values. Evaluating this partial derivative, we find that

$$\frac{\partial}{\partial \Delta_1} \left( \frac{1}{1 + \gamma \frac{w_1}{w_2} \left(1 + \frac{\Delta_1}{R_1}\right) \left(1 + \gamma \frac{\Delta_1}{R_1}\right)^{-1}} \right) \qquad \text{(F.364)}$$

$$= -\frac{\frac{\gamma w_1}{w_2} \left(1 + \gamma \frac{\Delta_1}{R_1}\right)^{-1} \left(1 + \gamma \left(1 + \frac{\Delta_1}{R_1}\right) \left(1 + \gamma \frac{\Delta_1}{R_1}\right)^{-1}\right)}{\left(1 + \gamma \frac{w_1}{w_2} \left(1 + \frac{\Delta_1}{R_1}\right) \left(1 + \gamma \frac{\Delta_1}{R_1}\right)^{-1}\right)^2}.$$

$$\text{(F.365)}$$

For $w_1 \in (0, 1)$, $w_2 \in (0, 1)$, $\gamma > 0$, $R_1 > 0$ and $\Delta_1 > 0$, clearly this gradient is always negative, as required.

$\Delta_2$. Again let us take the critical value of the new weight such that the inequality is just satisfied, so

$$\frac{\bar{w}_1'}{\bar{w}_1' + \bar{w}_2'} = \frac{1 - (1 - \gamma)\left(1 - \frac{\Delta_2}{R_2}\right)^{\frac{w_2}{w_1}}}{1 + \frac{w_2}{w_1} - (1 - \gamma)\left(1 - \frac{\Delta_2}{R_2}\right)^{\frac{w_2}{w_1}}}. \qquad \text{(F.366)}$$

Here we want the partial derivative of this critical value to always be positive, so that the required critical value is always smaller for smaller $\Delta_2$ values, so we want that

$$\frac{\partial}{\partial \Delta_2} \left( \frac{1 - (1 - \gamma)\left(1 - \frac{\Delta_2}{R_2}\right)^{\frac{w_2}{w_1}}}{1 + \frac{w_2}{w_1} - (1 - \gamma)\left(1 - \frac{\Delta_2}{R_2}\right)^{\frac{w_2}{w_1}}} \right) > 0. \qquad \text{(F.367)}$$

We can re-write Eq (F.366) more compactly as

$$\frac{\bar{w}_1'}{\bar{w}_1' + \bar{w}_2'} = \frac{1 - f(\Delta_2)}{1 + a - f(\Delta_2)}. \qquad \text{(F.368)}$$

where $f(\Delta_2) = (1 - \gamma)\left(1 - \frac{\Delta_2}{R_2}\right)^{\frac{w_2}{w_1}}$ and $a = \frac{w_2}{w_1}$ .

$$\frac{\partial}{\partial \Delta_2} \left( \frac{1 - f(\Delta_2)}{1 + a - f(\Delta_2)} \right) = -\frac{a \frac{\partial f(\Delta_2)}{\partial \Delta_2}}{(1 + a - f(\Delta_2))^2}. \qquad \text{(F.369)}$$

As $a > 0$, as $w_1 \in (0, 1)$ and $w_2 \in (0, 1)$, the gradient $\frac{\partial \bar{w}_1'}{\partial \Delta_2}$ is positive if $\frac{\partial f(\Delta_2)}{\partial \Delta_2} < 0$ . Let us evaluate $\frac{\partial f(\Delta_2)}{\partial \Delta_2}$ :

$$\frac{\partial f(\Delta_2)}{\partial \Delta_2} = \frac{\partial}{\partial \Delta_2} \left( (1 - \gamma)\left(1 - \frac{\Delta_2}{R_2}\right)^{\frac{w_2}{w_1}} \right) \qquad \text{(F.370)}$$

$$= \left( -\frac{1}{R_2} \frac{w_2}{w_1} (1 - \gamma)\left(1 - \frac{\Delta_2}{R_2}\right)^{\frac{w_2}{w_1} - 1} \right) \qquad \text{(F.371)}$$

As $R_2 < \Delta_2$, $w_1 \in (0, 1)$, $w_2 \in (0, 1)$, $0 < \gamma < 1$, this gradient is always negative, so $\frac{\partial}{\partial \Delta_2} \left( \frac{1 - (1 - \gamma)\left(1 - \frac{\Delta_2}{R_2}\right)^{\frac{w_2}{w_1}}}{1 + \frac{w_2}{w_1} - (1 - \gamma)\left(1 - \frac{\Delta_2}{R_2}\right)^{\frac{w_2}{w_1}}} \right) > 0$, as required.

**G EXAMPLE COMPOSITE POOL TRADE**

*Initial State.* There are three pools,

- **Base Pool 1** with $w_1$ = {0.50, 0.50}, $R_1$ = {250, 250} and $\tau_{p1}$ = 100 outstanding LP tokens.
- **Base Pool 2** with $w_2$ = {0.50, 0.50}, $R_2$ = {500, 500} and $\tau_{p2}$ = 200 outstanding LP tokens.
- **Composite Pool** with $w_c$ = {1/3, 2/3}, $R_c$ = {10, 20}, and swap fees of 0.001 (so $\gamma$ = 1 - 0.001 = 0.999).

*Order of Trades.* In this trade we are trading 50 units of the first token in Base Pool 1 for the largest allowed amount of the second token in Base Pool 2, via an LP-token-swap in the Composite Pool.

1. Deposit 50 units of token 1 of Base Pool 1 into Base Pool 1, receiving Base Pool 1 LP tokens.
2. Swap Base Pool 1 LP tokens for Base Pool 2 LP tokens via the Composite pool. 2. Redeem Base Pool 2 LP tokens for token 2 of Base Pool 2.

*Step 1-Deposit into Base Pool 1.* Use equation from main for single asset deposit from §5.

$$\delta = \tau_{p_1} \left( \left( 1 + \frac{\Delta_i}{R_i} \right)^{w_i} - 1 \right) = 100 \left( \left( 1 + \frac{50}{250} \right)^{0.5} - 1 \right) = 9.544511501$$

$$(G.372)$$

*Step 2-LP token trade.* The following demonstrates the steps needed in a single transaction to perform a composite trade. The bulk trade API allows you to specify that this is a composite pool trade. Use equation from main paper for simple two-token swap in §5, for the Composite Pool. $j$ is the index of the token going into the pool (here LP tokens of Base Pool 1), $k$ is the index of the token leaving the pool (here LP tokens of Base Pool 2). We trade in all the 9.544511501 units of Base Pool 1 LP tokens (so $\Delta_i = \delta$ above).

$$\Lambda_k = R_k \left( 1 - \frac{1}{\left( 1 + \gamma \frac{\Delta_j}{R_j} \right)^{w_j(t)/w_k(t)}} \right)$$

$$(G.373)$$

$$\Rightarrow \Lambda_k = 20 \left( 1 - \frac{1}{\left( 1 + 0.999 \frac{9.544511501}{10} \right)^{(1/3)/(2/3)}} \right) = 3.5420117246$$

$$(G.374)$$

*Step 3-Redeem Base Pool 2 LP tokens.* Inverting the equation in Step 1 above, but for Base Pool 2, to get tokens-out ($\Delta_i$) in terms of LP tokens being redeemed ($\delta$), we get

$$\Delta_i = R_i \left( \left( 1 + \frac{\delta}{\tau_{p_2}} \right)^{1/w_i} - 1 \right). \qquad (G.375)$$

Apply this, where $\delta = \Lambda_k$ above (the LP tokens we just got from trading against the Composite Pool), getting out the second token in the pool, completing the trade.

$$\Delta_i = R_i \left( \left( 1 + \frac{\delta}{\tau_{p_2}} \right)^{1/w_i} - 1 \right) = 500 \left( \left( 1 + \frac{3.5420117246}{200} \right)^{1/0.5} - 1 \right)$$

$$(G.376)$$

$$\Rightarrow \Delta_i = 17.8668817112. \qquad (G.377)$$

**H DESCRIPTION OF CHANNEL FOLLOWING**

Recall in the main paper, in Eq (17), we introduced a more complex update rule that gives something very similar to how true channel-following strategies are performed in TradFi. To repeat, the governing equations are

$$\mathbf{v}(t) = \exp\left(-\frac{\frac{1}{\overline{\mathbf{p}}(t)}\frac{\partial \mathbf{p}(t)}{\partial t}}{2w^2}\right), \qquad \phi(t) = \frac{\pi}{3w}\frac{1}{\overline{\mathbf{p}}(t)}\frac{\partial \mathbf{p}(t)}{\partial t},$$

$$\mathbf{c}(t) = -\frac{a}{h}\mathbf{v}(t)\left(\phi(t) - \frac{1}{6}\phi^3(t)\right), \qquad\qquad \text{(H.378)}$$

$$\mathbf{m}(t) = (1 - \mathbf{v}(t))\,\mathrm{sign}\left(\frac{1}{\overline{\mathbf{p}}(t)}\frac{\partial \mathbf{p}(t)}{\partial t}\right)\left|\frac{1}{\overline{\mathbf{p}}(t)}\frac{\partial \mathbf{p}(t)}{\partial t}\right|^q,$$

$$\mathbf{w}(t) = \mathbf{w}(t-1) + \kappa\left(\mathbf{c}(t) + \mathbf{m}(t) - \ell_{\mathbf{p}(t)}\right).$$

For conciseness in the main paper, we did not describe or discuss these equations or their parameters in any level of detail, postponing that discussion to here.

Figure H.15: Plots of a momentum signal (yellow) [g = $\kappa\left(\frac{1}{\overline{\mathbf{p}}(t)}\frac{\partial \mathbf{p}(t)}{\partial t}\right)$] and an anti-momentum signal (red) [g = $-\kappa\left(\frac{1}{\overline{\mathbf{p}}(t)}\frac{\partial \mathbf{p}(t)}{\partial t}\right)$] as a function of $\frac{1}{\overline{\mathbf{p}}(t)}\frac{\partial \mathbf{p}(t)}{\partial t}$.

*Motivation: mean-reversion-like for small changes, momentum-like for larger changes.* As discussed in the main paper, a simple anti-momentum rule is keying off the 'winner-loser' effect that is well-known in TradFi, but in our analysis this effect tends to be most associated with smaller elastic price movements. Conversely, for larger price movements, trends tend to continue over slightly longer timespans, for which trend-following approaches work best.

(a) Zoomed in, looks like the anti-momentum, red curve above.

(b) Intermediate zoom, showing how a rule like this transitions from one 'regime' to another.

(c) Zoomed out, looks like the momentum, yellow curve above.

Figure H.16: An illustrative example of the shape of $g(\cdot)$ needed for a rule of the kind we are building, which acts in different ways at different scales.

Eq (10) gives a large family of potential update rules, and gives us a way to reason about them as we design them. Here we will think in terms of the signal function, $g(\cdot)$, such that we get the overall properties we want for this rule.

For small changes in (log) prices we want to move w in an anti-momentum-like way. So we want a $g(\cdot)$ function that looks like the

**Figure H.17: Plots of $v(\cdot)$ and $(1-v(\cdot))$, with $w = 1$.**

red line in Fig H.15 for small values of $\left(\frac{1}{\overline{p}(t)}\frac{\partial p(t)}{\partial t}\right)$, but 'zoomed out' in looks like the yellow line, or perhaps a powered-up version like in the rule 'Power Channel'. We can do this by having some kind of 'envelope' function that is $\approx 1$ near $\left(\frac{1}{\overline{p}(t)}\frac{\partial p(t)}{\partial t}\right) = 0$ and $\approx 0$ when $\left(\frac{1}{\overline{p}(t)}\frac{\partial p(t)}{\partial t}\right)$ is far from zero. Extremely informally, our rule would then be something like

$$\mathbf{g} = \text{envelope} \cdot \text{``anti} - \text{momentum subrule''}$$
$$+ (1 - \text{envelope}) \cdot \text{``momentum subrule''}.$$

The Gaussian function $f(x) = \exp(-x^2)$ and scalings/shifts thereof is an excellent function for our purposes here, and a scaled version of it is exactly the first part of Eq (17),

$$\mathbf{v}(t) = \exp\left(-\frac{\left(\frac{1}{\overline{p}(t)}\frac{\partial p(t)}{\partial t}\right)^2}{2w^2}\right), \qquad (\text{H.379})$$

with 'v' standing for envelope. $w$ tunes the width of the envelope. We plot $v(\cdot)$ and $1-v(\cdot)$ in Fig H.17. With that in hand, now we turn to what the "anti-momentum subrule" and "momentum subrule" should be in our informal recipe. We in effect want to end up with a rule where the change in weights looks something like Fig

*Momentum subrule.* For the "momentum subrule" part of this overall rule, things are very easy. We simply use ideas from 'power-channel', Eq (16), which naturally gives us our equation for m($\cdot$) in Eq (17),

$$\mathbf{m}(t) = \kappa \, (1 - \mathbf{v}(t)) \, \text{sign}\left(\frac{1}{\overline{p}(t)}\frac{\partial p(t)}{\partial t}\right) \left|\frac{1}{\overline{p}(t)}\frac{\partial p(t)}{\partial t},\right|^q, \quad (\text{H.380})$$

with m standing for momentum. We have multiplied our power-channel-like signal by (1 - envelope) = (1 - v(t)), and by the usual x to tune the aggressiveness of the pool; the parameters x and q are exactly as in power channel. (Recall that the power-channel approach reduces to vanilla momentum when $q = 1$.)

*Anti-momentum subrule.* The 'anti-momentum subrule" part is more involved. Given that this function is what controls behaviour for small deviations in (log) price around a recent average, it is reminiscent of controlling the behaviour of the rule within a channel around that average, so we denote it c(t). The obvious thing to do would be to simply use a vanilla, linear, anti-momentum subrule, inspired by Eq (14). That would give us

$$\mathbf{c}_{\text{linear}}(t) = -\kappa_{\mathbf{c}}\mathbf{v}(t)\frac{1}{\overline{p}(t)}\frac{\partial p(t)}{\partial t}. \qquad (\text{H.381})$$

One can do this, but it has some problems. It easiest to reason about, and to optimise, rules where the parameters have clear, in-terpretable, consistent geometric meanings. For example, w in the envelope function v above does one job extremely clearly, tuning the width of the envelope and so changing where the transition from anti-momentum to momentum-like behaviour takes place. Naively using a vanilla anti-momentum rule doesn't give us this, as $\kappa_{\mathbf{c}}$ in

$-\kappa_{\mathbf{c}}\mathbf{v}(t)\frac{1}{\overline{\mathbf{p}}(t)}\frac{\partial \mathbf{p}(t)}{\partial t}$ ends up modulating both the amplitude of the turning point of the 'lobes' of the function (see Fig H.16b) and their position.

A slightly computationally intensive parameterisation that gives us separate parameters to control shape and scale is to use a trigonometric function. Following that approach, we can get

$$\mathbf{c}_{\text{trig}}(t) = -\kappa_{\mathbf{c}}\mathbf{v}(t)\sin\left(\frac{\pi}{3w}\frac{1}{\overline{\mathbf{p}}(t)}\frac{\partial \mathbf{p}(t)}{\partial t}\right). \qquad (\text{H.382})$$

Note that the argument of the sine function is $\frac{\pi}{3w}\frac{1}{\overline{\mathbf{p}}(t)}\frac{\partial \mathbf{p}(t)}{\partial t}$, which is exactly $\phi(t)$ in Eq (17). This scaling is used to keep the turning points of the function at around $\frac{1}{\overline{\mathbf{p}}(t)}\frac{\partial \mathbf{p}(t)}{\partial t} = w$. But, using transcendental functions on-chain adds undesirable computational complexity. To get a very similar end result but without using a sine, we can just take the first two terms of sine's Taylor series, $\sin(x) \approx x - \frac{1}{6}x^3$ for small $x$. By using this approximation we get $\mathbf{c}_{\text{approx}}(t) = -\kappa_{\mathbf{c}}\mathbf{v}(t)\left(\phi(t) - \frac{1}{6}\phi^3(t)\right)$. We are now almost there.

For a slight increase in intepretability, we replace $\kappa_c$ with a scaled parameter that controls (to within a small error) the amplitude of $\mathbf{c}_{\text{approx}}(t)$ at its turning points. To do this, we simply have scale down our prefactor by max $(\exp(-x^2/2)\sin(\pi x/3))$, which we can solve numerically with value $\approx 0.541519$. So introducing $h = 0.541519$ and an amplitude parameter a, we have now our anti-momentum subrule:

$$\mathbf{c}(t) = -\frac{a}{h}\mathbf{v}(t)\left(\phi(t) - \frac{1}{6}\phi^3(t)\right). \qquad (\text{H.383})$$

This completes our description of Eq (17).

## I MARKOVITZ MEAN-VARIANCE PORTFOLIOS

### I.1 Minimum Variance Portfolio

Our starting point is that we are aiming to minimise the variance of portfolio of tokens, and to use this objective to determine the allocation within the pool. So we have the optimisation problem

$$\text{Minimise} \quad \frac{1}{2}\mathbf{w}^{\top}\Sigma\mathbf{w} \quad \text{such that} \quad \sum_{i=1}^{N}w_i = 1, \qquad (\text{I.384})$$

where $w = (w_1, ..., w_N)$ and $\Sigma$ is the covariance of the returns of the $N$ tokens in the pool. This problem can be solved using the

**Figure H.18: Plots of the overall update rule and its constituent terms.**

method of Lagrange Multipliers to give us

$$\mathbf{w}^* = \frac{\Sigma^{-1}\mathbf{1}}{\mathbf{1}^{\top}\Sigma^{-1}\mathbf{1}}, \qquad (I.385)$$

where 1 is a vector of 1s. This gives us the optimum weighting of tokens to give minimal variance of the pool.

So here one would learn $\Sigma^{-1}$ on chain, using the methods in the previous section, and use this to periodically update the weights of the pool to keep its weights optimal.

Of course is $\Sigma$ is full-rank, then w; values can be negative, but we want a 'long-only' pool. No closed-form solution exists for the long-only minimum-variance pool, but one could use the approach described in the main paper where one 'smooths' to the calculated weights, and apply the standard guardrails that weights have to be above 0 and sum to one. If $\Sigma$ is restricted to be diagonal, as we do in the backtest of the min-variance update rule, then the pool is long-only by construction.

### 1.2 Derivation of Minimum Variance Portfolio

Our aim is to have a pool of tokens with the lowest variance. This means our aim is to solve the contrained optimisation problem, Eq (I.384),

$$\text{Minimise} \quad \frac{1}{2}\mathbf{w}^{\top}\Sigma\mathbf{w} \quad \text{such that} \quad \sum_{i=1}^{N} w_i = 1. \qquad (I.386)$$

We can solve this using the method of Lagrangian multipliers, where we aim to minimise

$$\mathcal{L} = \frac{1}{2}\mathbf{w}^{\top}\Sigma\mathbf{w} + \lambda(\mathbf{w}^{\top}\mathbf{1} - 1), \qquad (I.387)$$

having turned our constrained problem to an uconstrained problem. Taking gradients of $\mathcal{L}$ and setting them to zero,

$$\frac{\partial \mathcal{L}}{\partial \mathbf{w}} = \Sigma\mathbf{w} - \lambda\mathbf{1} = 0, \qquad (I.388)$$

$$\frac{\partial \mathcal{L}}{\partial \lambda} = 1 - \mathbf{w}^{\top}\mathbf{1} = 0, \qquad (I.389)$$

where we have used the fact that $\Sigma^{\top} = \Sigma$. Rearranging, we find

$$\lambda^* = \frac{1}{1^\top \Sigma^{-1} 1}, \qquad (I.390)$$

$$\mathbf{w}^* = \frac{\Sigma^{-1} 1}{1^\top \Sigma^{-1} 1}, \qquad (I.391)$$

as required.

**1.3 Special Cases**

*Diagonal $\Sigma$.* If we take $\Sigma$ to be a diagonal matrix (i.e. tokens are assumed to be uncorrelated with each other) with diagonal entries $\Sigma_i$, the optimal w* is

$$w_i^* = \frac{\frac{1}{\Sigma_i}}{\sum_{j=1}^{N} \frac{1}{\Sigma_j}}. \qquad (I.392)$$

This has the property of being long-only ( $w_i^* > 0 \; \forall i$ ), which we may desire.

*Full $\Sigma$, Long Only.* The solution Eq (I.384), derived above, can require short positions (there may be some i for which $w_i < 0$).

If we want long-only ( $w_i^* > 0 \; \forall i$ ), as we say above, one can use the approach of Eq (25) and apply guardrails to negative/too small values. Alternatively, we can also achieve this by *i)* recording the index of any token for which $w_i$ is less than the minimum allowed value *ii)* setting the weights for those tokens to the minimum allowed value *iii)* recalculating the optimal pool with those tokens' *w*s fixed. We can repeat this procedure until the returned w vector only has entries $\geq$ than the minimum allowed entry, giving us a long-only pool.

**Claims**

1. An apparatus comprising:

   means for calculating at least one entry of a weight vector according to at least one estimator-based rule to be applied to a liquidity pool; and
   means for, based at least in part upon the calculated at least one entry of a previous weight vector, storing the at least one entry of the weight vector onto a blockchain configured to determine whether to perform an exchange of at least one asset for at least one other asset from among a pre-defined pool of other assets.

2. The apparatus of claim 1, wherein the at least one estimator-based rule comprises at least one of the following:

   gradient of a blockchain oracle or related function provided on a blockchain at a pre-selected temporal scale;
   variance of the blockchain oracle or related function provided on the blockchain at the pre-selected temporal scale ;
   covariance of the blockchain oracle or related function provided on the blockchain at the pre-selected temporal scale;
   precision of the blockchain oracle or related function provided on the blockchain at the pre-selected temporal scale; and
   moving average of the blockchain oracle or related function provided on the blockchain at the pre-selected temporal scale.

3. The apparatus of claim 1, wherein the at least one estimator-based rule comprises at least one of the following:

   momentum;
   anti-momentum;
   minimum variance; and

power channel.

4. The apparatus of claim 1, wherein the at least one estimator-based rule comprises at least one automated market maker (AMM) rule.

5. The apparatus of claim 1, wherein the at least one entry of a calculated weight vector comprises at least one automated market maker (AMM) weight vector of a pool.

6. An apparatus comprising:

means for calculating at least one entry of a weight vector according to at least one estimator-based rule;
means for applying at least one maximal extractable value (MEV) protection to a value of the at least one entry of the weight vector; and
means for storing at least one entry of a weight vector configured to be applied to a particular liquidity pool.

7. The apparatus of claim 6, where applying the at least one MEV protection further comprises at least one limit configured to limit at least one of:

restricting the entries in the weight vector to take values that are within a prespecified range;
restricting the maximum allowed change of the entries of the weight vector from one block index to a future block index;
depositing holdings to the liquidity pool, including as part of a trade; and
withdrawing holdings from the liquidity pool, including as part of a trade.

8. The apparatus of claim 6, further comprising:

means for initializing a weight vector update process after a predetermined period of time elapses since a previous application of the weight vector update process; and
means for receiving at least one oracle data feed on a blockchain.

9. An apparatus comprising:

means for calculating at least one entry of the block-specific weight vector configured for a trading function for a given block index;
means for, in response to a withdrawal request if one is made, calculating at least one withdrawal fee based upon a predefined fee structure;
means for updating at least one reserve;
means for checking for at least one invariant proportional and/or performing an invariant check;
means for checking for at least one net change of pool reserves for at least one trades configured for maximum extract value protection;
means for checking for at least one liquidity provider holding, whether the transaction comprises a withdrawal request or a deposit request as part of a composite pool trade comprising at least one of withdrawal, deposits, and trades of liquidity provider tokens as constituent steps; and
means for, upon determining that all requirements are satisfied, committing at least one transaction to the blockchain.

10. The apparatus of claim 9, further comprising:

means for determining at least one signal constructed utilizing at least one of gradient, covariance, precision, or moving average calculated using at least one estimator; and
means for transmitting the determined at least one signal to a market as a continuous feed, stochastic feed, or blockchain oracle.

11. The apparatus of claim 10, wherein the at least one estimator comprises at least one of the following:

gradient of a blockchain oracle or related function provided on a blockchain at a pre-selected temporal scale;
variance of the blockchain oracle or related function provided on the blockchain at the pre-selected temporal scale;

covariance of the blockchain oracle or related function provided on the blockchain at the pre-selected temporal scale;

precision of the blockchain oracle or related function provided on the blockchain at the pre-selected temporal scale; and

moving average of the blockchain oracle or related function provided on the blockchain at the pre-selected temporal scale.

**12.** The apparatus of claim 9, further comprising:
means for calculating at least one component of automated market maker trading function based upon at least one non-linear technique for a plurality of ledger blocks.

**13.** The apparatus of claim 9, further comprising:
means for performing at least one compliance check.

**14.** An apparatus comprising:

at least one processor; and
at least one memory storing instructions that, when executed by the at least one processor, cause the apparatus at least to:

calculate at least one entry of a weight vector according to at least one estimator-based rule to be applied to a liquidity pool; and
based at least in part upon the calculated at least one entry of a previous weight vector, store the at least one entry of the weight vector onto a blockchain configured to determine whether to perform an exchange of at least one asset for at least one other asset from among a pre-defined pool of other assets.

**15.** The apparatus of claim 14, wherein the at least one estimator-based rule comprises at least one of the following:

gradient of a blockchain oracle or related function provided on a blockchain at a pre-selected temporal scale;
variance of the blockchain oracle or related function provided on the blockchain at the pre-selected temporal scale;
covariance of the blockchain oracle or related function provided on the blockchain at the pre-selected temporal scale;
precision of the blockchain oracle or related function provided on the blockchain at the pre-selected temporal scale; and
moving average of the blockchain oracle or related function provided on the blockchain at the pre-selected temporal scale.

FIG. 1

Linear interpolation

FIG. 2A

Approximately-optimal interpolation

FIG. 2B

Optimal interpolation (numerical)

FIG. 2C

Optimal interpolation - Linear interpolation

FIG. 3A

Optimal interpolation - Approximately-optimal interpolation

FIG. 3B

Cumulative composite-pool base tokens

Base pool 1

Base pool 2

Mathematically equivalent

Composite-pool LP tokens

FIG. 4

FIG. 5

FIG. 6

FIG. 7

Europäisches
Patentamt

European
Patent Office

Office européen
des brevets

# EUROPEAN SEARCH REPORT

Application Number

EP 24 15 8700

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ALEX EVANS: "Liquidity Provider Returns in Geometric Mean Markets", ARXIV.ORG, 14 July 2020 (2020-07-14), pages 1-19, XP081696855, * sections 1-5 * | 1-15 | INV. G06Q40/04 |
| A | Bhaskar Krishnamachari: "Dynamic Curves for Decentralized Autonomous Cryptocurrency Exchanges", arXiv (Cornell University), 7 January 2021 (2021-01-07), pages 1-9, XP093164224, Ithaca DOI: 10.48550/arxiv.2101.02778 Retrieved from the Internet: URL:https://arxiv.org/pdf/2101.02778 * the whole document * | 1-15 | |
| A | XU JIAHUA ET AL: "SoK: Decentralized Exchanges (DEX) with Automated Market Maker (AMM) Protocols", ARXIV.ORG, CORNELL UNIVERSITY LIBRARY, 201 OLIN LIBRARY CORNELL UNIVERSITY ITHACA, NY 14853, vol. 55, no. 11, 9 February 2023 (2023-02-09), pages 1-50, XP058983954, DOI: 10.1145/3570639 * sections 1-5 * | 1-15 | TECHNICAL FIELDS SEARCHED (IPC) G06Q |
| A | LIOBA HEIMBACH ET AL: "SoK: Preventing Transaction Reordering Manipulations in Decentralized Finance", ARXIV.ORG, CORNELL UNIVERSITY LIBRARY, 201 OLIN LIBRARY CORNELL UNIVERSITY ITHACA, NY 14853, 22 March 2022 (2022-03-22), XP091182329, * sections I, II, III, IV, V * | 1-15 | |

The present search report has been drawn up for all claims

| Place of search | Date of completion of the search | Examiner |
|---|---|---|
| The Hague | 23 May 2024 | Nicoli, Félix |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63447240

**Non-patent literature cited in the description**

- **LOESCH et al.** *Impermanent Loss in Uniswap v3,* 2021
- **JASON MILIONIS ; CIAMAC C. MOALLEMI ; TIM ROUGHGARDEN ; ANTHONY LEE ZHANG.** *Automated market making and loss-versus-rebalancing,* 2022
- **ALEXANDER NEZLOBIN.** *Ethereum block times, mev, and lp returns,* 2022, https://medium.com/@alexnezlobin/ethereum-block-times-mev-and-lp-returns-5c13dc99e80.
- **HAYDEN ADAMS ; NOAH ZINSMEISTER ; DAN ROBINSON.** *Uniswap v2 core,* 2020
- **FERNANDO MARTINELLI ; NIKOLAI MUSHE-GIAN.** *Balancer: A non-custodial portfolio manager, liquidity provider, and price sensor.,* 2019
- **ALEX EVANS.** *Liquidity provider returns in geometric mean markets,* 2019
- **JACK SHERMAN ; WINIFRED J. MORRISON.** Adjustment of an inverse matrix corresponding to changes in the elements of a given column or a given row of the original matrix. *The Annals of Mathematical Statistics,* vol. 20 (621), 1949
- **HAYDEN ADAMS ; NOAH ZINSMEISTER ; MOODY SALEM RIVER KEEFER ; DAN ROBINSON.** *Uniswap v3 core,* 2021
- **ANDREW NGUYEN ; LOI LUU ; MING NG.** *Kyberswap: Dynamic automated market making,* 2021
- **STEFANO D'ANGELO ; LEONARDO GABRIELLI ; LUCA TURCHET.** Fast approximation of the lambert w function for virtual analog modelling. *International Conference on Digital Audio Effects (DAFx-19),* 2019, vol. 22
- **ROBERT CORLESS ; DAVID JEFFREY ; DONALD KNUTH.** A sequence of series for the lambert w function. *Proceedings of the International Symposium on Symbolic and Algebraic Computation, ISSAC,* 1997, vol. 01, 197-204
- **GUILLERMO ANGERIS ; ALEX EVANS ; TARUN CHITRA.** When does the tail wag the dog?. *curvature and market making,* 2020
- QuantAMM team. *Quantamm whitepaper,* 2023